# EUROPEAN PATENT APPLICATION

(11) **EP 4 319 436 A1**
(43) Date of publication of application: **07.02.2024**
(21) Application number: 23189297.7
(22) Date of filing: 02.08.2023
(51) Int. Cl.: H04W 72/51, H04W 76/14, H04W 72/23

(54) **WIRELESS COMMUNICATIONS FOR SIDELINK RANGING**

(30) Priority: 02.08.2022 US 202263394326 P; 09.09.2022 US 202263405076 P; 23.09.2022 US 202263409629 P
(71) Applicant: Comcast Cable Communications, LLC, Philadelphia, PA 19103 (US)
(72) Inventor: QIAO, Weihua, Philadelphia, 19103 (US); CHUN, SungDuck, Philadelphia, 19103 (US); DINAN, Esmael Hejazi, Philadelphia, 19103 (US); XU, Jian, Philadelphia, 19103 (US); TALEBI FARD, Peyman, Philadelphia, 19103 (US); PARK, Kyungmin, Philadelphia, 19103 (US); FILIN, Stanislav, Philadelphia, 19103 (US); KIM, Taehun, Philadelphia, 19103 (US); HONG, Jongwoo, Philadelphia, 19103 (US)
(74) Representative: V.O.

(57) **Abstract**

A wireless device may support a plurality of simultaneous sidelink services, such as sidelink ranging service, vehicle-to-everything (V2X) service, etc. A base station may communicate with the wireless device regarding those supported sidelink services, and may allocate wireless communication resources for use by the wireless device in using the sidelink services.

## Description

### CROSS-REFERENCE TO RELATED APPLICATIONS

The present application claims the benefit of: U.S. Provisional Application No. 63/394,326, filed on August 2, 2022; U.S. Provisional Application No. 63/405,076, filed on September 9, 2022; and U.S. Provisional Application No. 63/409,629, filed on September 23, 2022. The contents of the above-identified applications are hereby incorporated by reference.

### BACKGROUND

Wireless devices may communicate with one another using various sidelink (SL) communications that require wireless resources.

### SUMMARY

Features described herein generally relate to management of wireless communication resources for SL service communications. Various kinds of SL services may be used, such as SL ranging services and vehicle-to-everything (V2X) services. A base station may assist with management of such resources. The base station may communicate with a wireless device to determine what SL services the wireless device may simultaneously support, and may allocate wireless communication resources for the SL services. The base station may assist in coordinating the SL service communications between the wireless device and another wireless device. The base station may transmit, to the other wireless device, information indicating the allocated resources.

Wireless devices may perform ranging between one another to determine their relative positional relationship (e.g., distance, angle, position, etc.). Ranging services may employ various radio resources, and a base station may assist in the management of the radio resources. For example, the base station may communicate with a first wireless device and receive a radio resource control (RRC) message indicating a ranging method supported by the first wireless device and/or the second wireless device, and may select parameters for the radio resources. The base station may inform the first wireless device and/or the second wireless device of those parameters, and the wireless devices may use those resources to perform ranging in accordance with the parameters.

The selection of a ranging method may be done without the base station. For example, a second wireless device may receive, from a first wireless device, information indicating one or more ranging methods supported by the first wireless device, and may select a ranging method for the wireless devices to use. An intermediate relay wireless device may be used to facilitate the communications between the first wireless device and the second wireless device, and may assist in the selection of a ranging method. The relay wireless device may also determine various parameters for the first wireless device and the second wireless device to use in performing the selected ranging method.

### BRIEF DESCRIPTION OF THE DRAWINGS

Examples of several of the various embodiments of the present disclosure are described herein with reference to the drawings.
FIG. 1A and FIG. 1B show example communication networks.
FIG. 2A, FIG. 2B, FIG. 2C, and FIG. 2D show examples frameworks for a service-based architecture within a core network.
FIG. 3 shows an example communication network.
FIG. 4A and FIG. 4B show example core network architectures.
FIG. 5 shows an example of a core network architecture.
FIG. 6 shows an example of network slicing.
FIG. 7A shows an example a user plane protocol stack.
FIG. 7B shows an example a control plane protocol stack.
FIG. 7C shows example services provided between protocol layers of the user plane protocol stack.
FIG. 8 shows an example quality of service (QoS) model.
FIG. 9A, FIG. 9B, FIG. 9C, and FIG. 9D show example states and state transitions of a wireless device.
FIG. 10 shows an example registration procedure for a wireless device.
FIG. 11 shows an example service request procedure for a wireless device.
FIG. 12 shows an example of a protocol data unit session establishment procedure for a wireless device.
FIG. 13A shows example elements in a communications network.
FIG. 13B shows example elements of a computing device that may be used to implement any of the various devices described herein.
FIG. 14A, FIG. 14B, FIG. 14C, and FIG. 14D show various example arrangements of physical core network deployments.
FIG. 15 shows an example call flow for RRC connection establishment.
FIG. 16 is an example diagram illustrating horizontal/ elevation direction in celestial coordinate.
FIG. 17 is a diagram illustrating an example next-generation radio access network (NG-RAN) Architecture supporting a PC5 interface for direct communications between wireless devices (e.g., user equipment, UE).
FIG. 18 illustrates an example configuration of a New Radio (NR) frame into which orthogonal frequency divisional multiplexing (OFDM) symbols are grouped.
FIG. 19 illustrates an example configuration of a slot in the time and frequency domain for an NR carrier.
FIG. 20 illustrates an example of bandwidth adaptation using three configured bandwidth parts (BWPs) for an NR carrier.
FIG. 21A illustrates an example of control resource set (CORESET) configurations for a bandwidth part. FIG. 21B illustrates an example of a control channel element to resource element group (CCE-to-REG) mapping for downlink control information (DCI) transmission on a CORESET and physical downlink control channel (PDCCH) processing.
FIG. 22 illustrates an example of a wireless device in communication with a base station.
FIG. 23 is an example diagram illustrating problems of existing technologies.
FIG. 24 is an example diagram illustrating problems of existing technologies.
FIG. 25 is an example diagram illustrating problems of existing technologies.
FIG. 26 is an example call flow as per an aspect of an embodiment of the present disclosure.
FIG. 27A is an example diagram depicting a user equipment 1 (UE 1) supporting multiple sidelink services simultaneously with other UEs, and FIG. 27B is an example diagram depicting a UE 1 that does not support multiple sidelink services simultaneously with other UEs
FIG. 28 is an example diagram depicting a UECapabilityInformation message as per an aspect of an embodiment of the present disclosure.
FIG. 29 is an example diagram depicting a RRCReconfiguration message as per an aspect of an embodiment of the present disclosure.
FIG. 30 is an example diagram depicting the procedures of a base station as per an aspect of an embodiment of the present disclosure.
FIG. 31 is an example diagram depicting the procedures of a wireless device as per an aspect of an embodiment of the present disclosure.
FIG. 32 is an example call flow as per an aspect of an embodiment of the present disclosure.
FIG. 33 is an example diagram depicting the procedures of an access and mobility management function (AMF) as per an aspect of an embodiment of the present disclosure.
FIG. 34 is a diagram illustrating an example ranging method of Two Way Ranging.
FIG. 35 is a diagram illustrating an example ranging method of Sidelink Uplink Time Difference of Arrival (SL-UTDOA).
FIG. 36 is a diagram illustrating an example ranging method of Sidelink Downlink Time Difference of Arrival (SL-DTDOA).
FIG. 37 is a diagram illustrating an example ranging method of Sidelink Uplink Phase Difference of Arrival (SL-UPDOA).
FIG. 38 is a diagram illustrating an example ranging method of Sidelink Downlink Phase Difference of Arrival (SL-DPDOA).
FIG. 39 is an example diagram illustrating problems of existing technologies.
FIG. 40 is an example call flow as per an aspect of an embodiment of the present disclosure.
FIG. 41 is an example diagram depicting a UECapabilityInformation message as per an aspect of an embodiment of the present disclosure.
FIG. 42 is an example diagram depicting a PC 5 RRCReconfiguration message as per an aspect of an embodiment of the present disclosure.
FIG. 43 is an example diagram depicting the procedures of a base station as per an aspect of an embodiment of the present disclosure.
FIG. 44 is an example diagram depicting the procedures of a wireless device as per an aspect of an embodiment of the present disclosure.
FIG. 45 is an example call flow as per an aspect of an embodiment of the present disclosure.
FIG. 46 is an example diagram depicting the procedures of an AMF as per an aspect of an embodiment of the present disclosure.
FIG. 47 is an example call flow as per an aspect of an embodiment of the present disclosure.
FIG. 48 is an example diagram illustrating problems of existing technologies.
FIG. 49 is an example call flow as per an aspect of an embodiment of the present disclosure.
FIG. 50 is an example diagram depicting a UECapabilityInformationSidelink message as per an aspect of an embodiment of the present disclosure.
FIG. 51 is an example diagram depicting the procedures of a second wireless device as per an aspect of an embodiment of the present disclosure.
FIG. 52 is an example diagram depicting the procedures of a first wireless device as per an aspect of an embodiment of the present disclosure.
FIG. 53 is an example call flow as per an aspect of an embodiment of the present disclosure.
FIG. 54 is an example diagram depicting the procedures of a relay wireless device as per an aspect of an embodiment of the present disclosure.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems.

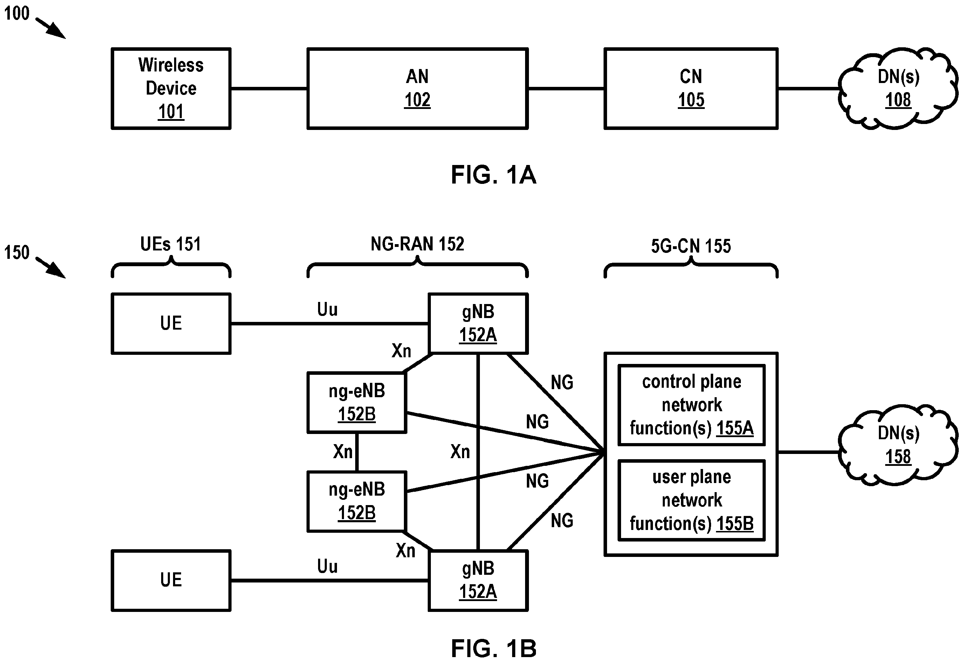

FIG. 1A shows an example communication network 100. The communication network 100 may comprise, for example, a public land mobile network (PLMN) operated/managed/run by a network operator. The communication network 100 comprise one or more of a wireless device 101, an access network (AN) 102, a core network (CN) 105, and/or one or more data network(s) (DNs) 108.

The wireless device 101 may communicate with DNs 108, for example, via AN 102 and/or CN 105. As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, an unmanned aerial vehicle, an urban air mobility aircraft, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The AN 102 may connect the wireless device 101 to the CN 105. A communication direction from the AN 102 to the wireless device 101 may be referred to as a downlink and/or a downlink communication direction. The communication direction from the wireless device 101 to the AN 102 may be referred to as an uplink and/or an uplink communication direction. Downlink transmissions may be separated and/or distinguished from uplink transmissions using frequency division duplexing (FDD), time-division duplexing (TDD), any other duplexing and/or multiplexing schemes, and/or some combination of the two duplexing techniques. The AN 102 may connect to and/or communicate with wireless device 101 via radio communications over an air interface. An AN that at least partially operates over the air interface may be referred to as a radio access network (RAN). A RAN may comprise one or more of: a radio unit (RU), distributed unit (DU), and/or a centralized unit (CU). A RAN may operate in a virtualized and/or in a non-virtualized environment. A RAN may perform one or more network functions in hardware. A RAN may perform one or more network functions in software. A RAN may perform one or more network functions in hardware and/or software. The CN 105 may set up/configure one or more end-to-end connections between wireless device 101 and the one or more DNs 108. The CN 105 may authenticate wireless device 101, provide a charging functionality, and/or provide/configure one or more additional functionalities/services for the wireless device 101.

As used throughout, the term "base station" may refer to, comprise, and/or encompass any element of the AN 102 that facilitates communication between wireless device 101 and the AN 102 (and/or any other elements of the communication network 100). A base station may comprise an RU. ANs and base stations may be referred to by other terminologies and/or may have other implementations. The base station may be a terrestrial base station at a fixed location on the earth. The base station may be a mobile base station with a moving coverage area. The base station may be on an aerial vehicle and/or may be located in space. For example, the base station may be on board an aircraft or a satellite. The RAN may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

The base station may be referred to using different terminologies in different communication standards/protocols. For example, WiFi and other standards may use the term access point. The Third-Generation Partnership Project (3GPP) has produced specifications for three generations of mobile networks, each of which uses a different terminology. Third Generation (3G) and/or Universal Mobile Telecommunications System (UMTS) standards may use the term Node B. 4G, Long Term Evolution (LTE), and/or Evolved Universal Terrestrial Radio Access (E-UTRA) standards may use the term Evolved Node B (eNB). 5G and/or New Radio (NR) standards may describe AN 102 as a next-generation radio access network (NG-RAN) and may refer to base stations as Next Generation eNB (ng-eNB) and/or Generation Node B (gNB). Future standards (for example, 6G, 7G, 8G) may use different terminologies to refer to the elements/components which implement the methods described in the present disclosure (e.g., wireless devices, base stations, ANs, CNs, components thereof, and/or other elements in a communication network). A base station may be and/or comprise a repeater or relay node used to extend the coverage area of a donor node. A repeater node may amplify and rebroadcast a radio signal received from a donor node. A relay node may perform the same/similar functions as a repeater node. A relay node may decode radio signals received from the donor node (e.g., to remove noise) before amplifying and rebroadcasting the radio signal.

The AN 102 may include one or more base stations. The one or more base stations may have/serve one or more coverage areas. A geographical size and/or an extent of a coverage area may be based on a range at which a receiver of AN 102 can successfully receive transmissions from a transmitter (e.g., the wireless device 101) operating within the coverage area (and/or vice-versa). The coverage areas may be referred to as sectors or cells. In some contexts, the term cell may refer to a carrier frequency used in a particular coverage area. Base stations with large coverage areas may be referred to as macrocell base stations. Base stations may cover/serve smaller areas, for example, to provide coverage in areas/locations with weak macrocell coverage, and/or to provide additional coverage in areas with high traffic (e.g., referred to as hotspots). Examples of small cell base stations comprise (e.g., in order of decreasing coverage areas) microcell base stations, picocell base stations, femtocell base stations, and/or home base stations. In combination, the coverage areas of the base stations may provide radio coverage/service to the wireless device 101 over a wide geographic area to support wireless device mobility.

A base station may comprise one or more sets of antennas for communicating with the wireless device 101 over an air interface. Each set of antennas may be separately controlled by the base station. Each set of antennas may have a corresponding coverage area. For example, a base station may comprise three sets of antennas to respectively control three coverage areas (e.g., on three different sides) of the base station. A base station may comprise any quantity of antennas, which may correspond to any quantity of coverage areas. The entirety of the base station (and its corresponding antennas) may be deployed at a single location or at a plurality of locations. A controller (e.g., at a central location) may control/operate one or more sets of antennas at one or more distributed locations. The controller may be, for example, a baseband processing unit that comprises a centralized and/or cloud-based RAN architecture. The baseband processing unit may be either centralized in a pool of baseband processing units or may be virtualized. A set of antennas at a distributed location may be referred to as a remote radio head (RRH).

FIG. 1B shows another example communication network 150. The communication network 150 may comprise, for example, a PLMN operated/run by a network operator. The communication network 150 may comprise wireless devices 151, a next generation radio access network (NG-RAN) 152, a 5G core network (5G-CN) 155, and one or more DNs 158. The NG-RAN 152 may comprise one or more base stations (e.g., generation node Bs (gNBs) 152A and/or next generation evolved Node Bs (ng eNBs) 152B). The 5G-CN 155 may comprise one or more network functions (NFs). The one or more NFs may comprise control plane functions 155A and user plane functions 155B. The one or more DNs 158 may comprise public DNs (e.g., the Internet), private DNs, and/or intra-operator DNs. The components/elements shown in FIG. 1B may represent specific implementations and/or terminology of components/elements shown in FIG. 1A.

The base stations of the NG-RAN 152 may be connected to the wireless devices 151 via one or more Uu interfaces. The base stations of the NG-RAN 152 may be connected to each other via one or more first interface(s) (e.g., Xn interface(s)). The base stations of the NG-RAN 152 may be connected to 5G-CN 155 via one or more second interfaces (e.g., NG interface(s)). An interfaces may comprise one or more air interfaces, direct physical connections, indirect connections, and/or combinations thereof. For example, the Uu interface may comprise an air interface. The NG and Xn interfaces may comprise an air interface, direct physical connections, and/or indirect connections over an underlying transport network (e.g., an internet protocol (IP) transport network).

Each of the Uu, Xn, and NG interfaces may be associated with a protocol stack. The protocol stacks may comprise a user plane (UP) protocol stack and a control plane (CP) protocol stack. User plane data may comprise data corresponding to (e.g., associated with and/or pertaining to) users of the wireless devices 151. For example, user plane data may comprise internet content downloaded via a web browser application, sensor data uploaded via a tracking application, and/or email data communicated to and/or from an email server. Control plane data may comprise signaling and/or control message messages. For example, control plane data may facilitate packaging and routing of user plane data such that the user plane data may be communicated with (e.g., sent to and/or received from) the DN(s). The NG interface may be divided into (e.g., may comprise) an NG user plane interface (NG-U) and an NG control plane interface (NG-C). The NG-U interface may provide/perform delivery of user plane data between the base stations and the one or more user plane network functions 155B. The NG-C interface may be used for control signaling between the base stations and the one or more control plane network functions 155A. The NG-C interface may provide, for example, NG interface management, wireless device context management, wireless device mobility management, transport of non-access stratum (NAS) messages, paging, protocol data unit (PDU) session management, and configuration transfer and/or warning message transmission. In at least some scenarios, the NG C interface may support transmission of user data (e.g., a small data transmission for an IoT device).

One or more of the base stations of the NG-RAN 152 may be split into a central unit (CU) and one or more distributed units (DUs). A CU may be coupled to one or more DUs via an interface (e.g., an F1 interface). The CU may handle one or more upper layers in the protocol stack and the DU may handle one or more lower layers in the protocol stack. For example, the CU may handle a radio resource control (RRC) layer, a physical data convergence protocol (PDCP) layer, and/or a service data application protocol (SDAP) layer, and the DU may handle radio link control (RLC) layer, a medium access control (MAC) layer, and/or a physical (PHY) layer. The one or more DUs may be in geographically diverse locations relative to the CU and/or each other. The CU/DU split architecture may permit increased coverage and/or better coordination.

The gNBs 152A and ng-eNBs 152B may provide different user plane and control plane protocol termination towards the wireless devices 151. For example, the gNB 154A may provide new radio (NR) protocol terminations over a Uu interface associated with a first protocol stack. The ng eNBs 152B may provide Evolved UMTS Terrestrial Radio Access (E UTRA) protocol terminations over a Uu interface associated with a second protocol stack.

The 5G-CN 155 may authenticate wireless devices 151, set up end-to-end connections between wireless devices 151 and the one or more DNs 158, and/or provide charging functionality. The 5G-CN 155 may be based on a service-based architecture. The service-based architecture may enable the NFs comprising the 5G-CN 155 to offer services to each other and to other elements of the communication network 150 via interfaces. The 5G-CN 155 may include any quantity of other NFs and any quantity of instances of each NF.

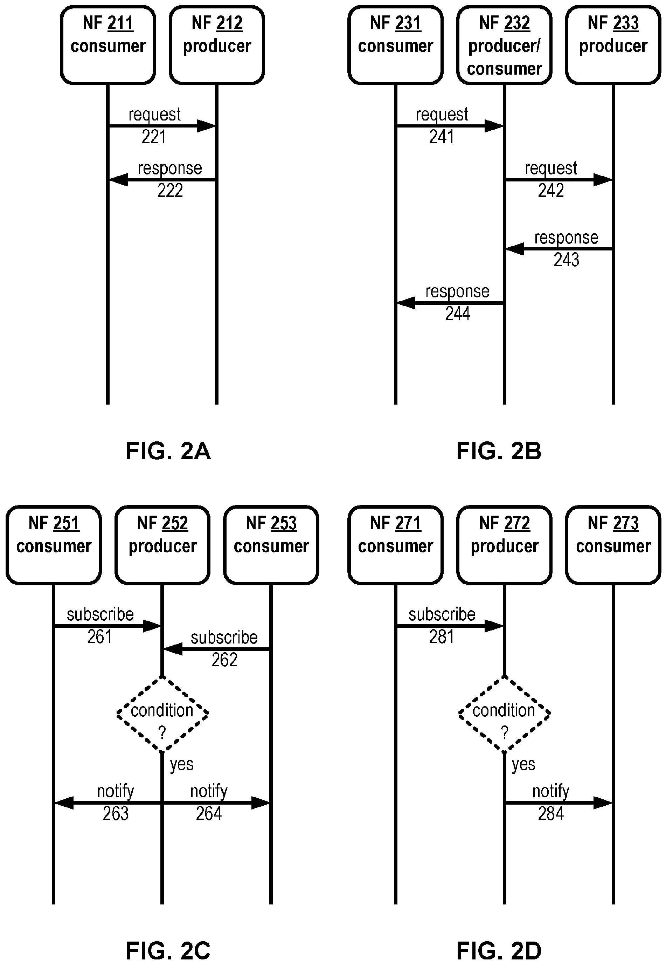

FIG. 2A, FIG. 2B, FIG. 2C, and FIG. 2D show example frameworks for a service-based architecture within a core network. A service, in a service-based architecture, may be requested/sought by a service consumer and provided by a service producer. An NF may determine, prior to obtaining the requested service, where the requested service may be obtained. The NF may communicate with a network repository function (NRF) to discover a service. For example, an NF that provides one or more services may register with a network repository function (NRF). The NRF may store data relating to the one or more services that the NF is prepared to provide to other NFs in the service-based architecture. A consumer NF may query the NRF to discover/determine a producer NF. For example, the consumer NF may obtain, from the NRF, a list of NF instances that provide a particular service).

As shown in FIG. 2A, an NF 211 (e.g., a consumer NF) may send a request 221 to an NF 212 (e.g., a producer NF). The request 221 may be a request for a particular service. The request 221 may be sent based on a discovery that NF 212 is a producer of that service. The request 221 may comprise data relating to NF 211 and/or the requested service. The NF 212 may receive the request 221, perform one or more actions associated with the requested service (e.g., retrieving data), and provide/send a response 221. The one or more actions performed by the NF 212 may be based on request data included in the request 221, data stored by the NF 212, and/or data retrieved by the NF 212. The response 222 may notify/indicate, to the NF 211, that the one or more actions have been completed. The response 222 may comprise response data relating to the NF 212, the one or more actions, and/or the requested service.

As shown in FIG. 2B, an NF 231 may send a request 241 to an NF 232. A service produced/provided by the NF 232 may comprise sending a request 242 to an NF 233 (e.g., based on receiving the request 241). The NF 233 may perform one or more actions and provide/send a response 243 to the NF 232. The NF 232 may send a response 244 to the NF 231, for example, based on receiving the response 243. As shown in FIG. 2B, an NF (e.g., a single NF) may perform the role of a producer of services, consumer of services, and/or both. A particular NF service may comprise any quantity/number of nested NF services produced by one or more other NFs.

FIG. 2C shows an example of subscribe-notify interactions between a consumer NF and a producer NF. An NF 251 may send a subscription 261 (e.g., a subscription request) to an NF 252. An NF 253 may send a subscription 262 (e.g., a subscription request) to the NF 252. Although FIG. 2C shows two NFs and the NF 252 providing multiple subscription services to the two NFs, a subscribe-notify interaction may comprise one subscriber, and/or any other quantity of subscribers. The NFs 251, 253 may be independent from one another. For example, the NFs 251, 253 may independently discover the NF 252 and/or independently determine to subscribe to the service offered by the NF 252. The NF 252 may provide/send a notification to a subscribing NF, for example, based on receiving the subscription. For example, the NF 252 may send a notification 263 to the NF 251 based on the subscription 261 and/or may send a notification 264 to the NF 253 based on the subscription 262.

The sending of the notifications 263, 264 may be conditional. The sending of the notifications 263, 264 may be based on a determination that a condition has occurred. The notifications 263, 264 may be based on a determination that a particular event has occurred, a determination that a particular condition is outstanding, and/or a determination that a duration of time associated with the subscription has elapsed. The duration of time may be a time period associated with a subscription for notifications (e.g., periodic notifications). The NF 252 may send the notifications 263, 264 to the NFs 251, 253 simultaneously, substantially simultaneously, and/or based on/in response to a same condition. The NF 252 may send the notifications 263, 264 at different times and/or based on/in response to different notification conditions. The NF 251 may request a notification based on a certain parameter, as measured by the NF 252, exceeding a first threshold. The NF 252 may request a notification based on the parameter exceeding a second threshold (e.g., different from the first threshold). A parameter of interest and/or a corresponding threshold may be indicated in the subscriptions 261, 262.

FIG. 2D shows another example of a subscribe-notify interaction. An NF 271 may send a subscription 281 to an NF 272. The NF 272 may send a notification 284, for example, based on/in response to receipt of the subscription 281 and/or a determination that a notification condition has occurred. The notification 284 may be sent to an NF 273. While the example of FIG. 2C shows a notification being sent to the subscribing NF, the example of FIG. 2D shows that a subscription and its corresponding notification may be associated with (e.g., received from and sent to) different NFs. For example, the NF 271 may subscribe to the service provided by the NF 272 on behalf of the NF 273.

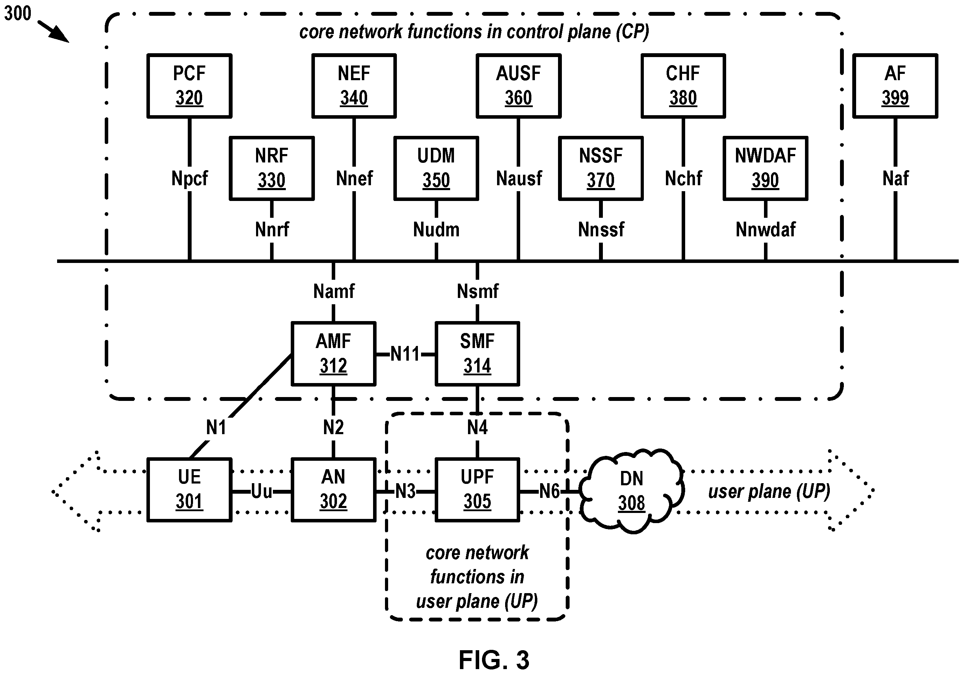

FIG. 3 shows an example communication network 300. The Communication network 300 may comprise a wireless device 301, an AN 302, and/or a DN 308. The other elements shown in FIG. 3 may be included in and/or associated with a core network. An element (e.g., each element) of the core network may be an NF.

The NFs may comprise a user plane function (UPF) 305, an access and mobility management function (AMF) 312, a session management function (SMF) 314, a policy control function (PCF) 320, a network repository function (NRF) 330, a network exposure function (NEF) 340, a unified data management (UDM) 350, an authentication server function (AUSF) 360, a network slice selection function (NSSF) 370, a charging function (CHF) 380, a network data analytics function (NWDAF) 390, and/or an application function (AF) 399. The UPF 305 may be a user plane core network function. The NFs 312, 314, and 320-390 may be control plane core network functions. The core network may comprise additional instances of any of the NFs shown in FIG. 3 and/or one or more different types of NF that provide different services. Other examples of NF type may comprise a gateway mobile location center (GMLC), a location management function (LMF), an operations, administration, and maintenance function (OAM), a public warning system (PWS), a short message service function (SMSF), a unified data repository (UDR), and/or an unstructured data storage function (UDSF).

An element (e.g., each element) shown in FIG. 3 may comprise an interface with at least one other element. The interface may be a logical connection and/or a direct physical connection. Any interface may be identified/indicated using a reference point representation and/or a service-based representation. In a reference point representation, the letter N may be used followed by a numeral to indicate an interface between two specific elements. For example, as shown in FIG. 3, the AN 302 and the UPF 305 may interface via N3, whereas UPF 305 and DN 308 may interface via N6. In a service-based representation, the letter N may be followed by one or more alphabets/letters. The letters may identify/indicate an NF that provides services to the core network. For example, PCF 320 may provide services via interface Npcf. The PCF 320 may provide services to any NF in the core network via Npcf. A service-based representation may correspond to a bundle of reference point representations. For example, the Npcf interface between PCF 320 and the core network may generally correspond to an N7 interface between PCF 320 and SMF 314, an N30 interface between PCF 320 and NEF 340, and/or an N# interface between any functions where # may indicate any number.

The UPF 305 may serve as a gateway for user plane traffic between the AN 302 and the DN 308. The wireless device 301 may connect to UPF 305 via a Uu interface and an N3 interface (also described as NG U interface). The UPF 305 may connect to the DN 308 via an N6 interface. The UPF 305 may connect to one or more other UPFs (not shown) via an N9 interface. The wireless device 301 may be configured to receive services through a protocol data unit (PDU) session. The PDU session may be a logical connection between the wireless device 301 and the DN 308. The UPF 305 (or a plurality of UPFs) may be selected by the SMF 314 to handle/process a particular PDU session between the wireless device 301 and the DN 308. The SMF 314 may control the functions of the UPF 305 with respect to the PDU session. The SMF 314 may connect to the UPF 305 via an N4 interface. The UPF 305 may handle/process any quantity of PDU sessions associated with any quantity of wireless devices (via any quantity of ANs). The UPF 305 may be controlled, for handling the one or more PDU sessions, by any quantity of SMFs via any quantity of corresponding N4 interfaces.

The AMF 312 may control wireless device access to the core network. The wireless device 301 may register with the network via the AMF 312. for the wireless device 301 may register with the network prior to establishing a PDU session. The AMF 312 may manage a registration area of the wireless device 301, which may enable the network to track the physical location of wireless device 301 within the network. The AMF 312 may manage wireless device mobility for a wireless device in connected mode. For example, the AMF 312 may manage wireless device handovers from one AN (or portion thereof) to another. The AMF 312 may perform, for a wireless device in idle mode, registration updates, and/or page the wireless device to transition the wireless device to connected mode.

The AMF 312 may receive, from the wireless device 301, NAS messages. The NAS messages may be sent/transmitted in accordance with NAS protocol. NAS messages may relate to communications between the wireless device 301 and the core network. NAS messages may be relayed to the AMF 312 via the AN 302. Communication between the wireless device 301 and the AMF 312 may be represented as communication via the N1 interface. NAS messages may facilitate wireless device registration and mobility management, for example, by authenticating, identifying, configuring, and/or managing a connection of the wireless device 301. NAS messages may support session management procedures for maintaining user plane connectivity and quality of service (QoS) of a session between the wireless device 301 and the DN 309. The AMF 312 may send a NAS message to SMF 314, for example, if the NAS message involves (e.g., is associated with, corresponds to) session management. NAS messages may be used to transport messages between wireless device 301 and other components of the core network (e.g., core network components other than AMF 312 and SMF 314). The AMF 312 may act on/process a NAS message, or alternatively, forward the NAS message to an appropriate core NF (e.g., SMF 314, etc.).

The SMF 314 may establish, modify, and/or release a PDU session based on messaging received from the wireless device 301. The SMF 314 may allocate, manage, and/or assign an IP address to the wireless device 301, for example, based on establishment of a PDU session. Multiple SMFs may be in/associated with the network. Each of the SMFs may be associated with a respective group of wireless devices, base stations, and/or UPFs. A wireless device with multiple PDU sessions may be associated with a different SMF for each PDU session. The SMF 314 may select one or more UPFs to handle/process a PDU session. The SMF 314 may control the handling/processing of the PDU session by the selected UPF by providing rules for packet handling (e.g., packet detection rules (PDRs), forwarding action rules (FARs), QoS enforcement rules (QERs), etc.). Rules relating to QoS and/or charging for a particular PDU session may be obtained from the PCF 320 and provided to the UPF 305 (e.g., by the SMF 314).

The PCF 320 may provide/send, to other NFs, services relating to policy rules. The PCF 320 may use subscription data and information about network conditions to determine policy rules. The PCF 320 may provide the policy rules to a particular NF which may be responsible for enforcement of those rules. Policy rules may relate to policy control for access and mobility, and may be enforced by the AMF 312. Policy rules may relate to session management, and may be enforced by the SMF 314. Policy rules may be network-specific, wireless device-specific, session-specific, and/or data flow-specific.

The NRF 330 may provide service discovery functions. The NRF 330 may belong/correspond to a particular PLMN. The NRF 330 may maintain NF profiles relating to other NFs in the communication network 300. The NF profile may comprise, for example, an address, PLMN, and/or type of the NF, a slice indicator/identifier, a list of the one or more services provided by the NF, and/or authorization required to access the services.

The NEF 340 may provide an interface to external domains, permitting the external domains to selectively access the control plane of the communication network 300. The external domain may comprise, for example, third-party network functions, application functions, and/or any other functions. The NEF 340 may act as a proxy between external elements and network functions such as the AMF 312, the SMF 314, the PCF 320, the UDM 350, and/or any other functions. As an example, the NEF 340 may determine a location and/or reachability status of the wireless device 301 based on reports from the AMF 312, and/or may provide status information to an external element. An external element may provide, via the NEF 340, information that facilitates the setting of parameters for establishment of a PDU session. The NEF 340 may determine which data and capabilities of the control plane are exposed to the external domain. The NEF 340 may provide secure exposure (e.g., by authenticating and/or authorizing an external entity) to exposed data or capabilities of the communication network 300. The NEF 340 may selectively control the exposure such that the internal architecture of the core network is hidden/obscured from the external domain.

The UDM 350 may provide data storage for other NFs. The UDM 350 may permit a consolidated view of network information. The consolidated view may be used to ensure that the most relevant information may be made available to different NFs from a single resource. The UDM 350 may store and/or retrieve information from a unified data repository (UDR). For example, the UDM 350 may obtain user subscription data relating to the wireless device 301 from the UDR.

The AUSF 360 may support mutual authentication of the wireless device 301 by the core network and authentication of the core network by the wireless device 301. The AUSF 360 may perform key agreement procedures and provide keying material that may be used to improve security.

The NSSF 370 may select/determine one or more network slices to be used by the wireless device 301. The NSSF 370 may select a slice based on slice selection information. For example, the NSSF 370 may receive single network slice selection assistance information (S NSSAI) and map the S NSSAI to a network slice instance identifier (NSI).

The CHF 380 may control billing-related tasks associated with wireless device 301. For example, the UPF 305 may report/send traffic usage information, associated with wireless device 301, to the SMF 314. The SMF 314 may collect usage data from the UPF 305 and one or more other UPFs. The usage data may indicate a quantity of data exchanged, a DN that the data is exchanged with, a network slice associated with the data, and/or any other information that may influence billing. The SMF 314 may share the collected usage data with the CHF 380. The CHF 380 may use the collected usage data to perform billing-related tasks associated with wireless device 301. The CHF 380 may, depending on the billing status of wireless device 301, instruct the SMF 314 to limit and/or influence/control access of the wireless device 301 and/or provide billing-related notifications to wireless device 301.

The NWDAF 390 may collect and/or analyze data from other NFs and/or offer data analysis services to other NFs. The NWDAF 390 may receive/collect, from the UPF 305, the AMF 312, and/or the SMF 314, data/information relating to a load level for a particular network slice instance. The NWDAF 390 may provide (e.g., based on the collected data) load level data to the PCF 320 and/or the NSSF 370, and/or may notify the PCF 320 and/or the NSSF 370 if a load level for a slice reaches and/or if a load level for a slice exceeds a load level threshold.

The AF 399 may be outside the core network, but may interact with the core network to provide information relating to the QoS requirements and/or traffic routing preferences associated with a particular application. The AF 399 may access the core network based on the exposure constraints imposed by the NEF 340. An operator of the core network may consider the AF 399 to be a trusted domain that may directly access the core network (and/or the communication network 300).

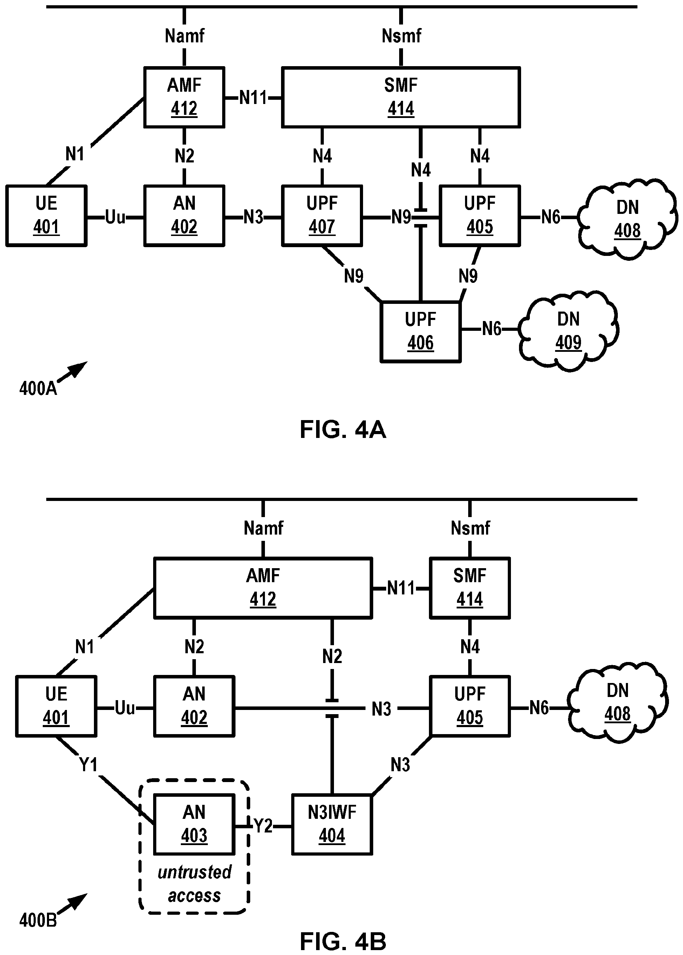

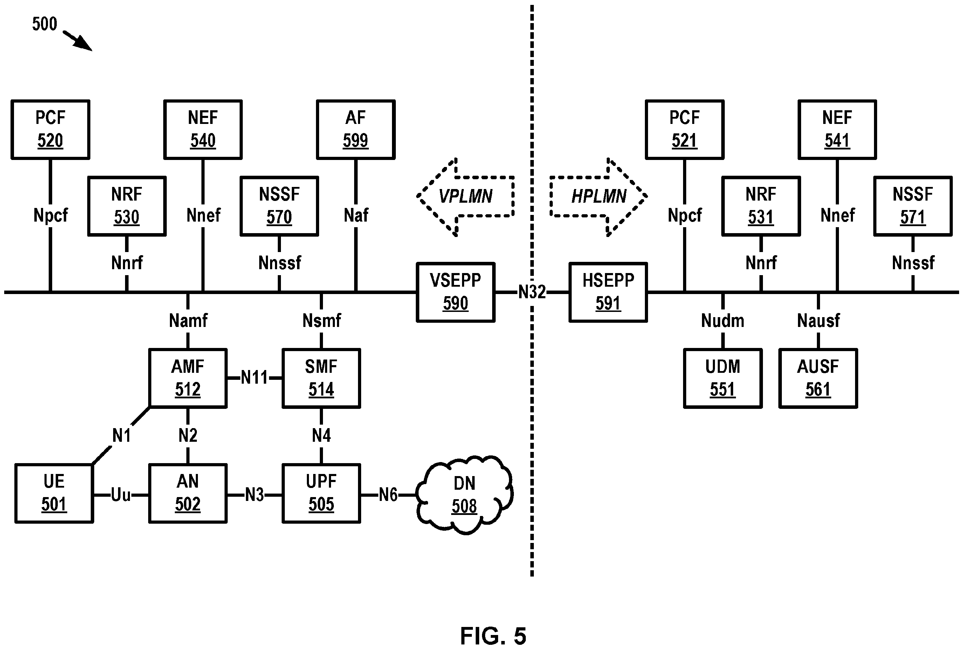

FIGS. 4A, 4B, and 5 show examples of core network architectures. The core network architectures shown in FIGS. 4A, 4B, and 5 may be analogous in some respects to the core network architecture 300 shown in FIG. 3. For brevity, some of the core network elements shown in FIG. 3 are not shown in FIGS. 4A, 4B, and 5 but may be included in one or more of these core network architectures. Many of the elements shown in FIGS. 4A, 4B, and 5 may be analogous in some respects to elements depicted in FIG. 3. For brevity, some of the details relating to their functions or operation are not shown but may be included in one or more of these core network architectures. Operation of one or more elements shown in FIGS. 4A, 4B, and 5 may be similar, or substantially similar, to corresponding elements shown in FIG. 3.

FIG. 4A shows an example of a core network architecture. The core network architecture 400A of FIG. 4A may comprise an arrangement of multiple UPFs. Core network architecture 400A may comprise one or more of: a wireless device 401, an AN 402, an AMF 412, and/or an SMF 414. The core network architecture 400A may comprise multiple UPFs (e.g., a UPF 405, a UPF 406, and a UPF 407) and multiple DNs (e.g., a DN 408 and a DN 409). Each of the multiple UPFs 405, 406, 407 may communicate with the SMF 414 via a corresponding N4 interface. The DNs 408, 409 may communicate with the UPFs 405, 406, respectively, via N6 interfaces. The multiple UPFs 405, 406, 407 may communicate with one another via N9 interfaces.

The UPFs 405, 406, 407 may perform traffic detection. The UPFs 405, 406, 407 may indicate, identify, and/or classify packets. Packet indication/identification may be performed based on PDRs provided by the SMF 414. PDRs may comprise packet detection information. Packet detection information may comprise one or more of: a source interface, a wireless device IP address, core network (CN) tunnel information (e.g., a CN address of an N3/N9 tunnel corresponding to a PDU session), a network instance indicator/identifier, a QoS flow indicator/identifier (QFI), a filter set (e.g., an IP packet filter set and/or an ethernet packet filter set), and/or an application indicator/identifier.

PDRs may indicate one or more rules for handling the packet upon detection thereof. The one or more rules may comprise, for example, FARs, multi-access rules (MARs), usage reporting rules (URRs), QERs, and/or any other rule. For example, the PDR may comprise one or more FAR identifiers, MAR identifiers, URR identifiers, and/or QER identifiers. The identifiers may indicate the rules that are prescribed/to be used for the handling of a particular detected packet.

The UPF 405 may perform traffic forwarding in accordance with a FAR. For example, the FAR may indicate that a packet associated with a particular PDR is to be forwarded, duplicated, dropped, and/or buffered. The FAR may indicate a destination interface (e.g., "access" for downlink or "core" for uplink). The FAR may indicate a buffering action rule (BAR), for example, if a packet is to be buffered. The UPF 405 may perform data buffering of a certain quantity downlink packets, for example, if a PDU session is deactivated.

The UPF 405 may perform QoS enforcement in accordance with a QER. For example, the QER may indicate a guaranteed bitrate that is authorized and/or a maximum bitrate to be enforced for a packet associated with a particular PDR. The QER may indicate that a particular guaranteed and/or maximum bitrate may be for uplink packets and/or downlink packets. The UPF 405 may mark/indicate packets belonging to a particular QoS flow with a corresponding QFI. The marking may enable a recipient of the packet to determine a QoS of the packet (e.g., a QoS to be enforced for the packet).

The UPF 405 may provide/send usage reports to the SMF 414 in accordance with a URR. The URR may indicate one or more triggering conditions for generation and/or reporting of the usage report. The reporting may be based on immediate reporting, periodic reporting, a threshold for incoming uplink traffic, and/or any other suitable triggering condition. The URR may indicate a method for measuring usage of network resources (e.g., data volume, duration, and/or event).

The DNs 408, 409 may comprise public DNs (e.g., the Internet), private DNs (e.g., private, internal corporate-owned DNs), and/or intra-operator DNs. A DN (e.g., each DN) may provide an operator service and/or a third-party service. The service provided by a DN may be an Internet service, an IP multimedia subsystem (IMS), an augmented or virtual reality network, an edge computing or mobile edge computing (MEC) network, and/or any other service. A DN (e.g., each DN) may be indicated/identified using a data network name (DNN). The wireless device 401 may be configured to establish a first logical connection with the DN 408 (e.g., a first PDU session), a second logical connection with DN 409 (e.g., a second PDU session), or both simultaneously (e.g., the first PDU session and the second PDU sessions).

A PDU session (e.g., each PDU) session may be associated with at least one UPF configured to operate as a PDU session anchor (PSA, or anchor). The anchor may be a UPF that may provide an N6 interface with a DN.

The UPF 405 may be the anchor for the first PDU session between wireless device 401 and DN 408. The UPF 406 may be the anchor for the second PDU session between wireless device 401 and DN 409. The core network may use the anchor to provide service continuity of a particular PDU session (e.g., IP address continuity) as wireless device 401 moves from one access network to another. The wireless device 401 may establish a PDU session using a data path to the DN 408 and using an access network other than AN 402. The data path may use the UPF 405 acting as anchor. The wireless device 401 may (e.g., later) move into the coverage area of the AN 402. The SMF 414 may select a new UPF (e.g., the UPF 407) to bridge the gap between the newly-entered access network (e.g., the AN 402) and the anchor UPF (e.g., the UPF 405). The continuity of the PDU session may be preserved as any quantity/number of UPFs may be added and/or removed from the data path. A UPF added to a data path (e.g., as shown in FIG. 4A) may be described as an intermediate UPF and/or a cascaded UPF.

The UPF 406 may be the anchor for the second PDU session between wireless device 401 and the DN 409. The anchor for the first PDU session and the anchor for the second PDU sessions being associated with different UPFs (e.g., as shown in FIG. 4A) is merely exemplary. Multiple PDU sessions with a single DN may correspond to any quantity/number of anchors. A UPF at the branching point (e.g., the UPF 407 in FIG. 4) may operate as an uplink classifier (UL-CL), for example, if there are multiple UPFs. The UL-CL may divert uplink user plane traffic to different UPFs.

The SMF 414 may allocate, manage, and/or assign an IP address to the wireless device 401. The SMF 414 may allocate, manage, and/or assign an IP address to the wireless device 401, for example, based on establishment of a PDU session. The SMF 414 may maintain an internal pool of IP addresses to be assigned. The SMF 414 may (e.g., if necessary) assign an IP address provided by a dynamic host configuration protocol (DHCP) server or an authentication, authorization, and accounting (AAA) server. IP address management may be performed in accordance with a session and service continuity (SSC) mode. In SSC mode 1, an IP address of wireless device 401 may be maintained (and the same anchor UPF may be used) as the wireless device moves within the network. In SSC mode 2, the IP address of wireless device 401 may be changed as the wireless device 401 moves within the network. For example, the old IP address and an old anchor UPF may be abandoned and a new IP address and a new anchor UPF may be established, for example, as the wireless device 401 moves within the network. In SSC mode 3, it may be possible to maintain an old IP address (e.g., similar to SSC mode 1) temporarily while establishing a new IP address (e.g., similar to SSC mode 2). Applications that may be sensitive to IP address changes may operate in accordance with SSC mode 1.

UPF selection may be controlled by the SMF 414. The SMF 414 may select the UPF 405 as the anchor for the PDU session and/or the UPF 407 as an intermediate UPF, for example, based on establishment and/or modification of a PDU session between the wireless device 401 and DN 408. Criteria for UPF selection may comprise path efficiency and/or speed (e.g., a data rate) between the AN 402 and the DN 408. Reliability, load status, location, slice support and/or other capabilities of candidate UPFs may also be considered for UPF selection.

FIG. 4B shows an example of a core network architecture. The core network architecture 400B of FIG. 4B may accommodate untrusted access. The wireless device 401, as shown in FIG. 4B, may communicate with (e.g., connect to) the DN 408 via the AN 402 and the UPF 405. The AN 402 and the UPF 405 may constitute/comprise/provide trusted (e.g., 3GPP) access to the DN 408. The wireless device 401 may access the DN 408 using an untrusted access network. The untrusted access network may comprise the AN 403 and/or a non-3GPP interworking function (N3IWF) 404.

The AN 403 may be a wireless local area network (WLAN) (e.g., operating in accordance with the IEEE 802.11 standard). The wireless device 401 may communicate with (e.g., connect to) the AN 403 via an interface Y1. The connection may be in a manner that is prescribed for the AN 403. The connection to the AN 403 may or may not involve authentication. The wireless device 401 may obtain/receive an IP address from the AN 403. The wireless device 401 may determine to connect to the core network 400B using untrusted access. The AN 403 may communicate with N3IWF 404 via a Y2 interface. After selecting untrusted access, the wireless device 401 may provide N3IWF 404 with sufficient information to select an AMF. The selected AMF may be, for example, the same AMF that is used by wireless device 401 for 3GPP access (AMF 412 in the present example). The N3IWF 404 may communicate with AMF 412 via an N2 interface. The UPF 405 may be selected and N3IWF 404 may communicate with UPF 405 via an N3 interface. The UPF 405 may be a PDU session anchor (PSA). The UPF 405 may remain the anchor for a PDU session, for example, even as wireless device 401 shifts between trusted access and untrusted access.

FIG. 5 shows an example of a core network architecture. The core network architecture 500 of FIG. 5 may correspond to an example in which a wireless device 501 may be roaming. The wireless device 501 (e.g., in a roaming scenario) may be a subscriber of a first PLMN (e.g., a home PLMN, or HPLMN) but may attach to a second PLMN (e.g., a visited PLMN, or VPLMN). The core network architecture 500 may comprise a wireless device 501, an AN 502, a UPF 505, and/or a DN 508. The AN 502 and the UPF 505 may be associated with a VPLMN. The VPLMN may manage the AN 502 and/or the UPF 505 using core network elements associated with the VPLMN. The core network elements associated with the VPLMN may comprise an AMF 512, an SMF 514, a PCF 520, an NRF 530, an NEF 540, and/or an NSSF 570. An AF 599 may be adjacent the core network of the VPLMN.

The wireless device 501 may not be a subscriber of the VPLMN. The AMF 512 may authorize the wireless device 501 to access the network (e.g., the VPLMN), for example, based on roaming restrictions that may apply to wireless device 501. The core network of the VPLMN may interact with core network elements of an HPLMN of the wireless device 501 (e.g., a PCF 521, an NRF 531, an NEF 541, a UDM 551, and/or an AUSF 561), for example, to obtain network services provided by the VPLMN. The VPLMN and the HPLMN may communicate using an N32 interface connecting respective security edge protection proxies (SEPPs). The respective SEPPs may be a VSEPP 590 and/or an HSEPP 591.

The VSEPP 590 and/or the HSEPP 591 may communicate via an N32 interface (e.g., for defined purposes). The VSEPP 590 and the HSEPP 591 may communicate via an N32 interface while concealing information about each PLMN from the other. The SEPPs may apply roaming policies, for example, based on communications via the N32 interface. The PCF 520 and/or the PCF 521 may communicate via the SEPPs to exchange policy-related signaling. The NRF 530 and/or the NRF 531 may communicate via the SEPPs to enable service discovery of NFs in the respective PLMNs. The VPLMN and HPLMN may independently maintain the NEF 540 and the NEF 541. The NSSF 570 and/or the NSSF 571 may communicate via the SEPPs to coordinate slice selection for the wireless device 501. The HPLMN may handle all authentication and subscription related signaling. The VPLMN may authenticate the wireless device 501 and/or obtain subscription data of the wireless device 501 by accessing, via the SEPPs, the UDM 551 and the AUSF 561 of the HPLMN, for example, if the wireless device 501 registers and/or requests service via the VPLMN.

The core network architecture 500 may be referred to as a local breakout configuration, in which the wireless device 501 may access the DN 508 using one or more UPFs of the VPLMN (i.e., the UPF 505). Other configurations are possible. For example, in a home-routed configuration (not shown in FIG. 5), the wireless device 501 may access a DN using one or more UPFs of the HPLMN. In the home-routed configuration, an N9 interface may run parallel to the N32 interface, crossing the frontier between the VPLMN and the HPLMN, to carry user plane data. One or more SMFs of the respective PLMNs may communicate, via the N32 interface, to coordinate session management for the wireless device 501. The SMFs may control their respective UPFs on either side of the frontier.

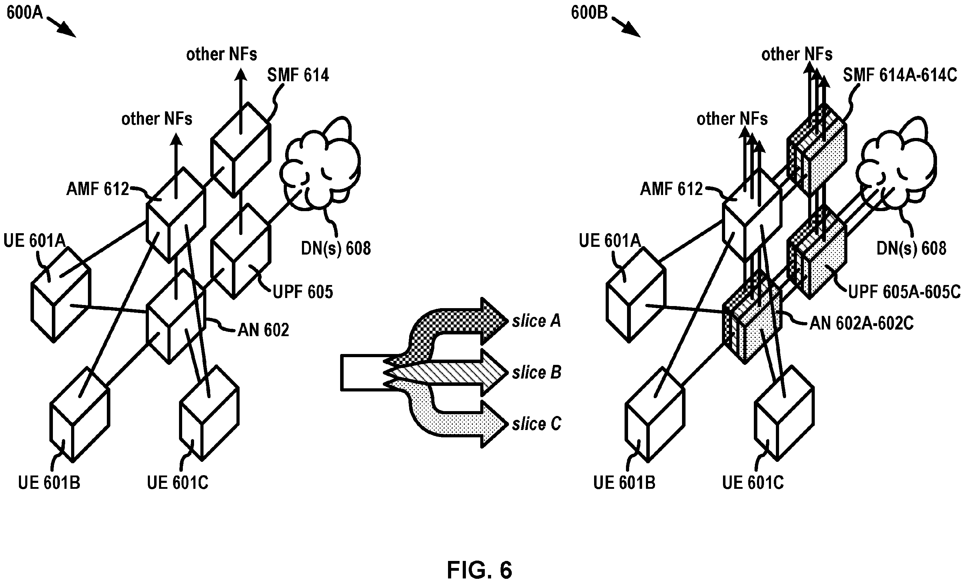

FIG. 6 shows an example of network slicing. Network slicing may refer to division of shared infrastructure (e.g., physical infrastructure) into distinct logical networks. These distinct logical networks may be independently controlled, isolated from one another, and/or associated with dedicated resources.

Network architecture 600A shows an un-sliced physical network corresponding to a single logical network. The network architecture 600A may comprise a user plane. Wireless devices 601A, 601B, 601C (collectively, wireless devices 601) may have a physical and/or a logical connection to a DN 608 via an AN 602 and a UPF 605 of the user plane. The network architecture 600A may comprise a control plane. An AMF 612 and an SMF 614, in the control plane, may control various aspects of the user plane.

The network architecture 600A may have a specific set of characteristics (e.g., relating to maximum bit rate, reliability, latency, bandwidth usage, power consumption, etc.). The set of characteristics may be affected by the nature/properties of the network elements (e.g., processing power, availability of free memory, proximity to other network elements, etc.) and/or the management thereof (e.g., optimization to maximize bit rate or reliability, reduce latency, reduce power, reduce bandwidth usage, etc.). The characteristics of the network architecture 600A may change over time. For example, by upgrading equipment and/or by modifying procedures to target a particular characteristic may change the characteristics of the network architecture 600A. At any given time, the network architecture 600A may have a single set of characteristics that may or may not be optimized for a particular use case. For example, wireless devices 601A, 601B, 601C may have different requirements, with the network architecture 600A being optimized for one of the three wireless devices.

The network architecture 600B shows an example of a sliced physical network divided into multiple logical networks. The physical network may be divided into three logical networks (e.g., slice A, slice B, and slice C). For example, the wireless device 601A may be served by AN 602A, UPF 605A, AMF 612, and SMF 614A. Wireless device 601B may be served by AN 602B, UPF 605B, AMF 612, and SMF 614B. Wireless device 601C may be served by AN 602C, UPF 605C, AMF 612, and SMF 614C. Although the respective wireless devices 601 may communicate with different network elements from a logical perspective, the network elements may be deployed by a network operator using the same physical network elements.

One or more network slices (e.g., each network slice) may be configured for providing network services with different sets of characteristics. For example, slice A may correspond to an enhanced mobile broadband (eMBB) service. Mobile broadband may refer to internet access by mobile users, commonly associated with smartphones. Slice B may correspond to ultra-reliable low-latency communication (URLLC), which may focus on reliability and speed. Relative to eMBB, URLLC may improve the feasibility of use cases such as autonomous driving and telesurgery. Slice C may correspond to massive machine type communication (mMTC), which may focus on low-power services delivered to a large number of users. For example, slice C may be optimized for a dense network of battery-powered sensors that may provide small amounts of data at regular intervals. Many mMTC use cases may be prohibitively expensive if they operated using an eMBB or URLLC network.

A network slice serving a wireless device 601 may be updated (e.g., to provide better and/or more suitable services), for example, if service requirements for one of the wireless devices 601 changes. The set of network characteristics corresponding to eMBB, URLLC, and mMTC may be varied, such that differentiated species of eMBB, URLLC, and mMTC may be provided for a wireless device. Network operators may provide entirely new services, for example, based on/in response to customer demand.

A wireless device 601 (e.g., each of the wireless devices 601) may have/use (or be associated with) a corresponding network slice. A single slice may serve any number/quantity of wireless devices and a single wireless device may operate using any number/quantity of slices. The AN 602, the UPF 605 and the SMF 614 may be separated into three separate slices, and the AMF 612 may be unsliced. A network operator may deploy any architecture that selectively utilizes any mix of sliced and unsliced network elements, with different network elements divided into different numbers/quantities of slices. Although FIG. 6 shows three core network functions (e.g., the UPF 605, the AMF 612, the SMF 614), other core network functions (e.g., such as other core network functions not shown) may be sliced. A PLMN that supports multiple network slices may maintain a separate network repository function (NFR) for each slice, which may enable other NFs to discover network services associated with that slice.

Network slice selection may be controlled by an AMF, or alternatively, by a separate network slice selection function (NSSF). For example, a network operator may define/configure and implement distinct network slice instances (NSIs). Each NSI may be associated with single network slice selection assistance information (S NSSAI). The S NSSAI may comprise a particular slice/service type (SST) indicator (e.g., indicating eMBB, URLLC, mMTC, etc.). For example, a particular tracking area may be associated with one or more configured S NSSAIs. wireless devices may identify one or more requested and/or subscribed S NSSAIs (e.g., during registration). The network may indicate to the wireless device one or more allowed and/or rejected S NSSAIs.

The S NSSAI may comprise a slice differentiator (SD) to distinguish between different tenants of a particular slice and/or service type. For example, a tenant may be a customer (e.g., a vehicle manufacture, a service provider, etc.) of a network operator that obtains (e.g., purchases) guaranteed network resources and/or specific policies for servicing its subscribers. The network operator may configure different slices and/or slice types, and use the SD to determine which tenant is associated with a particular slice.

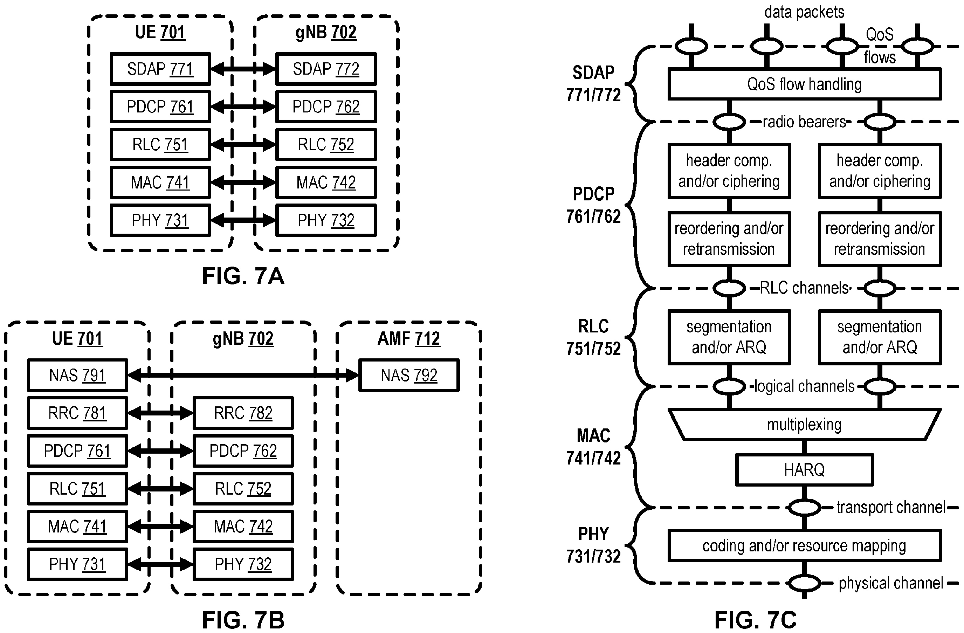

FIG. 7A shows an example UP protocol stack. FIG. 7B shows an example CP protocol stack. FIG. 7C shows example services provided between protocol layers of the UP protocol stack.

The layers may be associated with an open system interconnection (OSI) model of computer networking functionality. In the OSI model, layer 1 may correspond to the bottom layer, with higher layers on top of the bottom layer. Layer 1 may correspond to a PHY layer. PHY layer may correspond to physical infrastructure used for transfer of signals (e.g., cables, fiber optics, and/or radio frequency transceivers). Layer 1 (e.g., in NR protocols) may comprise a PHY layer. Layer 2 may correspond to a data link layer. Layer 2 may correspond to/be associated with packaging of data (into, e.g., data frames) for transfer, between nodes of the network (e.g., using the physical infrastructure of layer 1). Layer 2 (e.g., in NR protocols) may comprise a MAC layer, an RLC layer, a PDCP layer, and an SDAP layer.

Layer 3 may correspond to a network layer. Layer 3 may be associated with routing of the data which has been packaged in layer 2. Layer 3 may handle prioritization of data and traffic avoidance. Layer 3 (e.g., in NR protocols) may comprise an RRC layer and a NAS layer. Layers 4 through 7 may correspond to a transport layer, a session layer, a presentation layer, and an application layer. The application layer may interact with an end user to provide data associated with an application. An end user, implementing the application, may generate data associated with the application and initiate sending of that information to a targeted data network (e.g., the Internet, an application server, etc.). Starting at the application layer, each layer in the OSI model may manipulate and/or repackage the information and/or deliver it to a lower layer. At the lowest layer, the manipulated and/or repackaged information may be exchanged via physical infrastructure (e.g., electrically, optically, and/or electromagnetically). The information, approaching/received at the targeted data network, may be unpackaged and provided to higher layers, for example, until it reaches the application layer in a form that is usable by the targeted data network (e.g., the same form in which it was provided by the end user). The data network may perform this procedure, in reverse, for responding to the end user.

FIG. 7A shows an example UP protocol stack. The UP protocol stack may be an NR protocol stack for a Uu interface between a wireless device 701 and a base station 702. In layer 1 of the UP protocol stack, the wireless device 701 may implement a PHY layer (e.g., PHY 731) and the base station 702 may implement a PHY layer (e.g., PHY 732). In layer 2 of the UP protocol stack, the wireless device 701 may implement a MAC layer (e.g., MAC 741), an RLC layer (e.g., RLC 751), a PDCP layer (e.g., PDCP 761), and an SDAP layer (e.g., SDAP 771). The base station 702 may implement a MAC layer (e.g., MAC 742), an RLC layer (e.g., RLC 752), a PDCP layer (e.g., PDCP 762), and an SDAP layer (e.g., SDAP 772).

FIG. 7B shows a CP protocol stack. The CP protocol stack may be an NR protocol stack for the Uu interface between the wireless device 701 and the base station 702 and/or an N1 interface between the wireless device 701 and an AMF 712. In layer 1 of the CP protocol stack, the wireless device 701 may implement the PHY 731 and the base station 702 may implement the PHY 732. In layer 2 of the CP protocol stack, the wireless device 701 may implement the MAC 741, the RLC 751, the PDCP 761, an RRC layer (e.g., RRC 781), and a NAS layer (e.g., NAS 791). The base station 702 may implement the MAC 742, the RLC 752, the PDCP 762, and an RRC layer (e.g., RRC 782). The AMF 712 may implement a NAS layer (e.g., NAS 792).

The NAS (e.g., NAS 791 and NAS 792) may be concerned with/correspond to the non-access stratum. The non-access stratum may comprise communication between the wireless device 701 and the core network (e.g., the AMF 712). Lower layers may be concerned with/correspond to the access stratum. The access stratum may comprise communication between the wireless device 701 and the base station 702. Messages sent between the wireless device 701 and the core network may be referred to as NAS messages. A NAS message may be relayed by the base station 702 Content of the NAS message (e.g., information elements of the NAS message) may not be visible to the base station 702.

FIG. 7C shows an example of services provided between protocol layers (e.g., of the NR user plane protocol stack shown in FIG. 7A). The wireless device 701 may receive services through a PDU session. The PDU session may be a logical connection between the wireless device 701 and a DN. The wireless device 701 and the DN may exchange data packets associated with the PDU session. The PDU session may comprise one or more QoS flows. The SDAP 771 and/or the SDAP 772 may perform mapping and/or demapping between the one or more QoS flows of the PDU session and one or more radio bearers (e.g., data radio bearers). The mapping between the QoS flows and the data radio bearers may be determined in the SDAP 772 by the base station 702. The wireless device 701 may be notified of the mapping (e.g., based on control signaling and/or reflective mapping). The SDAP 772 of the base station 220 may mark downlink packets with a QFI and/or deliver the downlink packets to the wireless device 701 (e.g., for reflective mapping). The wireless device 701 may determine the mapping based on the QFI of the downlink packets.

The PDCP 761 and the PDCP 762 may perform header compression and/or decompression. Header compression may reduce the amount of data transmitted over the physical layer. The PDCP 761 and the PDCP 762 may perform ciphering and/or deciphering. Ciphering may reduce unauthorized decoding of data sent/transmitted over the physical layer (e.g., intercepted on an air interface), and/or may protect data integrity (e.g., to ensure control messages originate from intended sources). The PDCP 761 and/or the PDCP 762 may perform retransmissions of undelivered packets, in-sequence delivery and/or reordering of packets, duplication of packets, and/or identification and removal of duplicate packets. The PDCP 761 and/or the PDCP 762 may perform mapping between a split radio bearer and RLC channels, for example, in a dual connectivity scenario.

The RLC 751 and the RLC 752 may perform segmentation and retransmission through automatic repeat request (ARQ). The RLC 751 and the RLC 752 may perform removal of duplicate data units received from the MAC 741 and the MAC 742, respectively. The RLC 751 and the RLC 752 may provide RLC channels as a service to the PDCP 761 and the PDCP 762, respectively.

The MAC 741 and/or the MAC 742 may perform multiplexing and/or demultiplexing of logical channels. The MAC 741 and/or the MAC 742 may map logical channels to transport channels. The wireless device 701 may (e.g., in MAC 741) multiplex data units of one or more logical channels into a transport block. The wireless device 701 may send/transmit the transport block to the base station 702 using PHY 731. The base station 702 may receive the transport block using the PHY 732. The base station 702 may demultiplex data units of the transport blocks back into logical channels. The MAC 741 and/or the MAC 742 may perform error correction through hybrid automatic repeat request (HARQ), logical channel prioritization, and/or padding.

The PHY 731 and/or the PHY 732 may perform mapping of transport channels to physical channels. The PHY 731 and/or the PHY 732 may perform digital and analog signal processing functions (e.g., coding/decoding and modulation/demodulation) for sending and receiving information (e.g., transmission via an air interface). The PHY 731 and/or the PHY 732 may perform multi-antenna mapping.

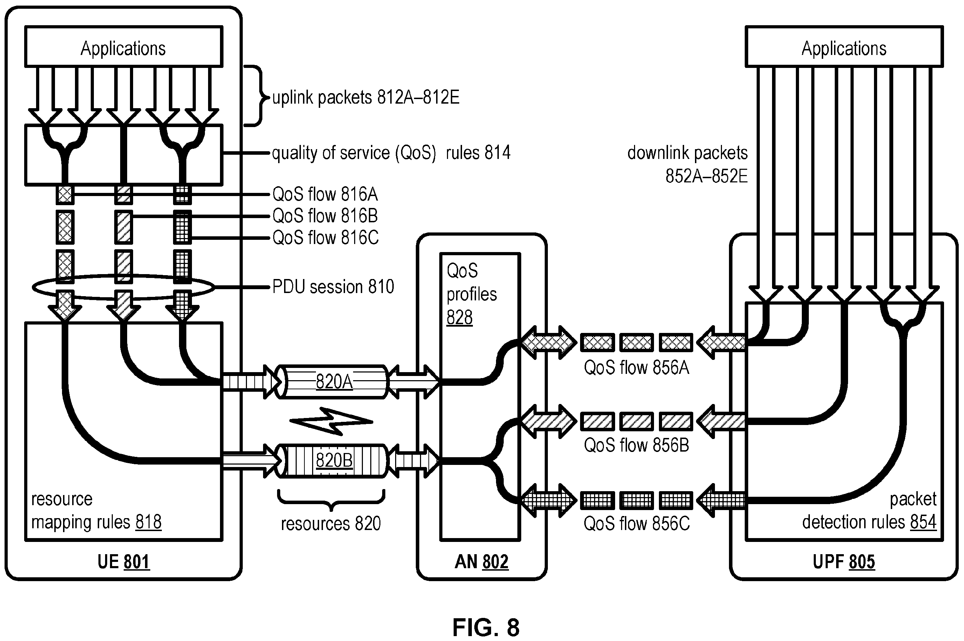

FIG. 8 shows an example of a QoS model. The QoS model may be for differentiated data exchange. The QoS model may comprise a wireless device 801, an AN 802, and/or a UPF 805. The QoS model may facilitate prioritization of PDUs (which may also be referred to as packets). Higher-priority packets may be exchanged faster and/or more reliably than lower-priority packets. The network may devote more resources to exchange of high QoS packets (e.g., high priority packets).

A PDU session 810 may be established between the wireless device 801 and the UPF 805. The PDU session 810 may be a logical connection enabling the wireless device 801 to exchange data with a particular data network (e.g., the Internet). The wireless device 801 may request establishment of the PDU session 810. The wireless device 801 may indicate/identify the targeted data network based on its data network name (DNN), for example, at the time that the PDU session 810 is established. The PDU session 810 may be managed by an SMF (not shown). The SMF may select the UPF 805 (and/or optionally, one or more other UPFs, not shown), for example, to facilitate exchange of data associated with the PDU session 810, between the wireless device 801 and the data network.

One or more applications 808 associated with wireless device 801 may generate uplink packets 812A-812E associated with the PDU session 810. The wireless device 801 may apply QoS rules 814 to the uplink packets 812A-812E in accordance with a QoS model. The QoS rules 814 may be associated with the PDU session 810. The QoS rules 814 may be determined by and/or provided to the wireless device 801, for example, based on establishment and/or modification of the PDU session 810 (e.g., if/when the PDU session 810 is established and/or modified). The wireless device 801, based on the QoS rules 814, may classify the uplink packets 812A-812E, map each of the uplink packets 812A-812E to a QoS flow, and/or mark the uplink packets 812A-812E with a QFI. A packet may be sent through the network. A packet may mix with other packets from other wireless devices (e.g., having potentially different priorities). The QFI may indicate how the packet should be handled in accordance with the QoS model. As shown in the example of FIG. 8, uplink packets 812A, 812B may be mapped to a QoS flow 816A, an uplink packet 812C may be mapped to a QoS flow 816B, and the remaining packets may be mapped to QoS flow 816C.

The QoS flows may be the finest granularity of QoS differentiation in a PDU session. In FIG. 8, three QoS flows 816A-816C are shown. A different quantity/number of QoS flows may be present/used (e.g., 1, 2, 4, 5, or any other number/quantity). One or more QoS flows may be associated with a guaranteed bit rate (e.g., guaranteed bit rate (GBR) QoS flows). One or more QoS flows may have bit rates that are not guaranteed (non-GBR QoS flows). QoS flows may be subject to per-wireless device and/or per-session aggregate bit rates. A QoS flow of the QoS flows may be a default QoS flow. QoS flows may have different priorities. For example, the QoS flow 816A may have a higher priority than the QoS flow 816B, which may have a higher priority than the QoS flow 816C. Different priorities may be reflected by different QoS flow characteristics. For example, QoS flows may be associated with flow bit rates. A particular QoS flow may be associated with a guaranteed flow bit rate (GFBR) and/or a maximum flow bit rate (MFBR). QoS flows may be associated with specific packet delay budgets (PDBs), packet error rates (PERs), and/or maximum packet loss rates. QoS flows may be subject to per-wireless device and/or per-session aggregate bit rates.

The wireless device 801 may apply resource mapping rules 818 to the QoS flows 816A-816C for operating within the QoS model. The air interface between wireless device 801 and/or the AN 802 may be associated with resources 820. The QoS flow 816A may be mapped to resource 820A, and the QoS flows 816B, 816C may be mapped to resource 820B. The resource mapping rules 818 may be provided by the AN 802. The resource mapping rules 818 may designate more resources for relatively high priority QoS flows for meeting QoS requirements. A high priority QoS flow (e.g., the QoS flow 816A) may, based on the resources, be more likely to obtain the high flow bit rate, low packet delay budget, and/or other satisfy other characteristics associated with QoS rules 814. The resources 820 may comprise radio bearers. The radio bearers (e.g., data radio bearers) may be established between the wireless device 801 and the AN 802. The radio bearers in 5G, between the wireless device 801 and the AN 802, may be distinct from bearers in LTE (e.g., evolved packet system (EPS) bearers between a wireless device and a packet data network gateway (PGW), S1 bearers between an eNB and a serving gateway (SGW), and/or an S5/S8 bearer between an SGW and a PGW).

A packet associated with a particular QoS flow may be received at the AN 802 via the resource 820A or the resource 820B. The AN 802 may separate packets into respective QoS flows 856A-856C based on QoS profiles 828. The QoS profiles 828 may be received from an SMF. A QoS profile (e.g., each QoS profile) may correspond to a QFI (e.g., the QFI marked on the uplink packets 812A-812E). A QoS profile (e.g., each QoS profile) may comprise QoS parameters. The QoS parameters may comprise/indicate one or both of 5G QoS identifier (5QI) and/or an allocation and retention priority (ARP). The QoS profile for non-GBR QoS flows may comprise/indicate other/additional QoS parameters (e.g., a reflective QoS attribute (RQA)). The QoS profile for GBR QoS flows may further comprise/indicate additional QoS parameters (e.g., a GFBR, an MFBR, and/or a maximum packet loss rate). The 5QI may be a standardized 5QI having one-to-one mapping to a standardized combination of 5G QoS characteristics. The 5QI may be a dynamically assigned 5QI for which the standardized 5QI values may not be defined. The 5QI may represent 5G QoS characteristics. The 5QI may comprise/indicate one or more of a resource type, a default priority level, a packet delay budget (PDB), a packet error rate (PER), a maximum data burst volume, and/or an averaging window. The resource type may indicate a non-GBR QoS flow, a GBR QoS flow, and/or a delay-critical GBR QoS flow. The averaging window may represent a duration over which the GFBR and/or MFBR may be calculated/determined. The ARP may be a priority level comprising pre-emption capability and a pre-emption vulnerability. The AN 802 may apply admission control for the QoS flows (e.g., if resource limitations are determined), for example, based on the ARP.

The AN 802 may select/determine one or more N3 tunnels for transmission of the QoS flows 856A-856C. The packets (e.g., the uplink packets 812A-812E) may be sent to the UPF 805 (e.g., towards a DN) via the selected one or more N3 tunnels. The UPF 805 may verify that the QFIs of the uplink packets 812A-812E are aligned with the QoS rules 814 provided to the wireless device 801. The UPF 805 may measure, count packets, and/or provide packet metrics to one or more other entities in the network (e.g., a NF such as a PCF).

FIG. 8 shows a process that may comprise downlink transmissions. One or more applications may generate downlink packets 852A-852E. The UPF 805 may receive the downlink packets 852A-852E from one or more DNs and/or one or more other UPFs. The UPF 805 may apply PDRs 854 to downlink the packets 852A-852E, for example, based on the QoS model. The UPF 805 may map, based on the PDRs 854, the packets 852A-852E into QoS flows. As shown in FIG. 8, downlink packets 852A, 852B may be mapped to a QoS flow 856A, downlink packet 852C may be mapped to a QoS flow 856B, and/or the remaining packets may be mapped to a QoS flow 856C.

The QoS flows 856A-856C may be sent to the AN 802. The AN 802 may apply resource mapping rules to the QoS flows 856A-856C. The QoS flow 856A may be mapped to the resource 820A. The QoS flows 856B, 856C may be mapped to the resource 820B. The resource mapping rules may designate more resources to high priority QoS flows in order to meet QoS requirements.

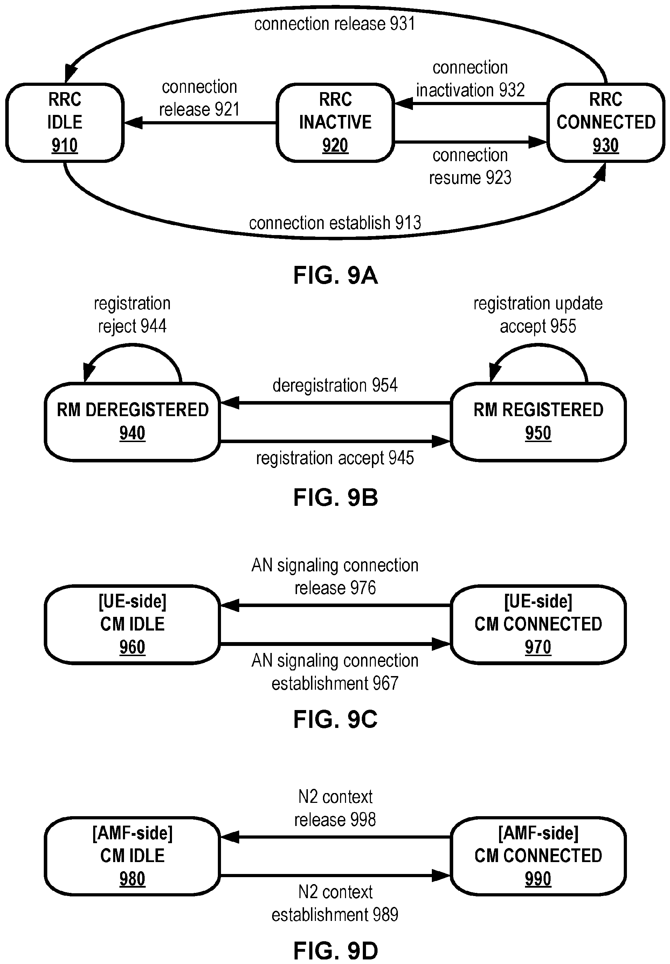

FIGS. 9A- 9D show example states and state transitions of a wireless device. The wireless device, at any given time, may have (or be associated with) one or more of an RRC state, a registration management (RM) state, and/or a connection management (CM) state.

FIG. 9A shows RRC state transitions of a wireless device. The wireless device may be in one of three RRC states: RRC idle 910 (e.g., RRC_IDLE), RRC inactive 920 (e.g., RRC_INACTIVE), or RRC connected 930 (e.g., RRC_CONNECTED). The wireless device may implement/apply/use different RAN-related control plane procedures, for example, depending on the RRC state of the wireless device. Other elements of the network (e.g., a base station) may track RRC state(s) of one or more wireless devices and/or implement/apply/use RAN-related control plane procedures appropriate to an RRC state of each wireless device.

The wireless device may exchange data with a network (e.g., a base station) in an RRC connected state (e.g., RRC connected 930). The parameters necessary for exchange of data may be established and/or may be known to both the wireless device and the network. The parameters may be referred to (and/or may be included in) an RRC context of the wireless device (e.g., which may be referred to as a wireless device context). The parameters may comprise, for example, one or more access stratum (AS) contexts, one or more radio link configuration parameters, bearer configuration information (e.g., relating to a data radio bearer, signaling radio bearer, logical channel, QoS flow, and/or PDU session), security information, and/or PHY layer, MAC layer, RLC layer, PDCP layer, and/or SDAP layer configuration information. The base station with which the wireless device may be connected may store the RRC context of the wireless device.

Mobility of the wireless device, in the RRC connected state, may be managed by the access network. The wireless device may manage mobility, for example, if the wireless device is in an RRC idle state (e.g., the RRC idle 910) and/or an RRC inactive state (e.g., the RRC inactive 920). The wireless device may manage mobility, for example, by measuring signal levels (e.g., reference signal levels) of signals from a serving cell and neighboring cells, and/or by reporting measurements to the base station currently serving the wireless device. The network may initiate handover, for example, based on the reported measurements. The RRC state may transition from the RRC connected state to the RRC idle state via a connection release procedure 930. The RRC state may transition from the RRC connected state to the RRC inactive state via a connection inactivation procedure 932.

An RRC context may not be established for the wireless device. For example, this may be during the RRC idle state. During the RRC idle state (e.g., the RRC idle 910), an RRC context may not be established for the wireless device. During the RRC idle state (e.g., the RRC idle 910), the wireless device may not have an RRC connection with the base station. During the RRC idle state (e.g., the RRC idle 910), the wireless device may be in a sleep state for the majority of the time (e.g., to conserve battery power). The wireless device may wake up periodically (e.g., each discontinuous reception (DRX) cycle) to monitor for paging messages (e.g., paging messages set from the AN). Mobility of the wireless device may be managed by the wireless device via a procedure of a cell reselection. The RRC state may transition from the RRC idle state (e.g., the RRC idle 910) to the RRC connected state (e.g., the RRC connected 930) via a connection establishment procedure 913, which may involve a random access procedure.

A previously established RRC context may be maintained for the wireless device. For example, this may be during the RRC inactive state. During the RRC inactive state (e.g., the RRC inactive 920), the RRC context previously established may be maintained in the wireless device and the base station. The maintenance of the RRC context may enable/allow a fast transition to the RRC connected state (e.g., the RRC connected 930) with reduced signaling overhead as compared to the transition from the RRC idle state (e.g., the RRC idle 910) to the RRC connected state (e.g., the RRC connected 930). The RRC state may transition from the RRC inactive state (e.g., the RRC inactive 920) to the RRC connected state (e.g., the RRC connected 930) via a connection resume procedure 923. The RRC state may transition from the RRC inactive state (e.g., the RRC inactive 920) to the RRC idle state (e.g., the RRC idle 910) via a connection release procedure 921 that may be the same as or similar to connection release procedure 931.

An RRC state may be associated with a mobility management mechanism. During the RRC idle state (e.g., RRC idle 910) and the RRC inactive state (e.g., the RRC inactive 920), mobility may be managed/controlled by the wireless device via a cell reselection. The purpose of mobility management during the RRC idle state (e.g., the RRC idle 910) or during the RRC inactive state (e.g., the RRC inactive 920) may be to enable/allow the network to be able to notify the wireless device of an event via a paging message without having to broadcast the paging message over the entire mobile communications network. The mobility management mechanism used during the RRC idle state (e.g., the RRC idle 910) and/or during the RRC inactive state (e.g., the RRC inactive 920) may enable/allow the network to track the wireless device on a cell-group level, for example, so that the paging message may be broadcast over the cells of the cell group that the wireless device currently resides within (e.g., instead of sending the paging message over the entire mobile communication network). The mobility management mechanisms may be based on different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN may send to the wireless device a list of TAIs associated with a wireless device registration area (e.g., a wireless device registration area). A wireless device may perform a registration update with the CN to allow the CN to update the location of the wireless device and provide the wireless device with a new the wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 920), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 920).

FIG. 9B shows example registration management (RM) state transitions of a wireless device. The states may be RM deregistered 940, (e.g., an RM deregistered state, RM-DEREGISTERED) and RM registered 950 (e.g., an RM deregistered state, RM-REGISTERED).

The wireless device (e.g., in RM deregistered state) may not be registered with the network, and/or the wireless device may not be reachable by the network. The wireless device may perform an initial registration, for example, in order to be reachable by the network. The wireless device may register with an AMF of the network. The wireless device may remain in the RM deregistered state, for example, if registration is rejected (e.g., via a registration reject procedure 944). The wireless device may transition to the RM registered state, for example, if the registration is accepted (e.g., via a registration accept procedure 945). The network may store, keep, and/or maintain a wireless device context for the wireless device, for example, if (e.g., while) the wireless device is in RM registered state. The wireless device context corresponding to network registration (e.g., maintained by the core network) may be different from the RRC context corresponding to RRC state (e.g., maintained by an access network or an element thereof, such as a base station). The wireless device context may comprise a wireless device indicator/identifier and a record of information relating to the wireless device. The information relating to the wireless device may comprise one or more of wireless device capability information, policy information for access and mobility management of the wireless device, lists of allowed or established slices or PDU sessions, and/or a registration area of the wireless device (i.e., a list of tracking areas covering the geographical area where the wireless device is likely to be found).

The network may store the wireless device context of the wireless device, for example, if (e.g., while) the wireless device is in an RM registered state. The network may (e.g., if necessary) use the wireless device context to reach/communicate the wireless device, for example, if (e.g., while) the wireless device is in an RM registered state. Some services may not be provided by the network unless the wireless device is registered. The wireless device may update its wireless device context while remaining in the RM registered state (e.g., via a registration update accept procedure 955). The wireless device may provide a tracking area indicator/identifier to the network, for example, if the wireless device leaves one tracking area and enters another tracking area. The network may deregister the wireless device, or the wireless device may deregister itself (e.g., via a deregistration procedure 954). The network may automatically deregister the wireless device if the wireless device is inactive for a certain amount of time. The wireless device may transition to the RM deregistered state, for example, based on the deregistration.

FIG. 9C shows example connection management (CM) state transitions of a wireless device. The example CM state transitions of the wireless device as shown in FIG. 9C are from a perspective of the wireless device. The wireless device may be in CM idle 960 (e.g., CM idle state, CM-IDLE) or CM connected 970 (e.g., CM connected state, CM-CONNECTED).

The wireless device may not have a NAS signaling connection with the network, for example, if the wireless device is in a CM idle state. The wireless device may not communicate with core network functions, for example, based on not having the NAS signaling connection. The wireless device may transition to a CM connected state by establishing an AN signaling connection (e.g., via an AN signaling connection establishment procedure 967). The transition may be initiated by sending an initial NAS message. The initial NAS message may be a registration request (e.g., if the wireless device is in an RM deregistered state) or a service request (e.g., if the wireless device is in an RM registered state). The wireless device may initiate the AN signaling connection establishment by sending a service request and/or the network may send a page (e.g., triggering the wireless device to send the service request), for example, If the wireless device is in an RM registered state.

The wireless device may communicate with core network functions using NAS signaling, for example, if the wireless device is in a CM connected state. For example, the wireless device may exchange (e.g., send and/or receive) NAS signaling with an AMF for registration management purposes, service request procedures, and/or authentication procedures. The wireless device may exchange NAS signaling, with an SMF, to establish and/or modify a PDU session. The network may disconnect the wireless device, or the wireless device may disconnect itself (e.g., via an AN signaling connection release procedure 976). The wireless device may transition to the CM idle state, for example, if the wireless device transitions to the RM deregistered state. The network may deactivate a user plane connection of a PDU session of the wireless device, for example, based on the wireless device transitioning to the CM idle state.

FIG. 9D shows example CM state transitions of the wireless device. The example CM state transitions of the wireless device as shown in FIG. 9D may be from a network perspective (e.g., an AMF perspective). The CM state of the wireless device, as tracked by the AMF, may be CM idle 980 (e.g., CM idle state, CM-IDLE) or CM connected 990 (e.g., CM connected state, CM-CONNECTED). The AMF many establish an N2 context of the wireless device (e.g., via an N2 context establishment procedure 989), for example, based on the wireless device transitioning from CM idle 980 to CM connected 990. The AMF may release the N2 context of the wireless device (e.g., via an N2 context release 998 procedure), for example, based on the wireless device transitioning from CM connected 990 to CM idle 980.

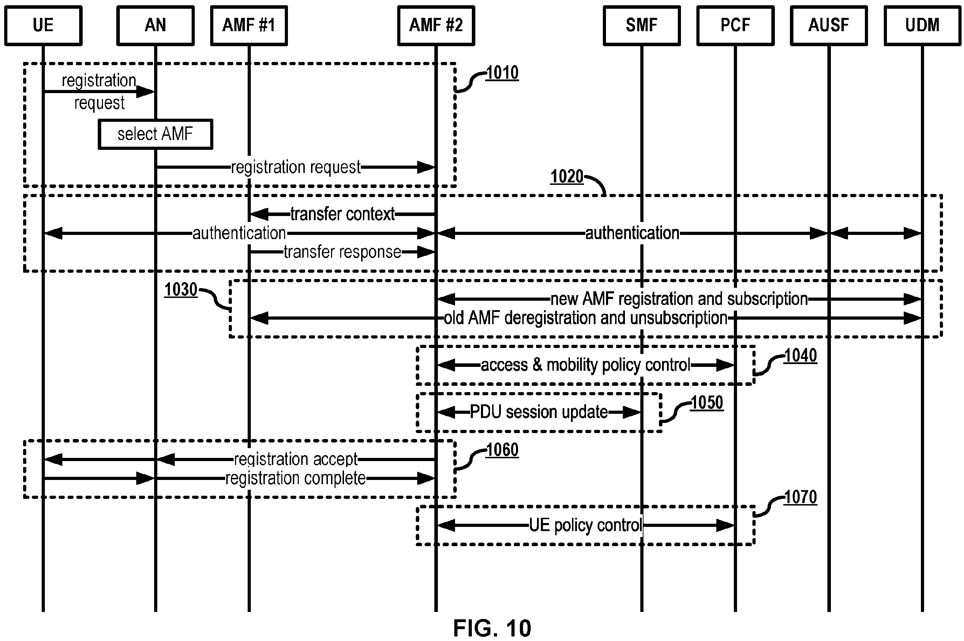

FIG. 10, FIG. 11, and FIG. 12 show example procedures for registering, service request, and PDU session establishment of a wireless device. FIG. 10 shows an example registration procedure for a wireless device. The wireless device 1002 may transition from an RM deregistered state (e.g., RM deregistered 940) to an RM registered state (e.g., RM registered 950), for example, based on the registration procedure.

Registration may be initiated by a wireless device 1002 for obtaining authorization to receive services, enabling mobility tracking, enabling reachability, and/or any other purpose. The wireless device 1002 may perform an initial registration (e.g., as a first step toward connecting to the network). For example, the wireless device 1002 may perform an initial registration based on the wireless device being powered on (e.g., if the wireless device is powered on), based on an airplane mode being turned off (e.g., if an airplane mode is turned off), and/or based on one or more other conditions and/or events. Registration may be performed periodically which may keep the network informed of the wireless device's presence (e.g., while the wireless device 1002 is in a CM idle state). Registration may be performed based on (e.g., in response to) a change in wireless device capability and/or registration area. Deregistration (not shown in FIG. 10) may be performed to stop network access.

At step 1010, the wireless device 1002 may send/transmit a registration request to an AN 1004. For example, the wireless device 1002 may have moved from a coverage area of a previous AMF (e.g., AMF 1006) into a coverage area of a new AMF (e.g., AMF 1008). The registration request may be/comprise a NAS message. The registration request may comprise a wireless device identifier. The AN 1004 may determine/select an AMF for registration of the wireless device. The AN 1004 may select a default AMF, or may determine/select an AMF that is already mapped to the wireless device 1002 (e.g., a previous AMF). The NAS registration request may comprise a network slice identifier. The AN 1004 may determine/select an AMF based on the requested slice. The AN 1004 may send the registration request to the selected AMF, for example, based on determination of the selected AMF. The selected AMF (e.g., AMF 1008) may receive the registration request.

At step 1020, the AMF that receives the registration request (e.g., AMF 1008) may perform a context transfer. The context may be a wireless device context (e.g., an RRC context for the wireless device). The AMF 1008 may send, to the AMF 1006, a message (e.g., an Namf_Communication_UEContextTransfer message) requesting a context of the wireless device. The message may comprise the wireless device indicator/identifier. The AMF 1006 may send, to the AMF 1008, a message (e.g., an Namf_Communication_UEContextTransfer message) that comprises the requested wireless device context. The AMF 1008 may coordinate authentication of the wireless device 1002, for example, based on receiving the wireless device context. The AMF 1008 may send, to the AMF 1006 and based on completion of authentication, a message (e.g., an Namf_Communication_UEContextTransfer Response message) indicating that the wireless device context transfer is complete.

The authentication may involve participation of one or more of the wireless device 1002, an AUSF 1016, a UDM 1018 and/or a UDR (not shown). The AMF 1008 may request that the AUSF 1016 authenticate the wireless device 1002. The AUSF may execute authentication of the wireless device 1002 (e.g., based on the request). The AUSF 1016 may get authentication data from the UDM 1018. The AUSF 1016 may send, to the AMF 1008, a subscription permanent identifier (SUPI), for example, based on the authentication being successful. The AUSF 1016 may provide an intermediate key to the AMF 1008. The intermediate key may be used to derive an access-specific security key for the wireless device 1002. The access-specific security key may enable the AMF 1008 to perform security context management (SCM). The AUSF 1016 may obtain subscription data from the UDM 1018. The subscription data may be based on information obtained from the UDM 1018 (and/or the UDR). The subscription data may comprise subscription identifiers/indicators, security credentials, access and mobility related subscription data, and/or session related data.

At step 1030, the AMF 1008 may register and/or subscribe to the UDM 1018. The AMF 1008 may perform registration using a wireless device context management service of the UDM 1018 (e.g., Nudm_UECM). The AMF 1008 may obtain subscription information of the wireless device 1002 using a subscriber data management service of the UDM 1018 (e.g., Nudm_SDM). The AMF 1008 may further request that the UDM 1018 notify/send a notification to the AMF 1008 if the subscription information of the wireless device 1002 changes. The AMF 1006 may deregister and unsubscribe, for example, based on the AMF 1008 registering and/or subscribing. The AMF 1006 may no longer need to perform mobility management of the wireless device 1006, for example, based on (e.g., after) deregistering.

At step 1040, the AMF 1008 may retrieve access and mobility (AM) policies from the PCF 1014. The AMF 1008 may provide subscription data of the wireless device 1002 to the PCF 1014. The PCF 1014 may determine access and mobility policies for the wireless device 1002, for example, based on the subscription data, network operator data, current network conditions, and/or other suitable information. For example, the owner/user of a first wireless device may purchase a higher level of service than the owner/user of a second wireless device. The PCF 1014 may provide the rules associated with the different levels of service. The network may apply different policies which facilitate different levels of service, for example, based on the subscription data of the respective wireless devices.

Access and mobility policies may relate to (e.g., may be based on and/or comprise) service area restrictions, radio access technology (RAT) frequency selection priority (RFSP), authorization and prioritization of access type (e.g., LTE versus NR), and/or selection of non-3GPP access (e.g., access network discovery and selection policy (ANDSP)). The service area restrictions may comprise list(s) of tracking areas where the wireless device is allowed to be served (and/or forbidden from being served). The access and mobility policies may comprise a wireless device (e.g., UE) route selection policy (URSP) that may influence routing to an established PDU session and/or a new PDU session. Different policies may be obtained and/or be enforced based on subscription data of the wireless device, location of the wireless device (e.g., location of the AN and/or AMF), and/or other suitable factors.

At step 1050, the AMF 1008 may update a context of a PDU session. The AMF 1008 may coordinate/communicate with an SMF (e.g., SMF 1012) to activate a user plane connection associated with an existing PDU session, for example, if the wireless device has/is associated with the existing PDU session. The SMF 1012 may update and/or release a session management context of the PDU session (e.g., Nsmf_PDUSession_UpdateSMContext, Nsmf_ PDUSession_ReleaseSMContext).

At step 1060, the AMF 1008 may send a registration accept message to the AN 1004. The AN 1004 may forward the registration accept message to the wireless device 1002. The registration accept message may comprise a new wireless device indicator/identifier and/or a new configured slice indicator/identifier. The wireless device 1002 may send/transmit a registration complete message to the AN 1004. The AN 1004 may forward the registration complete message to the AMF 1008. The registration complete message may acknowledge receipt of the new wireless device identifier and/or new configured slice identifier.

At step 1070, the AMF 1008 may receive/obtain wireless device policy control information from the PCF 1014. The PCF 1014 may send/provide an ANDSP (e.g., to facilitate non-3GPP access). The PCF 1014 may provide URSP to facilitate mapping of particular data traffic to particular PDU session connectivity parameters. The URSP may indicate that data traffic associated with a particular application should be mapped to a particular SSC mode, network slice, PDU session type, and/or preferred access type (e.g., 3GPP or non-3GPP).

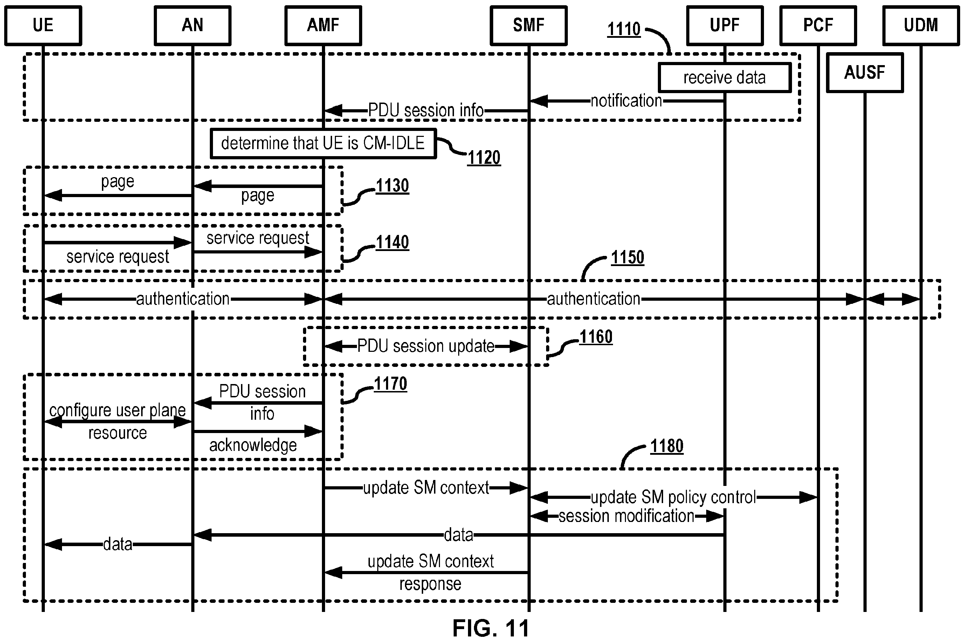

FIG. 11 shows an example service request procedure for a wireless device. The service request procedure may be a network-triggered service request procedure for a wireless device in a CM idle state. Other service request procedures (e.g., a wireless device-triggered service request procedure) may be performed in a manner similar to that described with reference to FIG. 11.

At step 1110, a UPF 1112 may receive data. The data may be downlink data for transmission to a wireless device (e.g., wireless device 1102). The data may be associated with an existing PDU session between the wireless device 1102 and a DN. The data may be received from a DN and/or another UPF. The UPF 1112 may buffer the received data. The UPF 1112 may notify an SMF (e.g., SMF 1108) of the received data, for example, based on (e.g., in response to) receiving the data. The identity of the SMF to be notified may be determined based on the received data. The notification may be an N4 session report. The notification may indicate that the UPF 1112 has received data associated with the wireless device 1102 and/or a particular PDU session associated with the wireless device 1102. The SMF 1108 may send PDU session information to an AMF 1106, for example, based on (e.g., in response to) receiving the notification. The PDU session information may be sent in an N1N2 message transfer for forwarding to an AN 1104. The PDU session information may comprise UPF tunnel endpoint information and/or QoS information.

At step 1120, the AMF 1106 may determine that the wireless device 1102 is in a CM idle state. The determining may be based on (e.g., in response to) the receiving of the PDU session information. The service request procedure may proceed to steps 1130 and 1140, for example, based on the determination that the wireless device is in CM idle state. The steps 1130 and 1140 may be skipped, and the service request procedure may proceed directly to 1150, for example, based on determining that the wireless device is not in CM idle state (e.g., the wireless device is in CM connected state).

At step 1130, the AMF 1106 may page the wireless device 1102. The paging at step 1130 may be performed based on the wireless device being in a CM idle state. The AMF 1106 may send a page to the AN 1104 to perform the paging. The page may be referred to as a paging or a paging message. The page may be an N2 request message. The AN 1104 may be one of a plurality of ANs in a RAN notification area of the wireless device 1102. The AN may send a page to the wireless device 1102. The wireless device 1102 may be in a coverage area of the AN 1104 and may receive the page.

At step 1140, the wireless device 1102 may request service. The wireless device 1102 may send/transmit a service request to the AMF 1106 via the AN 1104. The wireless device 1102 may request service at step 1140, for example, based on (e.g., in response to) receiving the paging at step 1130. The wireless device 1102 may receive the page and request service based on the service request procedure being a network-triggered service request procedure. The wireless device 1102 may commence a wireless device-triggered service request procedure in some scenarios (e.g., if uplink data becomes available at the wireless device). The wireless device-triggered service request procedure may commence starting at step 1140 (e.g., one or more of steps 1110 and 1120 may be skipped).

At step 1150, the network may authenticate the wireless device 1102. Authentication may require participation of the wireless device 1102, an AUSF 1116, and/or a UDM 1118 (e.g., as described herein). The authentication at step 1150 may be skipped, for example, in one or more scenarios (e.g., if the wireless device 1102 has recently been authenticated).

At step 1160, the AMF 1106 and the SMF 1108 may perform a PDU session update. The PDU session update may comprise the SMF 1108 providing, to the AMF 1106, with one or more UPF tunnel endpoint identifiers. The SMF 1108 may coordinate with one or more other SMFs and/or one or more other UPFs to set up a user plane.

At step 1170, the AMF 1106 may send PDU session information to the AN 1104. The PDU session information may be included in an N2 request message. The AN 1104 may configure a user plane resource for the wireless device 1102, for example, based on the PDU session information. The AN 1104 may perform an RRC reconfiguration of the wireless device 1102, for example, to configure the user plane resource. The AN 1104 may acknowledge the AMF 1106 (e.g., send an acknowledgment message to the AMF 1106 indicating) that the PDU session information has been received. The AN 1104 may notify the AMF 1106 (e.g., via the acknowledgment message) that the user plane resource has been configured, and/or provide information relating to the user plane resource configuration.

The wireless device 1102 may receive (e.g., at step 1170), for a wireless device-triggered service procedure, a NAS service accept message from the AMF 1106 via the AN 1104. The wireless device 1102 may send/transmit uplink data (e.g., the uplink data that caused the wireless device 1102 to trigger the service request procedure), for example, based on (e.g., after) configuring the user plane resource.

At step 1180, the AMF 1106 may update a session management (SM) context of the PDU session. The AMF 1106 may notify the SMF 1108 (and/or one or more other associated SMFs) that the user plane resource has been configured, and/or may provide information relating to the user plane resource configuration. The AMF 1106 may provide/send to the SMF 1108 (and/or one or more other associated SMFs) one or more AN tunnel endpoint identifiers/indicators of the AN 1104. The SMF 1108 may send an update SM context response message to the AMF 1106, for example, based on (e.g., after) the SM context update being complete.

The SMF 1108 may update a PCF (e.g., the PCF 1114) for purposes of policy control, for example, based on the update of the session management context. For example, the SMF 1108 may notify (e.g., via PCF 1114 update) the PCF 1114 of a new location of the wireless device 1102 if a location of the wireless device 1102 has changed. The SMF 1108 and the UPF 1112 may perform a session modification, for example, based on the update of the session management context. The session modification may be performed using N4 session modification messages. The UPF 1112 may send/transmit downlink data (e.g., the downlink data that caused the UPF 1112 to trigger the network-triggered service request procedure) to the wireless device, for example, based on the session modification being completed. The sending/transmitting of the downlink data may be based on the one or more AN tunnel endpoint identifiers of the AN 1104.

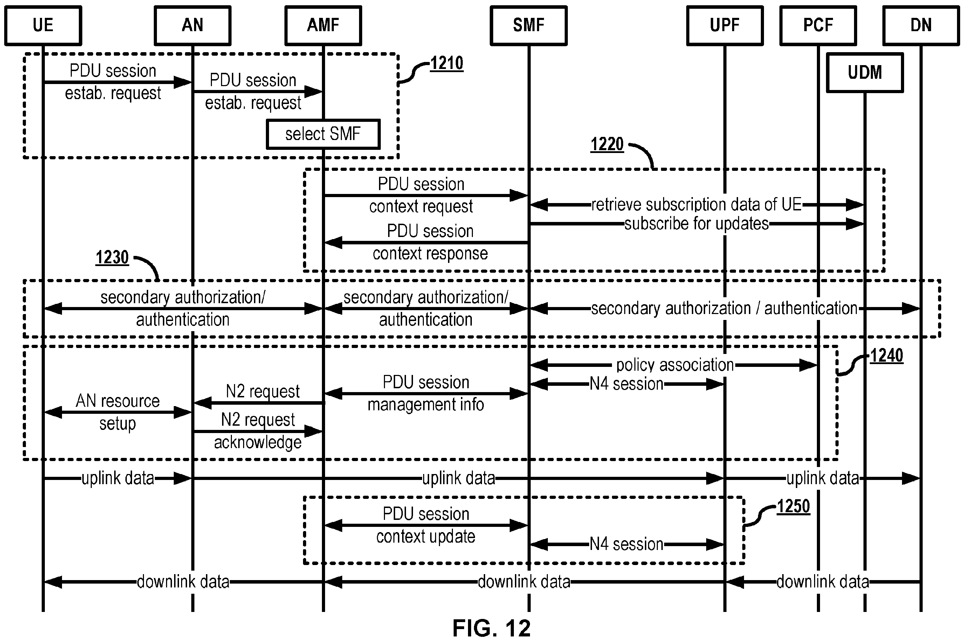

FIG. 12 shows an example PDU session establishment procedure for a wireless device. The wireless device 1202 may determine to send/transmit a PDU session establishment request (e.g., for the PDU session establishment procedure) to create a new PDU session, to hand over an existing PDU session to a 3GPP network, and/or for any other suitable reason.

At step 1210, the wireless device 1202 may initiate PDU session establishment. The wireless device 1202 may send/transmit a PDU session establishment request, via an AN 1204, to an AMF 1206. The PDU session establishment request may be a NAS message. The PDU session establishment request may indicate/comprise one or more of: a PDU session indicator/ID; a requested PDU session type (e.g., whether the requested PDU session is new or existing); a requested DN (e.g., a DNN); a requested network slice (S NSSAI); a requested SSC mode; and/or any other suitable information. The PDU session ID may be generated by the wireless device 1202. The PDU session type may be, for example, an Internet Protocol (IP)-based type (e.g., IPv4, IPv6, or dual stack IPv4/IPv6), an Ethernet type, or an unstructured type.

The AMF 1206 may determine/select an SMF (e.g., SMF 1208) based on the PDU session establishment request. The requested PDU session may, in at least some scenarios, already be associated with a particular SMF. For example, the AMF 1206 may store a wireless device context of the wireless device 1202, and the wireless device context may indicate that the PDU session ID of the requested PDU session is already associated with the particular SMF. In some scenarios, the AMF 1206 may select the SMF based on a determination that the SMF is prepared to handle the requested PDU session. For example, the requested PDU session may be associated with a particular DNN and/or S NSSAI. The SMF may be selected based on a determination that the SMF can manage a PDU session associated with the particular DNN and/or S NSSAI.

At step 1220, the network may manage a context of the PDU session. The AMF 1206 may send a PDU session context request to the SMF 1208, for example, based on (e.g., after) selecting the SMF 1208 at 1210. The PDU session context request may comprise the PDU session establishment request received from the wireless device 1202 at step 1210. The PDU session context request may be a Nsmf_PDUSession_CreateSMContext Request and/or a Nsmf_PDUSession_UpdateSMContext Request. The PDU session context request may indicate/comprise indicators/identifiers of the wireless device 1202; the requested DN; and/or the requested network slice. The SMF 1208 may retrieve subscription data from a UDM 1216, for example, based on the PDU session context request. The subscription data may be session management subscription data of the wireless device 1202. The SMF 1208 may subscribe for updates to the subscription data. The PCF 1208 may send, to the SMF 1208, new information if the subscription data of the wireless device 1202 changes, for example, based on the SMF 1208 subscribing for the updates. The SMF 1208 may send/transmit a PDU session context response to the AMF 1206, for example, based on (e.g., after) receiving/obtaining the subscription data of the wireless device 1202. The PDU session context response may be a
Nsmf_PDUSession_CreateSMContext Response and/or a
Nsmf_PDUSession_UpdateSMContext Response. The PDU session context response may include/comprise a session management context ID.

At step 1230, secondary authorization/authentication may be performed, if necessary. The secondary authorization/authentication may involve the wireless device 1202, the AMF 1206, the SMF 1208, and/or the DN 1218. The SMF 1208 may access the DN 1218 via a server (e.g., a data network authentication, authorization, and accounting (DN AAA) server).

At step 1240, the network may set up a data path for uplink data associated with the PDU session. The SMF 1208 may select/determine a PCF (e.g., a PCF 1214). The SMF 1208 may establish a session management policy association. The PCF 1214 may provide an initial set of policy control and charging rules (PCC rules) for the PDU session, for example, based on the association. The PCF 1214 may (e.g., if targeting a particular PDU session) indicate, to the SMF 1208, one or more of a method for allocating an IP address to the PDU Session, a default charging method for the PDU session, an address of the corresponding charging entity, triggers for requesting new policies, and/or any other method, action, and/or information. The PCF 1214 may target a service data flow (SDF) comprising one or more PDU sessions. The PCF may (e.g., if targeting an SDF) indicate, to the SMF 1208, policies for one or more of applying QoS requirements, monitoring traffic (e.g., for charging purposes), steering traffic (e.g., by using one or more particular N6 interfaces), and/or any other purpose.

The SMF 1208 may determine and/or allocate an IP address for the PDU session. The SMF 1208 may select one or more UPFs (e.g., a single UPF 1212 as shown in FIG. 12) to handle the PDU session. The SMF 1208 may send an N4 session message to the selected UPF 1212. The N4 session message may be an N4 session establishment request and/or an N4 session modification request. The N4 session message may include/comprise packet detection, enforcement, and/or reporting rules associated with the PDU session. The UPF 1212 may acknowledge the N4 session message by sending an N4 session establishment response and/or an N4 session modification response.

The SMF 1208 may send PDU session management information to the AMF 1206. The PDU session management information may be/comprise a Namf_Communication_N1N2MessageTransfer message. The PDU session management information may include/comprise the PDU session ID. The PDU session management information may be/comprise a NAS message. The PDU session management information may include/comprise N1 session management information and/or N2 session management information. The N1 session management information may include/comprise a PDU session establishment accept message. The PDU session establishment accept message may include/comprise tunneling endpoint information of the UPF 1212 and QoS information associated with the PDU session.

The AMF 1206 may send an N2 request to the AN 1204. The N2 request may include/comprise the PDU session establishment accept message. The AN 1204 may determine AN resources for the wireless device 1202, for example, based on the N2 request. The AN resources may be used by the wireless device 1202 to establish the PDU session, via the AN 1204, with the DN 1218. The AN 1204 may determine resources to be used for the PDU session and indicate, to the wireless device 1202, the determined resources. The AN 1204 may send the PDU session establishment accept message to the wireless device 1202. The AN 1204 may perform an RRC reconfiguration of the wireless device 1202. The AN 1204 may send an N2 request acknowledge to the AMF 1206, for example, based on (e.g., after) the AN resources being set up. The N2 request acknowledge may include/comprise N2 session management information(e.g., the PDU session ID and tunneling endpoint information of the AN 1204).

The wireless device 1202 may (e.g., optionally) send uplink data associated with the PDU session, for example, based on the data path for uplink data being set up (e.g., at step 1240). The uplink data may be sent to a DN 1218, associated with the PDU session, via the AN 1204 and the UPF 1212.

At step 1250, the network may update the PDU session context. The AMF 1206 may send/transmit a PDU session context update request to the SMF 1208. The PDU session context update request may be a Nsmf_PDUSession_UpdateSMContext request. The PDU session context update request may comprise the N2 session management information received from the AN 1204. The SMF 1208 may acknowledge (e.g., send an acknowledgment message based on/in response to) the PDU session context update. The acknowledgement may be a Nsmf_PDUSession_UpdateSMContext response. The acknowledgement may comprise a subscription requesting that the SMF 1208 be notified of any wireless device mobility event. The SMF 1208 may send an N4 session message to the UPF 1212, for example, based on the PDU session context update request. The N4 session message may be an N4 session modification request. The N4 session message may comprise tunneling endpoint information of the AN 1204. The N4 session message may comprise forwarding rules associated with the PDU session. The UPF 1212 may acknowledge (e.g., reception of the N4 session message) by sending an N4 session modification response.

The UPF 1212 may relay downlink data associated with the PDU session, for example, based on (e.g., after) the UPF 1212 receiving the tunneling endpoint information of the AN 1204The downlink data may be received from a DN 1218, associated with the PDU session, via the AN 1204 and the UPF 1212.

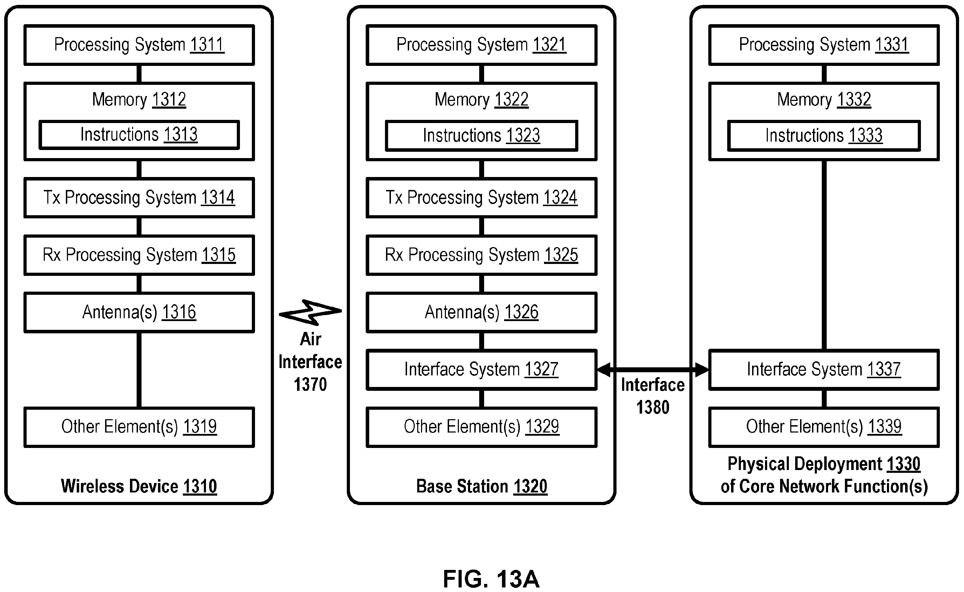

FIG. 13A shows example elements in a communications network. FIG. 13A shows a wireless device 1310, a base station 1320, and a physical deployment of one or more network functions 1330 (henceforth, "deployment 1330"). Any wireless device described herein may have similar components and/or may be implemented in a similar manner as the wireless device 1310. Any base station described herein (or any portion of the base station, depending on the architecture of the base station) may have similar components and/or may be implemented in a similar manner as the base station 1320. Any physical core network deployment described herein (or any portion of the deployment, depending on the architecture of the deployment) may have similar components and may be implemented in a similar manner as the deployment 1330.

The wireless device 1310 may communicate with base station 1320 over an air interface 1370. A communication direction from wireless device 1310 to base station 1320 over air interface 1370 may be known as uplink, and a communication direction from base station 1320 to wireless device 1310 over air interface 1370 may be known as downlink. Downlink transmissions may be separated from uplink transmissions using FDD, TDD, and/or some combination of duplexing techniques. FIG. 13A shows a single wireless device 1310 and a single base station 1320, but it may be understood that wireless device 1310 may communicate with any number/quantity of base stations and/or other access network components over air interface 1370, and it may be understood that that base station 1320 may communicate with any number/quantity of wireless devices over air interface 1370.

The wireless device 1310 may comprise a processing system 1311 and a memory 1312. The memory 1312 may comprise one or more computer-readable media (e.g., one or more non-transitory computer readable media). The memory 1312 may include/comprise/store instructions 1313. The processing system 1311 may process and/or execute the instructions 1313. Processing and/or execution of the instructions 1313 may cause the wireless device 1310 and/or the processing system 1311 to perform one or more functions or activities. The memory 1312 may include/comprise data (not shown). One of the functions or activities performed by the processing system 1311 may be to store data in the memory 1312 and/or retrieve previously-stored data from the memory 1312. For example, downlink data received from the base station 1320 may be stored in the memory 1312, and uplink data for transmission to the base station 1320 may be retrieved from the memory 1312. The wireless device 1310 may communicate with the base station 1320 using a transmission processing system 1314 and/or a reception processing system 1315. Alternatively, transmission processing system 1314 and reception processing system 1315 may be implemented as a single processing system, or both may be omitted and all processing in the wireless device 1310 may be performed by the processing system 1311. Although not shown in FIG. 13A, the transmission processing system 1314 and/or the reception processing system 1315 may be coupled to a dedicated memory that may be analogous to but separate from the memory 1312. The dedicated memory may comprise instructions that may be processed and/or executed to carry out one or more respective functionalities of the transmission processing system 1314 and/or the reception processing system 1315. The wireless device 1310 may comprise one or more antennas 1316 to access the air interface 1370.

The wireless device 1310 may comprise one or more other elements 1319. The one or more other elements 1319 may comprise software and/or hardware that may provide features and/or functionalities. For example, the one or more other elements 1319 may comprise one or more of a speaker, a microphone, a keypad, a display, a touchpad, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, a global positioning sensor (GPS) and/or the like). The wireless device 1310 may receive user input data from and/or provide user output data to the one or more one or more other elements 1319. The one or more other elements 1319 may comprise a power source. The wireless device 1310 may receive power from the power source and may be configured to distribute the power to the other components in wireless device 1310. The power source may comprise or connect to one or more sources of power (e.g., a battery, a solar cell, a fuel cell, a wall outlet, an electrical grid, and/or any combination thereof).

The wireless device 1310 may send/transmit uplink data to and/or receive downlink data from the base station 1320 via the air interface 1370. One or more of the processing system 1311, transmission processing system 1314, and/or reception system 1315 may implement open systems interconnection (OSI) functionality to perform transmission and/or reception. For example, the transmission processing system 1314 and/or the reception system 1315 may perform layer 1 OSI functionality, and the processing system 1311 may perform higher layer functionality. The wireless device 1310 may transmit and/or receive data over the air interface 1370 via/using one or more antennas 1316. For scenarios where the one or more antennas 1316 comprise multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise a processing system 1321 and a memory 1322. The memory 1322 may comprise one or more computer-readable media (e.g., one or more non-transitory computer readable media). The memory 1322 may comprise instructions 1323. The processing system 1321 may process and/or execute the instructions 1323. Processing and/or execution of the instructions 1323 may cause the base station 1320 and/or the processing system 1321 to perform one or more functions or activities. The memory 1322 may comprise data (not shown). One of the functions or activities performed by the processing system 1321 may be to store data in the memory 1322 and/or retrieve previously-stored data from the memory 1322. The base station 1320 may communicate with the wireless device 1310 using a transmission processing system 1324 and/or a reception processing system 1325. The transmission processing system 1324 and/or the reception processing system 1325 may be coupled to a dedicated memory (not shown) that may be analogous to but separate from memory 1322. The dedicated memory may comprise instructions that may be processed and/or executed to carry out one or more of their respective functionalities. The base station 1320 may comprise one or more antennas 1326 to access the air interface 1370.

The base station 1320 may send/transmit downlink data to and/or receive uplink data from wireless device 1310 via the air interface 1370. To perform the transmission and/or reception, one or more of the processing system 1321, the transmission processing system 1324, and/or the reception system 1325 may implement OSI functionality. For example, the transmission processing system 1324 and/or the reception system 1325 may perform layer 1 OSI functionality, and the processing system 1321 may perform higher layer functionality. The base station 1320 may transmit and/or receive data via the air interface 1370 using one or more antennas 1326. For scenarios where the one or more antennas 1326 comprise multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise an interface system 1327. The interface system 1327 may communicate with one or more base stations and/or one or more elements of the core network via an interface 1380. The interface 1380 may be wired and/or wireless. The interface system 1327 may comprise one or more components suitable for communicating via the interface 1380. As shown in FIG. 13A, the interface 1380 may connect the base station 1320 to a single deployment 1330 (e.g., as shown in FIG. 13A), but it may be understood that wireless device 1310 may communicate with any number/quantity of base stations and/or CN deployments via the interface 1380, and it may be understood that that deployment 1330 may communicate with any number/quantity of base stations and/or other CN deployments via the interface 1380. The base station 1320 may comprise one or more other elements 1329 analogous to one or more of the one or more other elements 1319.

The deployment 1330 may comprise any quantity/number of portions of any quantity /number of instances of one or more NFs. The deployment 1330 may comprise a processing system 1331 and a memory 1332. The memory 1332 may comprise one or more computer-readable media (e.g., one or more non-transitory computer readable media). The memory 1332 may comprise instructions 1333. The processing system 1331 may process and/or execute instructions 1333. Processing and/or execution of the instructions 1333 may cause the deployment 1330 and/or the processing system 1331 to perform one or more functions or activities. The memory 1332 may comprise data (not shown). One of the functions or activities performed by processing system 1331 may be to store data in the memory 1332 and/or retrieve previously-stored data from the memory 1332. The deployment 1330 may access the interface 1380 using an interface system 1337. The deployment 1330 may comprise one or more other elements 1339 analogous to one or more of the one or more other elements 1319.

One or more of the systems 1311, 1314, 1315, 1321, 1324, 1325, and/or 1331 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. One or more of the systems 1311, 1314, 1315, 1321, 1324, 1325, and/or 1331 may perform signal coding/processing, data processing, power control, input/output processing, and/or any other functionality that may enable wireless device 1310, base station 1320, and/or deployment 1330 to operate in a mobile communications system.

The wireless device 1310, the base station 1320, and/or the deployment 1330 may implement timers and/or counters. A timer/counter may start and/or restart at an initial value. The timer/counter may run based on the starting. Running of the timer/counter may be associated with an occurrence. The value of the timer/counter may change (e.g., increment or decrement). The occurrence may be an exogenous event (e.g., a reception of a signal, a measurement of a condition, etc.), an endogenous event (e.g., a transmission of a signal, a calculation, a comparison, a performance of an action or a decision to so perform, etc.), and/or any combination thereof. The occurrence may be the passage of a particular amount of time. A timer may be described and/or implemented as a counter that counts the passage of a particular unit of time. A timer/counter may run in a direction of a final value until it reaches the final value. The reaching of the final value may be referred to as expiration of the timer/counter. The final value may be referred to as a threshold. A timer/counter may be paused (e.g., a present value of the timer/counter may be held, maintained, and/or carried over), for example, even after an occurrence of one or more occurrences that would otherwise cause the value of the timer/counter to change. The timer/counter may be un-paused or continued (e.g., the value that was held, maintained, and/or carried over may begin changing again), for example, after an occurrence of the one or more occurrence occur. A timer/counter may be set and/or reset. As used herein, setting may comprise resetting. The value of the timer/counter may be set to the initial value, for example, if the timer/counter sets and/or resets. A timer/counter may be started and/or restarted. Starting may comprise restarting. The value of the timer/counter may be set to the initial value and the timer/counter may begin to run (e.g., increment or decrement), for example, if the timer/counter restarts.

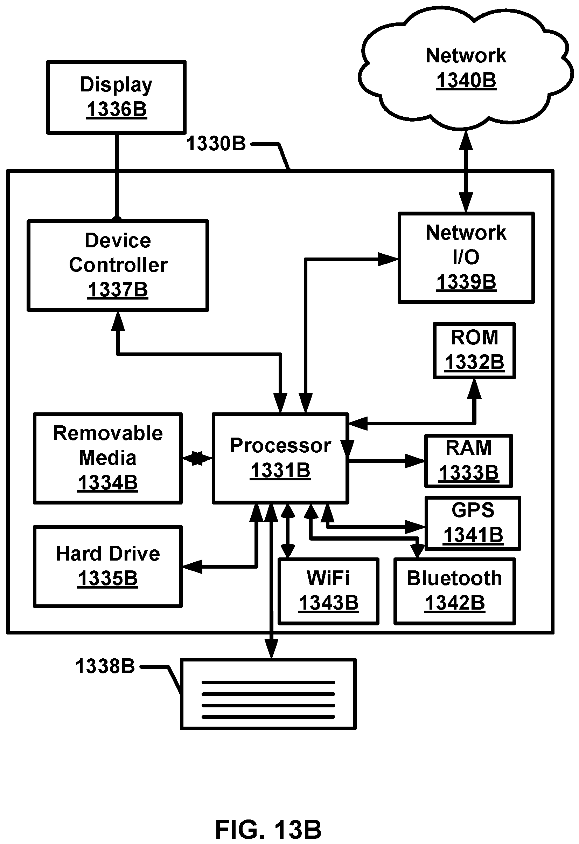

FIG. 13B shows example elements of a computing device that may be used to implement any of the various devices described herein, including, for example, a base station 152A, 152B, 302, 402, 403, 502 602, 602A, 602B, 602C, 702, 802, 1004, 1104, 1204, 1320, 26301840, 1940, 2040, 2140, and/or 2240, a wireless device 101, 151, 301, 401, 501, 601A, 601B, 601C, 701, 801, 1002, 1102, 1202, 1310, , 1810, 1820, 1830, 1910, 1920, 1935, 2011, 2012, 2013, 2014, 2110, 2120, and/or 2210, or any other base station, wireless device, node, NF (e.g., AMF, SMF, UPF, PCF, etc.), UDM, OAM, UDM/OAM, network device, or computing device described herein. The computing device 1330B may include one or more processors 1331B, which may execute instructions stored in the random-access memory (RAM) 1333B, the removable media 1334B (such as a Universal Serial Bus (USB) drive, compact disk (CD) or digital versatile disk (DVD), or floppy disk drive), or any other desired storage medium. Instructions may also be stored in an attached (or internal) hard drive 1335B. The computing device 1330B may also include a security processor (not shown), which may execute instructions of one or more computer programs to monitor the processes executing on the processor 1331B and any process that requests access to any hardware and/or software components of the computing device 1330B (e.g., ROM 1332B, RAM 1333B, the removable media 1334B, the hard drive 1335B, the device controller 1337B, a network interface 1339B, a GPS 1341B, a Bluetooth interface 1342B, a WiFi interface 1343B, etc.). The computing device 1330B may include one or more output devices, such as the display 1336B (e.g., a screen, a display device, a monitor, a television, etc.), and may include one or more output device controllers 1337B, such as a video processor. There may also be one or more user input devices 1338B, such as a remote control, keyboard, mouse, touch screen, microphone, etc. The computing device 1330B may also include one or more network interfaces, such as a network interface 1339B, which may be a wired interface, a wireless interface, or a combination of the two. The network interface 1339B may provide an interface for the computing device 1330B to communicate with a network 1340B (e.g., a RAN, or any other network). The network interface 1339B may include a modem (e.g., a cable modem), and the external network 1340B may include communication links, an external network, an in-home network, a provider's wireless, coaxial, fiber, or hybrid fiber/coaxial distribution system (e.g., a DOCSIS network), or any other desired network. Additionally, the computing device 1330B may include a location-detecting device, such as a global positioning system (GPS) microprocessor 1341B, which may be configured to receive and process global positioning signals and determine, with possible assistance from an external server and antenna, a geographic position of the computing device 1330B.

The example in FIG. 13B may be a hardware configuration, although the components shown may be implemented as software as well. Modifications may be made to add, remove, combine, divide, etc. components of the computing device 1330B as desired. Additionally, the components may be implemented using basic computing devices and components, and the same components (e.g., processor 1331B, ROM storage 1332B, display 1336B, etc.) may be used to implement any of the other computing devices and components described herein. For example, the various components described herein may be implemented using computing devices having components such as a processor executing computer-executable instructions stored on a computer-readable medium, as shown in FIG. 13B. Some or all of the entities described herein may be software based, and may co-exist in a common physical platform (e.g., a requesting entity may be a separate software process and program from a dependent entity, both of which may be executed as software on a common computing device).

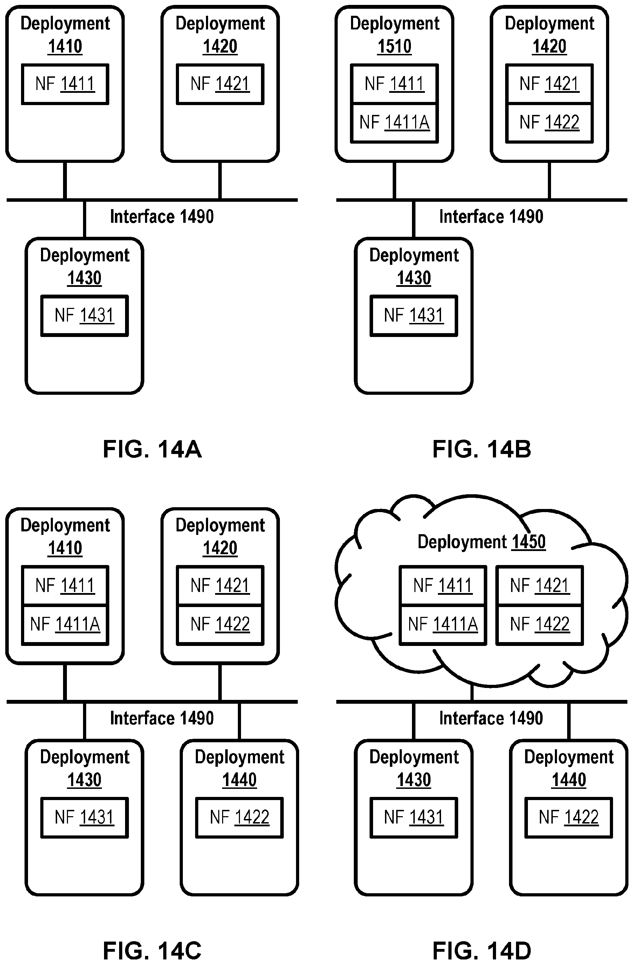

FIGS. 14A, 14B, 14C, and 14D show various example arrangements of physical core network deployments. Each of the arrangements may comprise one or more network functions and/or portions thereof. The core network deployments may comprise a deployment 1410, a deployment 1420, a deployment 1430, a deployment 1440, and/or a deployment 1450. Any of the deployments (e.g., each deployment) may be analogous to the deployment 1330 as shown in FIG. 13A. Any of the deployments (e.g., each deployment) may comprise a processing system for performing one or more functions and/or activities, memory for storing data and/or instructions, and/or an interface system for communicating with other network elements (e.g., other core network deployments). Any of the deployments (e.g., each deployment) may comprise one or more NFs. An NF may refer to a particular set of functionalities and/or one or more physical elements configured to perform those functionalities (e.g., a processing system and memory comprising instructions that, when executed by the processing system, cause the processing system to perform the functionalities). As described herein, a network function performing X, Y, and Z, may comprise the one or more physical elements configured to perform X, Y, and Z (e.g., irrespective of configuration and/or location of the deployment of the one or more physical elements), where X, Y, and Z, each may refer to one or more operations. An NF may comprise one or more of a network node, network element, and/or network device.

Different types of NF may be present in a deployment. Each type of NF may be associated with a different set of one or more functionalities. A plurality of different NFs may be flexibly deployed at different locations (e.g., in different physical core network deployments) or in a same location (e.g., co-located in a same deployment). A single NF may be flexibly deployed at different locations (e.g., implemented using different physical core network deployments) or in a same location. Physical core network deployments may also implement one or more base stations, application functions (AFs), data networks (DNs), and/or any portions thereof. NFs may be implemented in many ways, including as network elements on dedicated or shared hardware, as software instances running on dedicated or shared hardware, and/or as virtualized functions instantiated on a platform (e.g., a cloud-based platform).

FIG. 14A shows an example arrangement of core network deployments. Any of the core network deployments (e.g., each of the core network deployments) may comprise one network function. A deployment 1410 may comprise an NF 1411, a deployment 1420 may comprise an NF 1421, and a deployment 1430 may comprise an NF 1431. The deployments 1410, 1420, 1430 may communicate via an interface 1490. The deployments 1410, 1420, 1430 may have different physical locations with different signal propagation delays relative to other network elements. The diversity of physical locations of deployments 1410, 1420, 1430 may enable provision of services to a wide area with improved speed, coverage, security, and/or efficiency.

FIG. 14B shows an example arrangement where a single deployment may comprise more than one NF. Multiple NFs may be deployed in deployments 1410, 1420. Deployments 1410, 1420 may implement a software-defined network (SDN) and/or a network function virtualization (NFV).

Deployment 1410 may comprise an additional network function, NF 1411A. The NFs 1411, 1411A may comprise multiple instances of the same NF type, co-located at a same physical location within the same deployment 1410. The NFs 1411, 1411A may be implemented independently from one another (e.g., isolated and/or independently controlled). For example, the NFs 1411, 1411A may be associated with different network slices. A processing system and memory associated with the deployment 1410 may perform all of the functionalities associated with the NF 1411 in addition to all of the functionalities associated with the NF 1411A. NFs 1411, 1411A may be associated with different PLMNs, but deployment 1410, which implements NFs 1411, 1411A, may be owned and/or operated by a single entity.

Deployment 1420 may comprise a NF 1421 and an additional NF 1422. The NFs 1421, 1422 may be different NF types. Similar to NFs 1411, 1411A, the NFs 1421, 1422 may be co-located within the same deployment 1420, but may be separately implemented. For example, a first PLMN may own and/or operate deployment 1420 comprising NFs 1421, 1422. As another example, the first PLMN may implement the NF 1421 and a second PLMN may obtain, from the first PLMN (e.g., rent, lease, procure, etc.), at least a portion of the capabilities of deployment 1420 (e.g., processing power, data storage, etc.) in order to implement NF 1422. As yet another example, the deployment may be owned and/or operated by one or more third parties, and the first PLMN and/or second PLMN may procure respective portions of the capabilities of the deployment 1420. Networks may operate with greater speed, coverage, security, and/or efficiency, for example, if multiple NFs are provided at a single deployment.

FIG. 14C shows an example arrangement of core network deployments in which a single instance of an NF may be implemented using a plurality of different deployments. For example, a single instance of NF 1422 may be implemented at deployments 1420, 1440. The functionality provided by NF 1422 may be implemented as a bundle or sequence of subservices. Any subservice (e.g., each subservice) may be implemented independently, for example, at a different deployment. Any subservice (e.g., each subservice) may be implemented in a different physical location. By distributing implementation of subservices of a single NF across different physical locations, the mobile communications network may operate with greater speed, coverage, security, and/or efficiency.

FIG. 14D shows an example arrangement of core network deployments in which one or more network functions may be implemented using a data processing service. As shown in FIG. 14D, NFs 1411, 1411A, 1421, 1422 may be included in a deployment 1450 that may be implemented as a data processing service. The deployment 1450 may comprise a cloud network and/or data center. The deployment 1450 may be owned and/or operated by a PLMN or by a non-PLMN third party. The NFs 1411, 1411A, 1421, 1422 that are implemented using the deployment 1450 may belong to the same PLMN or to different PLMNs. The PLMN(s) may obtain (e.g., rent, lease, procure, etc.) at least a portion of the capabilities of the deployment 1450 (e.g., processing power, data storage, etc.). By providing one or more NFs using a data processing service, the mobile communications network may operate with greater speed, coverage, security, and/or efficiency.

As shown in the FIGS. 14A-14D, different network elements (e.g., NFs) may be located in different physical deployments, or co-located in a single physical deployment. Sending and receiving of messages among different network elements, as described herein, is not limited to inter-deployment transmission or intra-deployment transmission, unless explicitly indicated.

A deployment may be a black box that may be preconfigured with one or more NFs and preconfigured to communicate, in a prescribed manner, with other black box deployments (e.g., via the interface 1490). Additionally or alternatively, a deployment may be configured to operate in accordance with open-source instructions (e.g., software) designed to implement NFs and communicate with other deployments in a transparent manner. The deployment may operate in accordance with open RAN (O RAN) standards.

In at least some wireless communications (e.g., 5G communication system), time service may be used. A time service may comprise, for example, a service that provides time information (e.g., absolute time information, relative time information) to a wireless device. The time service may be provided by and/or via a communication network. The time service may determine and/or obtain time information from one or more time sources. The time service may be, for example, a coordinated universal time (UTC) service.

The time service may require traceability for at least some wireless communication systems. Traceability may comprise tracing, authentication, verification, confirmation, and/or proof. Traceability of a time service (e.g., traceability to UTC) may comprise an indication that time information is accurate (e.g., accurate to a particular degree of accuracy), precise (e.g., to a particular degree of precision) provided by and/or determined, for example, based on one or more particular (e.g., identified) sources of time, authentic, and/or calibrated. Traceability may be associated with particular time information and/or a particular time service. A wireless device may require and/or request that a network provide traceability associated with particular time information and/or a particular time service. A network that provides a time service may or may not provide traceability and/or specific aspects of traceability.

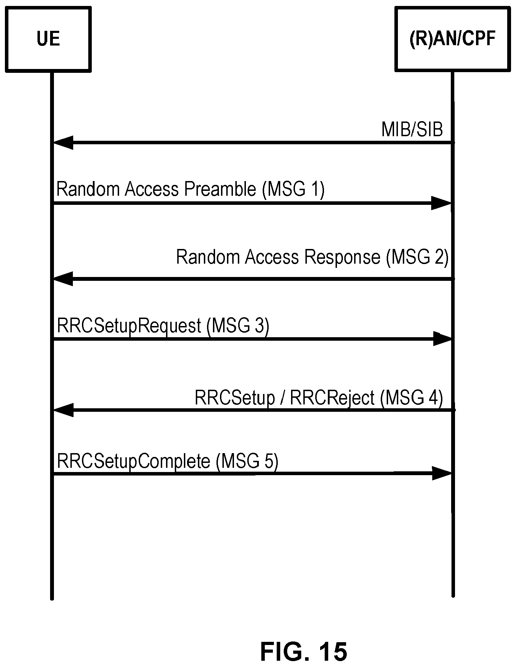

FIG. 15 shows an example call flow for RRC connection establishment. A wireless device may receive master information block (MIB) information (e.g., information element, parameter, message) and/or system information block (SIB) information (e.g., information element, parameter, message) from a base station (e.g., (R)AN) and/or a control plane function (CPF) (e.g., an AMF). For example, the wireless device may receive SIB 1 information from the base station (e.g., (R)AN). The MIB information may comprise system information. For example, the MIB information may comprise at least one of parameters including systemFrameNumber, subCarrierSpacingCommon, ssb-SubcarrierOffset, dmrs-TypeA-Position, pdcch-ConfigSIB1, cellBarred, intraFreqReselection, and/or the like. The SIB 1 information may comprise information relevant if evaluating whether a wireless device is allowed to access a cell and defines the scheduling of other system information. The SIB 1 information may comprise radio resource configuration information that is common for all wireless devices and barring information used for the unified access control. The wireless device may receive SIB x information (e.g., information element, parameter, message) from the base station (e.g., (R)AN) and/or the CPF (e.g., an AMF). For example, the SIB x information may comprise SIB 2, SIB 3, SIB 4, and/or the like, other than SIB 1. The SIB 2 information may comprise cell re-selection information common for intra-frequency, inter-frequency and/or inter-RAT cell re-selection (e.g., applicable for more than one type of cell re-selection but not necessarily all) as well as intra-frequency cell re-selection information other than neighboring cell related. For example, the SIB 2 message may comprise at least one of parameters including cellReselectionInfoCommon, cellReselectionServingFreqInfo, intraFreqCellReselectionInfo, and/or the like. The SIB 3 information may comprise neighboring cell related information relevant only for intra-frequency cell re-selection. The IE may include cells with specific reselection parameters as well as blacklisted cells. For example, the SIB 3 information may comprise at least one of parameters including intraFreqNeighCellList, intraFreqBlackCellList, and/or the like.

The wireless device may send (e.g., transmit) at least one random access preamble to the base station (e.g., (R)AN), for example, based on (e.g., after or in response to) the message being received from the base station (e.g., (R)AN) and/or the CPF (e.g., an AMF). The wireless device may send (e.g., transmit) at least one random access preamble to the CPF (e.g., an AMF), for example, via the base station (e.g., (R)AN). For example, the wireless device may send the at least one random access preamble to the base station (e.g., (R)AN) via a message 1 (MSG 1). The base station (e.g., (R)AN) may send a random access response message to the wireless device, for example, based on (e.g., after or in response to) the at least one random access preamble being received from the wireless device. The CPF (e.g., an AMF) may send (e.g., transmit) a random access response message to the wireless device, for example, via the base station (e.g., (R)AN). For example, the CPF and/or the base station (e.g., (R)AN) may send the random access response message to the wireless device via a message 2 (MSG 2).

The wireless device may send a message (e.g., RRC setup request or RRCSetupRequest) to the base station (e.g., (R)AN) and/or the CPF (e.g., an AMF), for example, based on (e.g., in response to) the random access response message (e.g., MSG 2). For example, the wireless device may send the RRC setup request message via a message 3 (MSG 3). For example, the wireless device may send the RRC setup request message to the CPF via the base station (e.g., (R)AN). For example, the RRC setup request message may indicate establishing an RRC connection for the wireless device. The RRC setup request message may comprise at least one of parameters including a wireless device identity (e.g., TMSI), a parameter (e.g., establishmentCause) indicating a cause value of RRC establishment, a dedicatedNAS-Message, and/or the like. For example, the establishmentCause may comprise at least one of values including emergency, highPriorityAccess, mt-Access, mo-Signalling, mo-Data, mo-VoiceCall, mo-VideoCall, mo-SMS, mps-PriorityAccess, mcs-PriorityAccess, and/or the like.

The base station (e.g., (R)AN) and/or the CPF (e.g., an AMF) may send an RRC setup (or RRCSetup) message to the wireless device via a message 4 (MSG 4), for example, based on (e.g., after or in response to) the message (e.g., MSG 3) being received from the wireless device. For example, the CPF may send the RRC setup message to the wireless device via the base station (e.g., (R)AN). For example, the RRC setup message may be used to establish SRB 1. The RRC setup message may comprise at least one of information elements including a masterCellGroup, a radioBearerConfig, dedicatedNAS-Message, and/or the like. The masterCellGroup may indicate that the network configures the RLC bearer for the SRB1. The radioBearerConfig may indicate that the SRB1 may be configured in RRC setup. Alternatively, the base station (e.g., (R)AN) and/or the CPF (e.g., an AMF) may send an RRC reject (or RRCReject) message to the wireless device via a message 4 (MSG 4), for example, based on (e.g., after or in response to) the message (e.g., MSG 3) being received from the wireless device. The RRC reject message may contain failure information (e.g., FESSI as will be described later), wait time, and/or the like.

The wireless device may send an RRC setup complete (or RRCSetupComplete) message to the base station (e.g., (R)AN), for example, based on (after or in response to) the message (e.g., MSG 4) being received from the base station (e.g., (R)AN) and/or the CPF (e.g., an AMF). For example, the wireless device may send an RRC setup complete message to the base station (e.g., (R)AN) via a message 5 (MSG 5). For example, the wireless device may send the RRC setup complete message to the CPF (e.g., an AMF) via the base station (e.g., (R)AN). The RRC setup complete message may comprise at least one of parameters including a selectedPLMN-Identity, a registeredCPF, a guami-Type (e.g., native, mapped), s-NSSAI-List (e.g., list of network slice identifiers), dedicatedNAS-Message, a TMSI, and/or the like. The registeredCPF may comprise a PLMN identity and/or a CPF identifier. The RRC setup complete message may comprise a NAS message. For example, the dedicatedNAS-Message of the RRC setup complete message may comprise the NAS message. For example, the dedicatedNAS-Message may comprise a registration request message.

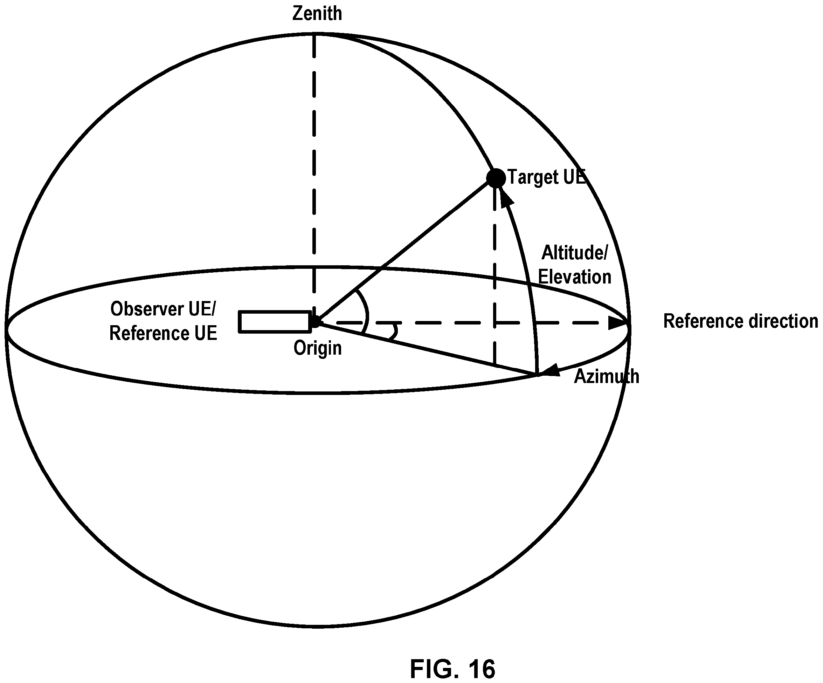

FIG. 16 is an example diagram illustrating horizontal/ elevation direction in celestial coordinate. As shown in the celestial coordinate in FIG. 16, a horizontal direction (e.g., Azimuth) of a target UE may be an angle formed between a reference direction and a line from an observer UE/Reference UE to a target UE projected on the same plane as the reference direction orthogonal to the zenith. The Altitude/ Elevation direction of the target UE is the angle above the horizontal plane. The terminology "UE" may be interchangeable with "wireless device", "wireless terminal". The terminology "base station" may be interchangeable with "RAN", "(R)AN", eNodeB, gNB, and/or the like.

Sidelink (SL) ranging service (or ranging in short, ranging service in short)/sidelink positioning service may refer to the determination of the distance between two UEs and/or the direction of one UE from the other one via direct communication connection. The (sidelink) ranging (service) may indicate sidelink positioning (service), where one or more UEs measure a position of another UE with sidelink communication technology. Sidelink/sidelink communication may indicate a direct communication link/path between two or more UEs, in which UEs are able to communicate to each other directly without relaying their data via a network. NR sidelink communication may enable at least Vehicle to everything (V2X) communication and between two or more nearby UEs, using NR technology but not traversing any network node. Ranging may refer to the determination of the distance between two UEs and/or the direction of one UE, e.g., target UE, from the other one, e.g., observer UE, via direct device connection. In 3D case, direction includes horizontal direction and/or elevation direction. Some ranging-based services may only require the distance measurement, some may only require direction measurement, others may require both distance and direction measurement. Ranging based services can be used in a variety of verticals, such as consumer, smart home, smart city, smart transportation, smart retail, and industry 4.0.

Some ranging services examples may be found in 3GPP TR 22.855 and/or TR 22.886. One ranging services example is Smart Home TV control. For example, based on distance between UE and the TV reference point, the direction from the TV reference point to the UE, and the direction from the UE to the TV reference point, smart TV can derive the area of the TV screen where the UE points to, so that it can determine where to place a cursor and which content the user selects. One ranging services example is Remote Access Right authorization. For example, a person can remotely monitor, via his cell phone UE1, the distance between the visitor who holds UE2 and the ranging capable door to decide when to unlock the door to allow the access of the visitor. One ranging services example is Museum Tour. For example, in the Museum, when a person points to a painting using his cell phone, it can be detected by the Museum Tour Server, and the Museum Tour Server then transmits the introduction of the painting to the cell phone. Museum Tour Server detects the events by monitoring the distance and direction from the cell phone of the visitor to the painting. One ranging services example is tracking of objects and devices based on energy efficient ranging. For example, objects and devices (incl. coin battery powered devices) can be easily found and tracked by deriving relative position information and/or direction from ranging measurements, also in out-of-coverage or partial coverage situations. This is e.g., very useful for tracking a victim or first responder during an emergency event. By further linking the ranging information with a known location of a device (e.g., UE or drone that is located using the existing solution, e.g., eLCS or SUPL, within the network coverage), very accurate position estimation can be achieved, making it much easier to find the respective object or device. One ranging services example is immersive sound based on multiple-UE ranging. For example, Speaker A, B and C coordinate to provide immersive experience to Person D who is listening to the music. To achieve that, Speaker A, B and C need to know the ranging of each other and the ranging to Person D. When there are No-LoS paths between Speaker A and Speaker B, they can derive the ranging based on their ranging results to Speaker C. One ranging services example is automated cooperative driving for short distance grouping (e.g., Cooperative Short Distance Grouping). The Cooperative Short Distance Grouping (CoSdG) may refer to the scenario where the distance between vehicles such as trucks are extremely small - creating a desirable form of legal tailgating. A group of vehicles driving together with a lead vehicle are driven normally by a trained professional driver, and several following vehicles driven fully automatically by the system with information exchanged between the leader and other cars allowing with small distance (longitudinal gaps) between them. It is required by automotive industry because the reduced aerodynamic drag would result in greater fuel economy and a reduction in greenhouse gas emission.

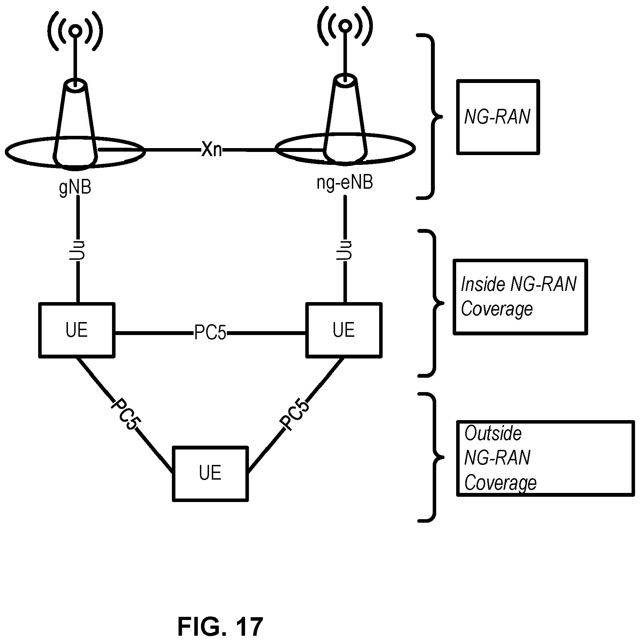

FIG. 17 is a diagram illustrating an example NG-RAN Architecture supporting a PC5 interface. The PC5 interface may refer to a reference point between two UEs, where the two UEs may directly communicate over a direct channel. A sidelink communication may be a direct communication between two UEs without the participation of a base station in the transmission and reception of data traffic.

An NR sidelink communication may indicate Access Stratum (AS) functionality enabling at least Vehicle-to-Everything (V2X) Communication, between two or more nearby UEs, using NR technology but not traversing any network node. A V2X sidelink communication may indicate AS functionality enabling V2X Communication, between nearby UEs, using E-UTRA technology but not traversing any network node.

Sidelink transmission and reception over the PC5 interface may be supported when the UE is inside NG-RAN coverage, irrespective of which RRC state the UE is in, and when the UE is outside NG-RAN coverage. Support of V2X services via the PC5 interface may be provided by the NR sidelink communication and/or the V2X sidelink communication. The NR sidelink communication may be used to support services other than V2X services. The NR sidelink communication may support one of three types of sidelinks/transmission modes for a pair of a Source Layer-2 ID and a Destination Layer-2 ID in the AS: a unicast sidelink/unicast transmission, a groupcast sidelink /groupcast transmission, and/or a broadcast sidelink/ broadcast transmission.

The unicast sidelink/unicast transmission may support one PC5-RRC connection between peer UEs for the pair. The unicast sidelink/unicast transmission may support transmission and reception of control information and user traffic between peer UEs in sidelink. The unicast sidelink/unicast transmission may support sidelink Hybrid Automatic Repeat Request (HARQ) feedback. The unicast sidelink/unicast transmission may support sidelink transmit power control. The unicast sidelink/unicast transmission may support Radio Link Control Acknowledged Mode (RLC AM). The unicast sidelink/unicast transmission may support detection of radio link failure for the PC5-RRC connection.

The groupcast sidelink /groupcast transmission may support transmission and reception of user traffic among UEs belonging to a group in sidelink. The groupcast sidelink /groupcast transmission may support sidelink HARQ feedback. The broadcast sidelink/ broadcast transmission may support transmission and reception of user traffic among UEs in sidelink.

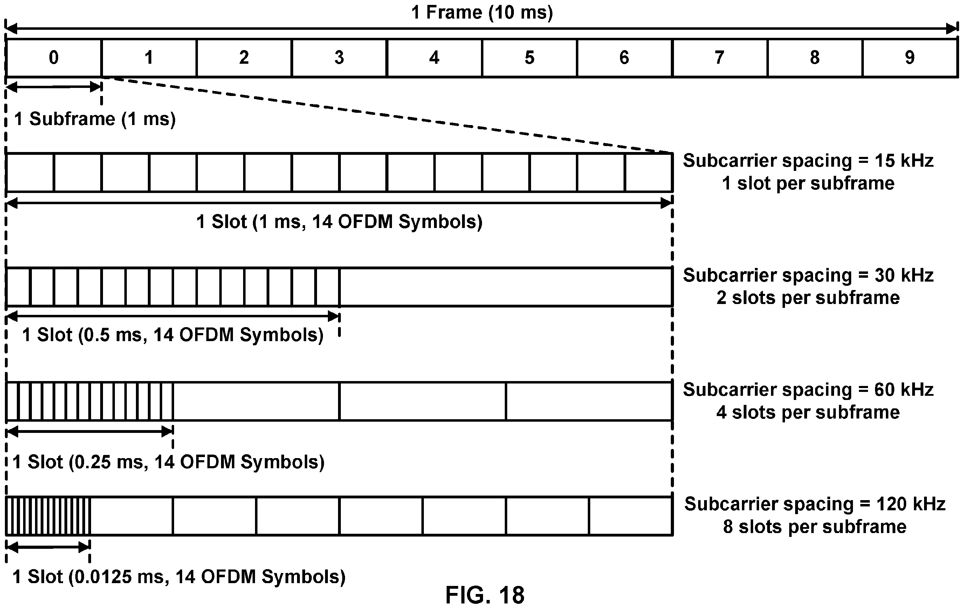

FIG. 18 illustrates an example configuration of a New Radio (NR) frame into which orthogonal frequency divisional multiplexing (OFDM) symbols are grouped. An NR frame may be identified by a system frame number (SFN). The SFN may repeat with a period of 1024 frames. As illustrated, one NR frame may be 10 milliseconds (ms) in duration and may include 10 subframes that are 1 ms in duration. A subframe may be divided into slots that include, for example, 14 OFDM symbols per slot.

The duration of a slot may depend on the numerology used for the OFDM symbols of the slot. In NR, a flexible numerology is supported to accommodate different cell deployments (e.g., cells with carrier frequencies below 1 GHz up to cells with carrier frequencies in the mm-wave range). A numerology may be defined in terms of subcarrier spacing and cyclic prefix duration. For a numerology in NR, subcarrier spacings may be scaled up by powers of two from a baseline subcarrier spacing of 15 kHz, and cyclic prefix durations may be scaled down by powers of two from a baseline cyclic prefix duration of 4.7 µs. For example, NR defines numerologies with the following subcarrier spacing/cyclic prefix duration combinations: 15 kHz/4.7 µs; 30 kHz/2.3 µs; 60 kHz/1.2 µs; 120 kHz/0.59 µs; and 240 kHz/0.29 µs.

A slot may have a fixed number of OFDM symbols (e.g., 14 OFDM symbols). A numerology with a higher subcarrier spacing has a shorter slot duration and, correspondingly, more slots per subframe. FIG. 18 illustrates this numerology-dependent slot duration and slots-per-subframe transmission structure (the numerology with a subcarrier spacing of 240 kHz is not shown in FIG. 18 for ease of illustration). A subframe in NR may be used as a numerology-independent time reference, while a slot may be used as the unit upon which uplink and downlink transmissions are scheduled. To support low latency, scheduling in NR may be decoupled from the slot duration and start at any OFDM symbol and last for as many symbols as needed for a transmission. These partial slot transmissions may be referred to as mini-slot or subslot transmissions.

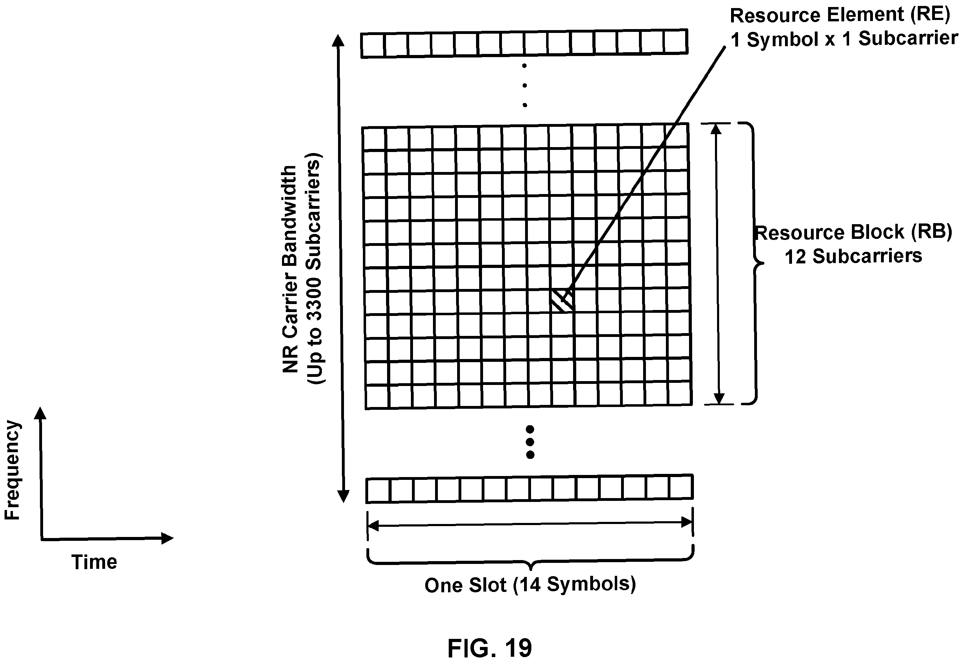

FIG. 19 shows an example configuration of a slot in the time and frequency domain for an NR carrier. The slot includes resource elements (REs) and resource blocks (RBs). An RE is the smallest physical resource in NR. An RE spans one OFDM symbol in the time domain by one subcarrier in the frequency domain as shown in FIG. 19. An RB spans twelve consecutive REs in the frequency domain as shown in FIG. 19. An NR carrier may be limited to a width of 275 RBs or 275×12 = 3300 subcarriers. Such a limitation, if used, may limit the NR carrier to 50, 100, 200, and 400 MHz for subcarrier spacings of 15, 30, 60, and 120 kHz, respectively, where the 400 MHz bandwidth may be set based on a 400 MHz per carrier bandwidth limit.

FIG. 19 illustrates a single numerology being used across the entire bandwidth of the NR carrier. In other example configurations, multiple numerologies may be supported on the same carrier. NR may support wide carrier bandwidths (e.g., up to 400 MHz for a subcarrier spacing of 120 kHz). Not all UEs may be able to receive the full carrier bandwidth (e.g., due to hardware limitations). Also, receiving the full carrier bandwidth may be prohibitive in terms of UE power consumption. To reduce power consumption and/or for other purposes, a UE may adapt the size of the UE's receive bandwidth based on the amount of traffic the UE is scheduled to receive. This is referred to as bandwidth adaptation.

NR defines bandwidth parts (BWPs) to support UEs not capable of receiving the full carrier bandwidth and to support bandwidth adaptation. A BWP may be defined by a subset of contiguous RBs on a carrier. A UE may be configured (e.g., via RRC layer) with one or more downlink BWPs and one or more uplink BWPs per serving cell (e.g., up to four downlink BWPs and up to four uplink BWPs per serving cell). At a given time, one or more of the configured BWPs for a serving cell may be active. These one or more BWPs may be referred to as active BWPs of the serving cell. When a serving cell is configured with a secondary uplink carrier, the serving cell may have one or more first active BWPs in the uplink carrier and one or more second active BWPs in the secondary uplink carrier.

For unpaired spectra, a downlink BWP from a set of configured downlink BWPs may be linked with an uplink BWP from a set of configured uplink BWPs if a downlink BWP index of the downlink BWP and an uplink BWP index of the uplink BWP are the same. For unpaired spectra, a UE may expect that a center frequency for a downlink BWP is the same as a center frequency for an uplink BWP.

For a downlink BWP in a set of configured downlink BWPs on a primary cell (PCell), a base station may configure a UE with one or more control resource sets (CORESETs) for at least one search space. A search space is a set of locations in the time and frequency domains where the UE may find control information. The search space may be a UE-specific search space or a common search space (potentially usable by a plurality of UEs). For example, a base station may configure a UE with a common search space, on a PCell or on a primary secondary cell (PSCell), in an active downlink BWP.

For an uplink BWP in a set of configured uplink BWPs, a BS may configure a UE with one or more resource sets for one or more PUCCH transmissions. A UE may receive downlink receptions (e.g., Physical downlink control channel (PDCCH) or Physical downlink shared channel (PDSCH)) in a downlink BWP according to a configured numerology (e.g., subcarrier spacing and cyclic prefix duration) for the downlink BWP. The UE may transmit uplink transmissions (e.g., Physical uplink control channel (PUCCH) or Physical uplink shared channel (PUSCH)) in an uplink BWP according to a configured numerology (e.g., subcarrier spacing and cyclic prefix length for the uplink BWP).

One or more BWP indicator fields may be provided in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a UE with a default downlink BWP within a set of configured downlink BWPs associated with a PCell. If the base station does not provide the default downlink BWP to the UE, the default downlink BWP may be an initial active downlink BWP. The UE may determine which BWP is the initial active downlink BWP based on a CORESET configuration obtained using the Physical Broadcast Channel (PBCH).

A base station may configure a UE with a BWP inactivity timer value for a PCell. The UE may start or restart a BWP inactivity timer at any appropriate time. For example, the UE may start or restart the BWP inactivity timer (a) when the UE detects a DCI indicating an active downlink BWP other than a default downlink BWP for a paired spectra operation; or (b) when a UE detects a DCI indicating an active downlink BWP or active uplink BWP other than a default downlink BWP or uplink BWP for an unpaired spectra operation. If the UE does not detect DCI during an interval of time (e.g., 1 ms or 0.5 ms), the UE may run the BWP inactivity timer toward expiration (for example, increment from zero to the BWP inactivity timer value, or decrement from the BWP inactivity timer value to zero). When the BWP inactivity timer expires, the UE may switch from the active downlink BWP to the default downlink BWP.

A base station may semi-statically configure a UE with one or more BWPs. A UE may switch an active BWP from a first BWP to a second BWP in response to receiving a DCI indicating the second BWP as an active BWP and/or in response to an expiry of the BWP inactivity timer (e.g., if the second BWP is the default BWP).

Downlink and uplink BWP switching (where BWP switching refers to switching from a currently active BWP to a not currently active BWP) may be performed independently in paired spectra. In unpaired spectra, downlink and uplink BWP switching may be performed simultaneously. Switching between configured BWPs may occur based on RRC signaling, DCI, expiration of a BWP inactivity timer, and/or an initiation of random access.

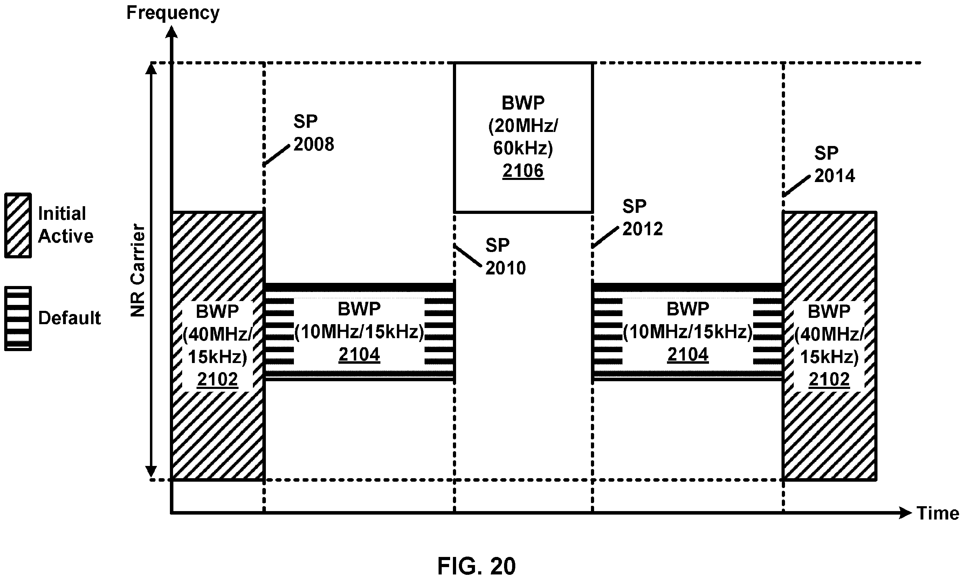

FIG. 20 illustrates an example of bandwidth adaptation using three configured BWPs for an NR carrier. A UE configured with the three BWPs may switch from one BWP to another BWP at a switching point. In the example illustrated in FIG. 20, the BWPs include: a BWP 2002 with a bandwidth of 40 MHz and a subcarrier spacing of 15 kHz; a BWP 2004 with a bandwidth of 10 MHz and a subcarrier spacing of 15 kHz; and a BWP 2006 with a bandwidth of 20 MHz and a subcarrier spacing of 60 kHz. The BWP 2002 may be an initial active BWP, and the BWP 2004 may be a default BWP. The UE may switch between BWPs at switching points. In the example of FIG. 20, the UE may switch from the BWP 2002 to the BWP 2004 at a switching point 2008. The switching at the switching point 2008 may occur for any suitable reason, for example, in response to an expiry of a BWP inactivity timer (indicating switching to the default BWP) and/or in response to receiving a DCI indicating BWP 2004 as the active BWP. The UE may switch at a switching point 2010 from active BWP 2004 to BWP 2006 in response receiving a DCI indicating BWP 2006 as the active BWP. The UE may switch at a switching point 2012 from active BWP 2006 to BWP 2004 in response to an expiry of a BWP inactivity timer and/or in response receiving a DCI indicating BWP 2004 as the active BWP. The UE may switch at a switching point 2014 from active BWP 2004 to BWP 2002 in response receiving a DCI indicating BWP 2002 as the active BWP.

If a UE is configured for a secondary cell with a default downlink BWP in a set of configured downlink BWPs and a timer value, UE procedures for switching BWPs on a secondary cell may be the same/similar as those on a primary cell. For example, the UE may use the timer value and the default downlink BWP for the secondary cell in the same/similar manner as the UE would use these values for a primary cell.

To provide for greater data rates, two or more carriers can be aggregated and simultaneously transmitted to/from the same UE using carrier aggregation (CA). The aggregated carriers in CA may be referred to as component carriers (CCs). When CA is used, there are a number of serving cells for the UE, one for a CC. The CCs may have three configurations in the frequency domain.

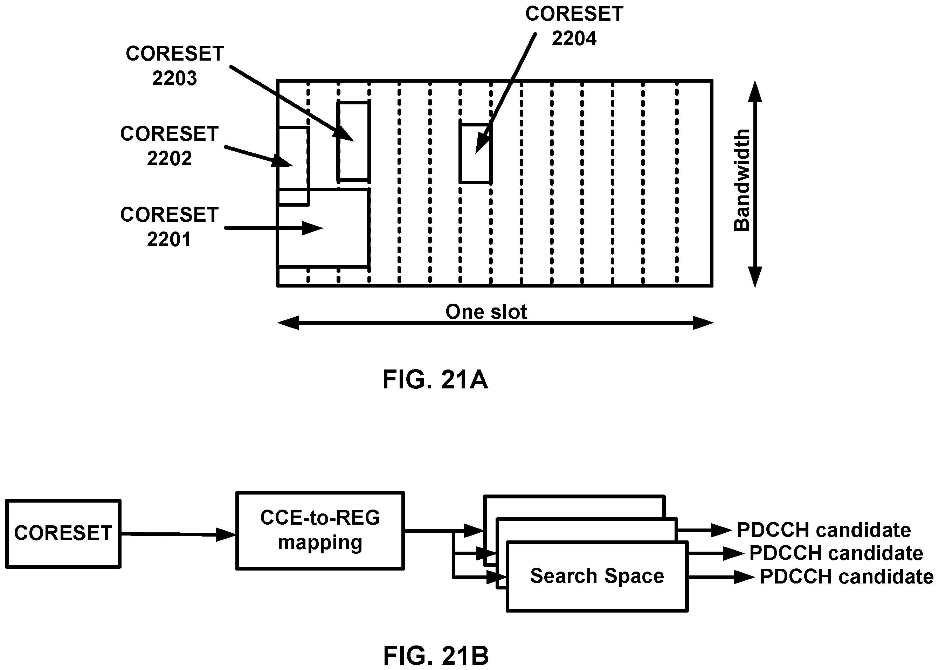

FIG. 21A shows an example of CORESET configurations for a bandwidth part. The base station may transmit a DCI via a PDCCH on one or more control resource sets (CORESETs). A CORESET may comprise a time-frequency resource in which the UE tries to decode a DCI using one or more search spaces. The base station may configure a CORESET in the time-frequency domain. In the example of FIG. 21A, a first CORESET 2101 and a second CORESET 2102 occur at the first symbol in a slot. The first CORESET 2101 overlaps with the second CORESET 2102 in the frequency domain. A third CORESET 2103 occurs at a third symbol in the slot. A fourth CORESET 2104 occurs at the seventh symbol in the slot. CORESETs may have a different number of resource blocks in frequency domain.

FIG. 21B illustrates an example of a Control Channel Element (CCE)-to-resource element group (REG) mapping for DCI transmission on a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping by RRC configuration. A CORESET may be configured with an antenna port quasi co-location (QCL) parameter. The antenna port QCL parameter may indicate QCL information of a demodulation reference signal (DMRS) for PDCCH reception in the CORESET.

The base station may transmit, to the UE, RRC messages comprising configuration parameters of one or more CORESETs and one or more search space sets. The configuration parameters may indicate an association between a search space set and a CORESET. A search space set may comprise a set of PDCCH candidates formed by CCEs at a given aggregation level. The configuration parameters may indicate: a number of PDCCH candidates to be monitored per aggregation level; a PDCCH monitoring periodicity and a PDCCH monitoring pattern; one or more DCI formats to be monitored by the UE; and/or whether a search space set is a common search space set or a UE-specific search space set. A set of CCEs in the common search space set may be predefined and known to the UE. A set of CCEs in the UE-specific search space set may be configured based on the UE's identity (e.g., C-RNTI).

As shown in FIG. 21B, the UE may determine a time-frequency resource for a CORESET based on RRC messages. The UE may determine a CCE-to-REG mapping (e.g., interleaved or non-interleaved, and/or mapping parameters) for the CORESET based on configuration parameters of the CORESET. The UE may determine a number (e.g., at most 10) of search space sets configured on the CORESET based on the RRC messages. The UE may monitor a set of PDCCH candidates according to configuration parameters of a search space set. The UE may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common search spaces, and/or number of PDCCH candidates in the UE-specific search spaces) and possible (or configured) DCI formats. The decoding may be referred to as blind decoding. The UE may determine a DCI as valid for the UE, in response to CRC checking (e.g., scrambled bits for CRC parity bits of the DCI matching a RNTI value). The UE may process information contained in the DCI (e.g., a scheduling assignment, an uplink grant, power control, a slot format indication, a downlink preemption, and/or the like).

The UE may transmit uplink control signaling (e.g., uplink control information (UCI)) to a base station. The uplink control signaling may comprise hybrid automatic repeat request (HARQ) acknowledgements for received Downlink Shared Channel (DL-SCH) transport blocks. The UE may transmit the HARQ acknowledgements after receiving a DL-SCH transport block. Uplink control signaling may comprise channel state information (CSI) indicating channel quality of a physical downlink channel. The UE may transmit the CSI to the base station. The base station, based on the received CSI, may determine transmission format parameters (e.g., comprising multi-antenna and beamforming schemes) for a downlink transmission. Uplink control signaling may comprise scheduling requests (SR). The UE may transmit an SR indicating that uplink data is available for transmission to the base station. The UE may transmit a UCI (e.g., HARQ acknowledgements (HARQ-ACK), CSI report, SR, and the like) via a physical uplink control channel (PUCCH) or a physical uplink shared channel (PUSCH). The UE may transmit the uplink control signaling via a PUCCH using one of several PUCCH formats.

There may be five PUCCH formats and the UE may determine a PUCCH format based on a size of the UCI (e.g., a number of uplink symbols of UCI transmission and a number of UCI bits). PUCCH format 0 may have a length of one or two OFDM symbols and may include two or fewer bits. The UE may transmit UCI in a PUCCH resource using PUCCH format 0 if the transmission is over one or two symbols and the number of HARQ-ACK information bits with positive or negative SR (HARQ-ACK/SR bits) is one or two. PUCCH format 1 may occupy a number between four and fourteen OFDM symbols and may include two or fewer bits. The UE may use PUCCH format 1 if the transmission is four or more symbols and the number of HARQ-ACK/SR bits is one or two. PUCCH format 2 may occupy one or two OFDM symbols and may include more than two bits. The UE may use PUCCH format 2 if the transmission is over one or two symbols and the number of UCI bits is two or more. PUCCH format 3 may occupy a number between four and fourteen OFDM symbols and may include more than two bits. The UE may use PUCCH format 3 if the transmission is four or more symbols, the number of UCI bits is two or more and PUCCH resource does not include an orthogonal cover code. PUCCH format 4 may occupy a number between four and fourteen OFDM symbols and may include more than two bits. The UE may use PUCCH format 4 if the transmission is four or more symbols, the number of UCI bits is two or more and the PUCCH resource includes an orthogonal cover code.

The base station may transmit configuration parameters to the UE for a plurality of PUCCH resource sets using, for example, an RRC message. The plurality of PUCCH resource sets (e.g., up to four sets) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g., a maximum number) of UCI information bits the UE may transmit using one of the plurality of PUCCH resources in the PUCCH resource set. When configured with a plurality of PUCCH resource sets, the UE may select one of the plurality of PUCCH resource sets based on a total bit length of the UCI information bits (e.g., HARQ-ACK, SR, and/or CSI). If the total bit length of UCI information bits is two or fewer, the UE may select a first PUCCH resource set having a PUCCH resource set index equal to "0". If the total bit length of UCI information bits is greater than two and less than or equal to a first configured value, the UE may select a second PUCCH resource set having a PUCCH resource set index equal to "1". If the total bit length of UCI information bits is greater than the first configured value and less than or equal to a second configured value, the UE may select a third PUCCH resource set having a PUCCH resource set index equal to "2". If the total bit length of UCI information bits is greater than the second configured value and less than or equal to a third value (e.g., 1406), the UE may select a fourth PUCCH resource set having a PUCCH resource set index equal to "3".

After determining a PUCCH resource set from a plurality of PUCCH resource sets, the UE may determine a PUCCH resource from the PUCCH resource set for UCI (HARQ-ACK, CSI, and/or SR) transmission. The UE may determine the PUCCH resource based on a PUCCH resource indicator in a DCI (e.g., with a DCI format 1_0 or DCI for 1_1) received on a PDCCH. A three-bit PUCCH resource indicator in the DCI may indicate one of eight PUCCH resources in the PUCCH resource set. The UE may transmit the UCI (HARQ-ACK, CSI and/or SR) using a PUCCH resource indicated by the PUCCH resource indicator in the DCI, for example, based on the PUCCH resource indicator.

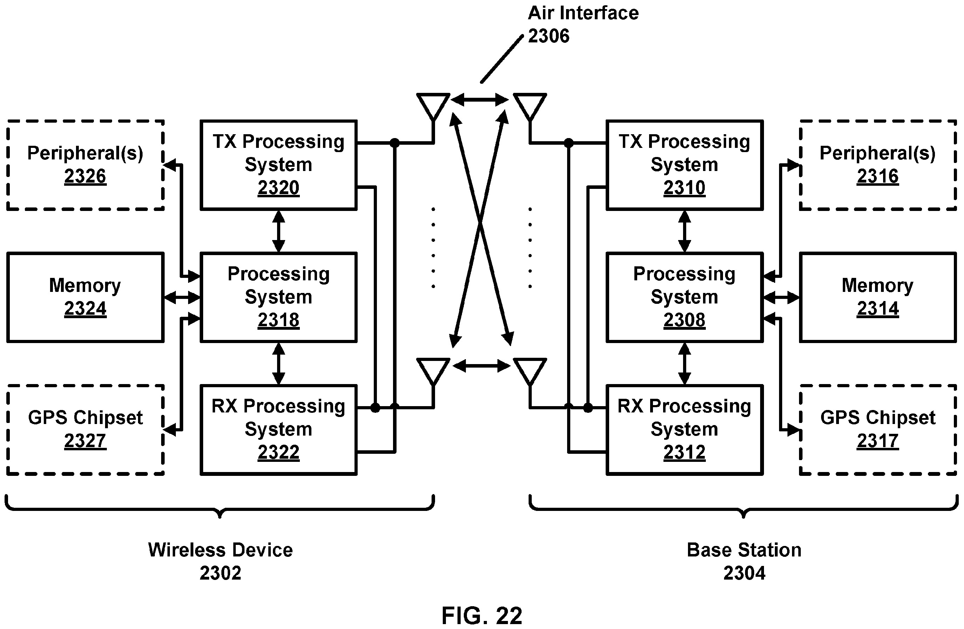

FIG. 22 illustrates an example of a wireless device 2202 in communication with a base station 2204 in accordance with embodiments of the present disclosure. The wireless device 2202 and base station 2204 may be part of a mobile communication network, such as a mobile communication network, or any other communication network. Only one wireless device 2202 and one base station 2204 are illustrated in FIG. 22, but it will be understood that a mobile communication network may include more than one UE and/or more than one base station, with the same or similar configuration as those shown in FIG. 22.

The base station 2204 may connect the wireless device 2202 to a core network (not shown) through radio communications over the air interface (or radio interface) 2206. The communication direction from the base station 2204 to the wireless device 2202 over the air interface 2206 is known as the downlink, and the communication direction from the wireless device 2202 to the base station 2204 over the air interface is known as the uplink. Downlink transmissions may be separated from uplink transmissions using FDD, TDD, and/or some combination of the two duplexing techniques.

In the downlink, data to be sent to the wireless device 2202 from the base station 2204 may be provided to the processing system 2208 of the base station 2204. The data may be provided to the processing system 2208 by, for example, a core network. In the uplink, data to be sent to the base station 2204 from the wireless device 2202 may be provided to the processing system 2218 of the wireless device 2202. The processing system 2208 and the processing system 2218 may implement layer 3 and layer 2 OSI functionality to process the data for transmission. Layer 2 may include an SDAP layer, a PDCP layer, an RLC layer, and a MAC layer. Layer 3 may include an RRC layer.

After being processed by processing system 2208, the data to be sent to the wireless device 2202 may be provided to a transmission processing system 2210 of base station 2204. Similarly, after being processed by the processing system 2218, the data to be sent to base station 2204 may be provided to a transmission processing system 2220 of the wireless device 2202. The transmission processing system 2210 and the transmission processing system 2220 may implement layer 1 OSI functionality. Layer 1 may include a PHY layer. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

At the base station 2204, a reception processing system 2212 may receive the uplink transmission from the wireless device 2202. At the wireless device 2202, a reception processing system 2222 may receive the downlink transmission from base station 2204. The reception processing system 2212 and the reception processing system 2222 may implement layer 1 OSI functionality. Layer 1 may include a PHY. For receive processing, the PHY layer may perform, for example, error detection, forward error correction decoding, deinterleaving, demapping of transport channels to physical channels, demodulation of physical channels, MIMO or multi-antenna processing, and/or the like.

As shown in FIG. 22, a wireless device 2202 and the base station 2204 may include multiple antennas. The multiple antennas may be used to perform one or more MIMO or multi-antenna techniques, such as spatial multiplexing (e.g., single-user MIMO or multi-user MIMO), transmit/receive diversity, and/or beamforming. In other examples, the wireless device 2202 and/or the base station 2204 may have a single antenna.

The processing system 2208 and the processing system 2218 may be associated with a memory 2214 and a memory 2224, respectively. Memory 2214 and memory 2224 (e.g., one or more non-transitory computer readable mediums) may store computer program instructions or code that may be executed by the processing system 2208 and/or the processing system 2218 to carry out one or more of the functionalities discussed in the present application. Although not shown in FIG. 22, the transmission processing system 2210, the transmission processing system 2220, the reception processing system 2212, and/or the reception processing system 2222 may be coupled to a memory (e.g., one or more non-transitory computer readable mediums) storing computer program instructions or code that may be executed to carry out one or more of their respective functionalities.

The processing system 2208 and/or the processing system 2218 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 2208 and/or the processing system 2218 may perform at least one of signal coding/processing, data processing, power control, input/output processing, and/or any other functionality that may enable the wireless device 2202 and the base station 2204 to operate in a wireless environment.

The processing system 2208 and/or the processing system 2218 may be connected to one or more peripherals 2216 and one or more peripherals 2226, respectively. The one or more peripherals 2216 and the one or more peripherals 2226 may include software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 2208 and/or the processing system 2218 may receive user input data from and/or provide user output data to the one or more peripherals 2216 and/or the one or more peripherals 2226. The processing system 2218 in the wireless device 2202 may receive power from a power source and/or may be configured to distribute the power to the other components in the wireless device 2202. The power source may comprise one or more sources of power, for example, a battery, a solar cell, a fuel cell, or any combination thereof. The processing system 2208 and/or the processing system 2218 may be connected to a GPS chipset 2217 and a GPS chipset 2227, respectively. The GPS chipset 2217 and the GPS chipset 2227 may be configured to provide geographic location information of the wireless device 2202 and the base station 2204, respectively.

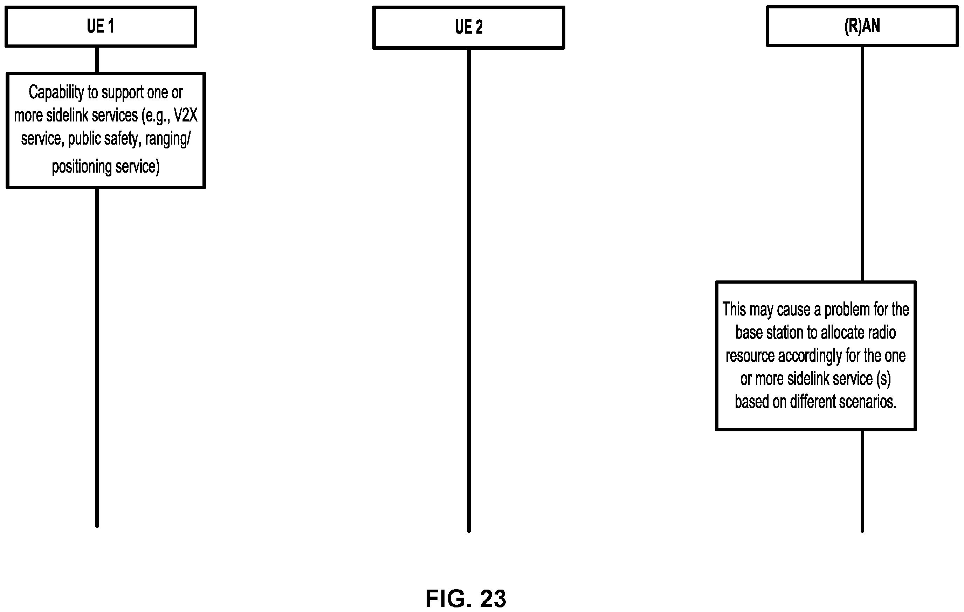

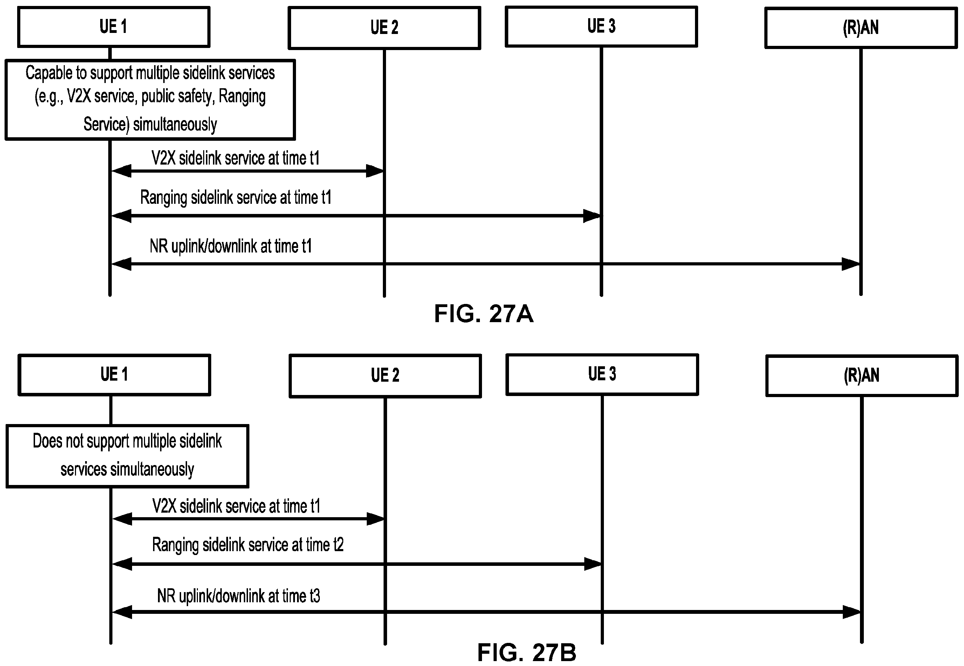

FIG. 23 is an example diagram showing problems associated with at least some wireless communications. In at least some wireless communications, a wireless device may support one sidelink service, two sidelink services, or more sidelink services (e.g., V2X service, public service, ranging/positioning service, etc.). The wireless device may support two or more sidelink services simultaneously (e.g., at a same time, as shown in the example of FIG. 27A), or exclusively (e.g., only at different times, as shown in the example of FIG. 27B). This may cause a problem for the base station to allocate radio resource accordingly for the one or more sidelink service(s) based on different scenarios. For example, the base station may allocate three radio resources for a V2X service, a public service, and a ranging service, respectively. However, one radio resource may be enough if the V2X service, public service, ranging service are not performed simultaneously. Consequently, the additional radio resources may be wasted.

As described herein, improved wireless communications may enable a wireless device to indicate to a base station whether the wireless device has the capability and/or whether the wireless device has a request to perform multiple sidelink services concurrently/simultaneously. The base station may determine radio resource for one sidelink service or multiple sidelink services accordingly, for example, based on such information received from the wireless device. Examples described herein may enable a base station to indicate to a wireless device whether a radio resource is only for one of multiple sidelink services or shared by multiple sidelink services. For example, a base station may receive a first radio resource control (RRC) message from a wireless device. The first RRC message may indicate whether the wireless device supports a plurality of sidelink (SL) services simultaneously, wherein the plurality of SL services comprises: a SL ranging service; and a V2X service. The base station may send (e.g., based on the first RRC message) a second RRC message indicating: a first frequency band is associated with the SL ranging service; and a second frequency band is associated with the V2X service.

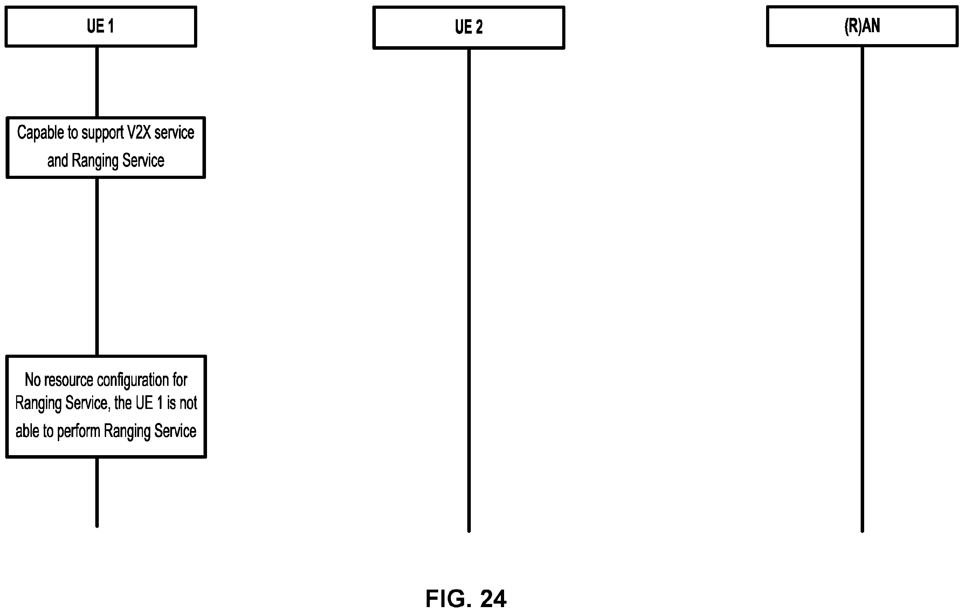

FIG. 24 is an example diagram illustrating problems of existing technologies. In existing technologies, a wireless device may support V2X service and/or the ranging/positioning service, however, the wireless device has no resource configuration (e.g., frequency resource, time resource) for the ranging/positioning service . Consequently, the wireless device is not able to perform the ranging/positioning service.

Example embodiments provide enhanced mechanism to enable a base station to allocate a first resource for the V2X service and a second resource for the ranging/positioning service. Example embodiments provide enhanced mechanism to enable a base station to send a resource for the V2X service and the ranging/positioning service to one or more wireless devices.

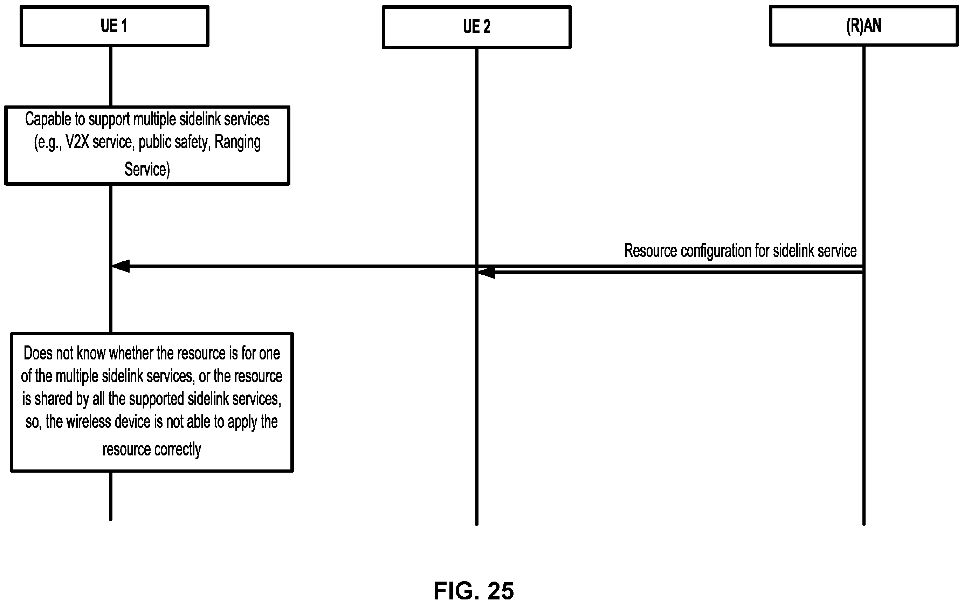

FIG. 25 is an example diagram illustrating problems of existing technologies. In existing technologies, a wireless device may support one or more sidelink services (e.g., V2X service, public service, ranging/positioning service) concurrently or exclusively. The wireless device may receive a message (e.g., SIB/MIB) from a base station, and the message may indicate configuration parameters for radio resource of sidelink, e.g., frequency resource and/or time resource. However, the wireless device does not know whether the radio resource is only used for one of the sidelink service or for all the sidelink services. Consequently, the wireless device is not able to apply the radio resource for the one or more sidelink services correctly.

Example embodiments provide enhanced mechanism to enable a base station to allocate one or more radio resources for the one or more sidelink services. Example embodiments provide enhanced mechanism to enable a base station to indicate to one or more wireless device that the one or more resources is only used for one of the sidelink services. Example embodiments provide enhanced mechanism to enable a base station to indicate to one or more wireless devices that the one or more radio resources may be shared by one or more sidelink services.

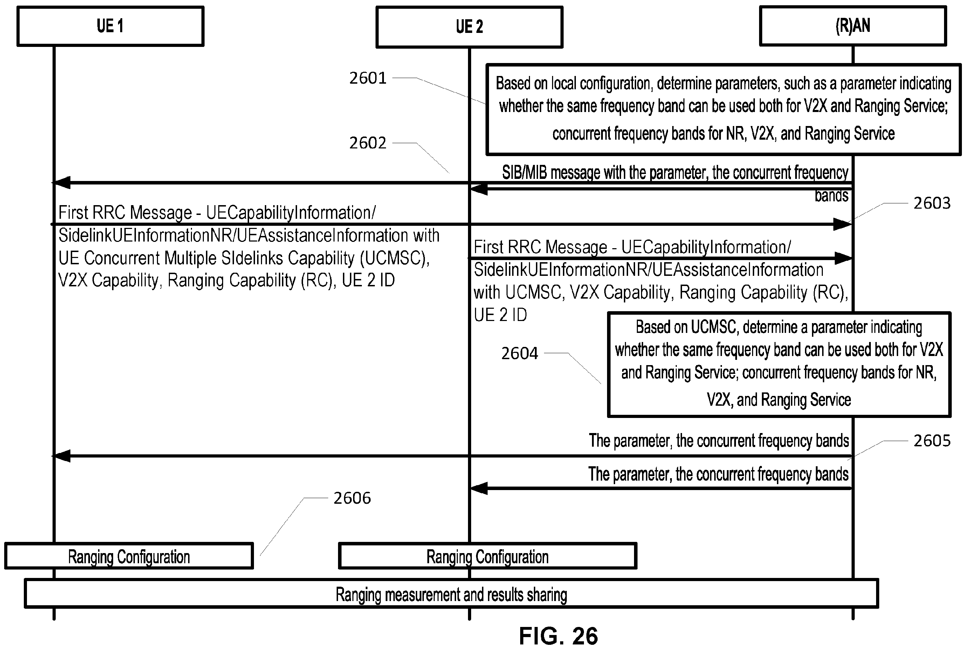

FIG. 26 is an example call flow which may comprise one or more actions. Various configuration parameters may be determined 2601. A base station (e.g., (R)AN) may determine at least one frequency band for concurrent multiple sidelink services for one or more wireless devices, for example, based on local configuration/policy. The concurrent multiple sidelink services may indicate at least two unicast sidelinks are operated concurrently/simultaneously, wherein a first unicast sidelink of the at least two unicast sidelinks is between a first wireless device (e.g., UE 1) and a second wireless device (e.g., UE 2), and a second unicast sidelink of the at least two unicast sidelinks is between the UE 1 and a third wireless device (e.g., UE 3). A sidelink service may be a service/application associated with the sidelink. For example, the sidelink service may be a service/application over at least one sidelink/PC5 interface. The sidelink service may comprise at least one of the following services/applications: a V2X service, a public safety service, a ranging/sidelink positioning service, and/or the like.

A base station (e.g., (R)AN) may determine a plurality of configuration parameters for radio resource (e.g., frequency resource, time resource, radio bearer resource) of the plurality of sidelink services (and/or plurality of unicast sidelinks), and/or a plurality of configuration parameters for radio resource of communication between wireless device(s) and the base station, for example, based on local configuration/policy. The plurality of sidelink services (and/or plurality of unicast sidelinks) and/or the communication between wireless device(s) and the base station may be operated/used currently/simultaneously. The plurality of configuration parameters for radio resource of the plurality of sidelink services (and/or plurality of unicast sidelinks) may comprise a System Information Blocks (SIB) message (e.g., SIB 12) for a plurality of sidelink services (and/or plurality of unicast sidelinks). The SIB message may be applied for the communication between the wireless device(s) and the base station. The communication between wireless device(s) and the base station may indicate/comprise uplink and/or downlink communications between the wireless device(s) and the base station.

The base station may determine a parameter (e.g., Shared Frequency Band) indicating whether a frequency band is being shared/used by a plurality of sidelink services (and/or plurality of unicast sidelinks), for example, based on local configuration/policy. The base station may determine the frequency band being shared/used by plurality of sidelink services (and/or plurality of unicast sidelinks) and a second frequency band for the communication between the wireless device(s) and the base station.

For example, the base station may determine a first frequency band for sidelink services (e.g., V2X service and/or ranging service). The base station may determine the parameter/ Shared Frequency Band) indicating the first frequency band being shared/used by the V2X service and/or ranging service. The base station may determine a second frequency band for the communication between the wireless device(s) and the base station (e.g., NR uplink/downlink communication), wherein the first frequency band may be operated/used with the second frequency band concurrently/simultaneously.

The base station may determine a frequency band may not be shared/used by more than one sidelink service. The base station may determine a first frequency band for V2X service. The base station may determine a second frequency band for ranging service. The base station may determine a third frequency band for the communication between the wireless device(s) and the base station, wherein the first frequency band, the second frequency band, and/or the third frequency band may be operated/used concurrently/simultaneously.

The SIB message may comprise one or more of the following parameters. For example, the SIB message may comprise a parameter (e.g., Sidelink Service Type) indicating what sidelink service (s) the SIB message may be applied to. The parameter/ Sidelink Service Type may indicate/comprise at least one of: a V2X service, a ranging service, a relay service, a public safety service, and/or a type of sidelink service. For example, the parameter/ Sidelink Service Type may indicate that the SIB message may be applied to the V2X service and/or the ranging service.

The SIB message may comprise a parameter (e.g., sl-ConfigCommonNR) indicating common configuration for the plurality of sidelink services (and/or plurality of unicast sidelinks) over PC5. The SIB message may comprise a parameter (e.g., sl-DRX-ConfigCommon) indicating common configuration for DRX for the plurality of sidelink services (and/or plurality of unicast sidelinks) over PC5. The SIB message may comprise a parameter (e.g., sl-DiscConfigCommon) indicating common configuration for discovery of the plurality of sidelink services (and/or plurality of unicast sidelinks) over PC5. The SIB message may comprise a parameter (e.g., sl-L2U2N-Relay) indicating configuration for layer 2 UE to network relay for the plurality of sidelink services (and/or plurality of unicast sidelinks) over PC5. The SIB message may comprise a parameter (e.g., sl-NonRelayDiscovery) indicating configuration for non-relay discovery for the plurality of sidelink services (and/or plurality of unicast sidelinks) over PC5. The SIB message may comprise a parameter (e.g., sl-L3U2N-Relay) indicating configuration for layer 3 UE to network relay for the plurality of sidelink services (and/or plurality of unicast sidelinks) over PC5.

The parameter/ sl-ConfigCommonNR may comprise one or more of the following parameters. For example, the parameter/ sl-ConfigCommonNR may comprise a parameter (e.g., sl-FreqInfoList) indicating frequency list for the plurality of sidelink services (and/or plurality of unicast sidelinks) over PC5. For example, the parameter/ sl-ConfigCommonNR may comprise a parameter (e.g., sl-UE-SelectedConfig) indicating UE selected configuration for the plurality of sidelink services (and/or plurality of unicast sidelinks) over PC5. For example, the parameter/ sl-ConfigCommonNR may comprise a parameter (e.g., sl-NR-AnchorCarrierFreqList) indicating anchor carrier frequency list for NR for the plurality of sidelink services (and/or plurality of unicast sidelinks) over PC5. For example, the parameter/ sl-ConfigCommonNR may comprise a parameter (e.g., sl-EUTRA-AnchorCarrierFreqList) indicating anchor carrier frequency list for EUTRA for the plurality of sidelink services (and/or plurality of unicast sidelinks) over PC5. For example, the parameter/ sl-ConfigCommonNR may comprise a parameter (e.g., sl-RadioBearerConfigList) indicating radio bearer configuration for the plurality of sidelink services (and/or plurality of unicast sidelinks) over PC5. For example, the parameter/ sl-ConfigCommonNR may comprise a parameter (e.g., sl-RLC-BearerConfigList) indicating RLC bearer configuration for the plurality of sidelink services (and/or plurality of unicast sidelinks) over PC5. For example, the parameter/ sl-ConfigCommonNR may comprise a parameter (e.g., sl-MeasConfigCommon) indicating measurement configuration for the plurality of sidelink services (and/or plurality of unicast sidelinks) over PC5. For example, the parameter/ sl-ConfigCommonNR may comprise a parameter (e.g., sl-CSI-Acquisition) indicating channel state information (CSI) Acquisition for the plurality of sidelink services (and/or plurality of unicast sidelinks) over PC5. For example, the parameter/ sl-ConfigCommonNR may comprise a parameter (e.g., sl-OffsetDFN) indicating offset of direct frame number (DFN) for the plurality of sidelink services (and/or plurality of unicast sidelinks) over PC5. For example, the parameter/ sl-ConfigCommonNR may comprise a parameter (e.g., sl-MaxNumConsecutiveDTX) indicating maximum number of consecutive Discontinuous Transmission (DTX) for the plurality of sidelink services (and/or plurality of unicast sidelinks) over PC5.

The base station may send/broadcast 2602 the plurality of configuration parameters for radio resource of the plurality of sidelink services (and/or plurality of unicast sidelinks) to one or more wireless devices. The base station may send/broadcast the plurality of configuration parameters for radio resource of the communication between wireless device(s) and the base station to one or more wireless devices. The base station may send/broadcast the SIB message to one or more wireless devices. As shown in Fig. 26, the base station may send/broadcast 2602 the SIB message to both UE 1 and UE 2. This may also, or alternatively, comprise a master information block (MIB) with the same information.

The base station may send/broadcast the parameter/ Shared Frequency Band), the frequency band and the second frequency band to one or more wireless devices. The base station may send/broadcast the first frequency band, the second frequency band, and/or the third frequency band to one or more wireless devices.

The base station may receive a first message 2603, which may be a first radio resource control (RRC) message, from a wireless device (e.g., UE 1, UE 2, or both, as shown in FIG. 26), for example, based on sending/broadcasting message(s)/parameter(s) to the one or more wireless devices. The first message 2603 may indicate whether the wireless device supports a plurality of sidelink (SL) services simultaneously/concurrently, wherein the plurality of sidelink services comprises at least one of: a sidelink ranging service; a public safety service; a sidelink relay service; a V2X service, and/or a service associated with a sidelink (e.g., a service using sidelink communication). The first message 2603 may indicate whether the wireless device supports a plurality of sidelink (SL) services (and/or a plurality of unicast sidelinks) simultaneously/concurrently.

The first message 2603 may indicate a plurality of capabilities of a wireless device, wherein each of the plurality of capabilities is associated with a respective sidelink service, and each sidelink service is associated with a respective frequency band. The first message 2603 may indicate these services and/or their parameters.

The first message 2603 may indicate ranging/range/sidelink (SL) positioning, which may comprise at least one of: a distance (e.g., centimeter (cm), millimeter (mm)); a direction (e.g., east, 9-o'clock direction); an angle (e.g., degree); a velocity; and/or a position. The velocity may indicate a directional speed of an object in motion as an indication of its rate of change in position as observed from a particular frame of reference and as measured by a particular standard of time (e.g. 60 km/h to the north). The position may indicate a relative position (e.g., the second wireless device may be 5 meters away from the first wireless device). The position may be an absolute position (e.g., a GPS coordinates). The sidelink ranging service may comprise at least one of: a first wireless device measuring a distance of a second wireless device; a first wireless device measuring a direction of a second wireless device; a first wireless device measuring an angle of a second wireless device; a first wireless device measuring a velocity of a second wireless device; and/or a first wireless device measuring a position of a second wireless device. The "ranging service" may be the same as "sidelink ranging service".

Public safety service may be a service/application associated with public safety (e.g., police, fire and ambulance), wherein the public safety service may use sidelink communications between UEs.

The sidelink relay service may be a service associated with a sidelink relay (e.g., a sidelink relay may provide a sidelink relay service). The sidelink relay may be a UE-to-Network Relay (e.g., 5G ProSe UE-to-Network Relay, 5G ProSe-enabled UE) providing functionality to support connectivity to a network for a remote UE (e.g., 5G ProSe Remote UE). The communication between the remote UE and the sidelink relay may use sidelink communication. Consequently, the remote UE may communicate with the network and/or a data network via the sidelink relay. A "relay" may indicate "sidelink relay". A "sidelink relay service" may be the same as "relay service".

In this specification, when a message/parameter indicates whether a device/network function (e.g., wireless device) supports a service/function, this means that the device/network function may support the service/function and/or the device/network function may not support the service/function.

A V2X service may be a data service, offered to V2X applications and optionally V2X Application Servers. A V2X service may belong to one V2X service type. The V2X service may comprise message and/or data delivery. A V2X service may be associated with one or more V2X applications, and a V2X application may be associated with one or more V2X services. A V2X service may be a service associated with V2X communication. The V2X communication may be a communication to support Vehicle-to-Everything (V2X) services leveraging Uu and / or PC5 reference points. The Uu reference point/interface may be between a wireless device and a base station (e.g., (R)AN). The V2X service may be realized by various types of V2X applications, e.g., Vehicle-to-Vehicle (V2V), Vehicle-to-Pedestrian (V2P), Vehicle-to-Infrastructure (V2I) and Vehicle-to-Network (V2N). A V2X service type may be identified by e.g., ITS-AID (Intelligent Transport Systems (ITS) Application Identifier), PSID (Provider Service Identifier) or AID (Application Identifier).

The first message 2603 may be a UECapabilityInformation message. The first message 2603 may be a SidelinkUEInformationNR message. The first message 2603 may be a UEAssistanceInformation message. The first message 2603 may comprise an identity of the wireless device. The first message 2603 may comprise one or more identity(es) of one or more second wireless device(s), where the wireless device may communicate with the one or more second wireless device(s) for the plurality of sidelink services. The identity of the wireless device and/or one or more identity(es) of one or more second wireless device(s) may comprise at least one of: a Generic Public Subscription Identifier (GPSI), wherein the GPSI may comprise a Mobile Station Integrated Services Digital Network (MSISDN) and/or an external identifier; a Subscription Permanent Identifier (SUPI), wherein the SUPI may comprise an International Mobile Subscriber Identity (IMSI) and/or Network Access Identifier (NAI); a Subscription Concealed Identifier (SUCI); a 5G Globally unique Temporary Identity (5G-GUTI); a permanent equipment identifier (PEI), wherein the PEI may comprise an International Mobile Equipment Identity (IMEI); an IP address, wherein the IP address may comprise an IPv4 address and/or an IPv6 prefix; an application-level identifier to identify the wireless device/second wireless device (e.g., Application Layer ID); and/or a Layer-2 ID. The wireless device/second wireless device may have one or more Layer-2 IDs for sidelink communication over PC5 reference point. The Layer-2 IDs may comprise Source Layer-2 ID(s) and/or Destination Layer-2 ID(s). The Source and destination Layer-2 IDs may be included in layer-2 frames sent on the layer-2 link of the PC5 reference point identifying the layer-2 source and destination of these frames. Source Layer-2 IDs may be always self-assigned by the UE originating the corresponding layer-2 frames.

The first message 2603 may indicate whether the wireless device supports a plurality of unicast sidelinks simultaneously/concurrently, wherein the plurality of unicast sidelinks may be associated with plurality of sidelink services respectively. In this specification, when the terminology "plurality of sidelink services" is used, it may indicate plurality of sidelink services and/or plurality of unicast sidelinks.

The first message 2603 may comprise a first parameter (e.g., Concurrent Multiple Sidelinks Capability) indicating whether the wireless device supports a plurality of sidelink (SL) services simultaneously/concurrently. The first parameter/ Concurrent Multiple Sidelinks Capability may indicate whether the wireless device supports a plurality of unicast sidelinks simultaneously/concurrently, wherein the plurality of unicast sidelinks may be associated with plurality of sidelink services respectively. The first parameter/ Concurrent Multiple Sidelinks Capability may indicate whether the wireless device supports a plurality of sidelink (SL) services simultaneously/concurrently, wherein the plurality of sidelink (SL) services may be over/via plurality of unicast sidelink, plurality of groupcast sidelink, and/or plurality of broadcast sidelink.

The first parameter/ Concurrent Multiple Sidelinks Capability may indicate whether the wireless device supports plurality of sidelink services and/or uplink/downlink communications with a base station simultaneously/concurrently. Supporting a plurality of sidelink services and/or uplink/downlink communications with a base station simultaneously/concurrently may indicate that the wireless device is able to send/receive a plurality of data packages via the plurality of sidelinks and/or uplink/downlink communications link at the same time. The sending/receiving the plurality of data packages may be on same antenna (and/or antenna port) and/or different antennas (and/or antenna ports).

The first parameter/ Concurrent Multiple Sidelinks Capability may indicate whether the wireless device is able to send/receive data package of at least two sidelink services of the plurality of sidelink services simultaneously/concurrently. The first parameter/ Concurrent Multiple Sidelinks Capability may indicate whether the wireless device supports simultaneous sidelink transmission of one or more packets for a plurality of sidelink services.

A first wireless device (e.g., UE 1) may support 2 unicast sidelinks and NR uplink/downlink communications simultaneously/concurrently (e.g., such as described with respect to FIG. 27A). For example, the UE 1 has multiple antennas and may send/receive different data to/from different wireless devices over different antenna at the same time. For example, at the same time t1, the UE 1 may perform a V2X sidelink service with a second wireless device (e.g., UE 2), the UE 1 may perform a ranging service with a third wireless device (e.g., UE 3), and/or the UE 1 may perform NR uplink/downlink communications with a base station ((R)AN).

The UE 1 is not able to perform multiple sidelinks and NR uplink/downlink communications simultaneously/concurrently (e.g., such as described with respect to FIG. 27B). For example, the UE 1 may have one antenna and does not be able send/receive different data to/from different wireless devices at the same time. For example, at the time 11, the UE 1 may perform a V2X sidelink service with UE 2. At time t2, the UE 1 may perform a ranging service with the UE 3. At time t3, the UE 1 may perform NR uplink/downlink communications with the (R)AN.

The first message 2603 may indicate a plurality of capabilities of the wireless device, wherein the plurality of capabilities of the wireless device may indicate whether the wireless device supports a plurality of sidelink services simultaneously/concurrently (e.g., such as described with respect to FIG. 26). For example, message 2603 may comprise information indicating UE Concurrent Multiple Sidelinks Capability (UCMSC).

The first message 2603 may comprise a second parameter (e.g., Ranging Capability) indicating whether the wireless device supports ranging service. The second parameter/Ranging Capability may indicate whether the wireless device has the capability to measure/determine a range/position of a second wireless device. The second parameter/ Ranging Capability may indicate whether the wireless device has the capability to range/position a second wireless device. The second parameter/ Ranging Capability may indicate whether the wireless device has at least one of the following capabilities: measuring/determining a distance of a second wireless device; measuring/determining a direction of a second wireless device; measuring/determining an angle of a second wireless device; measuring/determining a velocity of a second wireless device; and/or measuring/determining a position of a second wireless device. The second parameter/ Ranging Capability may indicate the scope/ range/limitation of the ranging service. The second parameter/ Ranging Capability may indicate the scope/range/limitation of measuring/determining a ranging of: a distance; a direction; an angle; a velocity; and/or a position of a second wireless device. For example, the second parameter/ Ranging Capability may indicate a maximum distance of 100 meters may be measured by the wireless device.

The first message 2603 may comprise a third parameter (e.g., Relay Capability), where the third parameter/Relay Capability may indicate whether the wireless device supports sidelink relay (e.g., UE-to-Network Relay). The third parameter/Relay Capability may indicate whether the wireless device has the capability to assist/help a second wireless device ranging/positioning a third wireless device. The third parameter/Relay Capability may indicate at least one of: the wireless device has a capability to assist/help a second wireless device to measure a distance of a third wireless device; the wireless device has a capability to assist/help a second wireless device to measure a direction of a third wireless device; the wireless device has a capability to assist/help a second wireless device to measure an angle of a third wireless device; the wireless device has a capability to assist/help a second wireless device to measure a velocity of a third wireless device; and/or the wireless device has a capability to assist/help a second wireless device to measure a position of a third wireless device.

The first message 2603 may comprise a fourth parameter (e.g., PC5 Capability) indicating whether the wireless device is able to perform ranging service over PC5 reference point. The fourth parameter/ PC5 Capability may indicate that the wireless device supports PC5 communication with a second wireless device over a PC5 interface. The PC5 interface may be a reference point between the UEs (e.g., between the wireless device and a second wireless device). The PC5 may comprise LTE-based PC5 and/or NR-based PC5. The PC5 may refer to a reference point where the User Equipment (UE), e.g., mobile handset, directly communicates with another UE over the direct channel. In this case, the communication with the base station is not required.

The first message 2603 may comprise a fifth parameter (e.g., V2X Capability) indicating a V2X capability of the wireless device. The fifth parameter/ V2X Capability may indicate that the wireless device supports V2X communication/service with a second wireless device. The V2X may comprise EPS V2X and/or 5GS V2X.

The first message 2603 may comprise a sixth parameter (e.g., ProSe Capability) indicating a ProSe Capability of the first wireless device. The sixth parameter/ ProSe Capability may indicate that the wireless device supports ProSe communication/service with a second wireless device. The sixth parameter/ ProSe Capability may indicate whether the first wireless device supports one or more of the following ProSe capabilities: 5G ProSe Direct Discovery; 5G ProSe Direct Communication; 5G ProSe Layer-2 UE-to-Network Relay; 5G ProSe Layer-3 UE-to-Network Relay; 5G ProSe Layer-2 Remote UE; and/or 5G ProSe Layer-3 Remote UE.

The second parameter/Ranging Capability, the third parameter/Relay Capability, the fourth parameter/ PC5 Capability, the fifth parameter/ V2X Capability, and/or the sixth parameter/ ProSe Capability may indicate whether the wireless device supports a plurality of sidelink services (e.g., sidelink ranging service, sidelink relay service, V2X service, ProSe service) simultaneously/concurrently. For example, this may include the UCMSC referred to above.

The first message 2603 may comprise a seventh parameter (e.g., Ranging Accuracy) indicating an accuracy of the ranging service supported by the wireless device. The seventh parameter/Ranging Accuracy may indicate degree of conformity of a measure to a standard or a true value of the ranging. The seventh parameter/Ranging Accuracy may comprise at least one of: accuracy of a distance for the ranging service; accuracy of a direction for the ranging service; accuracy of an angle for the ranging service; accuracy of a velocity for the ranging service; and/or accuracy of a position for the ranging service.

The first message 2603 may indicate at least one requested sidelink service type for the wireless device. The first message 2603 may comprise an eighth parameter (e.g., Requested Sidelink Service Type) indicating at least one requested sidelink service. The eighth parameter/Requested Sidelink Service Type may indicate the wireless device requesting plurality of sidelink services, wherein the plurality of sidelink services will be performed/operated by wireless device concurrently/simultaneously. The eighth parameter/Requested Sidelink Service Type may indicate the wireless device requesting plurality of sidelink services, wherein the plurality of sidelink services will be performed/operated with uplink/downlink communications between the wireless and the base station concurrently/simultaneously.

The eighth parameter/Requested Sidelink Service Type may indicate the wireless device request at least one sidelink service. The eighth parameter/Requested Sidelink Service Type may indicate the wireless device requests ranging service, V2X service and/or sidelink relay service, wherein the ranging service, the V2X service, the sidelink relay service and/or uplink/downlink communications between the wireless and the base station will be performed/operated by the wireless device concurrently/simultaneously.

In response to the first message 2603 being received, the base station may take one or more actions 2604. The base station may determine a plurality of frequency bands for the plurality of sidelink services, for example, based on the first RRC message 2603. The base station may determine one frequency band being shared by two or more sidelink services, for example, based on one or more parameters of the first RRC message.

The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine a plurality of frequency bands for the plurality of sidelink services, for example, based on the first RRC message 2603. The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine at least one frequency band for the plurality of sidelink services, for example, based on the first RRC message 2603.

The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine that one frequency band is not able to be shared by two or more sidelink services, and/or the base station may determine that a first frequency band for the V2X service, a second frequency band for the ranging service, a third frequency band for the sidelink relay service, and/or a fourth frequency band for uplink/downlink communication between the wireless device and the base station, wherein the first frequency band, the second frequency band, the third frequency band and/or the fourth frequency band can be operated/used concurrently/simultaneously, for example, based on the first RRC message 2603. The base station may determine one frequency band is not able to be shared by two or more sidelink services based on at least one of: security policy, regularity policy, local configuration, and/or bandwidth of one frequency band is not enough to support two or more sidelink services simultaneously/concurrently. For example, the second parameter/Ranging Capability and/or the seventh parameter/Ranging Accuracy may indicate that the wireless device may measure a long distance of a second wireless device, this may need a big bandwidth, one frequency band is not enough to support two or more sidelink services simultaneously/concurrently. For example, the second parameter/Ranging Capability, the fifth parameter/ V2X Capability and/or the sixth parameter/ ProSe Capability may indicate the wireless device may perform multiple sidelink services simultaneously, one frequency band is not enough to support the ranging service, the V2X service and the ProSe service simultaneously.

The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine that one frequency band is able to be shared by two or more sidelink services, and/or the base station may determine that a first frequency band for the V2X service and/or the ranging service, and/or a second frequency band for uplink/downlink communication between the wireless device and the base station, wherein the first frequency band and/or the second frequency band can be operated/used concurrently/simultaneously, for example, based on the first RRC message 2603. The base station may determine one frequency band is able to be shared by two or more sidelink services based on at least one of: security policy, regularity policy, local configuration, bandwidth of one frequency band is enough to support two or more sidelink services simultaneously/concurrently, and/or one frequency band is able to be shared by two or more sidelink services because two or more sidelink services are not performed simultaneously/concurrently. For example, the second parameter/Ranging Capability and/or the seventh parameter/Ranging Accuracy may indicate that the wireless device may measure a short distance of a second wireless device, this may need a small bandwidth, one frequency band is enough to support two or more sidelink services simultaneously/concurrently. For example, the first parameter/ Concurrent Multiple Sidelinks Capability and/or the eighth parameter/Requested Sidelink Service Type may indicate the wireless device does not perform two or more sidelink services simultaneously, one frequency band may be shared by the two or more sidelink services. For example, the first parameter/ Concurrent Multiple Sidelinks Capability may indicate that the wireless device does not support the ranging service and the V2X service simultaneously/concurrently, the eighth parameter/Requested Sidelink Service Type may indicate the wireless device request a ranging service and/or a V2X service, based on above information, the base station may determine that one frequency band is able to be shared/used by the ranging service and the V2X service. For example, the first parameter/ Concurrent Multiple Sidelinks Capability may indicate that the wireless device supports the ranging service and the relay service simultaneously/concurrently, the second parameter/Ranging Capability may indicate the wireless device supports the ranging service with a scope of 10 meters which does not require a big bandwidth, the third parameter/Relay Capability may indicate that the wireless device supports sidelink relay service, based on above information, the base station may determine that one frequency band is able to be shared/used by the ranging service and the relay service.

The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine a frequency band for sidelink services, and/or a ninth parameter (e.g., Shared Sidelink Frequency Band) indicating whether the frequency band is shared by plurality of sidelink services, for example, based on the first RRC message 2603. For example, the base station may determine a first frequency band for sidelink services, a second frequency band for the uplink/downlink communication between the wireless device and the base station, and/or a ninth parameter/ Shared Sidelink Frequency Band indicating the first frequency band may be shared by V2X service and ranging service, where the first frequency band and the second frequency band may be operated currently/simultaneously.

The base station may determine configuration parameters for a plurality of radio resources, where the plurality of radio resources may be for the plurality of sidelink services, for example, based on the first RRC message 2603. The base station may determine a configuration parameter of one radio resource, where the one radio resource may be shared/used by two or more sidelink services, for example, based on one or more parameters of the first RRC message 2603.

The radio resource may comprise at least one of: frequency resource, time resource, and/or radio bearer resource. The time resource may indicate time domain resource. The time resource may indicate resource of time (e.g., time duration) allocated for sending and/or receiving signaling and/or user data for a wireless device. The time resource of sidelink (service) may indicate resource of time (e.g., time duration) allocated for sending and/or receiving signaling and/or user data between a first wireless device and a second wireless device (e.g., between UE1 and UE2, via a PC5 interface). The time resource may comprise/indicate (NR) frame, subframes, slots and/or (OFDM) symbols as shown in FIG. 18. The time resource may comprise/indicate BWP as shown in FIG. 19 and/or FIG. 20. The time resource may comprise/indicate CORESET as shown in FIG. 21A and FIG. 21B. The time resource may comprise/indicate an RG (Resource Grid), where the RG may be a collection of time-frequency resources. The RG may be for different Numerology on each carrier, and an RG may be a collection of resources for all sub-carriers in the frequency domain and all symbols under 1 subframe length in the time domain, and the starting point of the frequency domain may be granular in RB.

The time domain resource for PDSCH transmissions may be scheduled by DCI format 1_0 and/or 1_1 in the field Time-domain resource assignment. This field may indicate slot offset K0, starting symbol S, allocation length L, and the mapping type of PDSCH. The base station may configure time resource in a parameter (e.g., pdsch-TimeDomainAllocationList, pdsch-ConfigCommon). The base station may send the parameter of time resource (e.g., pdsch-TimeDomainAllocationList, pdsch-ConfigCommon, pdsch-Config) to the wireless device via SIB (e.g., SIB1) or dedicated RRC signalling (e.g., RRCReconfiguration).

The frequency resource may indicate frequency domain resource. The frequency resource may indicate resource of frequency (e.g., frequency band, carrier, subcarrier) allocated for sending and/or receiving signaling and/or user data for a wireless device. The frequency resource of sidelink (service) may indicate resource of frequency (e.g., frequency band, carrier, subcarrier) allocated for sending and/or receiving signaling and/or user data between a first wireless device and a second wireless device (e.g., between UE1 and UE2, via a PC5 interface). The frequency resource may comprise/indicate frequency band, carrier, and/or subcarrier. The frequency resource may comprise/indicate BWP, RE, and/or RB as shown in FIG. 19 and/or FIG. 20. The frequency resource may comprise/indicate CORESET as shown in FIG. 21A and FIG. 21B. The frequency resource may comprise/indicate an RG (Resource Grid). The frequency domain resource for PDSCH transmissions may be scheduled by DCI format 1_0, 1_1 and/or 1_2 in the field Frequency-domain resource assignment.

The base station may configure time resource in a parameter (e.g., pdsch-TimeDomainAllocationList, pdsch-ConfigCommon). The base station may send the parameter of time resource (e.g., pdsch-TimeDomainAllocationList, pdsch-ConfigCommon, pdsch-Config) to the wireless device via SIB (e.g., SIB1) or dedicated RRC signalling (e.g., RRCReconfiguration).

The radio bearer resource may indicate resource for a radio bearer. The radio bearer resource may indicate/comprise time resource and/or frequency resource for the radio bearer. The radio bearer may comprise signaling radio bearer and/or data radio bearer. The signaling radio bearer may be a radio bearer for transmitting and/or receiving signaling for a wireless device. The signaling radio bearer of sidelink (service) may be a radio bearer for transmitting and/or receiving signaling between a first wireless device and a second wireless device (e.g., between UE1 and UE2, via a PC5 interface). The data radio bearer may be a radio bearer for transmitting and/or receiving user (application) data for a wireless device. The data radio bearer of sidelink (service) may be a radio bearer for transmitting and/or receiving user (application) data between a first wireless device and a second wireless device (e.g., between UE1 and UE2, via a PC5 interface).

The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine a plurality of configuration parameters for radio resources of the plurality of sidelink services, for example, based on the first RRC message 2603. The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine configuration parameter of one radio resource, where the one radio resource may be shared/used by two or more sidelink services, for example, based on the first RRC message 2603.

The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine that one radio resource is not able to be shared by two or more sidelink services, and/or the base station may determine that a first configuration parameter of a first radio resource (e.g., first time resource, first frequency resource, first radio bearer resource) for the V2X service, a second configuration parameter of second radio resource (e.g., second time resource, second frequency resource, second radio bearer resource) for the ranging service, a third configuration parameter of third radio resource (e.g., third time resource, third frequency resource, third radio bearer resource) for the sidelink relay service, and/or a fourth configuration parameter of fourth radio resource (e.g., fourth time resource, fourth frequency resource, fourth radio bearer resource) for uplink/downlink communication between the wireless device and the base station, wherein the first radio resource, the second radio resource, the third radio resource and/or the fourth radio resource can be operated/used concurrently/simultaneously, for example, based on the first RRC message 2603. The first radio resource, the second radio resource, the third radio resource and/or the fourth radio resource can be operated/used concurrently/simultaneously indicate the wireless device may use/operate the first radio resource, the second radio resource, the third radio resource and/or the fourth radio resource to send/receive plurality of data respectively at the same time. The base station may determine one radio resource is not able to be shared by two or more sidelink services based on at least one of: security policy, regularity policy, local configuration, and/or one radio resource is not enough to support two or more sidelink services simultaneously/concurrently.

The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine that one radio resource is able to be shared by two or more sidelink services, and/or the base station may determine that a first radio resource (e.g., time resource, frequency resource) for the V2X service and/or the ranging service, and/or a second radio resource for uplink/downlink communication between the wireless device and the base station, wherein the first radio resource and/or the second radio resource can be operated/used concurrently/simultaneously, for example, based on the first RRC message 2603. The base station may determine one radio resource is able to be shared by two or more sidelink services based on at least one of: security policy, regularity policy, local configuration, radio resource is enough to support two or more sidelink services simultaneously/concurrently, and/or one radio resource is able to be shared by two or more sidelink services because two or more sidelink services are not performed/operated simultaneously/concurrently.

For example, the second parameter/Ranging Capability and/or the seventh parameter/Ranging Accuracy may indicate that the wireless device may measure a long distance of a second wireless device and this may need a large bandwidth, such that one radio resource is not enough to support two or more sidelink services simultaneously/concurrently. For example, the second parameter/Ranging Capability, the fifth parameter/ V2X Capability and/or the sixth parameter/ ProSe Capability may indicate the wireless device may perform multiple sidelink services simultaneously, and one radio resource is not enough to support the ranging service, the V2X service and/or the ProSe service simultaneously.

The first parameter/ Concurrent Multiple Sidelinks Capability may indicate that the wireless device does not support the ranging service and the V2X service simultaneously/concurrently, the eighth parameter/Requested Sidelink Service Type may indicate the wireless device request a ranging service and/or a V2X service, based on above information, the base station may determine that one radio resource is able to be shared/used by the ranging service and the V2X service. For example, the first parameter/ Concurrent Multiple Sidelinks Capability may indicate that the wireless device supports the ranging service and the relay service simultaneously/concurrently, the second parameter/Ranging Capability may indicate the wireless device supports the ranging service with a scope of 10 meters which does not need a big bandwidth, the third parameter/Relay Capability may indicate that the wireless device supports sidelink relay service, based on above information, the base station may determine that one radio resource is able to be shared/used by the ranging service and the relay service.

The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine a configuration parameter for radio resource of sidelink services, and/or a ninth parameter (e.g., Shared Sidelink Radio Resource) indicating whether the radio resource is shared by plurality of sidelink services, for example, based on the first RRC message 2603. For example, the base station may determine a first radio resource for sidelink services, a second radio resource for the uplink/downlink communication between the wireless device and the base station, and/or a ninth parameter/ Shared Sidelink Radio Resource indicating the first radio resource may be shared by V2X service and ranging service, where the first radio resource and the second radio resource may be operated currently/simultaneously. configuration parameters for a plurality of radio resource.

The configuration parameters for a plurality of radio resource of the plurality of sidelink services may comprise a tenth parameter (e.g., sl-ConfigDedicatedNR) indicating dedicated configuration for the plurality of sidelink services over PC5. The configuration parameter for radio resource of sidelink services may comprise the tenth parameter/ sl-ConfigDedicatedNR.

The plurality of configuration parameters for radio resource of the plurality of sidelink services may comprise an eleventh parameter (e.g., sl-L2RemoteUEConfig) indicating configuration for layer 2 remote UE.

The tenth parameter/ sl-ConfigDedicatedNR may comprise one or more of the following parameters. For example, the tenth parameter/ sl-ConfigDedicatedNR may comprise a parameter (e.g., Sidelink Service Type) indicating what sidelink service (s) the tenth parameter/ sl-ConfigDedicatedNR may be applied to. The parameter/ Sidelink Service Type may indicate/comprise at least one of: a V2X service, a ranging service, a relay service, a public safety service, and/or service associated with sidelink. For example, the parameter/ Sidelink Service Type may indicate that the tenth parameter/ sl-ConfigDedicatedNR may be applied to the V2X service and/or the ranging service.

The tenth parameter/ sl-ConfigDedicatedNR may comprise a parameter (e.g., sl-PHY-MAC-RLC-Config) indicating configuration of physical layer, MAC layer and/or RLC layer applied to plurality of sidelink services and/or sidelink services indicated by the parameter/ Sidelink Service Type. The tenth parameter/ sl-ConfigDedicatedNR may comprise a parameter (e.g., sl-RadioBearerToReleaseList) indicating one or multiple sidelink radio bearer configurations to be removed. The parameter/ sl-RadioBearerToReleaseList may be applied to plurality of sidelink services and/or sidelink services indicated by the parameter/ Sidelink Service Type. The tenth parameter/ sl-ConfigDedicatedNR may comprise a parameter (e.g., sl-RadioBearerToAddModList) indicating one or multiple sidelink radio bearer configurations to be added and/or modified. The parameter/ sl-RadioBearerToAddModList may be applied to plurality of sidelink services and/or sidelink services indicated by the parameter/ Sidelink Service Type. The tenth parameter/ sl-ConfigDedicatedNR may comprise a parameter (e.g., sl-MeasConfigInfoToReleaseList) indicating Reference Signal Receive Power (RSRP) measurement configurations for unicast destinations (e.g., a second wireless device) to be removed. The parameter/ sl-MeasConfigInfoToReleaseList may be applied to plurality of sidelink services and/or sidelink services indicated by the parameter/ Sidelink Service Type. The tenth parameter/ sl-ConfigDedicatedNR may comprise a parameter (e.g., sl-MeasConfigInfoToAddModList) indicating RSRP measurement configurations for unicast destinations to be added/modified. The parameter/ sl-MeasConfigInfoToAddModList may be applied to plurality of sidelink services and/or sidelink services indicated by the parameter/ Sidelink Service Type.

The parameter/ sl-PHY-MAC-RLC-Config may comprise one or more of the following parameters. The parameter/ sl-PHY-MAC-RLC-Config may comprise a parameter (e.g., sl-ScheduledConfig) indicating configuration for the wireless device (e.g., UE) to transmit NR sidelink communication based on network scheduling. The parameter/ sl-PHY-MAC-RLC-Config may comprise a parameter (e.g., sl-UE-SelectedConfig) indicating the configuration used for the UE autonomous resource selection. The parameter/ sl-PHY-MAC-RLC-Config may comprise a parameter (e.g., sl-FreqInfoToReleaseList) indicating the NR sidelink communication configuration on some carrier frequency (ies) to be removed. The parameter/ sl-PHY-MAC-RLC-Config may comprise a parameter (e.g., sl-FreqInfoToAddModList) indicating the NR sidelink communication configuration on some carrier frequency (ies) to be added and/or modified. The parameter/ sl-PHY-MAC-RLC-Config may comprise a parameter (e.g., sl-RLC-BearerToReleaseList) indicating one or multiple sidelink RLC bearer configurations to be remove. The parameter/ sl-PHY-MAC-RLC-Config may comprise a parameter (e.g., sl-RLC-BearerToAddModList) indicating one or multiple sidelink RLC bearer configurations to be added/modified. The parameter/ sl-PHY-MAC-RLC-Config may comprise a parameter (e.g., sl-MaxNumConsecutiveDTX) indicating the maximum number of consecutive Hybrid Automatic Repeat Request (HARQ) Discontinuous transmission (DTX) before triggering sidelink radio link failure (RLF). The parameter/ sl-PHY-MAC-RLC-Config may comprise a parameter (e.g., sl-CSI-Acquisition) indicating whether Channel State Information (CSI) reporting is enabled in sidelink unicast. The parameter/ sl-PHY-MAC-RLC-Config may comprise a parameter (e.g., sl-CSI-SchedulingRequestId) indicating the scheduling request configuration applicable for sidelink CSI report Medium Access Control (MAC) Control Element (CE). The parameter/ sl-PHY-MAC-RLC-Config may comprise a parameter (e.g., sl-SSB-PriorityNR) indicating the priority of NR sidelink Synchronization Signal Block (SSB) transmission and reception. The parameter/ sl-PHY-MAC-RLC-Config may comprise a parameter (e.g., networkControlledSyncTx) indicating whether the UE may transmit synchronization information (e.g., become synchronization source).

The plurality of configuration parameters for radio resource of the plurality of sidelink services may comprise a System Information Blocks (SIB) message (e.g., SIB 12) for a plurality of sidelink services. This may be the same as was sent/broadcast in 2602 discussed above.

The SIB message may comprise one or more of the following parameters. For example, the SIB message may comprise a parameter (e.g., Sidelink Service Type) indicating what sidelink service (s) the SIB message may be applied to. The parameter/ Sidelink Service Type may indicate/comprise at least one of: a V2X service, a ranging service, a relay service, a public safety service, and/or a service associated with sidelink. For example, the parameter/ Sidelink Service Type may indicate that the SIB message may be applied to the V2X service and/or the ranging service.

The SIB message may comprise one or more of the following parameters. For example, the SIB message may comprise a parameter (e.g., Sidelink Service Type) indicating what sidelink service (s) the SIB message may be applied to. The parameter/ Sidelink Service Type may indicate/comprise at least one of: a V2X service, a ranging service, a relay service, a public safety service, and/or a type of sidelink service. For example, the parameter/ Sidelink Service Type may indicate that the SIB message may be applied to the V2X service and/or the ranging service.

The SIB message may comprise a parameter (e.g., sl-ConfigCommonNR) indicating common figuration for the plurality of sidelink services over PC5. The SIB message may comprise parameter (e.g., sl-DRX-ConfigCommon) indicating common figuration for DRX for the plurality of sidelink services over PC5. The SIB message may comprise a parameter (e.g., sl-DiscConfigCommon) indicating common figuration for discovery of the plurality of sidelink services over PC5. The SIB message may comprise a parameter (e.g., sl-L2U2N-Relay) indicating configuration for layer 2 UE to network relay for the plurality of sidelink services over PC5. The SIB message may comprise a parameter (e.g., sl-NonRelayDiscovery) indicating configuration for non-relay discovery for the plurality of sidelink services over PC5. The SIB message may comprise a parameter (e.g., sl-L3U2N-Relay) indicating configuration for layer 3 UE to network relay for the plurality of sidelink services over PC5.

The parameter/ sl-ConfigCommonNR may comprise one or more of the following parameters. For example, the parameter/ sl-ConfigCommonNR may comprise a parameter (e.g., sl-FreqInfoList) indicating frequency list for the plurality of sidelink services over PC5. For example, the parameter/ sl-ConfigCommonNR may comprise a parameter (e.g., sl-UE-SelectedConfig) indicating UE selected configuration for the plurality of sidelink services over PC5. For example, the parameter/ sl-ConfigCommonNR may comprise a parameter (e.g., sl-NR-AnchorCarrierFreqList) indicating anchor carrier frequency list for NR for the plurality of sidelink services over PC5. For example, the parameter/ sl-ConfigCommonNR may comprise a parameter (e.g., sl-EUTRA-AnchorCarrierFreqList) indicating anchor carrier frequency list for EUTRA for the plurality of sidelink services over PC5. For example, the parameter/ sl-ConfigCommonNR may comprise a parameter (e.g., sl-RadioBearerConfigList) indicating radio bearer configuration for the plurality of sidelink services over PC5. For example, the parameter/ sl-ConfigCommonNR may comprise a parameter (e.g., sl-RLC-BearerConfigList) indicating RLC bearer configuration for the plurality of sidelink services over PC5. For example, the parameter/ sl-ConfigCommonNR may comprise a parameter (e.g., sl-MeasConfigCommon) indicating measurement configuration for the plurality of sidelink services over PC5. For example, the parameter/ sl-ConfigCommonNR may comprise a parameter (e.g., sl-CSI-Acquisition) indicating channel state information (CSI) Acquisition for the plurality of sidelink services over PC5. For example, the parameter/ sl-ConfigCommonNR may comprise a parameter (e.g., sl-OffsetDFN) indicating offset of direct frame number (DFN) for the plurality of sidelink services over PC5. For example, the parameter/ sl-ConfigCommonNR may comprise a parameter (e.g., sl-MaxNumConsecutiveDTX) indicating maximum number of consecutive Discontinuous Transmission (DTX) for the plurality of sidelink services over PC5.

In action 2604, for example, based on the first message 2603, the base station may determine a plurality of configuration parameters for antennas (and/or antenna ports) of the plurality of sidelink services. The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine configuration parameters for antennas (and/or antenna ports) of the plurality of sidelink services, for example, based on the first RRC message 2603. In this specification, the terminology "antenna" may indicate antenna and/or antenna port.

The wireless device may support more than one antenna as shown in FIG. 22. The first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine that one antenna is not able to be shared by two or more sidelink services, and/or the base station may determine that a first configuration parameter of a first antenna for the V2X service, a second configuration parameter of second antenna for the ranging service, a third configuration parameter of third antenna for the sidelink relay service, and/or a fourth configuration parameter of fourth antenna for uplink/downlink communication between the wireless device and the base station, wherein the first antenna, the second antenna, the third antenna and/or the fourth antenna can be operated/used (e.g., transmitting/receiving signaling and user data) concurrently/simultaneously, for example, based on the first RRC message 2603.

In action 2604, based on the first message 2603, the base station may determine a plurality of ranging parameters for ranging services. The first parameter/ Concurrent Multiple Sidelinks Capability, the second parameter/Ranging Capability, the fourth parameter/ PC5 Capability, the fifth parameter/ V2X Capability, the sixth parameter/ ProSe Capability, the seventh parameter/Ranging Accuracy, and/or the eighth parameter/Requested Sidelink Service Type, the base station may determine ranging parameters for ranging services, for example, based on the first RRC message 2603. The second parameter/Ranging Capability may indicate that the wireless device supports ranging service, the fifth parameter/ V2X Capability may indicate that the wireless device supports V2X service, the first parameter/ Concurrent Multiple Sidelinks Capability may indicate that the wireless device supports both the ranging service and the V2X service simultaneously, the eighth parameter/Requested Sidelink Service Type may indicate that the wireless device requests both the ranging service and the V2X service, based on the above information, the base station may determine a plurality of ranging parameters for ranging services and/or parameters for sidelink (e.g.,V2X) services.

The ranging parameters may comprise one or more of the following parameters. The ranging parameters may comprise a parameter indicating whether parameters for sidelink (e.g.,V2X) services is used/shared for ranging service. One set of parameters used/shared by two or more sidelink services may simplify the procedure/overhead of a communication system. The ranging parameters may comprise a service identifier (e.g., V2X service identifier) indicating ranging service and/or V2X service over PC5. The ranging parameters may comprise a validity timer for the validity of the configuration parameters for ranging service and/or V2X service. The ranging parameters may comprise a list of PLMNs and radio access technologies (RATs) in which the UE is authorized to use ranging service and/or V2X service. The ranging parameters may comprise an indication of whether the UE is authorized to use ranging service and/or V2X service when the UE is not served by E-UTRA and/or not served by NR. The ranging parameters may comprise a list of RATs in which the UE is authorized to use ranging service and/or V2X service. The ranging parameters may comprise radio parameters of the RAT for ranging service and/or V2X service applicable per geographical area, and an indication of whether these radio parameters of the RAT are "operator managed" or "non-operator managed" when the UE is not served by E-UTRA and/or not served by NR. The ranging parameters may comprise a list of V2X service identifier to PC5 RAT(s) and Tx profiles mapping rules, where the V2X service identifier may indicate a ranging service and/or a V2X service.

The ranging parameters may comprise configuration parameters for ranging service and/or V2X service in NR-PC5. The configuration parameters for ranging service and/or V2X service in NR-PC5 may comprise a list of service identifier to service NR frequency mapping rules. Each mapping rule contains one or more service identifiers and the service NR frequencies with associated geographical areas. The service identifier may indicate ranging service and/or V2X service. The service NR frequency may indicate ranging service NR frequency and/or V2X service NR frequency. The ranging parameters may comprise a list of service identifier to destination layer-2 ID for broadcast mapping rules, wherein the service identifier may indicate ranging service identifier and/or V2X service identifier. The ranging parameters may comprise a list of service identifier to destination layer-2 ID for groupcast mapping rules, wherein the service identifier may indicate ranging service identifier and/or V2X service identifier. The ranging parameters may comprise a list of service identifier to default destination layer-2 ID for unicast initial signaling mapping rules, wherein the service identifier may indicate ranging service identifier and/or V2X service identifier. The ranging parameters may comprise a list of service identifier to PC5 QoS parameters mapping rules, wherein the service identifier may indicate ranging service identifier and/or V2X service identifier.

The ranging parameters may comprise an Access Stratum (AS) configuration, including a list of sidelink radio bearer (SLRB) mapping rules applicable when the UE is not served by E-UTRA and/or is not served by NR. Each SLRB mapping rule may comprise a PC5 QoS profile and an SLRB. The PC5 QoS profile may comprise a PC5 5G QoS identifier (PQI). The PC5 QoS profile may comprise a PC5 flow bit rates consisting of a guaranteed flow bit rate (GFBR) and/or a maximum flow bit rate (MFBR), for example, if the PQI of the PC5 QoS profile identifies a GBR QoS. The PC5 QoS profile may comprise a PC5 link aggregated bit rate consisting of a per link aggregate maximum bit rate (e.g., PC5 LINK-AMBR), for example, if the PQI of the PC5 QoS profile identifies a non-GBR QoS. The PC5 QoS profile may comprise a range/scope, indicating a limitation/scope/radius of groupcast communication over PC5. The PC5 QoS profile may comprise a priority level, an averaging window, and/or a maximum data burst volume. The priority level may indicate a priority in scheduling resources among QoS Flows. The lowest Priority Level value may correspond to the highest priority. For example, the priority level may be used to select for which PC5 service data the QoS requirements are prioritized such that a PC5 service data packet with Priority Level value N is prioritized over a PC5 service data packet with higher Priority Level values, e.g., N+1, N+2, etc. (lower number meaning higher priority). A GBR QoS Flow, for example, each GBR QoS Flow, may be associated with an averaging window. The averaging window may represent a duration over which the GFBR and MFBR being calculated (e.g., in the (R)AN, UPF, UE). A GBR QoS Flow, for example, each GBR QoS Flow with Delay-critical resource type may be associated with a Maximum Data Burst Volume (MDBV). The MDBV may indicate the largest amount of data that the 5G-AN is required to serve within a period of 5G-AN Packet Delay Budget (PDB). The PDB may indicate an upper bound for the time that a packet may be delayed between the UE and the N6 termination point at the UPF.

For example, in response to the first message 2603 and/or in response to one or more determinations made by the base station as actions 2604, the base station may send a second message 2605 to the wireless device(s). The second message 2605 may be a RRC message (e.g., RRCReconfiguraiton, SIB message). The second message 2605 may be MAC layer message (e.g., MAC Control Element (CE)). The second message 2605 may be physical layer message (e.g., a DCI message over a PDCCH).

The base station may transmit a second message 2605 to the wireless device, and the second message 2605 may comprise an RRC message indicating: a first frequency band is associated with the sidelink ranging service; and/or a second frequency band is associated with the V2X service, for example, based on the first RRC message 2603. The second message 2605 may comprise the ranging parameters. The second message 2605 may comprise a third frequency band associated with uplink/downlink communications between the wireless device and the base station. The first frequency band, the second frequency band and/or the third frequency band may be operated/used currently.

The second message 2605 may indicate/comprise a frequency band, where the frequency band is shared/used by two or more sidelink services. The second message may indicate/comprise a frequency band for sidelink services, and/or a ninth parameter/ Shared Sidelink Frequency Band indicating whether the frequency band is shared by plurality of sidelink services.

The second message 2605 may indicate/comprise configuration parameters for a plurality of radio resource, where the plurality of radio resource may be for the plurality of sidelink services and/or for the uplink/downlink communications between the wireless device and the base station. The second message 2605 may indicate/comprise configuration parameter of one radio resource, where the one radio resource may be shared/used by two or more sidelink services. The second message 2605 may indicate/comprise a configuration parameter for radio resource of sidelink services, and/or a ninth parameter/ Shared Sidelink Radio Resource indicating whether the radio resource is shared by plurality of sidelink services. The second message 2605 may comprise configuration parameters of one BWP, where the one BWP may be shared by two or more sidelink services. The second message 2605 may comprise configuration parameters of a plurality of BWPs, where the plurality of BWPs is for plurality of sidelink services. For example, the second message 2605 may comprise a first BWP for ranging service, a second BWP for V2X service, a third BWP for relay service, and/or a fourth BWP for the uplink/downlink communications between the wireless device and the base station. The base station may send one or more DCI messages to active the plurality of BWPs.

The second message 2605 may indicate/comprise the tenth parameter /sl-ConfigDedicatedNR indicating dedicated configuration for the plurality of sidelink services over PC5. The tenth parameter/ sl-ConfigDedicatedNR may comprise a parameter (e.g., Sidelink Service Type) indicating what sidelink service (s) the tenth parameter/ sl-ConfigDedicatedNR may be applied to. The tenth parameter/ sl-ConfigDedicatedNR may comprise/indicate the parameter /sl-FreqInfoToAddModList indicating the NR sidelink communication configuration on some carrier frequency (ies) to be added and/or modified. The tenth parameter/ sl-ConfigDedicatedNR may comprise/indicate the parameter / sl-RadioBearerToAddModList indicating one or multiple sidelink radio bearer configurations to be added and/or modified.

The second message 2605 may indicate/comprise the plurality of configuration parameters for antennas (and/or antenna ports) of the plurality of sidelink services, and/or configuration parameters for antennas of uplink/downlink communications between the wireless device and the base station.

The second message 2605 may indicate/comprise a plurality of ranging parameters for ranging services. The ranging parameters may comprise a parameter indicating whether parameters for sidelink (e.g., V2X) services is used/shared for ranging service. The ranging parameters may comprise a service identifier (e.g., V2X service identifier) indicating ranging service and/or V2X service over PC5. The ranging parameters may comprise configuration parameters for ranging service and/or V2X service in NR-PC5.

In response to the message received, the wireless device (e.g., UE1, UE2, or both) may take one or more actions 2606. The wireless device may apply the frequency band(s) to the plurality of sidelink services and/or the uplink/downlink communications between the wireless device and the base station, for example, based on the second message. Applying the frequency band(s) to the plurality of sidelink services may indicate that the wireless device uses the frequency band(s) to communicate with one or more second wireless devices for the plurality of sidelink services. The wireless device may apply the first frequency band to the sidelink ranging service, and/or the second frequency band to the V2X service. For example, the wireless device may use the first frequency band to establish a first PC5 RRC connection with a second wireless device for sidelink ranging service. The wireless device may use the second frequency band to establish a second PC5 RRC connection with a third wireless device for V2X service.

The wireless device may apply one frequency band to two or more sidelink services. In the case of ranging service and V2X service not being performed simultaneously, the wireless device may apply the frequency band to the ranging service at a first time, and apply the frequency band to the V2X service at a second time. In the case of ranging service and V2X service being performed simultaneously, the wireless device may apply first part of the frequency band to ranging service, and second part of frequency band to V2X service. For example, the wireless device may receive 100 megahertz (MHz) frequency band for sidelink services from the base station, the wireless device may use a first 30 MHz for the ranging service, and a second 70MHz for the V2X service. The wireless device may apply one frequency band to two or more sidelink services, for example, based on the ninth parameter/Shared Sidelink Frequency Band.

The wireless device may apply the plurality of radio resource to the plurality of sidelink services and/or the uplink/downlink communications with the base station, for example, based on the second message 2605 (e.g., configuration parameters for a plurality of radio resource). For example, the wireless device may apply a first radio resource (e.g., first BWP) to ranging service with a second wireless device via a first PC5 RRC connection, a second radio resource (e.g., second BWP) to V2X service with a third wireless device via a second PC5 RRC connection, a third radio resource (e.g., third BWP) to relay service with a fourth wireless device via a third PC5 RRC connection, and/or a fourth radio resource (e.g., fourth BWP) to the uplink/downlink communications with the base station via a RRC connection.

The wireless device may apply one radio resource to plurality of sidelink services, for example, based on the second message 2605 (e.g., the ninth parameter/ Shared Sidelink Radio Resource). For example, the wireless device may apply a BWP for ranging service with a second wireless device via a first PC5 RRC connection, and/or the wireless device may apply the BWP for V2X service with a third wireless via a second PC5 RRC connection.

The wireless device may apply plurality of radio resource to plurality of radio bearers for plurality of sidelink services, for example, based on the second message 2605 (e.g., sl-RadioBearerToAddModList). For example, based on the configuration parameter of radio resource, the wireless device may configure a first radio bearer to ranging service with a second wireless device via a first PC5 RRC connection, a second radio bearer to V2X service with a third wireless device via a second PC5 RRC connection, and/or a third radio bearer to the uplink/downlink communications with the base station via a RRC connection.

The wireless device may transmit/receive plurality of data via the antennas for the plurality of sidelink services and/or the uplink/downlink communications with the base station, for example, based on the second message 2605 (e.g., plurality of configuration parameters for antennas). For example, the wireless device may transmit/receive plurality of data for ranging service via a first antenna and/or a first antenna port, the wireless transmit/receive plurality of data for V2X service via a second antenna and/or a second antenna port, and/or the wireless device may transmit/receive plurality of data to/from the base station via third antenna and/or third antenna port.

The wireless device may apply the parameters of sidelink services to ranging service, for example, based on the second message 2605. For example, the second message 2605 may indicate that the parameters for sidelink (e.g., V2X) services is used/shared for ranging service, the wireless device may apply the parameters to the ranging service.

In an action, after establishing PC5 RRC connection(s), the wireless device may perform/apply multiple sidelink services simultaneously. For example, the wireless device may perform/apply ranging service with a second wireless device via a first PC5 RRC connection, the wireless device may perform/apply V2X service with a third wireless device via a second PC5 RRC connection, and/or the wireless device may apply other services (e.g., eMBB) with the base station via a third RRC connection.

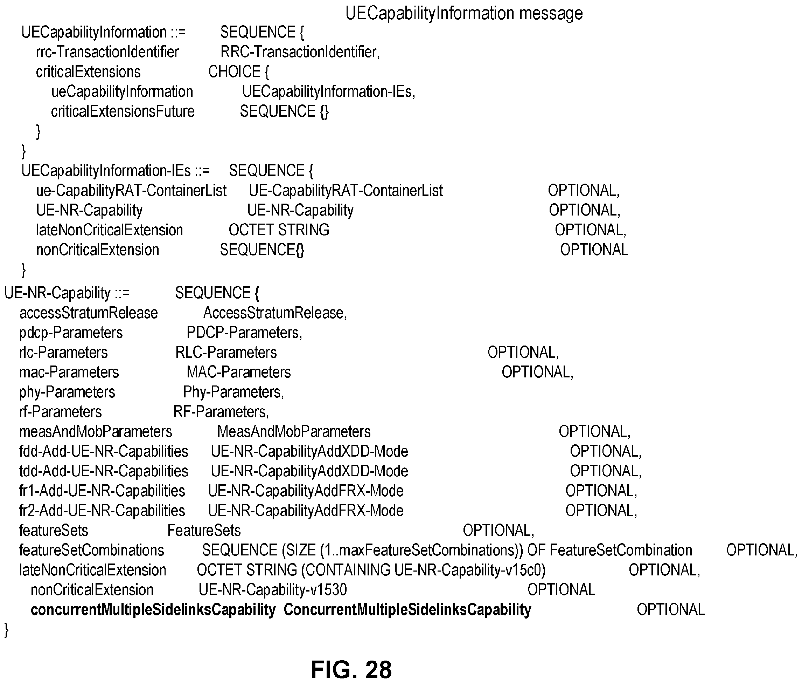

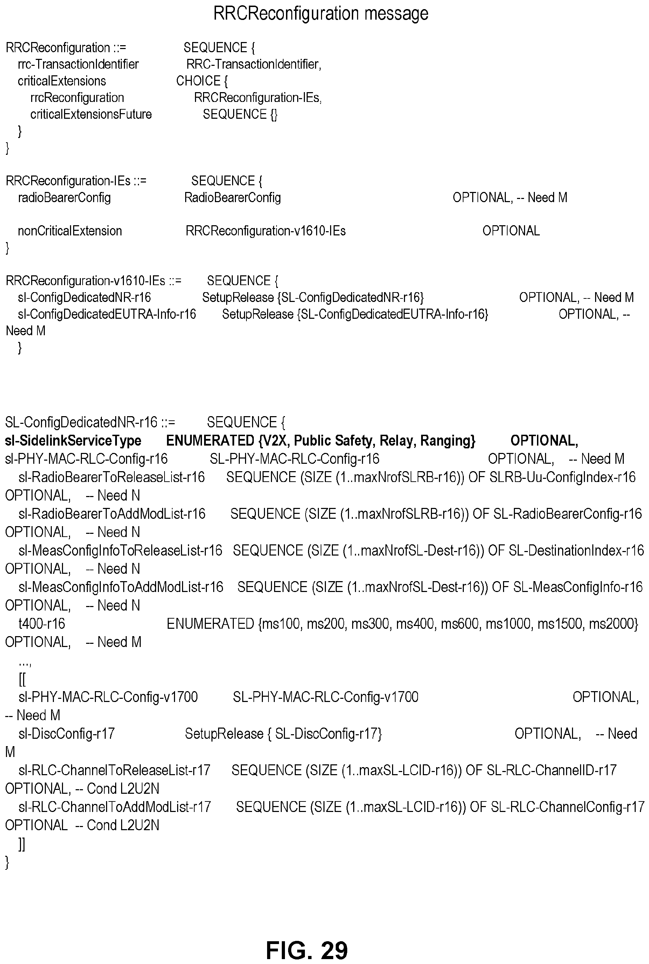

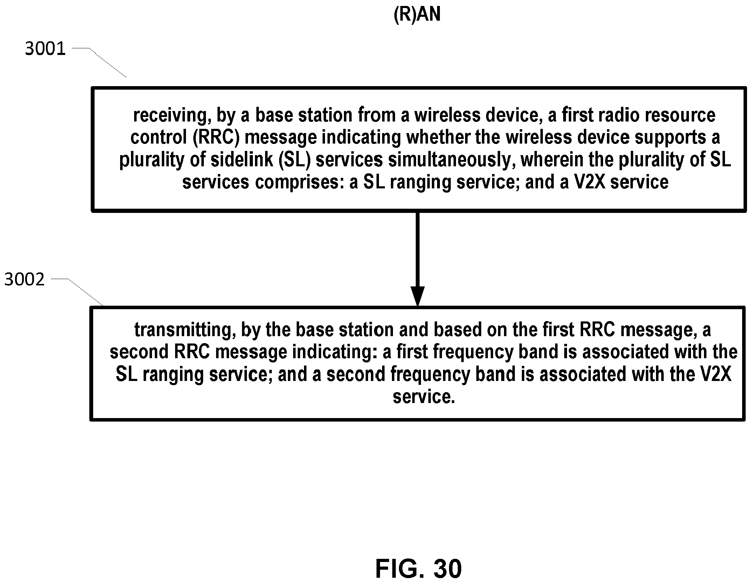

FIG. 28 is an example diagram depicting a UECapabilityInformation message as per an aspect of an embodiment of the present disclosure. FIG. 29 is an example diagram depicting a RRCReconfiguration message as per an aspect of an embodiment of the present disclosure. FIG. 30 is an example diagram depicting the procedures of a base station as per an aspect of an embodiment of the present disclosure. FIG. 31 is an example diagram depicting the procedures of a wireless device as per an aspect of an embodiment of the present disclosure. The steps shown in Fig. 30 and Fig. 31 correspond to the discussion above regarding Fig. 26. In Fig. 30, step 3001 may correspond to the receipt of first message 2603, and step 3002 may correspond to the transmission of the second message 2605. In Fig. 31, step 3101 may correspond to the sending of the first message 2603, and step 3102 may correspond to the receipt of the second message 2605.

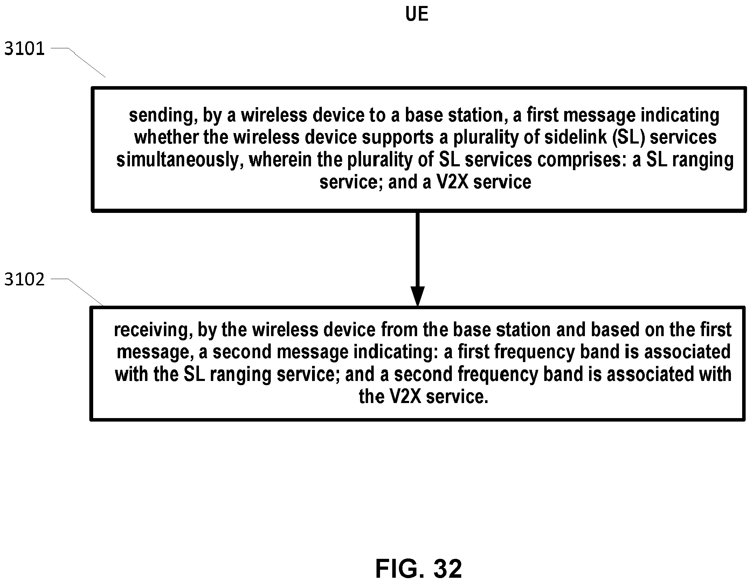

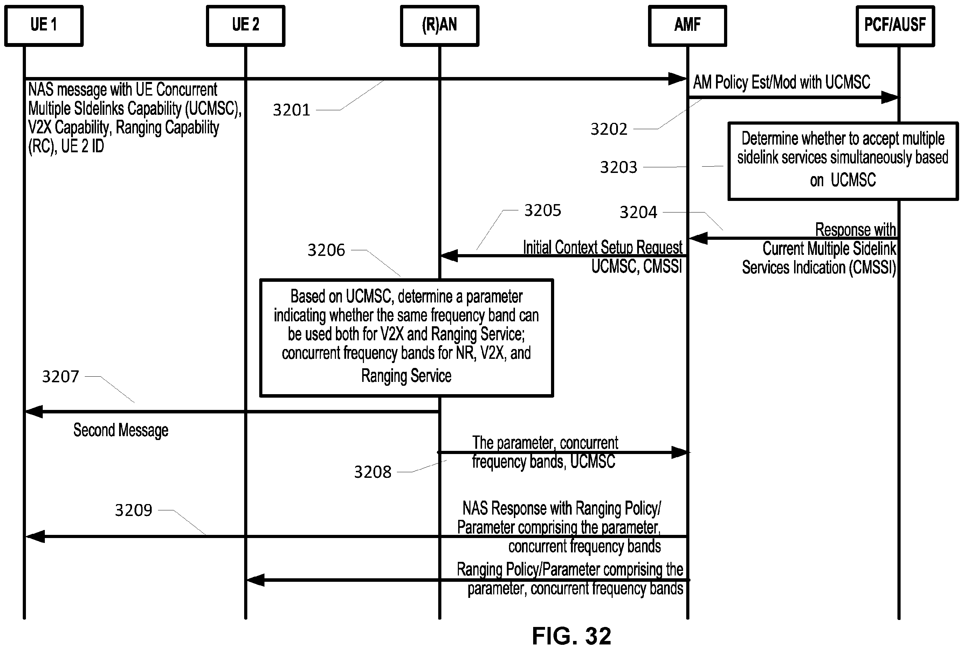

FIG. 32 is an example call flow as per an aspect of an embodiment of the present disclosure. A wireless device (e.g., UE1) may send to a network function, a first message 3201 indicating concurrent multiple sidelinks capability of the wireless device, wherein the concurrent multiple sidelinks capability indicates the wireless device supports multiple unicast sidelink services concurrently. The network function may comprise at least one of: an access and mobility management function (AMF); a policy control function (PCF); an authentication server function (AUSF); a mobility management entity (MME); and/or a policy and changing rules function (PCRF).

The first message 3201 may indicate whether the wireless device supports a plurality of unicast sidelinks simultaneously/concurrently, wherein the plurality of unicast sidelinks may be associated with plurality of sidelink services respectively. The first message 3201 may comprise a first parameter (e.g., Concurrent Multiple Sidelinks Capability) indicating whether the wireless device supports a plurality of sidelink (SL) services simultaneously/concurrently. The definition/content of the first parameter/ Concurrent Multiple Sidelinks Capability may be similar to (and/or the same as) the definition/content of the first parameter/ Concurrent Multiple Sidelinks Capability as described in FIG. 26. For brevity, further description will not be repeated here.

The first message 3201 may comprise a plurality of capabilities of the wireless device, wherein the plurality of capabilities of the wireless device may indicate whether the wireless device supports a plurality of sidelink services simultaneously/concurrently. The first message 3201 may comprise a second parameter (e.g., Ranging Capability) indicating whether the wireless device supports ranging service. The definition/content of the second parameter/Ranging Capability may be similar to (and/or the same as) the definition/content of the second parameter/Ranging Capability as described in FIG. 26.

The first message 3201 may comprise a third parameter (e.g., Relay Capability), where the third parameter/Relay Capability may indicate whether the wireless device supports sidelink relay (e.g., UE-to-Network Relay). The definition/content of the third parameter/Relay Capability may be similar to (and/or the same as) the definition/content of the third parameter/Relay Capability as described in FIG. 26.

The first message 3201 may comprise a fourth parameter (e.g., PC5 Capability) indicating whether the wireless device is able to perform ranging service over PC5 reference point. The definition/content of the fourth parameter/ PC5 Capability may be similar to (and/or the same as) the definition/content of the fourth parameter/ PC5 Capability as described in FIG. 26.

The first message 3201 may comprise a fifth parameter (e.g., V2X Capability) indicating a V2X capability of the wireless device. The fifth parameter/ V2X Capability may indicate that the wireless device supports V2X communication/service with a second wireless device (e.g., UE2). The V2X may comprise EPS V2X and/or 5GS V2X.

The first message 3201 may comprise a sixth parameter (e.g., ProSe Capability) indicating a ProSe Capability of the first wireless device. The definition/content of the sixth parameter/ ProSe Capability may be similar to (and/or the same as) the definition/content of the sixth parameter/ ProSe Capability as described in FIG. 26.

The second parameter/Ranging Capability, the third parameter/Relay Capability, the fourth parameter/ PC5 Capability, the fifth parameter/ V2X Capability, and/or the sixth parameter/ ProSe Capability may indicate whether the wireless device supports a plurality of sidelink services (e.g., sidelink ranging service, sidelink relay service, V2X service, ProSe service) simultaneously/concurrently.

The first message 3201 may comprise a seventh parameter (e.g., Ranging Accuracy) indicating an accuracy of the ranging service supported by the wireless device. The definition/content of the seventh parameter/Ranging Accuracy may be similar to (and/or the same as) the definition/content of the seventh parameter/Ranging Accuracy as described in FIG. 26.

The first message 3201 may indicate at least one requested sidelink service type for the wireless device. The first message may comprise an eighth parameter (e.g., Requested Sidelink Service Type) indicating at least one requested sidelink service. The definition/content of eighth parameter/Requested Sidelink Service Type may be similar to (and/or the same as) the definition/content of eighth parameter/Requested Sidelink Service Type as described in FIG. 26.

The first message 3201 may comprise a parameter/ Ranging/SL Positioning Policy Provisioning Request, the parameter/ Ranging/SL Positioning Policy Provisioning Request may indicate the wireless device requesting policy authorization for the ranging services from the network.

The first message 3201 may comprise an identity of the first wireless device. The definition/content of the identity of the first wireless device may be similar to (and/or the same as) the definition/content of the identity of the first wireless device as described in FIG. 26. The first message 3201 may comprise one or more identities of one or more second wireless device. The definition/content of the one or more identities of one or more second wireless device may be similar to (and/or the same as) the definition/content of the one or more identities of one or more second wireless device as described in FIG. 26.

The first message 3201 may be a NAS message, wherein the NAS message may comprise a registration request message. The first wireless device may send a registration request message to an AMF via the base station. The registration request message may comprise at least one of: the first parameter/ Concurrent Multiple Sidelinks Capability, the second parameter/Ranging Capability, the third parameter/Relay Capability, the fourth parameter/ PC5 Capability, the fifth parameter/ V2X Capability, the sixth parameter/ ProSe Capability, the seventh parameter/Ranging Accuracy, the eighth parameter/Requested Sidelink Service Type, and/or the parameter/ Ranging/SL Positioning Policy Provisioning Request.

The first message 3201 may comprise a RRC message (e.g., RRCSetupComplete) and/or a NAS message (e.g., registration request). For example, the wireless device may send a RRCSetupComplete message to a base station (e.g., (R)AN as shown in FIG. 32), where the RRCSetupComplete message may comprise a registration request message. The (R)AN may forward the registration request message to the AMF. The registration request message may comprise at least one of: registration type, the identity of the first wireless device/UE identity (e.g., SUCI, SUPI and/or 5G-GUTI), last visited TAI (if available), security parameters, requested NSSAI, mapping of requested NSSAI, UE 5GC capability, PDU session status, PDU session(s) to be re-activated, Follow on request, MICO mode preference, and/or the like.

The network function (e.g., AMF) may take one or more actions, for example, based on the message being received. In an action, for example, based on the one or more parameters (e.g., the first parameter/ Concurrent Multiple Sidelinks Capability, the second parameter/Ranging Capability, the fifth parameter/ V2X Capability, the sixth parameter/ ProSe Capability, the seventh parameter/Ranging Accuracy, the eighth parameter/Requested Sidelink Service Type, and/or the parameter/ Ranging/SL Positioning Policy Provisioning Request) received from the wireless device, the network function (e.g., AMF) may determine/select a network node (e.g., PCF/AUSF) for authorization for the wireless device for the plurality of sidelink services.

In an action, the network function (e.g., AMF) may send a message 3202 (e.g., Authorization Request, AM Policy Establishment/Modification Request) to the network node (e.g., PCF/AUSF) requesting to authorize the wireless device to perform the plurality of sidelink services simultaneously.

The Authorization Request message and/or the AM Policy Establishment/Modification Request message may comprise one or more parameters of the first message 3201. For example, the Authorization Request message and/or the AM Policy Establishment/Modification Request message may comprise at least one of: the first parameter/ Concurrent Multiple Sidelinks Capability, the second parameter/Ranging Capability, the fifth parameter/ V2X Capability, the sixth parameter/ ProSe Capability, the seventh parameter/Ranging Accuracy, the eighth parameter/Requested Sidelink Service Type, and/or the parameter/ Ranging/SL Positioning Policy Provisioning Request.

For example, in response to receiving the message 3202, the PCF/AUSF may take one or more actions 3203. In an action, for example, based on the one or more parameters of the message, the network node may determine whether to accept the request of the wireless device to perform the plurality of sidelink services simultaneously. For example, based on the local configuration/policy, the first parameter/ Concurrent Multiple Sidelinks Capability, the second parameter/Ranging Capability, the fifth parameter/ V2X Capability, the sixth parameter/ ProSe Capability, the seventh parameter/Ranging Accuracy, and/or the eighth parameter/Requested Sidelink Service Type, the PCF/AUSF may determine not to accept the request of the wireless device to perform the plurality of sidelink services simultaneously. The PCF/AUSF may determine to accept the request of the wireless device to perform the plurality of sidelink services simultaneously. The PCF/AUSF may determine a parameter (e.g., Current Multiple Sidelink Services Indication) indicating accepting the request of the wireless device to perform the plurality of sidelink services simultaneously. The parameter/ Current Multiple Sidelink Services Indication may indicate the wireless device is allowed to perform the plurality of sidelink services simultaneously.

In an action 3203, the PCF/AUSF may send a response message 3204 (Authorization Response, AM Policy Establishment/Modification Response) to the network function (e.g., AMF) indicating whether to accept the request of the wireless device to perform the plurality of sidelink services simultaneously. For example, the Authorization Response and/or the AM Policy Establishment/Modification Response may comprise the parameter/ Current Multiple Sidelink Services Indication indicating whether to accept the request of the wireless device to perform the plurality of sidelink services simultaneously.

In response to receiving the response message 3204, the AMF may take one or more actions. In an action, based on the Authorization Response and/or the AM Policy Establishment/Modification Response, the AMF may send a message 3205 to the base station. For example, based on the Authorization Response and/or the AM Policy Establishment/Modification Response and/or the parameter/ Current Multiple Sidelink Services Indication indicating to accept the request of the wireless device to perform the plurality of sidelink services simultaneously, the AMF may send a message 3205 (e.g., Initial Context Setup Request) to the base station to request radio resource allocation for the plurality of sidelink services. The Initial Context Setup Request message may comprise the parameter/ Current Multiple Sidelink Services Indication. The Initial Context Setup Request message may comprise plurality of indications of authorization for plurality of sidelink services. For example, the Initial Context Setup Request message may comprise a first indication indicating authorization of ranging service, a second indication indicating authorization of V2X service, and/or a third indication indicating authorization of relay service. The Initial Context Setup Request message may comprise one or more parameters of the first message. For example, the Initial Context Setup Request message may comprise at least one of: the first parameter/ Concurrent Multiple Sidelinks Capability, the second parameter/Ranging Capability, the fifth parameter/ V2X Capability, the sixth parameter/ ProSe Capability, the seventh parameter/Ranging Accuracy, the eighth parameter/Requested Sidelink Service Type, and/or the parameter/ Ranging/SL Positioning Policy Provisioning Request.

In response to receiving the message 3205, the base station may take one or more actions 3206. In an action, based on the Initial Context Setup Request message, the base station may determine a plurality of frequency bands for the plurality of sidelink services. The base station may determine one frequency band being shared by two or more sidelink services, for example, based on one or more parameters of the Initial Context Setup Request message.

The parameter/ Current Multiple Sidelink Services Indication, the plurality of indications of authorization for plurality of sidelink services, the first parameter/ Concurrent Multiple Sidelinks Capability, the second parameter/Ranging Capability, the fifth parameter/ V2X Capability, the sixth parameter/ ProSe Capability, the seventh parameter/Ranging Accuracy, the eighth parameter/Requested Sidelink Service Type, and/or the parameter/ Ranging/SL Positioning Policy Provisioning Request, the base station may determine a plurality of frequency bands for the plurality of sidelink services, and/or the base station may determine at least one frequency band for the plurality of sidelink services, for example, based on the Initial Context Setup Request message. The base station may determine a plurality of frequency bands for the plurality of sidelink services, and/or a frequency band for uplink/downlink communications between the wireless device and the base station, for example, based on above information.

The determining procedure of the base station may be similar to the determining procedure of the base station as described in FIG. 26. For brevity, further description will not be repeated here. In addition to the determining procedure of the base station as described in FIG. 26, the base station may also determine a plurality of frequency bands for the plurality of sidelink services and/or at least one frequency band for the plurality of sidelink services based on the parameter/ Current Multiple Sidelink Services Indication and/or the plurality of indications of authorization for plurality of sidelink services. For example, the plurality of indications of authorization for plurality of sidelink services may indicate the network authorizes ranging service to the wireless device, based on the plurality of indications of authorization, the base station may determine frequency band to the ranging service. For example, the plurality of indications of authorization for plurality of sidelink services may indicate the network authorizes ranging service and V2X service to the wireless device, the parameter/ Current Multiple Sidelink Services Indication may indicate the network accepts the request of the wireless device to perform plurality of sidelink services simultaneously, based on the plurality of indications of authorizations and/or the parameter/ Current Multiple Sidelink Services Indication, the base station may determine to allocate a plurality of frequency bands for the plurality of sidelink services, and/or the base station may determine at least one frequency band for the plurality of sidelink services. The base station may determine a frequency band for sidelink services, and/or a ninth parameter (e.g., Shared Sidelink Frequency Band) indicating whether the frequency band is shared by plurality of sidelink services as described in FIG. 26.

The parameter/ Current Multiple Sidelink Services Indication, the plurality of indications of authorization for plurality of sidelink services, the first parameter/ Concurrent Multiple Sidelinks Capability, the second parameter/Ranging Capability, the fifth parameter/ V2X Capability, the sixth parameter/ ProSe Capability, the seventh parameter/Ranging Accuracy, the eighth parameter/Requested Sidelink Service Type, and/or the parameter/ Ranging/SL Positioning Policy Provisioning Request, the base station may determine configuration parameters for a plurality of radio resource, where the plurality of radio resource may be for the plurality of sidelink services. In an example, based on above information, the base station may determine a plurality of radio resource for the plurality of sidelink services, and/or a radio resource for uplink/downlink communications between the wireless device and the base station, for example, based on the Initial Context Setup Request message.

The base station may determine one radio resource, where the one radio resource may be shared/used by two or more sidelink services, for example, based on the Initial Context Setup Request message and/or one or more parameters of the Initial Context Setup Request message. The determining procedure of the base station may be similar to the determining procedure of the base station as described in FIG. 26. For brevity, further description will not be repeated here. In addition to the determining procedure of the base station as described in FIG. 26, the base station may also determine a plurality of radio resource for the plurality of sidelink services and/or at least one radio resource for the plurality of sidelink services based on the parameter/ Current Multiple Sidelink Services Indication and/or the plurality of indications of authorization for plurality of sidelink services. For example, the plurality of indications of authorization for plurality of sidelink services may indicate the network authorizes ranging service to the wireless device, based on the plurality of indications of authorization, the base station may determine radio resource to the ranging service. For example, the plurality of indications of authorization for plurality of sidelink services may indicate the network authorizes ranging service and V2X service to the wireless device, the parameter/ Current Multiple Sidelink Services Indication may indicate the network accepts the request of the wireless device to perform plurality of sidelink services simultaneously, based on the plurality of indications of authorizations and/or the parameter/ Current Multiple Sidelink Services Indication, the base station may determine to allocate a plurality of radio resource for the plurality of sidelink services, and/or the base station may determine at least one radio resource for the plurality of sidelink services. The base station may determine a radio resource for sidelink services, and/or a ninth parameter (e.g., Shared Sidelink Radio Resource) indicating whether the Radio Resource is shared by plurality of sidelink services as described in FIG. 26. The definition/content of the configuration parameters for a plurality of radio resource for the plurality of sidelink services may be similar to (and/or the same as) the definition/content of the configuration parameters for a plurality of radio resource for the plurality of sidelink services as described in FIG. 26.

The parameter/ Current Multiple Sidelink Services Indication, the plurality of indications of authorization for plurality of sidelink services, the first parameter/ Concurrent Multiple Sidelinks Capability, the second parameter/Ranging Capability, the fifth parameter/ V2X Capability, the sixth parameter/ ProSe Capability, the seventh parameter/Ranging Accuracy, the eighth parameter/Requested Sidelink Service Type, and/or the parameter/ Ranging/SL Positioning Policy Provisioning Request, the base station may determine a plurality of configuration parameters for antennas (and/or antenna ports) of the plurality of sidelink services, for example, based on the Initial Context Setup Request message. In addition to the determining procedure of the base station as described in FIG. 26, the base station may also determine a plurality of configuration parameters for antennas (and/or antenna ports) for the plurality of sidelink services based on the parameter/ Current Multiple Sidelink Services Indication and/or the plurality of indications of authorization for plurality of sidelink services. For example, the plurality of indications of authorization for plurality of sidelink services may indicate the network authorizes ranging service to the wireless device, based on the plurality of indications of authorization, the base station may determine configuration parameters for antennas to the ranging service. For example, the plurality of indications of authorization for plurality of sidelink services may indicate the network authorizes ranging service and V2X service to the wireless device, the parameter/ Current Multiple Sidelink Services Indication may indicate the network accepts the request of the wireless device to perform plurality of sidelink services simultaneously, based on the plurality of indications of authorizations and/or the parameter/ Current Multiple Sidelink Services Indication, the base station may determine to allocate a plurality of antennas for the plurality of sidelink services, and/or the base station may determine at least one antenna for the plurality of sidelink services. The base station may determine an antenna for sidelink services, and/or a ninth parameter (e.g., Shared Sidelink Radio Resource) indicating whether the antenna is shared by the plurality of sidelink services.

The parameter/ Current Multiple Sidelink Services Indication, the plurality of indications of authorization for plurality of sidelink services, the first parameter/ Concurrent Multiple Sidelinks Capability, the second parameter/Ranging Capability, the fifth parameter/ V2X Capability, the sixth parameter/ ProSe Capability, the seventh parameter/Ranging Accuracy, the eighth parameter/Requested Sidelink Service Type, and/or the parameter/ Ranging/SL Positioning Policy Provisioning Request, the base station may determine a plurality of ranging parameters for ranging services. In an example, the second parameter/Ranging Capability may indicate that the wireless device supports ranging service, the fifth parameter/ V2X Capability may indicate that the wireless device supports V2X service, the first parameter/ Concurrent Multiple Sidelinks Capability may indicate that the wireless device supports both the ranging service and the V2X service simultaneously, the eighth parameter/Requested Sidelink Service Type may indicate that the wireless device requests both the ranging service and the V2X service, the parameter/ Current Multiple Sidelink Services Indication may indicate the network authorize the request of the wireless to perform plurality of sidelink services simultaneously, and/or the plurality of indications of authorization for plurality of sidelink services may indicate the network authorizes ranging service and V2X service to the wireless device, based on above information, the base station may determine a plurality of ranging parameters for ranging services and/or parameters for sidelink (e.g.,V2X) services, for example, based on the Initial Context Setup Request message. The definition/content of the ranging parameters may be similar to (and/or the same as) the definition/content of the ranging parameters as described in FIG. 26.

The network may comprise two or more network functions that are linked in order to exchange signaling/ user data, and/or to provide communication services. The network may comprise at least one of: a 4G network, a 5G network, a 6G network, and/or the like. The network may comprise at least one of: a base station, an AMF, a SMF, a UPF, a PCF, an AUSF, an OAM, an AF, and/or the like.

The base station may send a second message 3207 to the wireless device. The second message 3207 may be a RRC message (e.g., RRCReconfiguraiton, SIB message). The second message 3207 may be MAC layer message (e.g., MAC Control Element (CE)). The second message 3207 may be physical layer message (e.g., a DCI message over a PDCCH). The definition/content of the second message 3207 may be similar to (and/or the same as) the second message 2605 as described in FIG. 26. For example, the second message 3207 may comprise at least one of: the plurality of frequency bands for the plurality of sidelink services and/or the frequency band for the uplink/downlink communications between the wireless device and the base station, the one frequency band and the ninth parameter/ Shared Sidelink Frequency Band indicating the one frequency band being shared by the plurality of sidelink services, the configuration parameters for a plurality of radio resource for plurality of sidelink services and/or a radio resource for the uplink/downlink communications between the wireless device and the base station, the one radio resource and the ninth parameter/ Shared Sidelink Radio Resource indicating the one radio resource being shared by the plurality of sidelink services, the configuration parameters for antennas (and/or antenna ports) of the plurality of sidelink services and/or configuration parameters of antennas for the uplink/downlink communications between the wireless device and the base station, and/or the ranging parameters for the plurality of sidelink services.

The base station may send a response message 3208 (e.g., Initial Context Setup Response) to the AMF. The Initial Context Setup Response message may indicate whether the base station accept the request to allocate resource for the plurality of sidelink services. The Initial Context Setup Response message may comprise at least one of: the plurality of frequency bands for the plurality of sidelink services and/or the frequency band for the uplink/downlink communications between the wireless device and the base station, the one frequency band and the ninth parameter/ Shared Sidelink Frequency Band indicating the one frequency band being shared by the plurality of sidelink services, the configuration parameters for a plurality of radio resource for plurality of sidelink services and/or a radio resource for the uplink/downlink communications between the wireless device and the base station, the one radio resource and the ninth parameter/ Shared Sidelink Radio Resource indicating the one radio resource being shared by the plurality of sidelink services, the configuration parameters for antennas (and/or antenna ports) of the plurality of sidelink services and/or configuration parameters of antennas for the uplink/downlink communications between the wireless device and the base station, and/or the ranging parameters for the plurality of sidelink services.

For example, in response to the first message 3201 received from the wireless device, and/or in response to the message 3208 received from the base station, the AMF may send a third message 3209 to the wireless device. The AMF may send the third message 3209 to the wireless device via the base station. The third message 3209 may be a response message to the first message 3201. The third message 3209 may be a NAS response (e.g., registration response) message. The registration response message comprises a registration reject message indicating rejecting the registration request. The registration response message may comprise a registration accept message indicating accepting the registration request. The third message/registration response message may indicate accepting the request of the wireless device to perform the plurality of sidelink services simultaneously.

The third message 3209 may comprise at least one of: the plurality of frequency bands for the plurality of sidelink services and/or the frequency band for the uplink/downlink communications between the wireless device and the base station, the one frequency band and the ninth parameter/ Shared Sidelink Frequency Band indicating the one frequency band being shared by the plurality of sidelink services, the configuration parameters for a plurality of radio resource for plurality of sidelink services and/or a radio resource for the uplink/downlink communications between the wireless device and the base station, the one radio resource and the ninth parameter/ Shared Sidelink Radio Resource indicating the one radio resource being shared by the plurality of sidelink services, the configuration parameters for antennas (and/or antenna ports) of the plurality of sidelink services and/or configuration parameters of antennas for the uplink/downlink communications between the wireless device and the base station, and/or the ranging parameters for the plurality of sidelink services. The third message may comprise at least one of: the parameter/ Current Multiple Sidelink Services Indication, and/or the plurality of indications of authorization for plurality of sidelink services.

The registration response/ Registration Accept message may comprise at least one of: 5G-GUTI, Registration Area, [Mobility restrictions], [PDU Session status], [Allowed NSSAI], [Mapping Of Allowed NSSAI], [Configured NSSAI for the Serving PLMN], [Mapping Of Configured NSSAI], [NSSRG Information], [rejected S-NSSAIs], [Pending NSSAI], [Mapping Of Pending NSSAI], [Periodic Registration Update timer], [Active Time], [Strictly Periodic Registration Timer Indication], [LADN Information], [accepted MICO mode], and/or the like.

In response to the message 3209 received from the AMF and/or in response to the message 3207 received from the base station, the wireless device may take one or more actions. The actions taken by the wireless device may be similar to (and/or the same as) the actions taken by the wireless device when the wireless device received the second message 2605 as described in FIG. 26. For example, as described in Fig. 32, based on the second message 3207 and/or the third message 3209, the wireless device may apply the frequency band(s) to the plurality of sidelink services and/or the uplink/downlink communications between the wireless device and the base station.

The wireless device may apply the plurality of radio resource to the plurality of sidelink services and/or the uplink/downlink communications between the wireless device and the base station, for example, based on the second message 3207 and/or the third message 3209. The wireless device may transmit/receive plurality of data via the antennas for the plurality of sidelink services and/or the uplink/downlink communications between the wireless device and the base station, for example, based on the second message 3207 and/or the third message 3209. The wireless device may apply the parameters of sidelink services to ranging service, for example, based on the second message 3207 and/or the third message 3209.

In an action, after establishing PC5 RRC connection(s), the wireless device may perform/apply multiple sidelink services simultaneously. The AMF may receive/send messages (e.g., the first message 3201, the third message 3209) with one or more second wireless devices (e.g., UE2) in the same way as the wireless device UE1. The one or more second wireless devices (e.g., UE2) may take one or more similar actions as the wireless device UE1.

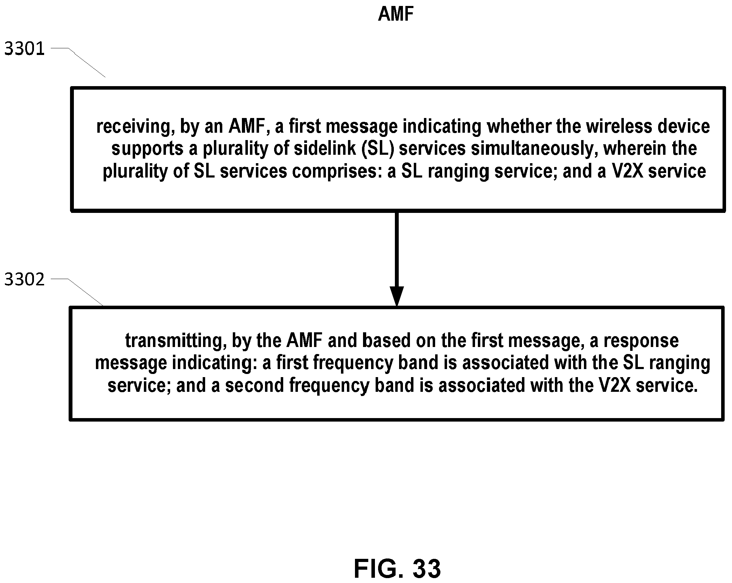

FIG. 33 is an example diagram depicting the procedures of an AMF as per an aspect of an embodiment of the present disclosure. The illustrated steps are as described above with regard to Fig. 32, and the first message 3201 discussed above. Step 3301 may correspond to the receipt of message 3201, and step 3302 may correspond to the transmission of third message 3209.

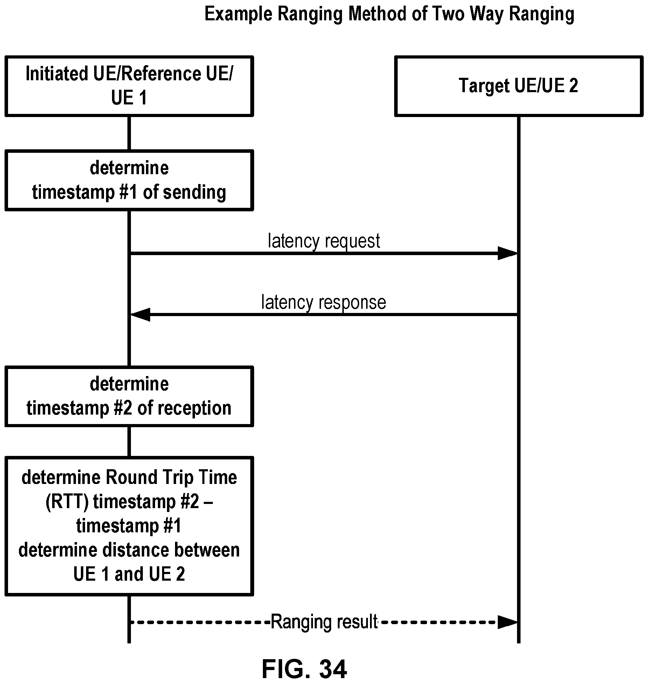

FIG. 34 is a diagram illustrating an example ranging method of Two Way Ranging. The Two Way Ranging ranging method may indicate that a first wireless device may determine a distance of a second wireless device by measuring a round trip time (RTT) between the first wireless device and the second wireless device. As shown in FIG. 34, the first wireless device (e.g., UE 1) may send a message (e.g., latency request) to the second wireless device (e.g., UE 2). The UE 1 may determine a timestamp #1 when sending the latency request message. The UE 2 may send a response message (e.g., latency response) to the UE 1 in response to receiving the latency request. The UE 1 may determine a timestamp #2 when receiving the latency response message. The UE 1 may determine Round Trip Time (RTT) by using a difference between the timestamp #2 and timestamp #1 (e.g., timestamp #2 - timestamp #1). The UE 1 may determine the distance between UE 1 and UE 2 based on the RTT (e.g., Distance = RTT X Speed of Light)/2.

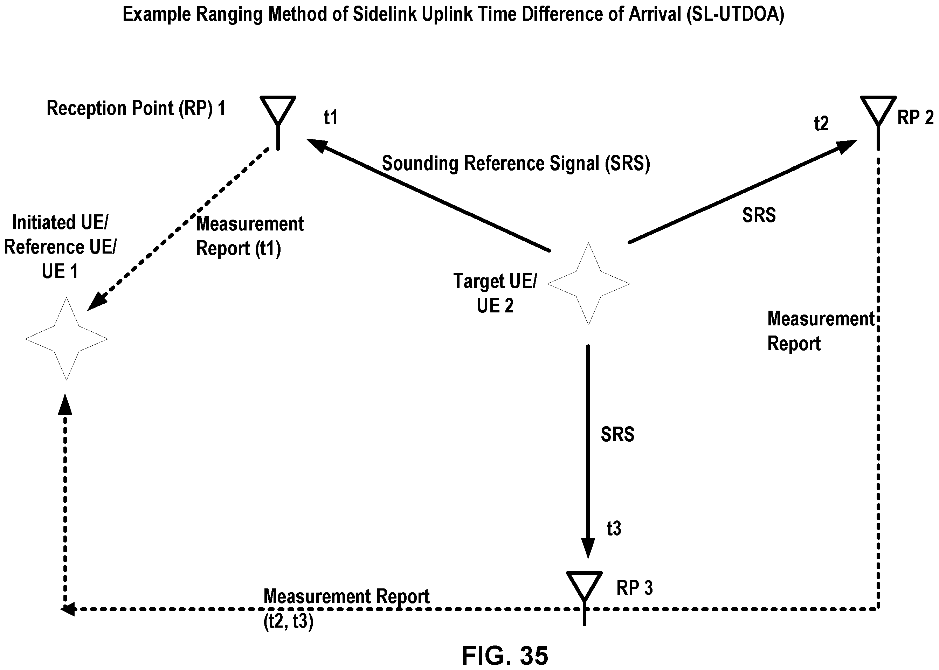

FIG. 35 is a diagram illustrating an example ranging method of Sidelink Uplink Time Difference of Arrival (SL-UTDOA). In this specification, the terms/terminologies "SL-UTDOA", "Uplink Time Difference of Arrival (UTDOA)", and/or "Receiving Time Difference of Arrival (RTDOA)" may be used interchangeably. A first wireless device (e.g., UE1) may perform ranging between the first wireless device and a second wireless device (e.g., UE2) by using the SL-UTDOA ranging method. The SL-UTDOA may indicate that a second wireless device (e.g., UE2) may send a reference signal (e.g., Sounding Reference Signal (SRS), Positioning Reference Signals (PRS), sidelink PRS (SL-PRS), Uplink Sounding Reference Signal Reference Signal Received Power (UL SRS-RSRP), UTDOA) to multiple Reception Point (RP)s. The multiple RPs may measure the received reference signals using assistance data received from a location server (e.g., a location management function (LMF), a base station). The multiple RPs may send the measurement reports to a first wireless device (e.g., UE1), where the measurement reports may comprise measured result (e.g., a time value, SRS-RSRP). The first wireless device may calculate the ranging/position/location of the second wireless device based on the measurement reports. The first wireless device may be a RP.

A PRS/SL-PRS may be a reference signal for ranging/positioning/sidelink positioning to support ranging method/positioning methods. The PRS/SL-PRS may be specifically designed to deliver the highest possible levels of accuracy and coverage. The PRS/SL-PRS may be specifically designed to avoid interference. To design an efficient PRS, special care may be taken to give the signal a large delay spread range, since it must be received from potentially distant neighboring TPs/RPs (e.g., base stations) for position estimation. This may be achieved by covering the whole NR bandwidth and transmitting PRS over multiple symbols that can be aggregated to accumulate power. The density of subcarrier occupied in a given PRS symbol may be referred to as the comb size. There may be several configurable comb-based PRS patterns for comb-2,4,6 and 12 suitable for different scenarios serving different use cases. For comb-N PRS, N symbols may be combined to cover all the subcarriers in the frequency domain. Each base station can then transmit in different sets of subcarriers to avoid interference. Since several TPs (e.g., base stations) may transmit at the same time without interfering with each other, this solution is also latency efficient. Moreover, it is possible to mute the PRS signal from one or more base stations at a given time according to a muting pattern, further lowering the potential interference. The PRS/SL-PRS may be used for downlink positioning and/or uplink positioning.

The SRS/PRS/SL-PRS may be a reference signal for ranging/positioning/sidelink positioning to support ranging method/positioning methods. Since positioning involves measurements from multiple RPs (e.g., base stations), the SRS/PRS/SL-PRS may have enough range to reach not only the serving TP/RP (e.g., base station to which the UE is connected), but also the neighboring base stations involved in the positioning process. The SRS/PRS/SL-PRS may be designed to cover the full bandwidth, where the resource elements are spread across the different symbols so as to cover all subcarriers. Therefore, SRS/PRS/SL-PRS may be also designed with a comb-based pattern. UEs can be multiplexed over the same transmitting symbol by assigning different comb patterns. To minimize interference, the UE may be configured with different SRS/PRS/SL-PRS instances, each with independent power control loops. This allows SRS/PRS/SL-PRS pointed at neighbor cells to have better receivability and keeps the interference low in the serving cell. The SRS/PRS/SL-PRS may be used for downlink positioning and/or uplink positioning.

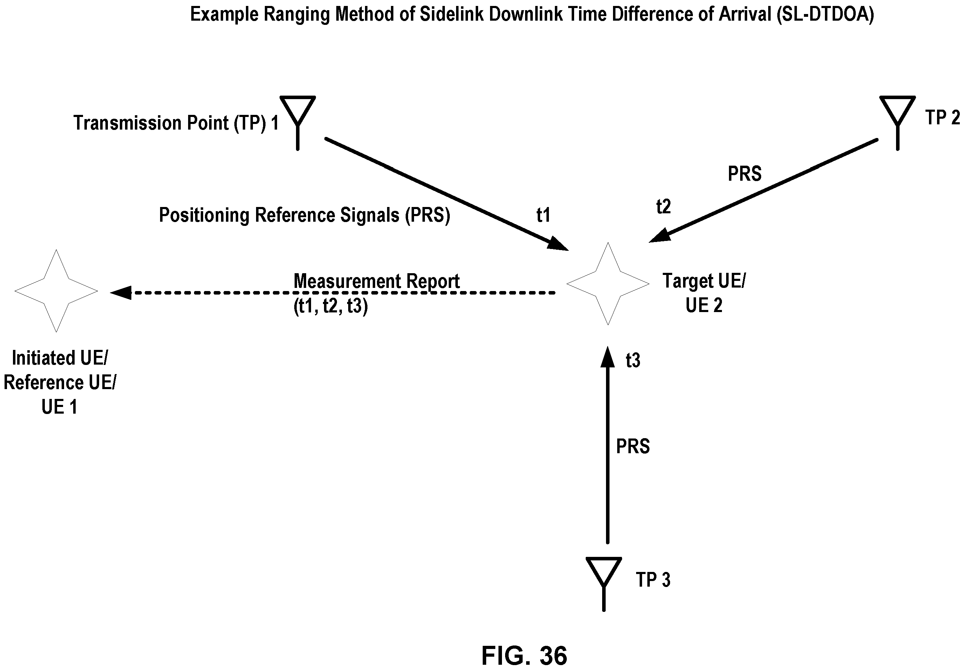

FIG. 36 is a diagram illustrating an example ranging method of Sidelink Downlink Time Difference of Arrival (SL-DTDOA). In this specification, the terms/terminologies "SL-DTDOA", "Downlink Time Difference of Arrival (DTDOA)", and/or "Sending Time Difference of Arrival (STDOA)" may be used interchangeably. A first wireless device (e.g., UE1) may perform ranging between the first wireless device and a second wireless device (e.g., UE2) by using the Sl-DTDOA ranging method. The SL-DTDOA ranging method may indicate that multiple Transmission Point (TP)s may send a reference signal (e.g., PRS, SL-PRS, Downlink PRS Reference Signal Received Power (DL PRS RSRP), Downlink Reference Signal Time Difference (DL RSTD)) to the second wireless device (e.g., UE2). The second wireless device may measure the received signals using assistance data received from a location server (e.g., a LMF, a base station). The second wireless device may send a measurement report to the first wireless device, and the measurement report may comprise measured result (e.g., a time value, SRS-RSRP). The first wireless device may calculate the ranging/position/location of the second wireless device based on the measurement reports. The first wireless device may be a TP.

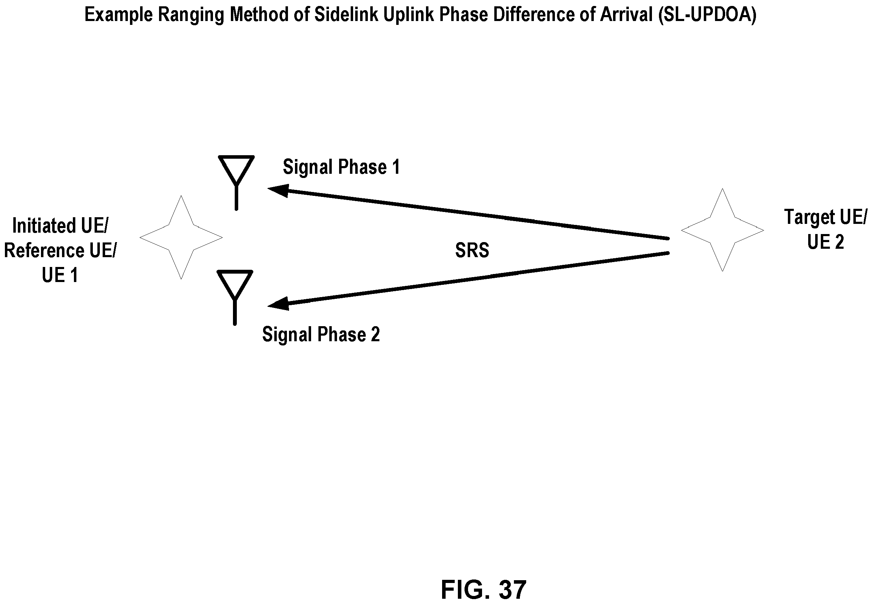

FIG. 37 is a diagram illustrating an example ranging method of Sidelink Uplink Phase Difference of Arrival (SL-UPDOA). In this specification, the terms/terminologies "SL-DPDOA", "Uplink Azimuth Angle of Arrival (UAOA)", "Sidelink Azimuth Angle of Arrival (SL-AOA)", and/or "Receiving Phase Difference of Arrival (RPDOA)" may be used interchangeably. A first wireless device (e.g., UE1) may perform ranging between the first wireless device and a second wireless device (e.g., UE2) by using the SL-UPDOA ranging method. The SL-UPDOA ranging method may indicate that a second wireless device may send a reference signal (e.g., SRS, UL SRS-RSRP, SL-PRS) to multiple Reception Point (RP)s. For example, the first wireless device may have multiple antennas, each of the multiple antennas may be a RP. By using assistance data from a location server (e.g., a LMF, a base station), the multiple RPs may measure the Azimuth Angle of Arrival (A-AoA) and/or the Zenith Angle of Arrival (Z-AoA) of the reference signal transmitted from the second wireless device. The first wireless device may calculate the ranging/position/location of the second wireless device based on the measurement results.

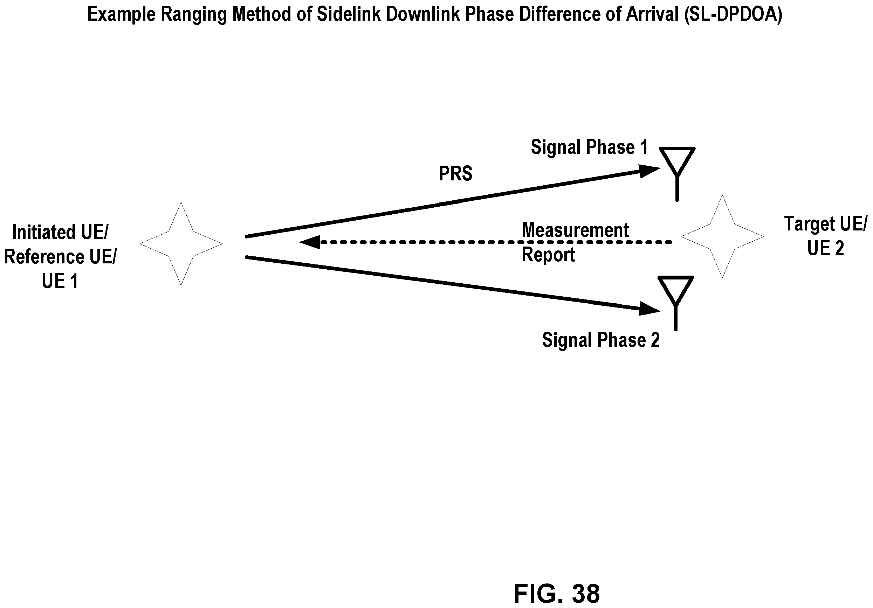

FIG. 38 is a diagram illustrating an example ranging method of Sidelink Downlink Phase Difference of Arrival (SL-DPDOA). In this specification, the terms/terminologies "SL-DPDOA", "Downlink Phase Difference of Arrival (DPDOA)", "Sending Phase Difference of Arrival (SPDOA)", "Downlink Difference of Arrival (DDOA)", "Downlink Angle of Departure (DAOD)", and/or "Sidelink Azimuth Angle of Departure (SL-AOD)" may be used interchangeably. The SL-DPDOA may indicate that a first wireless device (e.g., UE1) may send a reference signal (e.g., PRS, SL-PRS, DL PRS RSRP) to a second wireless device (e.g., UE2). The second wireless device may have multiple antennas, each of the multiple antennas may be a RP. By using assistance data received from a location server (e.g., a LMF, a base station), the multiple RPs may measure the Azimuth Angle of Arrival (A-AoA) and/or the Zenith Angle of Arrival (Z-AoA) of the reference signal transmitted from the first wireless device. The second wireless device may send a measurement report to the first wireless device, and the measurement report may comprise a measured result. The first wireless device may calculate the angle/position/location of the second wireless device based on the measurement report. For example, by using assistance data received from a location server (e.g., LMF, base station, wireless device), the first wireless device may measure Angle of Departure (AOD) and may calculate the ranging/position/location of the second wireless device based on the measurement.

A Transmission Point (TP) may be a set of geographically co-located transmit antennas (e.g., antenna array (with one or more antenna elements)) for one cell, part of one cell or one DL PRS-only TP. TPs may comprise base station (ng-eNB or gNB) antennas, remote radio heads, a remote antenna of a base station, an antenna of a DL PRS-only TP, etc. One cell can include one or multiple transmission points. For a homogeneous deployment, each TP may correspond to one cell. A wireless device (e.g., UE) may be a TP. An anchor UE may be a TP. The Anchor UE may be a UE supporting positioning of target UE, e.g., by transmitting and/or receiving reference signals for positioning, providing positioning-related information, etc., over the sidelink (SL) interface.

A Reception Point (RP) may be a set of geographically co-located receive antennas (e.g., antenna array (with one or more antenna elements)) for one cell, part of one cell or one UL SRS-only RP. RPs may comprise base station (ng-eNB or gNB) antennas, remote radio heads, a remote antenna of a base station, an antenna of a UL SRS-only RP, etc. One cell may include one or multiple reception points. For a homogeneous deployment, each reception point may correspond to one cell. A wireless device (e.g., UE) may be a RP. An anchor UE may be a RP.

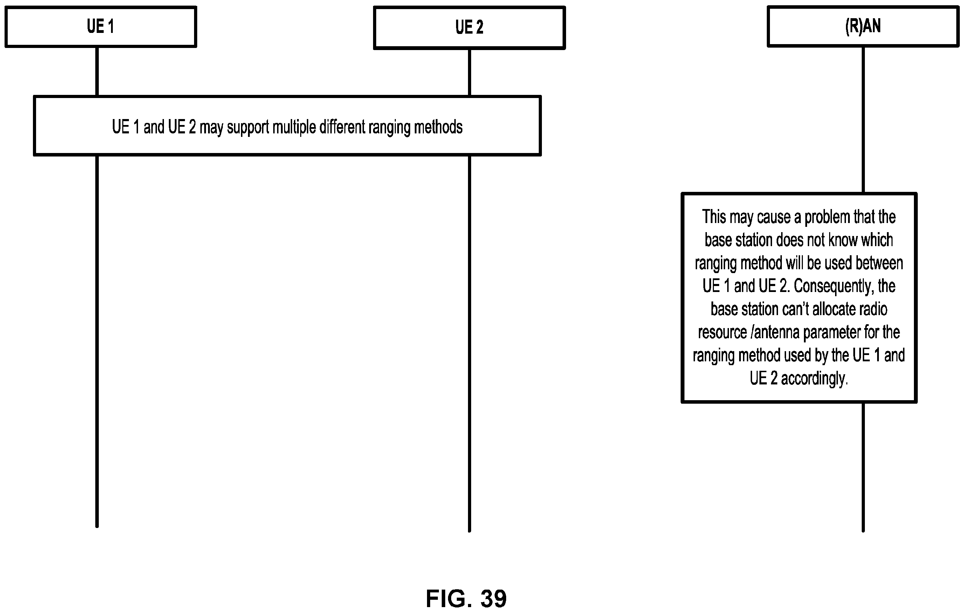

FIG. 39 shows an example of problems associated with at least some wireless communications. In at least some wireless communications, one or more wireless devices (e.g., UE 1 and UE 2 such as shown in FIG. 34 - FIG. 38) may support multiple different ranging methods. This support of multiple different ranging methods may result in a base station not knowing which ranging method(s) will be used between wireless devices (e.g., UE 1 and UE 2). Consequently, (1) the base station may not be able to allocate radio resources / antenna parameters for the ranging method used by the wireless device(s) (e.g., UE 1 and UE 2) accordingly; and (2) the base station may not be able to determine assistance data for the ranging method used by the wireless device(s) (e.g., UE 1 and UE 2) accordingly, and/or (3) the base station may not be able to send assistance data to the wireless device(s) (e.g., UE 1, UE 2), RPs, and/or TPs.

As described herein, improved wireless communications may enable a first wireless device to indicate to a base station a ranging method used by the first wireless device and a second wireless device. Based on such information received from the first wireless device, the base station may determine radio resources/antenna parameters for the ranging method accordingly. As described herein, a base station may be configured to send radio resources/antenna parameters for the ranging method to the first wireless device and/or the second wireless device. The base station may be able to determine assistance data for the ranging method used by the first wireless device and the second wireless device accordingly. The base station may be able to send the assistance data of the ranging method to the first wireless device, the second wireless device, RPs, and/or TPs. The base station may receive a first radio resources control (RRC) message from a wireless device. The first RRC message may indicate a ranging method, wherein the ranging method is used by the first wireless device to perform ranging between the first wireless device and a second wireless device. The base station may determine parameters for radio resources to perform ranging service by using the ranging method, for example, based on the ranging method. The base station may transmit the parameters to the first wireless device.

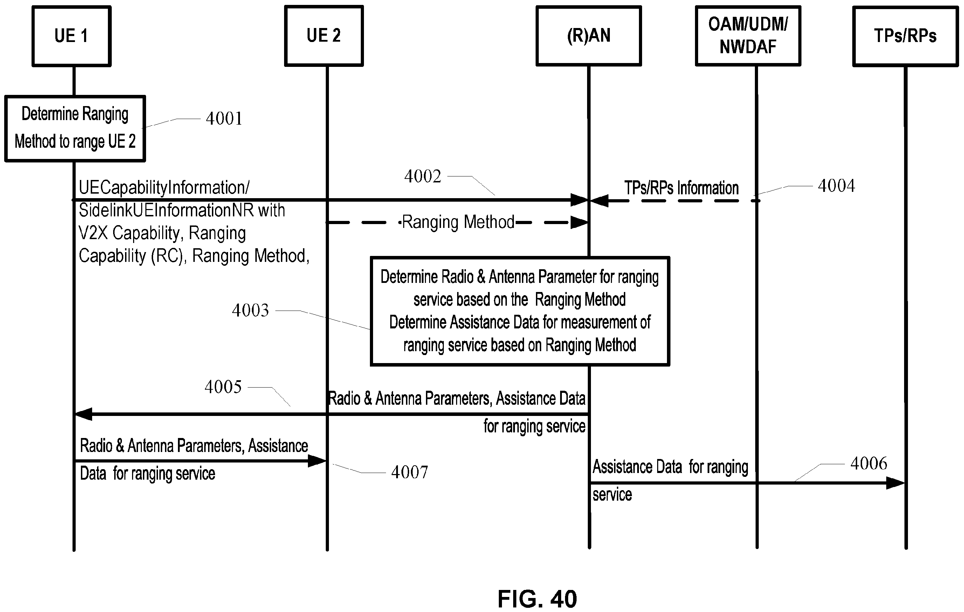

FIG. 40 is an example call flow as per an aspect of an embodiment of the present disclosure. A first wireless device (e.g., UE 1 as shown in FIG. 40) may need to perform a ranging method/operation between the first wireless device and a second wireless device (e.g., UE 2 as shown in FIG. 40). Performing ranging between the first wireless device and a second wireless device may indicate that the first wireless device may range/position the second wireless device (e.g., the UE 1 may need to determine/measure a ranging/positioning of the UE 2). The range/position of a wireless device (e.g., UE 2) may comprise at least one of: a distance, a direction, an angle, a velocity and/or a position of the wireless device. For example, the UE 1 performs ranging between the UE 1 and the UE 2 may indicate that the UE 1 may measure a distance/direction/angle/velocity/position of the UE 2. Ranging/positioning the second wireless device may indicate that the first wireless device may measure a distance/direction/angle/velocity/position of the second wireless device.

The first wireless device may determine 4001 a ranging method to perform ranging between the first wireless device and the second wireless device. For example, the UE 1 may determine a ranging method to range/position the UE 2, where the ranging method may be supported by the UE 1 and/or the UE 2. In this specification, the terms/terminologies "ranging method", "positioning method", "sidelink positioning method", and/or "sidelink location method" may be used interchangeably. In this specification, the terms/terminologies "ranging", "positioning", "sidelink positioning", and/or "sidelink locating" may be used interchangeably.

The ranging/range/sidelink (SL) positioning may comprise at least one of: a distance (e.g., centimeter (cm), millimeter (mm)); a direction (e.g., east, 9-o'clock direction); an angle (e.g., degree); a velocity; and/or a position. The velocity may indicate a directional speed of an object in motion as an indication of its rate of change in position as observed from a particular frame of reference and as measured by a particular standard of time (e.g. 60 km/h to the north). The position may indicate a relative position (e.g., the second wireless device may be 5 meters away from the first wireless device). The position may be an absolute position (e.g., a set of GPS coordinates). The ranging service may comprise at least one of: a first wireless device measuring a distance of a second wireless device; a first wireless device measuring a direction of a second wireless device; a first wireless device measuring an angle of a second wireless device; a first wireless device measuring a velocity of a second wireless device; and/or a first wireless device measuring a position of a second wireless device. In this specification, the term "ranging service" may be equivalent to the term "sidelink ranging service".

The first wireless device (e.g., UE1) may send a first radio resources control (RRC) message 4002 to a base station (e.g., (R)AN as shown in FIG. 40). The first RRC message 4002 may indicate a ranging method, wherein the ranging method is to be used by the first wireless device to perform ranging between the first wireless device and a second wireless device (e.g., the first wireless device to range/position the second wireless device, e.g., UE2). The first RRC message 4002 may comprise a first parameter (e.g., Ranging Method, Sidelink Positioning Method) indicating a type of ranging method/sidelink positioning method to be used for ranging service. The first parameter/Ranging Method may indicate a method to be used between the first wireless device and the second wireless device for ranging service. The first parameter/Ranging Method may indicate a ranging method used/supported/requested by the first wireless device to range/position the second wireless device. The first parameter/Ranging Method may comprise/indicate at least one of the following methods: Two Way Ranging, Sidelink Uplink Time Difference of Arrival (SL-UTDOA), Sidelink Downlink Time Difference of Arrival (SL-DTDOA), Sidelink Uplink Phase Difference of Arrival (SL-UPDOA), and/or Sidelink Downlink Phase Difference of Arrival (SL-DPDOA). In this specification, the terms/terminologies "Ranging Method", "Sidelink Positioning Method" and/or "Positioning Method" may be used interchangeably.

The first RRC message 4002 may comprise a second parameter (e.g., Ranging Capability) indicating whether the first wireless device and/or the second wireless device support(s) ranging service. The second parameter/Ranging Capability may indicate whether the first wireless device has the capability to measure/determine a range/position of a second wireless device. The second parameter/ Ranging Capability may indicate whether the first wireless device has the capability to range/position a second wireless device. The second parameter/ Ranging Capability may indicate whether the first wireless device has at least one of the following capabilities: measuring/determining a distance of a second wireless device; measuring/determining a direction of a second wireless device; measuring/determining an angle of a second wireless device; measuring/determining a velocity of a second wireless device; and/or measuring/determining a position of a second wireless device. The second parameter/ Ranging Capability may indicate the scope/ range/limitation of the ranging service. The second parameter/ Ranging Capability may indicate the scope/range/limitation of a ranging of: a distance; a direction; an angle; a velocity; and/or a position of a second wireless measuring/determining device. For example, the second parameter/ Ranging Capability may indicate a maximum distance of 100 meters may be measured by the first wireless device. The second parameter/ Ranging Capability may comprise the first parameter/Ranging Method.

The second parameter/ Ranging Capability may comprise/indicate supported frequency band(s) for the ranging service between the first wireless device (e.g., UE1) and the second wireless device (e.g., UE2). The second parameter/ Ranging Capability may comprise/indicate supported frequency band(s) for Reference Signal Time Difference (RSTD) measurement. The RSTD may indicate/comprise relative timing difference between a first TP (e.g., a neighbor cell j) and a second TP (e.g., a reference cell i), defined as T_{SubframeRxj} - T_{SubframeRxi}, where: the T_{subframeRxj} is the time when the first wireless device and/or the second wireless device receives the start of one subframe from cell j, and the T_{SubframeRxi} is the time when the first wireless device and/or the second wireless device receives the corresponding start of one subframe from cell i that is closest in time to the subframe received from cell j. The reference point for the observed subframe time difference may be the antenna connector of the first wireless device and/or the second wireless device.

The second parameter/ Ranging Capability may comprise/indicate inter-frequency RSTD measurement, wherein the inter-frequency RSTD measurement may indicate whether the first wireless device and/or the second wireless device supports inter-frequency RSTD measurement. The second parameter/ Ranging Capability may comprise/indicate RSTD measurement supported by the first wireless device and/or the second wireless device, where the RSTD measurement may comprise an inter-frequency RSTD measurement and/or an intra-frequency RSTD measurement. The intra-frequency RSTD measurement may indicate the RSTD measurement is performed when the first TP (e.g., neighbor cell j) and the second TP (e.g., reference cell i) are on the same carrier frequency, where the first TP (e.g., neighbor cell j) and the second TP (e.g., reference cell i) are the serving cells for the first wireless device and/or the second wireless. The inter-frequency RSTD measurement may indicate the RSTD measurement is performed when the first TP (e.g., neighbor cell j) and the second TP (e.g., reference cell i) are on a different carrier frequency, where the first TP (e.g., neighbor cell j) and the second TP (e.g., reference cell i) are the serving cells for the first wireless device and/or the second wireless. For example, the second parameter/ Ranging Capability may indicate that the first wireless device and/or the second wireless device support the inter-frequency RSTD measurement and/or the intra-frequency RSTD measurement.

The ranging service may comprise/indicate at least one of: a first wireless device (e.g., UE1) measuring/determining a distance of a second wireless device (e.g., UE2); a first wireless device measuring/determining a direction of a second wireless device; a first wireless device measuring/determining an angle of a second wireless device; a first wireless device measuring/determining a velocity of a second wireless device; and/or a first wireless device measuring/determining a position of a second wireless device.

The first RRC message 4002 may comprise a third parameter (e.g., PC5 Capability) indicating whether the first wireless device and/or the second wireless device is/are able to perform ranging service over PC5 reference point. The third parameter/ PC5 Capability may indicate that the first wireless device supports PC5 communication with a second wireless device over a PC5 interface. The PC5 interface may be a reference point between the UEs (e.g., between the first wireless device UE1 and a second wireless device UE2). The PC5 may comprise LTE based PC5 and/or NR based PC5. The PC5 may refer to a reference point where the User Equipment (UE), e.g., mobile handset, directly communicates with another UE over the direct channel. In this case, the communication with the base station may not be required.

The first RRC message 4002 may comprise a fourth parameter (e.g., V2X Capability) indicating a V2X capability of the first wireless device and/or the second wireless device. The fourth parameter/ V2X Capability may indicate that the first wireless device supports V2X communication/service with a second wireless device. The V2X may comprise EPS V2X and/or 5GS V2X.

The first RRC message 4002 may comprise a fifth parameter (e.g., ProSe Capability) indicating a ProSe Capability of the first wireless device and/or the second wireless device. The fifth parameter/ ProSe Capability may indicate that the first wireless device supports ProSe communication/service with a second wireless device. The fifth parameter/ ProSe Capability may indicate whether the first wireless device supports one or more of the following ProSe capabilities: 5G ProSe Direct Discovery; 5G ProSe Direct Communication; 5G ProSe Layer-2 UE-to-Network Relay; 5G ProSe Layer-3 UE-to-Network Relay; 5G ProSe Layer-2 Remote UE; and/or 5G ProSe Layer-3 Remote UE.

The first RRC message 4002 may comprise a sixth parameter (e.g., Ranging Accuracy) indicating an accuracy of the ranging service supported by the first wireless device and/or the second wireless device. The sixth parameter/Ranging Accuracy may indicate degree of conformity of a measure to a standard or a true value of the ranging. The sixth parameter/Ranging Accuracy may comprise at least one of: accuracy of a distance for the ranging service (e.g., millimeter, meter); accuracy of a direction for the ranging service; accuracy of an angle for the ranging service; accuracy of a velocity for the ranging service; and/or accuracy of a position for the ranging service.

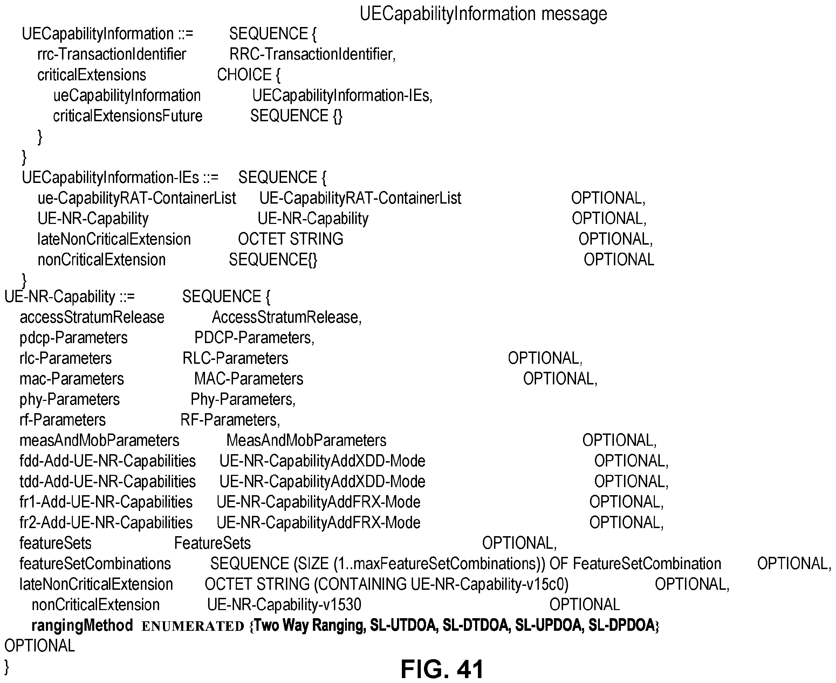

The first RRC message 4002 may comprise a UECapabilityInformation message. The first RRC message 4002 may comprise a SidelinkUEInformationNR message. The first RRC message 4002 may comprise a UEAssistanceInformation message. The first RRC message 4002 may comprise at least one of the following messages: an MSG 3; an MSG 5; a RRCSetupRequest; a RRCSetupComplete; a RRCResumeRequest; a RRCResumeComplete; and/or UEInformationResponse. FIG. 41 is an example diagram depicting a UECapabilityInformation message, where the UECapabilityInformation message comprises a parameter rangingMethod indicating a type of ranging method used for ranging service.

The first RRC message 4002 may comprise an identity of the first wireless device (e.g., UE1). The first RRC message 4002 may comprise an identity of the second wireless device (e.g., UE2). The identity of the first wireless device and/or the identity of the second wireless device may comprise at least one of: a Generic Public Subscription Identifier (GPSI), wherein the GPSI may comprise a Mobile Station Integrated Services Digital Network (MSISDN) and/or an external identifier; a Subscription Permanent Identifier (SUPI), wherein the SUPI may comprise an International Mobile Subscriber Identity (IMSI) and/or Network Access Identifier (NAI); a Subscription Concealed Identifier (SUCI); a 5G Globally unique Temporary Identity (5G-GUTI); a permanent equipment identifier (PEI), wherein the PEI may comprise an International Mobile Equipment Identity (IMEI); an IP address, wherein the IP address may comprise an IPv4 address and/or an IPv6 prefix; an application-level identifier to identify the first wireless device/second wireless device (e.g., Application Layer ID); and/or a Layer-2 ID. The first wireless device/second wireless device may have one or more Layer-2 IDs for sidelink communication over PC5 reference point. The Layer-2 IDs may comprise Source Layer-2 ID(s) and/or Destination Layer-2 ID(s). The Source and destination Layer-2 IDs may be included in layer-2 frames sent on the layer-2 link of the PC5 reference point identifying the layer-2 source and destination of these frames. Source Layer-2 IDs may be always self-assigned by the UE originating the corresponding layer-2 frames.

The second wireless device may send a first RRC message to the base station, the definition/content of the first RRC message sent by the second wireless may be the same or similar to the first RRC message 4002 sent by the first wireless device. For example, the first RRC message sent by the second wireless device may comprise the first parameter/Ranging Method indicating one or more ranging methods supported by the second wireless device and/or the first wireless device.

In response to receiving the first RRC message 4002 (from either the first wireless device and/or the second wireless device, although first RRC message 4002 is used as an example herein), the base station may take one or more actions 4003. In an action, based on the first RRC message 4002, the base station may determine configuration parameters for radio resources and/or configuration parameters for one or more antenna to perform a ranging service using one or more ranging methods described herein. For example, based on the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device, the base station may determine configuration parameters for radio resources and/or configuration parameters for antennas to perform ranging service by using the ranging method.

The radio resources may comprise at least one of: a frequency resource, a time resource, and/or a radio bearer resource. The time resource may indicate time domain resource. The time resource may indicate resource of time (e.g., time duration) allocated for sending and/or receiving signaling and/or user data for a wireless device. The time resource of sidelink (service) may indicate resource of time (e.g., time duration) allocated for sending and/or receiving signaling and/or user data between a first wireless device and a second wireless device (e.g., via PC5 interface). The time resource of ranging service may indicate resource of time (e.g., time duration) allocated for sending and/or receiving signaling and/or user data between a first wireless device and a second wireless device (e.g., via PC5 interface) for ranging service. The time resource may comprise/indicate (NR) frame, subframes, slots and/or (OFDM) symbols as shown in FIG. 18. The time resource may comprise/indicate BWP as shown in FIG. 19 and/or FIG. 20. The time resource may comprise/indicate CORESET as shown in FIG. 21A and FIG. 21B. The time resource may comprise/indicate an RG (Resource Grid), where the RG may be a collection of time-frequency resources. The RG may be for different Numerology on each carrier, and an RG may be a collection of resources for all sub-carriers in the frequency domain and all symbols under 1 subframe length in the time domain, and the starting point of the frequency domain may be granular in RB.

The time domain resource for PDSCH transmissions may be scheduled by DCI format 1_0 and/or 1_1 in the field Time-domain resource assignment. This field may indicate slot offset K0, starting symbol S, allocation length L, and the mapping type of PDSCH. The base station may configure time resource in a parameter (e.g., pdsch-TimeDomainAllocationList, pdsch-ConfigCommon). The base station may send the parameter of time resource (e.g., pdsch-TimeDomainAllocationList, pdsch-ConfigCommon, pdsch-Config) to the first wireless device and/or the second wireless device via SIB (e.g., SIB1) and/or dedicated RRC signalling (e.g., RRCReconfiguration).

The frequency resource may indicate frequency domain resource. The frequency resource may indicate resource of frequency (e.g., frequency band, carrier, subcarrier) allocated for sending and/or receiving signaling and/or user data for the ranging service between the first wireless device (e.g., UE1) and/or the second wireless device (e.g., UE2). The frequency resource of sidelink (service) may indicate resource of frequency (e.g., frequency band, carrier, subcarrier) allocated for sending and/or receiving signaling and/or user data between a first wireless device and a second wireless device (e.g., via PC5 interface). The frequency resource may comprise/indicate frequency band, carrier, and/or subcarrier. The frequency resource may comprise/indicate BWP, RE, and/or RB as shown in FIG. 19 and/or FIG. 20. The frequency resource may comprise/indicate CORESET as shown in FIG. 21A and FIG. 21B. The frequency resource may comprise/indicate an RG (Resource Grid). The frequency domain resource for PDSCH transmissions may be scheduled by DCI format 1_0, 1_1 and/or 1_2 in the field Frequency-domain resource assignment (e.g., by setting resourceAllocation field in a parameter of PDSCH-Config).

Radio bearer resource may indicate resource for a radio bearer. The radio bearer resource may indicate/comprise time resource and/or frequency resource for the radio bearer. The radio bearer may comprise signaling radio bearer and/or data radio bearer. The signaling radio bearer may be a radio bearer for transmitting and/or receiving signaling for a wireless device. The signaling radio bearer of ranging service may be a radio bearer for transmitting and/or receiving signaling between the first wireless device and the second wireless device (e.g., via PC5 interface). The data radio bearer may be a radio bearer for transmitting and/or receiving user (application) data for a wireless device. The data radio bearer of ranging service may be a radio bearer for transmitting and/or receiving user (application) data between the first wireless device and the second wireless device (e.g., via PC5 interface). The radio bearer resource may indicate/comprise QoS parameters for the radio bearer, where the QoS parameters may comprise bandwidth, priority, and/or delay budget for the radio bearer and/or associated QoS flow(s).

The first parameter/Ranging Method may indicate a type of ranging method of Two Way Ranging supported/requested by the first wireless device and/or the second wireless device, the second parameter/ Ranging Capability may indicate the first wireless device and/or the second wireless device support ranging service, the second parameter/ Ranging Capability may indicate a maximum distance of 20 meters being measured by the first wireless device, the sixth parameter/Ranging Accuracy may indicate accuracy of distance is 1 meter, based on above information, the base station may determine configuration parameters for radio resources and/or configuration parameters for antennas to perform ranging service by using the ranging method. The first wireless device and/or the second wireless device may support more than one antenna as shown in FIG. 22. For example, the base station may determine at least one data radio bearer, where the at least one data radio bearer may be used by the first wireless device and the second wireless device to perform ranging service (e.g., sending/receiving latency request/latency response messages). For example, considering the second parameter/ Ranging Capability (e.g., the maximum distance to be measured by the first wireless device and the second wireless device is 20 meters) and/or the sixth parameter/Ranging Accuracy (e.g., accuracy of distance is 1 meter), the base station may determine a smaller time/frequency resource (e.g., bandwidth, BWP) to perform ranging service by using the ranging method of Two Way Ranging between the first wireless device and the second wireless device.

The first parameter/Ranging Method may indicate a type of ranging method of Sidelink Downlink Time Difference of Arrival (SL-DTDOA) supported/requested by the first wireless device and/or the second wireless device, the second parameter/ Ranging Capability may indicate the first wireless device and/or the second wireless device support ranging service, the second parameter/ Ranging Capability may indicate the first wireless device and/or the second wireless device does not support inter-frequency RSTD measurement, the second parameter/ Ranging Capability may indicate a maximum distance of 100 meters may be measured by the first wireless device, the sixth parameter/Ranging Accuracy may indicate accuracy of distance is 0.5 meter, based on above information, the base station may determine configuration parameters for radio resources and/or configuration parameters for antennas to perform ranging service by using the ranging method of SL-DTDOA. The determining configuration parameters for radio resources may comprise allocating radio resources. For example, the base station may determine at least one data radio bearer, where the at least one data radio bearer may be used by the first wireless device and the second wireless device to perform ranging service (e.g., the first wireless device receives measurement reports from the second wireless device over the at least one data radio bearer). For example, considering the second parameter/ Ranging Capability (e.g., the maximum distance to be measured by the first wireless device and the second wireless device is 100 meters) and/or the sixth parameter/Ranging Accuracy (e.g., accuracy of distance is 1 meter), the base station may determine a larger time/frequency resource (e.g., bandwidth, BWP) to perform ranging service by using the SL-DTDOA between the first wireless device and the second wireless device. For example, the base station may determine time/frequency resource for the SL-PRS for the second wireless device. For example, the base station may determine configuration parameters for 1 antenna for the first wireless device to perform ranging service with the second wireless device. For example, the base station may determine configuration parameters for 1 antenna for the second wireless device to perform ranging service with the first wireless device. For example, the base station may determine configuration parameter for 3 antennas for the second wireless device to receive SL-PRS from 3 TPs.

The configuration parameters for radio resources and/or configuration parameters for antennas to perform ranging service may comprise a seventh parameter (e.g., sl-ConfigDedicatedNR) indicating dedicated radio resources configuration for the ranging service for the first wireless device and/or the second wireless device. The configuration parameters for radio resources and/or configuration parameters for antennas to perform ranging service may comprise an eighth parameter (e.g., sl-L2RemoteUEConfig) indicating configuration for layer 2 remote UE (e.g., the second wireless device).

The seventh parameter/ sl-ConfigDedicatedNR may comprises one or more of the following parameters. For example, the seventh parameter/ sl-ConfigDedicatedNR may comprise a parameter (e.g., Sidelink Service Type) indicating what sidelink service (s) the seventh parameter/ sl-ConfigDedicatedNR may be applied to. The parameter/ Sidelink Service Type may indicate/comprise at least one of: a V2X service, a ranging service, a relay service, a public safety service, and/or service associated with sidelink. For example, the parameter/ Sidelink Service Type may indicate that the seventh parameter/ sl-ConfigDedicatedNR may be applied to the V2X service and/or the ranging service.

The seventh parameter/ sl-ConfigDedicatedNR may comprise a parameter (e.g., sl-PHY-MAC-RLC-Config) indicating configuration of physical layer, MAC layer and/or RLC layer applied to ranging service and/or sidelink services indicated by the parameter/ Sidelink Service Type. The seventh parameter/ sl-ConfigDedicatedNR may comprise a parameter (e.g., sl-RadioBearerToReleaseList) indicating one or multiple sidelink radio bearer configurations to be removed. The parameter/ sl-RadioBearerToReleaseList may be applied to the ranging service and/or sidelink services indicated by the parameter/ Sidelink Service Type. The seventh parameter/ sl-ConfigDedicatedNR may comprise a parameter (e.g., sl-RadioBearerToAddModList) indicating one or multiple sidelink radio bearer configurations to be added and/or modified. The parameter/ sl-RadioBearerToAddModList may be applied ranging service and/or sidelink services indicated by the parameter/ Sidelink Service Type. The seventh parameter/ sl-ConfigDedicatedNR may comprise a parameter (e.g., sl-MeasConfigInfoToReleaseList) indicating Reference Signal Receive Power (RSRP) measurement configurations for unicast destinations (e.g., a second wireless device) to be removed. The parameter/ sl-MeasConfigInfoToReleaseList may be applied to the ranging service and/or sidelink services indicated by the parameter/ Sidelink Service Type. The seventh parameter/ sl-ConfigDedicatedNR may comprise a parameter (e.g., sl-MeasConfigInfoToAddModList) indicating RSRP measurement configurations for unicast destinations to be added/modified. The parameter/ sl-MeasConfigInfoToAddModList may be applied to the ranging service and/or sidelink services indicated by the parameter/ Sidelink Service Type.

The parameter/ sl-PHY-MAC-RLC-Config may comprise one or more of the following parameters. The parameter/ sl-PHY-MAC-RLC-Config may comprise a parameter (e.g., sl-ScheduledConfig) indicating configuration for the wireless device (e.g., UE) to transmit NR sidelink communication based on network scheduling. The parameter/ sl-PHY-MAC-RLC-Config may comprise a parameter (e.g., sl-UE-SelectedConfig) indicating the configuration used for the UE autonomous resource selection. The parameter/ sl-PHY-MAC-RLC-Config may comprise a parameter (e.g., sl-FreqInfoToReleaseList) indicating the NR sidelink communication configuration on some carrier frequency (ies) to be removed. The parameter/ sl-PHY-MAC-RLC-Config may comprise a parameter (e.g., sl-FreqInfoToAddModList) indicating the NR sidelink communication configuration on some carrier frequency (ies) to be added and/or modified. The parameter/ sl-PHY-MAC-RLC-Config may comprise a parameter (e.g., sl-RLC-BearerToReleaseList) indicating one or multiple sidelink RLC bearer configurations to be removed. The parameter/ sl-PHY-MAC-RLC-Config may comprise a parameter (e.g., sl-RLC-BearerToAddModList) indicating one or multiple sidelink RLC bearer configurations to be added/modified. The parameter/ sl-PHY-MAC-RLC-Config may comprise a parameter (e.g., sl-MaxNumConsecutiveDTX) indicating the maximum number of consecutive Hybrid Automatic Repeat Request (HARQ) Discontinuous transmission (DTX) before triggering sidelink radio link failure (RLF). The parameter/ sl-PHY-MAC-RLC-Config may comprise a parameter (e.g., sl-CSI-Acquisition) indicating whether Channel State Information (CSI) reporting is enabled in sidelink unicast. The parameter/ sl-PHY-MAC-RLC-Config may comprise a parameter (e.g., sl-CSI-SchedulingRequestId) indicating the scheduling request configuration applicable for sidelink CSI report Medium Access Control (MAC) Control Element (CE). The parameter/ sl-PHY-MAC-RLC-Config may comprise a parameter (e.g., sl-SSB-PriorityNR) indicating the priority of NR sidelink Synchronization Signal Block (SSB) transmission and reception. The parameter/ sl-PHY-MAC-RLC-Config may comprise a parameter (e.g., networkControlledSyncTx) indicating whether the UE transmits synchronization information to another UE (e.g., become synchronization source).

The base station may receive TPs/RPs information 4004 from a network function (e.g., an OAM, a UDM, an NWDAF). For example, the network function may send TPs/RPs information to the base station based on configuration and/or based on a query request from the base station. For example, the base station may send a query request message to the network function requesting TPs/RPs, the query request message may comprise one or more parameters of the first RRC message (e.g., the first parameter/Ranging Method). The network function may determine TPs/RPs, for example, based on the one or more parameters of the first RRC message and/or local configuration. For example, the network function may determine multiple RPs for SL-UTDOA, and/or multiple TPs for SL-DTDOA. The TPs/RPs information may comprise at least one of: TP/RP type, TP/RP identifier, TP/RP capability, and/or location of TP/RP. The TP/RP type may indicate/comprise: a TP, a RP, both TP and RP. TP/RP identifier may comprise at least one identifier to identify the TP/RP, e.g., a cell ID, an IP address, and/or the like. TP/RP capability may indicate capability of the TP/RP to support the ranging/sidelink positioning service. The TP/RP capability may comprise the first parameter/ Ranging Method indicating one or more ranging methods supported by the TP/RP. The TP/RP capability may comprise the second parameter/ Ranging Capability. The location of TP/RP may indicate location of the TP/RP. For example, the location of TP/RP may indicate an absolute location (e.g., GPS location) of the TP/RP. For example, the location of TP/RP may indicate a relative location of the TP/RP, e.g., the location of the TP/RP relative to the location of the first wireless device and/or the second wireless device.

In an action, based on the first RRC message 4002 and/or TPs/RPs information 4004, the base station (e.g., (R)AN in Fig. 40) may determine sidelink positioning assistance data for the ranging service by using the ranging method. For example, based on the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device, the identity of the second wireless device, and/or the TPs/RPs information, the base station may determine sidelink positioning assistance data for the ranging service by using the ranging method. The sidelink positioning assistance data may be applied to the first wireless device, the second wireless device and/or TPs/RPs. In this specification, the terms/terminologies "sidelink positioning assistance data", "ranging assistance data", "sidelink assistance data", and/or "assistance data" may be used interchangeably. The sidelink positioning assistance data may comprise configuration parameters for radio resources and/or configuration parameters for antennas to perform the ranging service. For example, the sidelink positioning assistance data may comprise frequency/time resource (e.g., carrier frequency, BWP), where the frequency/time resource may be used by the TPs/RPs, the first wireless device and/or the second wireless device to perform ranging services. For example, the sidelink positioning assistance data may comprise configuration of radio bearer resource and/or configuration of antenna(s) which may be used by the TPs/RPs, the first wireless device and/or the second wireless device to perform ranging services (e.g., sending/receiving SL-PRS, sending/receiving measurement reports). The sidelink positioning assistance data may comprise the TPs/RPs information, where the TPs/RPs information may be used by the first wireless device and/or the second wireless device to perform ranging service, e.g., to calculate the position of the first wireless device and/or the second wireless device based on the location of the TPs/RPs.

The sidelink positioning assistance data for the ranging service may comprise sidelink positioning assistance data for Two Way Ranging, wherein the sidelink positioning assistance data for Two Way Ranging may comprise configuration parameters for radio resources (e.g., time resource, frequency resource, radio bearer resource) and/or configuration parameters for antennas to perform the Two Way Ranging.

The sidelink positioning assistance data for the ranging service may comprise sidelink positioning assistance data for SL-DTDOA, wherein the sidelink positioning assistance data for SL-DTDOA may comprise configuration parameters for radio resources (e.g., time resource, frequency resource, radio bearer resource) and/or configuration parameters for antennas to perform the SL-DTDOA.

The sidelink positioning assistance data for the ranging service may comprise sidelink positioning assistance data for SL-UPDOA, wherein the sidelink positioning assistance data for SL-UPDOA may comprise configuration parameters for radio resources (e.g., time resource, frequency resource, radio bearer resource) and/or configuration parameters for antennas to perform the SL-UPDOA.

The sidelink positioning assistance data for the ranging service may comprise sidelink positioning assistance data for SL-DPDOA, wherein the sidelink positioning assistance data for SL-DPDOA may comprise configuration parameters for radio resources (e.g., time resource, frequency resource, radio bearer resource) and/or configuration parameters for antennas to perform the SL-DPDOA.

The sidelink positioning assistance data for the ranging service may comprise sidelink positioning assistance data for SL-UTDOA, wherein the sidelink positioning assistance data for SL-UTDOA may comprise configuration parameters for radio resources (e.g., time resource, frequency resource, radio bearer resource) and/or configuration parameters for antennas to perform the SL-UTDOA. For example, the sidelink positioning assistance data may comprise a parameter (e.g., NR-SL-UTDOA-ProvideAssistanceData), where the parameter/ NR-SL-UTDOA-ProvideAssistanceData may be used by the location server to provide sidelink positioning assistance data to RPs and/or the second wireless device to perform sidelink/uplink TDOA. The parameter/ NR-SL-UTDOA-ProvideAssistanceData may comprise nr-SL-PRS-AssistanceData, where the nr-SL-PRS-AssistanceData may comprise nr-SL-PRS-PositioningFrequencyLayer. The PRS-PositioningFrequencyLayer may comprise at least one of: SL-PRS-SubcarrierSpacing, SL-PRS-ResourceBandwidth, and/or SL-PRS-StartPRB. The SL-PRS-SubcarrierSpacing may indicate Subcarrier Spacing of the sidelink PRS (e.g., kHz 15, kHz30, kHz60, kHz120). The SL-PRS-StartPRB may indicate start of physical resource block (PRB) for the sidelink PRS. The SL-PRS-ResourceBandwidth may indicate sidelink PRS resource bandwidth.

The first parameter/Ranging Method may indicate a type of ranging method of Sidelink Downlink Time Difference of Arrival (SL-DTDOA) supported by the first wireless device and/or the second wireless device, the second parameter/ Ranging Capability may indicate the first wireless device and/or the second wireless device support ranging service, the second parameter/ Ranging Capability may indicate the first wireless device and/or the second wireless device does not support inter-frequency RSTD measurement, based on above information, the base station may determine sidelink positioning assistance data for the ranging service by using the ranging method of SL-DTDOA. For example, the base station may determine sidelink positioning assistance data for SL-DTDOA, where the sidelink positioning assistance data may be used by the TPs, the second wireless device and/or the first wireless device to perform ranging service. For example, based on the second parameter/ Ranging Capability that the first wireless device and/or the second wireless device does not support inter-frequency RSTD measurement, the base station may determine sidelink positioning assistance data comprising a same carrier frequency, where the same carrier frequency may be used as the frequency of SL-PRS between the TPs and the second wireless device to perform the ranging service, e.g., the TPs send the SL-PRS over the same carrier frequency to the second wireless device, and the second wireless device may measure the SL-PRS and may send the measurement reports to the first wireless device. For example, the sidelink positioning assistance data may comprise bandwidth of the same carrier frequency which may be used as the bandwidth of the SL-PRS. For example, the sidelink positioning assistance data may comprise configuration parameter of 1 antenna for each of the TP, where the 1 antenna of each of the TP may be used for sending SL-PRS to the second wireless device. For example, the sidelink positioning assistance data may comprise configuration parameter of 3 antenna for the second wireless device, where the 3 antennas of the second wireless device may be used to receive SL-PRS from 3 TPs.

The first parameter/Ranging Method may indicate a type of ranging method of SL-UTDOA supported by the first wireless device and/or the second wireless device, the second parameter/ Ranging Capability may indicate the first wireless device and/or the second wireless device support ranging service, the second parameter/ Ranging Capability may indicate the first wireless device and/or the second wireless device support inter-frequency RSTD measurement, based on above information, the base station may determine sidelink positioning assistance data for the ranging service by using the ranging method of SL-UTDOA. For example, the base station may determine sidelink positioning assistance data for SL-UTDOA, where the sidelink positioning assistance data may be used by the RPs, the second wireless device and/or the first wireless device to perform ranging service. For example, based on the second parameter/ Ranging Capability that the first wireless device and/or the second wireless device support inter-frequency RSTD measurement, the base station may determine sidelink positioning assistance data comprising different carrier frequencies. For example, the different carrier frequencies may comprise a carrier frequency 1 used between RP 1 and the second wireless device, a carrier frequency 2 used between RP 2 and the second wireless device, and/or carrier frequency 3 used between RP 3 and the second wireless device. The different carrier frequencies may be used as the frequency of SL-PRS between the RPs and the second wireless device to perform the ranging service, e.g., the second wireless device sends the SL-PRS to RP 1 over the carrier frequency 1, the second wireless device sends the SL-PRS to RP 2 over the carrier frequency 2, and/or the second wireless device sends the SL-PRS to RP 3 over the carrier frequency 3. For example, the sidelink positioning assistance data may comprise bandwidth of the carrier frequency 1, bandwidth of the carrier frequency 2, and/or bandwidth of the carrier frequency 3. For example, the sidelink positioning assistance data may comprise configuration parameter of 1 antenna for each of the RP, where the 1 antenna of each of the RP may be used for receiving SL-PRS from the second wireless device. For example, the sidelink positioning assistance data may comprise configuration parameter of 3 antenna for the second wireless device, where the 3 antennas of the second wireless device may be used to send SL-PRS from to 3 RPs. For example, the sidelink positioning assistance data may comprise configuration parameters of radio resources (frequency resource, time resource, radio bearer resource), where the radio resources may be used by the RPs to send measurement reports to the first wireless device.

The first parameter/Ranging Method may indicate a type of ranging method of SL-UPDOA supported by the first wireless device and/or the second wireless device, the second parameter/ Ranging Capability may indicate the first wireless device and/or the second wireless device support ranging service, based on above information, the base station may determine sidelink positioning assistance data for the ranging service by using the ranging method of SL-UPDOA. For example, the base station may determine sidelink positioning assistance data for SL-UPDOA, where the sidelink positioning assistance data may be used by the first wireless device and/or the second wireless device to perform ranging service. For example, the sidelink positioning assistance data may comprise configuration parameters of radio resources (frequency resource, time resource, radio bearer resource), where the radio resources may be used by the second wireless device to send SL-PRS to the first wireless device. For example, the radio resources may comprise carrier frequency of SL-PRS, bandwidth of SL-PRS, and/or radio bearer resource of SL-PRS. For example, the sidelink positioning assistance data may comprise configuration parameter of 2 antenna for the first wireless device, where the 2 antennas of the first wireless device may be used to receive SL-PRS from the first wireless device. For example, the sidelink positioning assistance data may comprise configuration parameter of 1 antenna for the second wireless device, where the 1 antenna of the second wireless device may be used to send SL-PRS to the first wireless device.

The base station may send a second message 4005 to the first wireless device and/or the second wireless device. The second message 4005 may comprise the configuration parameters for radio resources and/or the configuration parameters for antennas to perform ranging service by using the ranging method. The second message 4005 may comprise the sidelink positioning assistance data for the ranging service by using the ranging method.

The second message 4005 may comprise a RRC message, wherein the RRC message may comprise at least one of the following messages: RRCReconfiguration; an MSG 4; a RRCSetup; a RRCResume; UEReconfiguration; UEInformationRequest; and/or UECapabilityEnquiry. The second message comprise a MAC layer message (e.g., MAC Control Element (CE)). The second message may comprise a physical layer message (e.g., a DCI message over a PDCCH).

The base station may send a message 4006 (e.g., ProvideAssistanceData) to the TPs/RPs. The ProvideAssistanceData message 4006 may comprise the sidelink positioning assistance data for the ranging service by using the ranging method.

In response to receiving the second message 4005, the first wireless device (e.g., UE1) may take one or more actions. The first wireless device may establish a PC5 RRC connection to the second wireless device, for example, based on the configuration parameters for radio resources (e.g., time resource, frequency resource, radio bearer resource) and/or the configuration parameters for antennas to perform ranging service. The first wireless device may establish one or more radio bearers with the second wireless device, the one or more radio bearers may be associated with the PC5 RRC connection, for example, based on the configuration parameters for radio resources. For example, the one or more radio bearers may comprise a signaling radio bearer to transfer/receive signaling between the first wireless device and the second wireless device. For example, the one or more radio bearers may comprise a data radio bearer to transfer data (e.g., measurement report) between the first wireless device and the second wireless device.

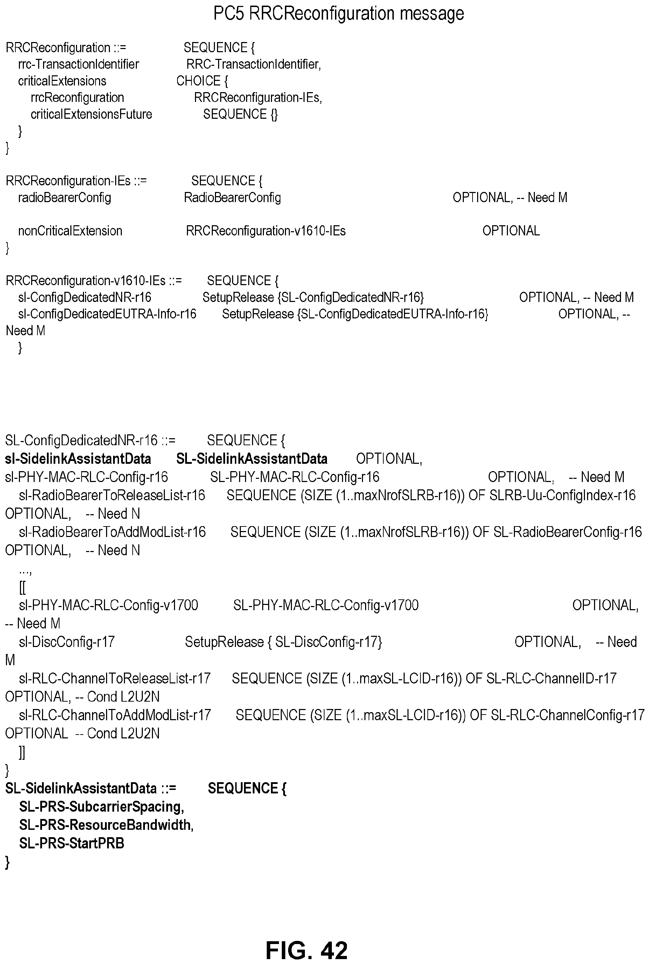

The first wireless device may send a message 4007 (e.g., PC5 RRCReconfiguration) message to the second wireless device. The PC5 RRCReconfiguration message 4007 may comprise the ranging method, the configuration parameters for radio resources and/or the configuration parameters for antennas to perform ranging service by using the ranging method. The PC5 RRCReconfiguration 4007 message may comprise the sidelink positioning assistance data for the ranging service by using the ranging method. FIG. 42 is an example diagram depicting a PC5 RRCReconfiguration, where the PC5 RRCReconfiguration message 4007 comprises a parameter SL-SidelinkAssistantData indicating sidelink positioning assistance data for the ranging service.

The first wireless device, the second wireless device and/or TPs/RPs may perform ranging service based on: the configuration parameters for radio resources to perform ranging service, the configuration parameters for antennas to perform ranging service, and/or sidelink positioning assistance data for the ranging service.

The first wireless device may perform ranging service with the second wireless device such as described with respect to FIG. 34, for example, based on the ranging method of Two Way Ranging, based on the configuration parameters for radio resources to perform ranging service, and/or based on the configuration parameters for antennas to perform ranging service. The first wireless device may determine/calculate the range/position (e.g., distance) of the second wireless device by measuring the RTT between the first wireless device and the second wireless device. The first wireless device may send the range/position (e.g., distance) of the second wireless device to the second wireless device over the PC5 RRC connection.

The RPs, the first wireless device and/or the second wireless device may perform ranging service such as described with respect to FIG. 35, for example, based on the ranging method of SL-UTDOA, based on the configuration parameters for radio resources to perform ranging service, based on the configuration parameters for antennas to perform ranging service, and/or based on the sidelink positioning assistance data for the ranging service. The second wireless device may send a SL-PRS to 3 RPs, for example, based on the configuration parameters for radio resources, based on the configuration parameters for antennas, and/or based on the sidelink positioning assistance data. The 3 RPs may measure the SL-PRS and send measurement reports to the first wireless device, for example, based on the sidelink positioning assistance data. The measurement reports may comprise at least one of: a PRS resource ID indicating a PRS resource (e.g., nr-SL-PRS-ResourceId), a time stamp indicating detected path timing values of the SL-PRS (e.g., nr-TimeStamp, e.g., a time value indicating when received the SL-PRS, e.g., t1, t2, t3 as shown in FIG. 24), and/or a Signal Received Power (e.g., nr-PRS-RSRP) of the SL-PRS, and/or best estimate of the quality of the measurement of the RP (e.g., nr-TimingMeasQuality). The first wireless device may calculate the ranging/position/location of the second wireless device based on the measurement reports. The first wireless device may send the range/position (e.g., distance and/or direction) of the second wireless device to the second wireless device over the PC5 RRC connection.

The TPs, the first wireless device and/or the second wireless device may perform ranging service such as described with respect to FIG. 36, for example, based on the ranging method of SL-DTDOA, based on the configuration parameters for radio resources to perform ranging service, based on the configuration parameters for antennas to perform ranging service, and/or based on the sidelink positioning assistance data for the ranging service. The TPs may send a SL-PRS to the second wireless device, for example, based on the configuration parameters for radio resources, based on the configuration parameters for antennas, and/or based on the sidelink positioning assistance data. The second wireless device measure the received signals based on the sidelink positioning assistance data. The second wireless device may send a measurement report to the first wireless device, and the measurement report may comprise at least one of: a PRS resource ID indicating a PRS resource (e.g., nr-SL-PRS-ResourceId), each time stamp indicating detected path timing values of the SL-PRS for each of the TPs (e.g., nr-TimeStamp, e.g., a time value indicating when received the SL-PRS, e.g., t1, t2, t3 as shown in FIG. 35), a Signal Received Power (e.g., nr-PRS-RSRP) of the SL-PRS, relative timing difference between a neighbor TP and a reference TP (e.g., nr- Reference Signal Time Difference (nr-RSTD)), and/or best estimate of the quality of the measurement of the second wireless device (e.g., nr-TimingMeasQuality). The first wireless device may calculate the ranging/position/location of the second wireless device based on the measurement reports. The first wireless device may send the range/position (e.g., distance and/or direction) of the second wireless device to the second wireless device over the PC5 RRC connection.

The first wireless device and/or the second wireless device may perform ranging service such as described with respect to FIG. 37, for example, based on the ranging method of SL-UPDOA, based on the configuration parameters for radio resources to perform ranging service, based on the configuration parameters for antennas to perform ranging service, and/or based on the sidelink positioning assistance data for the ranging service. The first wireless device may measure the Azimuth Angle of Arrival (A-AoA), the Zenith Angle of Arrival (Z-AoA) and/or nr-PRS-RSRP of the reference signal transmitted from the second wireless device. The first wireless device may calculate the ranging/position/location of the second wireless device based on the measurement results. The first wireless device may send the range/position (e.g., distance and/or direction) of the second wireless device to the second wireless device over the PC5 RRC connection.

The first wireless device and/or the second wireless device may perform ranging service such as described with respect to FIG. 38, for example, based on the ranging method of SL-DPDOA, based on the configuration parameters for radio resources to perform ranging service, based on the configuration parameters for antennas to perform ranging service, and/or based on the sidelink positioning assistance data for the ranging service. The second wireless device may have multiple antennas, each of the multiple antennas may be a RP. By using assistance data received from a location server (e.g., a LMF, a base station), the multiple RPs may measure the Azimuth Angle of Arrival (A-AoA) and/or the Zenith Angle of Arrival (Z-AoA) of the reference signal transmitted from the first wireless device. The second wireless device may send a measurement report to the first wireless device, and the measurement report may comprise measured results (e.g., A-AoA, Z-AoA, nr-PRS-RSRP). The first wireless device may calculate the ranging/position/location of the second wireless device based on the measurement report. The first wireless device may send the range/position (e.g., distance and/or direction) of the second wireless device to the second wireless device over the PC5 RRC connection.

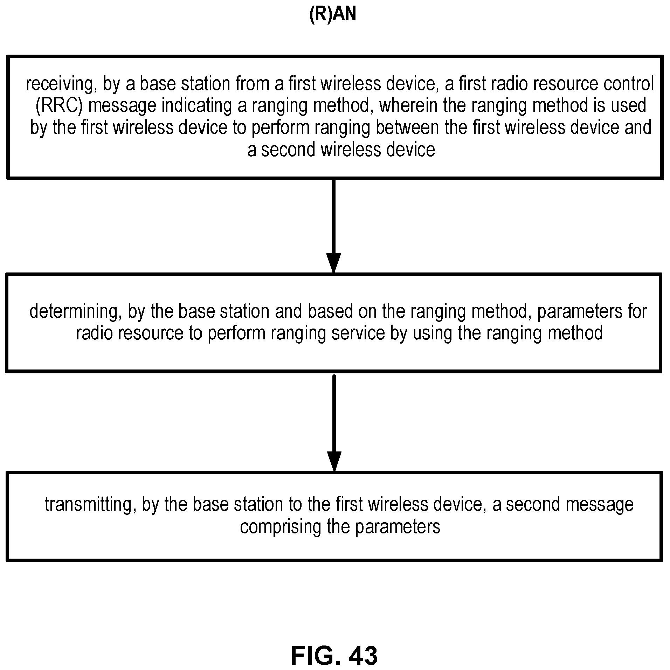

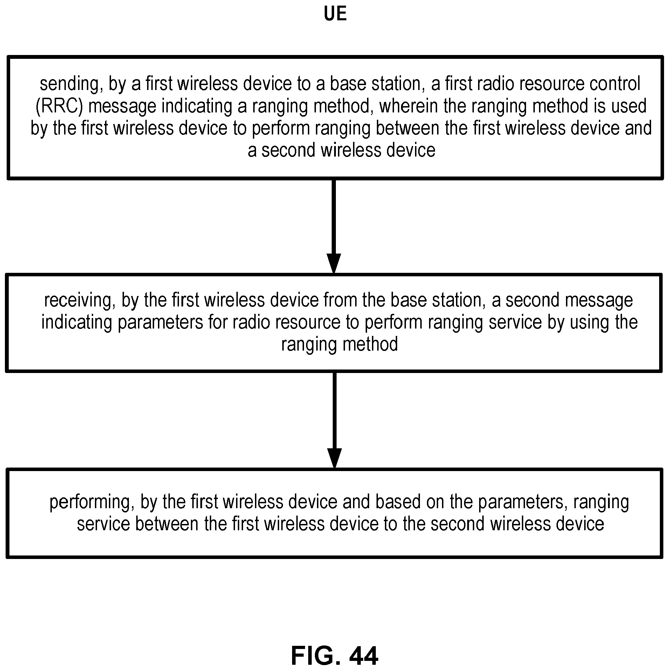

FIG. 43 is an example diagram depicting the procedures of a base station as per an aspect of an embodiment of the present disclosure. FIG. 44 is an example diagram depicting the procedures of a wireless device as per an aspect of an embodiment of the present disclosure.

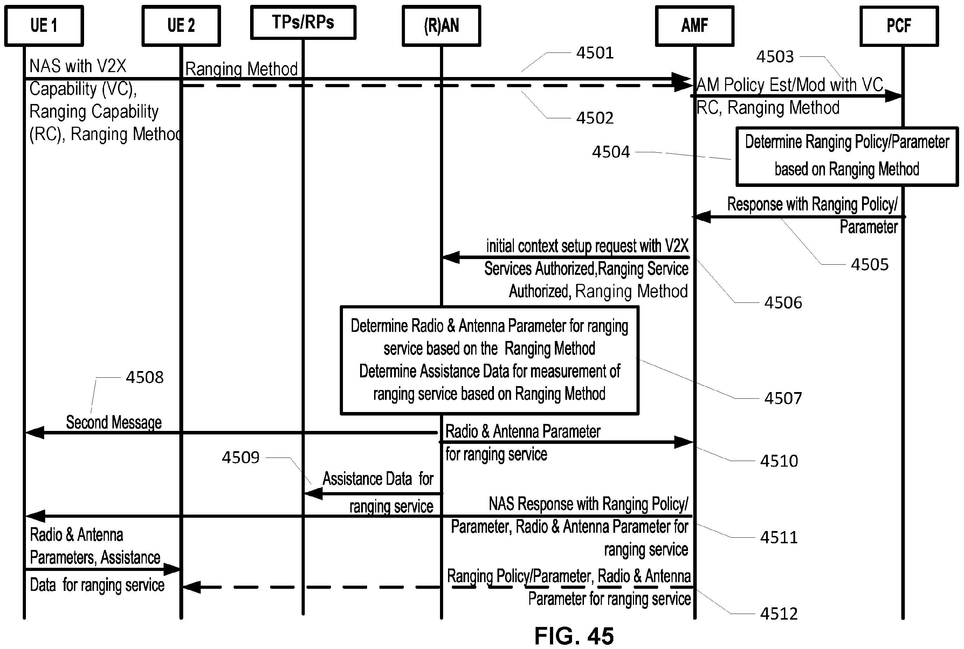

FIG. 45 is an example call flow as per an aspect of an embodiment of the present disclosure. The first wireless device (e.g., UE1) may determine a ranging method to perform ranging between the first wireless device and the second wireless device (e.g., UE2) as described in FIG. 40. A first wireless device may send a first message 4501 to an AMF. The first message 4501 may indicate a ranging method, wherein the ranging method is used by the first wireless device to perform ranging between the first wireless device and a second wireless device (e.g., the first wireless device to range/position the second wireless device, e.g., UE2). The first message may comprise a first parameter (e.g., Ranging Method) indicating a type of ranging method. The first parameter/Ranging Method may comprise/indicate at least one of the following methods: Two Way Ranging, Sidelink Uplink Time Difference of Arrival (SL-UTDOA), Sidelink Downlink Time Difference of Arrival (SL-DTDOA), Sidelink Uplink Phase Difference of Arrival (SL-UPDOA), and/or Sidelink Downlink Phase Difference of Arrival (SL-DPDOA). The definition/content of the first parameter/Ranging Method may be similar to (and/or the same as) the definition/content of the first parameter/Ranging Method as described in FIG. 40. For brevity, further description will not be repeated here.

The first message 4501 may comprise a second parameter (e.g., Ranging Capability) indicating whether the first wireless device and/or the second wireless device supports ranging service. The definition/content of the second parameter/ Ranging Capability may be similar to (and/or the same as) the definition/content of the second parameter/ Ranging Capability as described in FIG. 40.

The first message 4501 may comprise a third parameter (e.g., PC5 Capability) indicating whether the first wireless device and/or the second wireless device is/are able to perform ranging service over PC5 reference point.
The definition/content of the third parameter/ PC5 Capability may be similar to (and/or the same as) the definition/content of the third parameter/ PC5 Capability as described in FIG. 40.

The first message 4501 may comprise a fourth parameter (e.g., V2X Capability) indicating a V2X capability of the first wireless device and/or the second wireless device. The definition/content of the fourth parameter/ V2X Capability may be similar to (and/or the same as) the definition/content of the fourth parameter/ V2X Capability as described in FIG. 40.

The first message 4501 may comprise a fifth parameter (e.g., ProSe Capability) indicating a ProSe Capability of the first wireless device and/or the second wireless device. The definition/content of the fifth parameter/ ProSe Capability may be similar to (and/or the same as) the definition/content of the fifth parameter/ ProSe Capability as described in FIG. 40.

The first message 4501 may comprise a sixth parameter (e.g., Ranging Accuracy) indicating an accuracy of the ranging service supported by the first wireless device and/or the second wireless device. The definition/content of the sixth parameter/Ranging Accuracy may be similar to (and/or the same as) the definition/content of the sixth parameter/Ranging Accuracy as described in FIG. 40.

The first message 4501 may comprise an identity of the first wireless device. A first RRC message may comprise an identity of the second wireless device. The definition/content of the identity of the first wireless device/ identity of the second wireless device may be similar to (and/or the same as) the definition/content of the identity of the first wireless device/ identity of the second wireless device as described in FIG. 40.

The first message 4501 may comprise a parameter/ Ranging/SL Positioning Policy Provisioning Request, the parameter/ Ranging/SL Positioning Policy Provisioning Request may indicate the wireless device requesting policy authorization for the ranging services from the network.

The first message 4501 may be a NAS message, wherein the NAS message may comprise a registration request message. The first wireless device may send a registration request message to an AMF via the base station. The registration request message may comprise at least one of: the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device.

The first message 4501 may comprise a RRC message (e.g., RRCSetupComplete) and/or a NAS message (e.g., registration request). For example, the wireless device may send a RRCSetupComplete message to a base station (e.g., (R)AN as shown in FIG. 45), where the RRCSetupComplete message may comprise a registration request message, and the (R)AN may forward the registration request message to the AMF. The registration request message may comprise at least one of: registration type, the identity of the first wireless device/UE identity (e.g., SUCI, SUPI and/or 5G-GUTI), last visited TAI (if available), security parameters, requested NSSAI, mapping of requested NSSAI, UE 5GC capability, PDU session status, PDU session(s) to be re-activated, Follow on request, MICO mode preference, and/or the like.

The AMF may also receive a first message 4503 from the second wireless device, where the content of the first message 4502 received from the second wireless device may be similar to (and/or the same as) the content of the first message 4501 received from the first wireless device. The discussion below refers to first message 4501 as an example, but the same features may use first message 4502 as well.

In response to receiving the first message 4501, the AMF may take one or more actions. The AMF may determine/select a network node (e.g., PCF/AUSF) for authorization for the first wireless device for the ranging services, for example, based on the one or more parameters of the first message 4501 received from the first wireless device. The AMF may send a message 4503 (e.g., Authorization Request, AM Policy Establishment/Modification Request) to the network node (e.g., PCF/AUSF) requesting to authorize the wireless device (e.g., UE1, which sent first message 4501) to perform the ranging services. The Authorization Request message and/or the AM Policy Establishment/Modification Request message may comprise one or more parameters of the first message 4501. For example, the Authorization Request message and/or the AM Policy Establishment/Modification Request message may comprise at least one of: the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device, the identity of the second wireless device, and/or the parameter/ Ranging/SL Positioning Policy Provisioning Request.

For example, in response to receiving the message 4503, the PCF/AUSF may take one or more actions 4504. The PCF/AUSF may determine whether to accept the request of the first wireless device/second wireless device to perform the ranging service. For example, based on the local configuration/policy, subscription of the first wireless device, subscription of the second wireless device, the first parameter/Ranging Method, the second parameter/ Ranging Capability, the third parameter/ PC5 Capability, the fourth parameter/ V2X Capability, the fifth parameter/ ProSe Capability, and/or the sixth parameter/Ranging Accuracy, the PCF/AUSF may determine to accept the request of the wireless device to perform the ranging services, for example, based on the one or more parameters of the Authorization Request message and/or the AM Policy Establishment/Modification Request message. The PCF/AUSF may determine a parameter (e.g., Ranging Service Indication) indicating accepting the request of the first wireless device to perform the ranging service. The parameter/ Ranging Service Indication may indicate the first wireless device and/or the second wireless device is allowed to perform the ranging service.

The PCF/AUSF may determine Ranging Policy/Parameters for the ranging service, for example, based on the one or more parameters of the Authorization Request message and/or the AM Policy Establishment/Modification Request message. The Ranging Policy/Parameters may indicate policies and/or parameters for the ranging service. The Ranging Policy/Parameters may comprise at least one of: the ranging method, PLMNs in which the first wireless device and/or the second wireless device is authorized to perform ranging service; RAT(s) over which the first wireless device and/or the second wireless device is authorized to perform ranging service; radio parameters for the first wireless device and/or the second wireless device to perform ranging service; policy/parameters for PC5 RAT selection and for PC5 Tx Profile selection for the first wireless device and/or the second wireless device to perform ranging service; and/or QoS parameters for the first wireless device and/or the second wireless device to perform the ranging service.

The first parameter/Ranging Method may indicate a type of ranging method of Sidelink Downlink Time Difference of Arrival (SL-DTDOA) supported by the first wireless device and/or the second wireless device, the second parameter/ Ranging Capability may indicate the first wireless device and/or the second wireless device support ranging service, the second parameter/ Ranging Capability may indicate the first wireless device and/or the second wireless device does not support inter-frequency RSTD measurement, based on above information, the PCF/AUSF may determine PLMNs in which the first wireless device and/or the second wireless device is authorized to perform ranging service; RAT(s) over which the first wireless device and/or the second wireless device is authorized to perform ranging service, where the PLMNs and/or RAT(s) support the same frequency RSTD measurement.

The first parameter/Ranging Method may indicate a type of ranging method of Two Way Ranging, the second parameter/ Ranging Capability may indicate the first wireless device and/or the second wireless device support ranging service, based on above information, the PCF/AUSF may determine QoS parameters for the first wireless device and/or the second wireless device to perform the ranging service by using the Two Way Ranging.

The PCF/AUSF may send a response message 4505 (Authorization Response, AM Policy Establishment/Modification Response) to the AMF indicating whether to accept the request of the first wireless device to perform the ranging service. For example, the Authorization Response and/or the AM Policy Establishment/Modification Response may comprise the parameter/ Ranging Service Indication indicating whether to accept the request of the first wireless device to perform the ranging service. The Authorization Response and/or the AM Policy Establishment/Modification Response may comprise the Ranging Policy/Parameters.

For example, in response to the message 4505, the AMF may take one or more actions. The AMF may send a message 4506 to the base station, for example, based on the Authorization Response and/or the AM Policy Establishment/Modification Response. For example, based on the Authorization Response and/or the AM Policy Establishment/Modification Response and/or the parameter/ Ranging Service Indication indicating to accept the request of the wireless device to perform the ranging service, the AMF may send a message 4506 (e.g., Initial Context Setup Request) to the base station to request radio resource allocation for the ranging service. The Initial Context Setup Request message 4506 may comprise the parameter/ Ranging Service Indication. The Initial Context Setup Request message 4506 may comprise plurality of indications of authorization for plurality of sidelink services. The Initial Context Setup Request message 4506 may comprise the Ranging Policy/Parameters.

For example, the Initial Context Setup Request message 4506 may comprise a first indication indicating authorization of ranging service, a second indication indicating authorization of V2X service, and/or a third indication indicating authorization of relay service. The Initial Context Setup Request message 4506 may comprise one or more parameters of the first message 4501. For example, the Initial Context Setup Request message may comprise at least one of: the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device.

In response to the message 4506, the base station may take one or more actions 4507. The base station may determine configuration parameters for radio resources and/or configuration parameters for one or more antennas to perform a ranging service using one or more ranging methods, for example, based on the Initial Context Setup Request message 4506. For example, based on the parameter/ Ranging Service Indication, the plurality of indications of authorization for plurality of sidelink services, the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device, the base station may determine configuration parameters for radio resources and/or configuration parameters for antennas to perform ranging service by using the ranging method. The procedure to determine configuration parameters for radio resources and/or configuration parameters for one or more antennas to perform a ranging service may be similar to (and/or the same as) the procedure to determine configuration parameters for radio resources and/or configuration parameters for one or more antennas as described in FIG. 40. For brevity, further description will not be repeated here. In addition to the determining procedure of the base station such as described with respect to FIG. 40, the base station may also determine configuration parameters for radio resources and/or configuration parameters for one or more antennas based on the parameter/ Ranging Service Indication and/or the plurality of indications of authorization for plurality of sidelink services. For example, the parameter/ Ranging Service Indication and/or the plurality of indications of authorization for plurality of sidelink services may indicate the network authorizes ranging service to the wireless device, based on the indication(s) of authorization, the base station may determine configuration parameters for radio resources and/or configuration parameters for one or more antennas for ranging service.

The base station may determine sidelink positioning assistance data for the ranging service by using the ranging method, for example, based on the Initial Context Setup Request message 4506 and/or TPs/RPs information. For example, based on the TPs/RPs information, the parameter/ Ranging Service Indication, the plurality of indications of authorization for plurality of sidelink services, the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device, the base station may determine sidelink positioning assistance data for the ranging service by using the ranging method. The procedure to determine sidelink positioning assistance data for the ranging service may be similar to (and/or the same as) the procedure to determine sidelink positioning assistance data for the ranging service as described in FIG. 40. In addition to the determining procedure of the base station as described in FIG. 40, the base station may also determine sidelink positioning assistance data based on the parameter/ Ranging Service Indication and/or the plurality of indications of authorization for plurality of sidelink services. For example, the parameter/ Ranging Service Indication and/or the plurality of indications of authorization for plurality of sidelink services may indicate the network authorizes ranging service to the wireless device, based on the indication(s) of authorization, the base station may determine sidelink positioning assistance data for ranging service.

The base station may send a second message 4508 to the wireless device. The second message 4508 may be a RRC message (e.g., RRCReconfiguraiton, SIB message). The second message 4508 may be MAC layer message (e.g., MAC Control Element (CE)). The second message 4508 may be physical layer message (e.g., a DCI message over a PDCCH). The second message 4508 may comprise the configuration parameters for radio resources and/or the configuration parameters for antennas to perform ranging service by using the ranging method. The second message 4508 may comprise the sidelink positioning assistance data for the ranging service by using the ranging method. The definition/content of the second message 4508 may be similar to (and/or the same as) the second message as described in FIG. 40.

The base station may send a message 4509 (e.g., ProvideAssistanceData) to the TPs/RPs. The ProvideAssistanceData message may comprise the sidelink positioning assistance data for the ranging service by using the ranging method. The definition/content of the ProvideAssistanceData message may be similar to (and/or the same as) the ProvideAssistanceData message as described in FIG. 40.

The base station may send a response message 4510 (e.g., Initial Context Setup Response) to the AMF. The Initial Context Setup Response message 4510 may indicate whether the base station accepts the request to allocate resource for the ranging service. The Initial Context Setup Response message 4510 may comprise at least one of: the configuration parameters for radio resources to perform ranging service by using the ranging method, the configuration parameters for antennas to perform ranging service by using the ranging method, and/or the sidelink positioning assistance data for the ranging service by using the ranging method.

In response to the first message 4501, and/or in response to the message 4510 received from the base station, the AMF may send a third message 4511 to the first wireless device. The AMF may send the third message 4511 to the first wireless device via the base station. The third message 4511 may be a response message to the first message 4501. The third message 4511 may be a NAS response (e.g., registration response) message. The registration response message 4511 comprises a registration reject message indicating rejecting the registration request in the first message 4501. The registration response message may comprise a registration accept message indicating accepting the registration request in the first message 4501. The third message/registration response message 4511 may indicate accepting the request of the first wireless device to perform the ranging service.

The third message 4511 may comprise at least one of: the configuration parameters for radio resources to perform ranging service by using the ranging method, the configuration parameters for antennas to perform ranging service by using the ranging method, and/or the sidelink positioning assistance data for the ranging service by using the ranging method.

The third message 4511 may comprise at least one of: the parameter/ Ranging Service Indication and/or the plurality of indications of authorization for plurality of sidelink services. The third message 4511 may comprise Ranging Policy/Parameters.

The registration response/ Registration Accept message 4511 may comprise at least one of: 5G-GUTI, Registration Area, [Mobility restrictions], [PDU Session status], [Allowed NSSAI], [Mapping Of Allowed NSSAI], [Configured NSSAI for the Serving PLMN], [Mapping Of Configured NSSAI], [NSSRG Information], [rejected S-NSSAIs], [Pending NSSAI], [Mapping Of Pending NSSAI], [Periodic Registration Update timer], [Active Time], [Strictly Periodic Registration Timer Indication], [LADN Information], [accepted MICO mode], and/or the like.

The AMF may send a third message 4512 to the second wireless device. The content of the third message 4512 sent to the second wireless device may be similar to (and/or the same as) the third message 4511 sent to the first wireless device.

In response to receiving the message 4511 from the AMF and/or in response to receiving the second message 4508 from the base station, the first wireless device, the second wireless device and/or the TPs/RPs may take one or more actions. The actions taken by the first wireless device and/or the second wireless device may be similar to (and/or the same as) the actions taken by the first wireless device and/or the second wireless device after received the second message as described in FIG. 40. The actions taken by the TPs/RPs may be similar to (and/or the same as) the actions taken by TPs/RPs after received the ProvideAssistanceData message as described in FIG. 40.

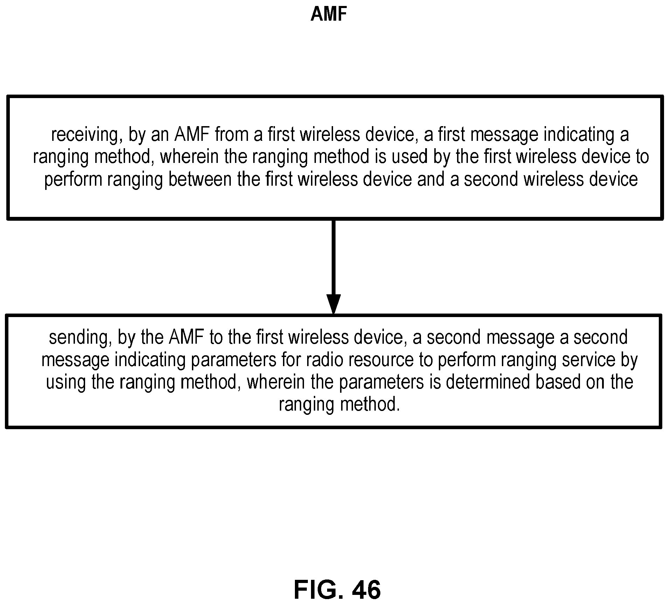

FIG. 46 is an example diagram depicting the procedures of an AMF as per an aspect of an embodiment of the present disclosure.

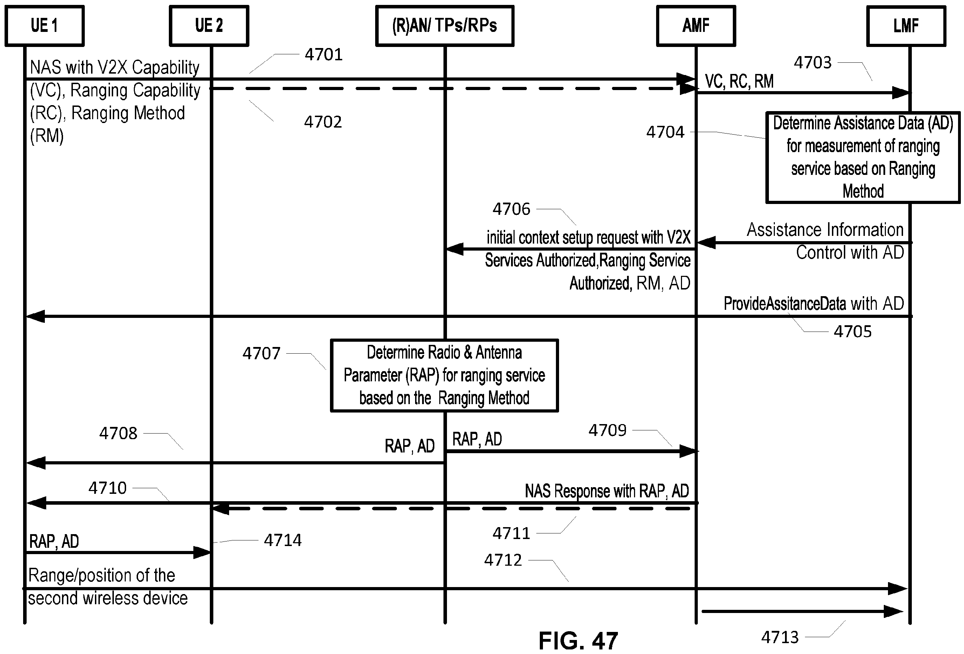

FIG. 47 is an example call flow as per an aspect of an embodiment of the present disclosure. The first wireless device (e.g., UE1) may determine a ranging method to perform ranging between the first wireless device and the second wireless device as described in FIG. 40. A network function may receive a first message 4701 from a first wireless device, wherein the first message 4701 may indicate a ranging method used by the first wireless device to perform ranging between the first wireless device and a second wireless device (e.g., UE2). The network function may be an AMF. The network function may be a location management function (LMF). The network function may be a base station. The network function may determine configuration parameters for radio resources and/or configuration parameters for one or more antennas to perform a ranging service by using the ranging method, for example, based on the ranging method. The network function may determine sidelink positioning assistance data for the ranging service by using the ranging method, for example, based on the ranging method.

A wireless device may send a first message 4701 to an AMF. The first message 4701 may indicate a ranging method, wherein the ranging method is used by the first wireless device to perform ranging between the first wireless device and a second wireless device (e.g., the first wireless device to range/position the second wireless device). The first message 4701 may comprise a first parameter (e.g., Ranging Method) indicating a type of ranging method. The first parameter/Ranging Method may comprise/indicate at least one of the following methods: Two Way Ranging, Sidelink Uplink Time Difference of Arrival (SL-UTDOA), Sidelink Downlink Time Difference of Arrival (SL-DTDOA), Sidelink Uplink Phase Difference of Arrival (SL-UPDOA), and/or Sidelink Downlink Phase Difference of Arrival (SL-DPDOA). The definition/content of the first parameter/Ranging Method may be similar to (and/or the same as) the definition/content of the first parameter/Ranging Method as described in FIG. 40. For brevity, further description will not be repeated here.

The first message 4701 may comprise a second parameter (e.g., Ranging Capability) indicating whether the first wireless device and/or the second wireless device supports ranging service. The definition/content of the second parameter/ Ranging Capability may be similar to (and/or the same as) the definition/content of the second parameter/ Ranging Capability as described in FIG. 40.

The first message 4701 may comprise a third parameter (e.g., PC5 Capability) indicating whether the first wireless device and/or the second wireless device is/are able to perform ranging service over PC5 reference point.
The definition/content of the third parameter/ PC5 Capability may be similar to (and/or the same as) the definition/content of the third parameter/ PC5 Capability as described in FIG. 40.

The first message 4701 may comprise a fourth parameter (e.g., V2X Capability) indicating a V2X capability of the first wireless device and/or the second wireless device. The definition/content of the fourth parameter/ V2X Capability may be similar to (and/or the same as) the definition/content of the fourth parameter/ V2X Capability as described in FIG. 40.

The first message 4701 may comprise a fifth parameter (e.g., ProSe Capability) indicating a ProSe Capability of the first wireless device and/or the second wireless device. The definition/content of the fifth parameter/ ProSe Capability may be similar to (and/or the same as) the definition/content of the fifth parameter/ ProSe Capability as described in FIG. 40.

The first message 4701 may comprise a sixth parameter (e.g., Ranging Accuracy) indicating an accuracy of the ranging service supported by the first wireless device and/or the second wireless device. The definition/content of the sixth parameter/Ranging Accuracy may be similar to (and/or the same as) the definition/content of the sixth parameter/Ranging Accuracy as described in FIG. 40.

The first message 4701 may comprise an identity of the first wireless device. A first RRC message may comprise an identity of the second wireless device. The definition/content of the identity of the first wireless device/ identity of the second wireless device may be similar to (and/or the same as) the definition/content of the identity of the first wireless device/ identity of the second wireless device as described in FIG. 40.

The first message 4701 may comprise a parameter/ Ranging/SL Positioning Policy Provisioning Request, the parameter/ Ranging/SL Positioning Policy Provisioning Request may indicate the wireless device requesting policy authorization for the ranging services from the network.

The first message 4701 may be a NAS message, wherein the NAS message may comprise a registration request message. The first wireless device may send a registration request message 4701 to an AMF via the base station. The registration request message may comprise at least one of: the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device.

The first message 4701 may comprise a RRC message (e.g., RRCSetupComplete) and/or a NAS message (e.g., registration request). For example, the wireless device may send a RRCSetupComplete message to a base station (e.g., (R)AN as shown in FIG. 45), where the RRCSetupComplete message may comprise a registration request message, and The (R)AN may forward the registration request message to the AMF. The registration request message may comprise at least one of: registration type, the identity of the first wireless device/UE identity (e.g., SUCI, SUPI and/or 5G-GUTI), last visited TAI (if available), security parameters, requested NSSAI, mapping of requested NSSAI, UE 5GC capability, PDU session status, PDU session(s) to be re-activated, Follow on request, MICO mode preference, and/or the like.

The AMF may receive a first message 4702 from the second wireless device, where the content of the first message 4702 received from the second wireless device may be similar to (and/or the same as) the content of the first message 4701 received from the first wireless device. The references below to the first message 4701 may apply to the first message 4702 as well.

In response to receiving the first message 4701, the AMF may take one or more actions. The AMF may determine/select a location management function (LMF) for ranging service, for example, based on the one or more parameters of the first message 4701 received from the first wireless device. For example, based on the first parameter/Ranging Method, the second parameter/ Ranging Capability, and/or a capability of an LMF supporting ranging service, the AMF may determine/select an LMF for ranging service. The AMF may send a message 4703 (e.g., Nlmf_Location_DetermineLocation) to the LMF. The Nlmf_Location_DetermineLocation message 4703 may indicate requesting range/position/location of the second wireless device by the first wireless device. The Nlmf_Location_DetermineLocation message 4703 may comprise one or more parameters of the first message. For example, the Nlmf_Location_DetermineLocation message 4703 may comprise at least one of: the first parameter/Ranging Method (RM), the second parameter/ Ranging Capability (RC), the third parameter/ PC5 Capability, the fourth parameter/ V2X Capability (VC), the fifth parameter/ ProSe Capability, the sixth parameter/Ranging Accuracy, the identity of the first wireless device, the identity of the second wireless device, and/or the parameter/ Ranging/SL Positioning Policy Provisioning Request. In an example, the Nlmf_Location _DetermineLocation message 4703 may comprise QoS requirement for the ranging service and/or connectivity state (e.g., RRC_Connected, RM Registered, CM Connected) of the first wireless device and/or the second wireless device per access type (e.g., 3GPP, Non-3GPP, 4G, 5G). The
Nlmf_Location_DetermineLocation message 4703 may comprise TPs/RPs information.

In response to receiving the message 4703, the LMF may take one or more actions 4704. The LMF may determine positioning access type and/or the positioning method based on one or more parameters of the Nlmf_Location_DetermineLocation message 4703 (e.g., the UE/network positioning capability, the QoS requirement and UE connectivity state per access type) received from the AMF and the locally configured operator policy. The LMF may also determine the access type for transmission of an LPP message to the UE (e.g., in order to ensure the UE will be in a connected state for the selected positioning access type). For example, the first parameter/Ranging Method may indicate that the first wireless device supports Two Way Ranging, SL-UTDOA and/or SL-DTDOA, the second wireless device supports SL-DTDOA, the TPs/RPs information may indicate that TPs support the SL-DTDOA, the Nlmf_Location_DetermineLocation message 4703 may indicate both the first wireless device and the second wireless device support 3GPP 5G access, based on above information, the LMF may determine a ranging method/positioning method of SL-DTDOA, and/or the LMF may determine 3GPP 5G access will be used for ranging service. The LMF may determine a parameter (e.g., Ranging Method Indication) indicating determined/accepted ranging method/positioning method for ranging service.

For example, when LTE Positioning Protocol (LPP) protocol may be determined to be used to obtain location information from the first wireless device and the first wireless device has both 3GPP and non-3GPP access, the AMF may decide which access type should be used to transmit the location information if the LMF did not select an access type. For example, if the UE is in CM-IDLE state in 3GPP access and in CM-CONNECTED state in Non-3GPP access, AMF may prefer to select the non-3GPP Interworking Function (N3IWF) to relay positioning signaling to the first wireless device and/or the second wireless device, rather than performing paging procedures via the 3GPP access.

The LMF may determine sidelink positioning assistance data for the ranging service by using the ranging method, for example, based on the Nlmf_Location_DetermineLocation message 4703. For example, based on the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device, the identity of the second wireless device, and/or the TPs/RPs information, the LMF may determine sidelink positioning assistance data for the ranging service by using the ranging method. The definition/content of the sidelink positioning assistance data may be similar to (and/or the same as) the definition/content of the sidelink positioning assistance data as described in FIG. 40.

The first parameter/Ranging Method may indicate a type of ranging method of Sidelink Downlink Time Difference of Arrival (SL-DTDOA) supported by the first wireless device and/or the second wireless device, the second parameter/ Ranging Capability may indicate the first wireless device and/or the second wireless device support ranging service, the second parameter/ Ranging Capability may indicate the first wireless device and/or the second wireless device does not support inter-frequency RSTD measurement, based on above information, the LMF may determine sidelink positioning assistance data for the ranging service by using the ranging method of SL-DTDOA. For example, the LMF may determine sidelink positioning assistance data for SL-DTDOA, where the sidelink positioning assistance data may be used by the TPs, the second wireless device and/or the first wireless device to perform ranging service. For example, based on the second parameter/ Ranging Capability that the first wireless device and/or the second wireless device does not support inter-frequency RSTD measurement, the base station may determine sidelink positioning assistance data comprising a same carrier frequency, where the same carrier frequency may be used as the frequency of SL-PRS between the TPs and the second wireless device to perform the ranging service, e.g., the TPs send the SL-PRS over the same carrier frequency to the second wireless device, and the second wireless device may measure the SL-PRS and may send the measurement reports to the first wireless device. For example, the sidelink positioning assistance data may comprise bandwidth of the same carrier frequency which may be used as the bandwidth of the SL-PRS. For example, the sidelink positioning assistance data may comprise configuration parameter of 1 antenna for each of the TP, where the 1 antenna of each of the TP may be used for sending SL-PRS to the second wireless device. For example, the sidelink positioning assistance data may comprise configuration parameter of 3 antenna for the second wireless device, where the 3 antennas of the second wireless device may be used to receive SL-PRS from 3 TPs.

The first parameter/Ranging Method may indicate a type of ranging method of SL-UTDOA supported by the first wireless device and/or the second wireless device, the second parameter/ Ranging Capability may indicate the first wireless device and/or the second wireless device support ranging service, the second parameter/ Ranging Capability may indicate the first wireless device and/or the second wireless device support inter-frequency RSTD measurement, based on above information, the LMF may determine sidelink positioning assistance data for the ranging service by using the ranging method of SL-UTDOA. For example, the LMF may determine sidelink positioning assistance data for SL-UTDOA, where the sidelink positioning assistance data may be used by the RPs, the second wireless device and/or the first wireless device to perform ranging service. For example, based on the second parameter/ Ranging Capability that the first wireless device and/or the second wireless device support inter-frequency RSTD measurement, the base station may determine sidelink positioning assistance data comprising different carrier frequencies. For example, the different carrier frequencies may comprise a carrier frequency 1 used between RP 1 and the second wireless device, a carrier frequency 2 used between RP 2 and the second wireless device, and/or carrier frequency 3 used between RP 3 and the second wireless device. The different carrier frequencies may be used as the frequency of SL-PRS between the RPs and the second wireless device to perform the ranging service, e.g., the second wireless device sends the SL-PRS to RP 1 over the carrier frequency 1, the second wireless device sends the SL-PRS to RP 2 over the carrier frequency 2, and/or the second wireless device sends the SL-PRS to RP 3 over the carrier frequency 3. For example, the sidelink positioning assistance data may comprise bandwidth of the carrier frequency 1, bandwidth of the carrier frequency 2, and/or bandwidth of the carrier frequency 3. For example, the sidelink positioning assistance data may comprise configuration parameter of 1 antenna for each of the RP, where the 1 antenna of each of the RP may be used for receiving SL-PRS from the second wireless device. For example, the sidelink positioning assistance data may comprise configuration parameter of 3 antenna for the second wireless device, where the 3 antennas of the second wireless device may be used to send SL-PRS from to 3 RPs. For example, the sidelink positioning assistance data may comprise configuration parameters of radio resources (frequency resource, time resource, radio bearer resource), where the radio resources may be used by the RPs to send measurement reports to the first wireless device.

For example, in response to the Nlmf_Location _DetermineLocation message 4703, the LMF may send a location/ranging message 4705 (e.g., ProvideAssistanceData, Namf_Communication_N1N2MessageTransfer, Assistance Information Control) to the first wireless device indicating whether to accept the request of the first wireless device to perform the ranging service. For example, the LMF may send the location/ranging message 4705 to the first wireless device via the AMF and/or the base station (e.g., (R)AN). The LMF may send the location/ranging message 4705 to the AMF indicating whether to accept the request of the first wireless device to perform the ranging service. The location/ranging message 4705 may comprise a Downlink (DL) Positioning message for the first wireless device, where the Downlink (DL) Positioning message may comprise sidelink positioning assistance data for the ranging service. The location/ranging message 4705 may request the transfer of the Downlink (DL) Positioning message to the first wireless device. The location/ranging message 4705 may request the transfer of a Downlink (DL) Positioning message to the AMF/(R)AN/TPs/RPs. The location/ranging message 4705 may comprise the sidelink positioning assistance data for the ranging service by using the ranging method. The location/ranging message 4705 may comprise the access type for transmission of an LPP message to the UE and/or the parameter/Ranging Method Indication.

The Session ID parameter of the location/ranging message 4705 (e.g., Namf_Communication_N1N2MessageTransfer) may be set to the LCS Correlation identifier. The location/ranging message 4705 may request location information of the second wireless device from the first wireless device. The location/ranging message 4705 may provide assistance data to the first wireless device and/or query for the UE ranging capabilities if the UE Positioning Capability is not received from AMF.

In response to the location/ranging message 4705, the AMF may take one or more actions. For example, if the first wireless device is in CM IDLE state, the AMF may initiate a network triggered Service Request procedure to establish a signaling connection with the first wireless device. The AMF may forward the location/ranging message/ Downlink Positioning message to the first wireless device in a DL NAS TRANSPORT message. The AMF may comprise a Routing identifier in the DL NAS TRANSPORT message, which may be set to the LCS Correlation identifier. The location/ranging message/ Downlink Positioning message 4705 may request the first wireless device to respond to the network, e.g., may request the first wireless device to acknowledge the location/ranging message/ Downlink Positioning message. The location/ranging message/ Downlink Positioning message 4705 may request the first wireless device to return range/position information of the second wireless device. The location/ranging message/ Downlink Positioning message may request the first wireless device to return capabilities of the first wireless device and/or the second wireless device.

The AMF may forward the location/ranging message 4705 to the TPs/RPs. The AMF may send a message 4706 (e.g., Initial Context Setup Request) to the base station to request radio resource allocation for the ranging service. The Initial Context Setup Request message 4706 may comprise one or more parameters of the location/ranging message/ Downlink Positioning message 4705. The Initial Context Setup Request message 4706 may comprise the sidelink positioning assistance data for the ranging service. The Initial Context Setup Request message may comprise the access type for transmission of an LPP message to the UE and/or the parameter/Ranging Method Indication. The Initial Context Setup Request message may comprise plurality of indications of authorization for plurality of sidelink services as described in FIG. 40. The Initial Context Setup Request message may comprise Ranging Policy/Parameters such as described with respect to FIG. 40.

The Initial Context Setup Request message 4706 may comprise one or more parameters of the first message 4701. For example, the Initial Context Setup Request message 4706 may comprise at least one of: the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device.

In response to receiving the message 4706, the base station may take one or more actions 4707. The base station may determine configuration parameters for radio resources and/or configuration parameters for one or more antennas to perform a ranging service using one or more ranging methods, for example, based on the Initial Context Setup Request message 4706. For example, based on the parameter/ Ranging Service Indication, the plurality of indications of authorization for plurality of sidelink services, the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device, the base station may determine configuration parameters for radio resources and/or configuration parameters for antennas to perform ranging service by using the ranging method. The procedure to determine configuration parameters for radio resources and/or configuration parameters for one or more antennas to perform a ranging service may be similar to (and/or the same as) the procedure to determine configuration parameters for radio resources and/or configuration parameters for one or more antennas as described in FIG. 40. For brevity, further description will not be repeated here. In addition to the determining procedure of the base station such as described with respect to FIG. 40, the base station may also determine configuration parameters for radio resources and/or configuration parameters for one or more antennas based on the parameter/ Ranging Service Indication and/or the plurality of indications of authorization for plurality of sidelink services. For example, the parameter/ Ranging Service Indication and/or the plurality of indications of authorization for plurality of sidelink services may indicate the network authorizes ranging service to the wireless device, based on the indication(s) of authorization, the base station may determine configuration parameters for radio resources and/or configuration parameters for one or more antennas for ranging service.

The base station may determine sidelink positioning assistance data for the ranging service by using the ranging method, for example, based on the Initial Context Setup Request message 4706 and/or TPs/RPs information. For example, based on the TPs/RPs information, the parameter/ Ranging Service Indication, the plurality of indications of authorization for plurality of sidelink services, the first parameter/Ranging Method, the second parameter/ Ranging Capability, the third parameter/ PC5 Capability, the fourth parameter/ V2X Capability, the fifth parameter/ ProSe Capability, the sixth parameter/Ranging Accuracy, the identity of the first wireless device and/or the identity of the second wireless device, the base station may determine sidelink positioning assistance data for the ranging service by using the ranging method. The procedure to determine sidelink positioning assistance data for the ranging service may be similar to (and/or the same as) the procedure to determine sidelink positioning assistance data for the ranging service as described in FIG. 40. In addition to the determining procedure of the base station as described in FIG. 40, the base station may also determine sidelink positioning assistance data based on the parameter/ Ranging Service Indication and/or the plurality of indications of authorization for plurality of sidelink services. For example, the parameter/ Ranging Service Indication and/or the plurality of indications of authorization for plurality of sidelink services may indicate the network authorizes ranging service to the wireless device, based on the indication(s) of authorization, the base station may determine sidelink positioning assistance data for ranging service.

The base station may send a second message 4708 to the wireless device. The second message 4708 may be a RRC message (e.g., RRCReconfiguraiton, SIB message). The second message 4708 may be MAC layer message (e.g., MAC Control Element (CE)). The second message 4708 may be physical layer message (e.g., a DCI message over a PDCCH). The second message 4708 may comprise the configuration parameters for radio resources and/or the configuration parameters for antennas to perform ranging service by using the ranging method. The second message 4708 may comprise the sidelink positioning assistance data for the ranging service by using the ranging method. The definition/content of the second message 4708 may be similar to (and/or the same as) the second message 4005 as described in FIG. 40.

The base station may send a message (e.g., ProvideAssistanceData) to the TPs/RPs. The ProvideAssistanceData message may comprise the sidelink positioning assistance data for the ranging service by using the ranging method. The definition/content of the ProvideAssistanceData message may be similar to (and/or the same as) the ProvideAssistanceData message 4006 as described in FIG. 40.

The base station may send a response message 4709 (e.g., Initial Context Setup Response) to the AMF. The Initial Context Setup Response message 4709 may indicate whether the base station accepts the request to allocate resource for the ranging service. The Initial Context Setup Response message 4709 may comprise at least one of: the configuration parameters for radio resources to perform ranging service by using the ranging method, the configuration parameters for antennas to perform ranging service by using the ranging method (e.g., collectively, "radio and antenna parameter - RAP), and/or the sidelink positioning assistance data (AD) for the ranging service by using the ranging method.

For example, in response to the first message 4701 from the wireless device, in response to the message 4709 from the base station, and/or in response to the message received from the LMF (e.g., message 4705), the AMF may send a third message 4710 to the first wireless device. The AMF may send the third message 4710 to the first wireless device via the base station. The third message 4710 may be a response message to the first message 4701. The third message 4710 may be a NAS response (e.g., registration response) message. The registration response message 4710 comprises a registration reject message indicating rejecting the registration request. The registration response message 4710 may comprise a registration accept message indicating accepting the registration request. The third message/registration response message 4710 may indicate accepting the request of the first wireless device to perform the ranging service.

The third message 4710 may comprise at least one of: the configuration parameters for radio resources to perform ranging service by using the ranging method, the configuration parameters for antennas to perform ranging service by using the ranging method, and/or the sidelink positioning assistance data for the ranging service by using the ranging method.

The third message 4710 may comprise at least one of: the parameter/ Ranging Service Indication and/or the plurality of indications of authorization for plurality of sidelink services. The third message 4710 may comprise Ranging Policy/Parameters.

The third message 4710 may comprise at least one of: 5G-GUTI, Registration Area, [Mobility restrictions], [PDU Session status], [Allowed NSSAI], [Mapping Of Allowed NSSAI], [Configured NSSAI for the Serving PLMN], [Mapping Of Configured NSSAI], [NSSRG Information], [rejected S-NSSAIs], [Pending NSSAI], [Mapping Of Pending NSSAI], [Periodic Registration Update timer], [Active Time], [Strictly Periodic Registration Timer Indication], [LADN Information], [accepted MICO mode], and/or the like.

The AMF may send a third message 4711 to the second wireless device. The content of the third message 4711 sent to the second wireless device may be similar to (and/or the same as) the third message 4710 sent to the first wireless device.

In response to the message 4710, the message 4708, and/or in response to the message 4705, the first wireless device/the second wireless device and/or the TPs/RPs may take one or more actions. The actions taken by the first wireless device and/or the second wireless device may be similar to (and/or the same as) the actions taken by the first wireless device and/or the second wireless device after received the second message as described in FIG. 40. The actions taken by the TPs/RPs may be similar to (and/or the same as) the actions taken by TPs/RPs after received the ProvideAssistanceData message as described in FIG. 40.

The first wireless device and/or the second wireless device may send a message 4712 (e.g., NAS TRANSPORT, ProvideLocationInformation, Uplink Positioning) to the LMF. The NAS TRANSPORT message 4712 may comprise the ProvideLocationInformation/ Uplink Positioning message 4712. The NAS TRANSPORT/ ProvideLocationInformation/ Uplink Positioning message 4712 may be used to acknowledge the location/ranging/ Downlink Positioning message 4712. The NAS TRANSPORT/ ProvideLocationInformation/ Uplink Positioning message 4712 may be used to provide the range/position/location information of the second wireless device and/or the first wireless device to the LMF. The NAS TRANSPORT/ ProvideLocationInformation/ Uplink Positioning message 4712 may comprise the range/position/location information of the second wireless device and/or the first wireless device. The NAS TRANSPORT message 4712 may comprise an Uplink Positioning message, wherein the Uplink Positioning message may comprise the range/position/location information of the second wireless device and/or the first wireless device. The UL NAS TRANSPORT message 4712 may comprise the Routing identifier received from the LMF.

For example, in response to the first message 4701 received from the first wireless device and/or the second wireless device, the AMF may invoke Namf_Communication_N1MessageNotify service operation towards the LMF by sending a Namf_Communication_N1MessageNotify message 4713 to the LMF. The Namf_Communication_N1MessageNotify message 4713 may comprise the NAS TRANSPORT/ ProvideLocationInformation/ Uplink Positioning message 4712 and/or the LCS Correlation identifier. The first wireless device may send radio resources/antenna parameters (RAP) for the ranging service, and/or assistance data (AD) for the ranging service, to the second wireless device, as shown in message 4714.

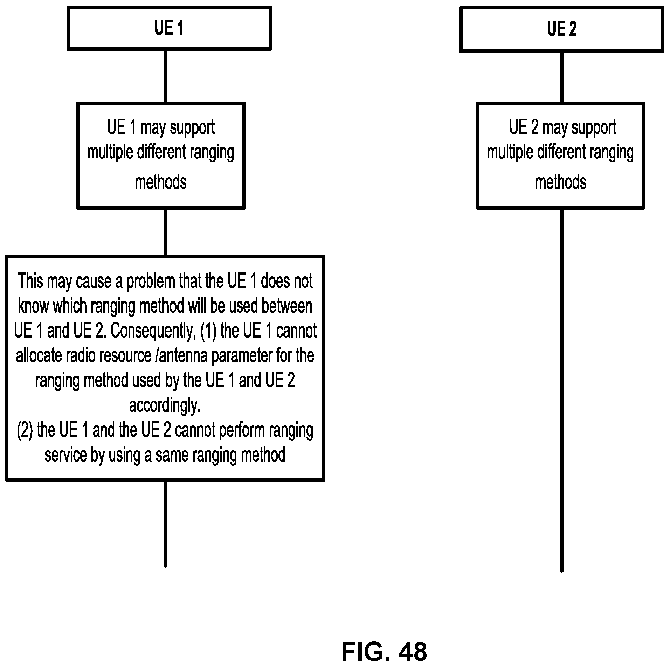

FIG. 48 shows an example of problems associated with at least some wireless communications. In at least some wireless communications, one or more wireless devices (e.g., UE 1 and UE 2 such as shown in FIG. 34 - FIG. 38) may support multiple different ranging methods. This support of multiple different ranging methods may cause a problem such that a first wireless device (e.g., UE 1) may not know which ranging method will be used for communication with a second wireless device (e.g., for communications between the UE 1 and the UE 2). Consequently, (1) the first wireless device (e.g., UE 1) may not be able to allocate radio resources / antenna parameters for the ranging method used by the first wireless device and the second wireless device (e.g., the UE 1 and the UE 2) accordingly; and (2) the first wireless device (e.g., UE 1) may not be able to determine assistance data for the ranging method used by the first wireless device (e.g., UE 1), the second wireless device (e.g., UE 2), one or more other wireless devices, RPs and/or TPs accordingly, and/or (3) the first wireless device (e.g., UE 1) and the second wireless device (e.g., UE 2) may not be able to perform ranging service by using a same ranging method.

As described herein, improved wireless communications may enable a first wireless device to negotiate an acceptable ranging method with a second wireless device for ranging service, where the acceptable ranging method may be supported by the first wireless device and the second wireless device for ranging service between the first wireless device and the second wireless device. For example, a first wireless device may be able to determine radio resources/antenna parameters for ranging service based on an acceptable ranging method. The first wireless device may be able to determine assistance data for the ranging service based on the acceptable ranging method. The first wireless device may be able to send the radio resources/antenna parameters (RAP) for the ranging service to one or more second wireless devices. The first wireless device may be able to send the assistance data (AD) for the ranging service to the one or more second wireless device(s), RPs, and/or TPs. The first wireless device, the one or more second wireless devices, RPs, and/or TPs may be configured to perform ranging services based on the acceptable ranging method.

A second wireless device may receive a first message from a first wireless device, wherein the first message may indicate one or more ranging methods supported by the first wireless device. The second wireless device may determine at least one accepted ranging method for performing ranging between the first wireless device and the second wireless device, wherein the determining is based on: the one or more ranging methods supported by the first wireless device; and/or ranging methods supported by the second wireless device. The second wireless device may send a second message to the first wireless device, wherein the second message may indicate the at least one accepted ranging method.

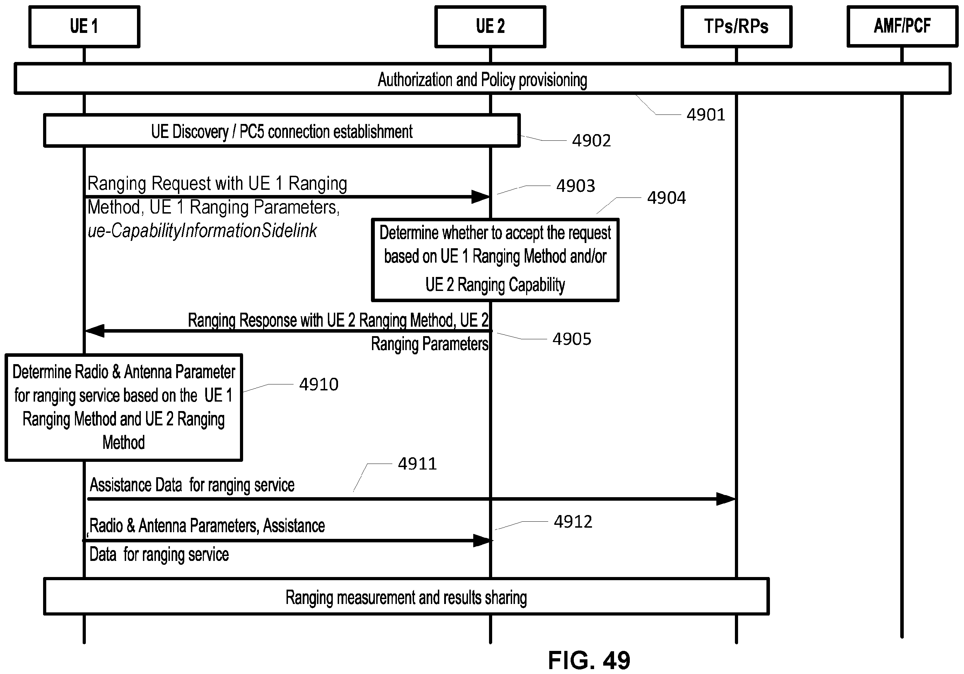

FIG. 49 is an example call flow as per an aspect of an embodiment of the present disclosure. A first wireless device (e.g., UE 1 as shown in FIG. 49) may need to perform a ranging method/operation between the first wireless device and a second wireless device (e.g., UE 2 as shown in FIG. 49). Performing ranging between the first wireless device and a second wireless device may indicate that the first wireless device may range/position the second wireless device (e.g., the UE 1 may need to determine/measure a ranging/positioning of the UE 2). The range/position of a wireless device (e.g., UE 2) may comprise at least one of: a distance, a direction, an angle, a velocity and/or a position of the wireless device. For example, performing ranging between the UE 1 and the UE 2 may indicate that the UE 1 may measure a distance/direction/angle/velocity/position of the UE 2. Ranging/positioning the second wireless device may indicate that the first wireless device may measure a distance/direction/angle/velocity/position of the second wireless device.

The first wireless device and/or the second wireless device may request authorization/policy from a network (e.g., a communication system, 5G communication system) for ranging services, as part of an authorization and policy provisioning process 4901. For example, the first wireless device may send a NAS message (e.g., registration request) to an AMF requesting authorization/policy from the 5G network. The NAS message may comprise a parameter (e.g., Ranging Capability) indicating whether the first wireless device and/or the second wireless device supports ranging service. The NAS message may comprise a parameter/ Ranging/SL Positioning Policy Provisioning Request, the parameter/ Ranging/SL Positioning Policy Provisioning Request may indicate the first wireless device and/or the second wireless device requesting policy authorization for the ranging services from the network. The NAS message may comprise a parameter (e.g., Ranging Method) indicating a method supported by the first wireless device to perform ranging service with the second wireless device.

As part of the process 4901, the AMF may send a message (e.g., Authorization Request, AM Policy Establishment/Modification Request) to a network node (e.g., PCF/AUSF) requesting to authorize the wireless device to perform the ranging services. The Authorization Request message and/or the AM Policy Establishment/Modification Request message may comprise one or more parameters of the NAS message (e.g., Ranging Capability, Ranging Method). For example, based on the one or more parameters of the NAS message (e.g., Ranging Capability, Ranging Method), the PCF/AUSF may determine a parameter (e.g., Ranging Service Indication) indicating accepting the request of the first wireless device to perform the ranging service. The parameter/ Ranging Service Indication may indicate the first wireless device and/or the second wireless device is allowed to perform the ranging service. The PCF/AUSF may determine Ranging Policy/Parameters for the ranging service, for example, based on the one or more parameters of the Authorization Request message and/or the AM Policy Establishment/Modification Request message. The Ranging Policy/Parameters may indicate policies and/or parameters for the ranging service. The Ranging Policy/Parameters may comprise at least one of: the ranging method, PLMNs in which the first wireless device and/or the second wireless device is authorized to perform ranging service; RAT(s) over which the first wireless device and/or the second wireless device is authorized to perform ranging service; radio parameters for the first wireless device and/or the second wireless device to perform ranging service; policy/parameters for PC5 RAT selection and for PC5 Tx Profile selection for the first wireless device and/or the second wireless device to perform ranging service; and/or QoS parameters for the first wireless device and/or the second wireless device to perform the ranging service. The PCF/AUSF may send a response message (Authorization Response, AM Policy Establishment/Modification Response) to the AMF indicating whether to accept the request of the first wireless device and/or the second wireless device to perform the ranging service. The Authorization Response and/or the AM Policy Establishment/Modification Response may comprise the parameter/ Ranging Service Indication and/or the Ranging Policy/Parameters.

For example, in response to the message received, the AMF may send NAS response (e.g., registration response/accept) message to the first wireless device and/or the second wireless device, to complete the authorization and policy provisioning process 4901. The NAS response may comprise at least one of: the parameter/ Ranging Service Indication and/or the Ranging Policy/Parameters. The NAS response message may comprise plurality of indications of authorization for plurality of sidelink services, wherein the plurality of indications of authorization for plurality of sidelink services may indicate the network authorize at least one of the following sidelink services to the first wireless device and/or the second wireless device: ranging service, V2X service, relay service, public safety service, and/or other sidelink services.

In response to the message received from the AMF, based on the parameter/ Ranging Service Indication, the Ranging Policy/Parameters, and/or the plurality of indications of authorization for plurality of sidelink services, the first wireless device may initiate a UE discovery procedure 4902 (e.g., ProSe Direct Discovery) to discover the second wireless device. The ProSe Direct Discovery may be a process that detects and identifies a second wireless device in proximity via a PC5 reference point. The ProSe Direct Discovery may be a procedure employed by a ProSe-enabled UE to discover other ProSe-enabled UEs in its vicinity based on direct radio transmissions between the two UEs with NR, E-UTRA and/or WLAN technology. The ProSe Direct Discovery may be a process that detects and identifies another wireless device in proximity using NR, E-UTRA and/or WLAN direct radio signals. The ProSe Direct Discovery may be a standalone service enabler that could use information from the discovered UE for certain applications in the UE that are permitted to use this information e.g., "find a taxi nearby", "find me a coffee shop". Additionally, depending on the information obtained, the ProSe Direct Discovery may be used by the first wireless device and/or the second wireless device for subsequent actions e.g., to initiate ProSe Direct Communication. The ProSe Direct Communication may be a communication between two or more UEs in proximity that are ProSe-enabled, by means of user plane transmission using NR technology via a path not traversing any network node.

The PC5 parameters need to be configured in a consistent way among the multiple wireless devices within a certain region. For example, the Ranging Policy/Parameters may comprise PC5 parameters (e.g., list of frequencies of PC 5).

There may be two models for ProSe Direct Discovery: Model A and Model B. Model A ("I am here") may comprise two roles for the ProSe-enabled UEs that are participating in ProSe Direct Discovery: Announcing UE and Monitoring UE. Model A may be equivalent to "I am here" since the announcing UE would broadcast information about itself e.g., its ProSe Application Code in the discovery message. The announcing UE may announce certain information that could be used by UEs in proximity that have permission to discover. The monitoring UE may monitor certain information of interest in proximity of announcing UEs. The announcing UE may broadcast discovery messages at pre-defined discovery intervals and the monitoring UEs that are interested in these messages may read them and process them. For NR ProSe Direct Discovery and/or E-UTRA ProSe Direct Discovery, the UE can act as "announcing UE" may only in the carrier frequency signaled by the serving PLMN but may act as a "monitoring" UE also in the resources of the serving PLMN and Local PLMNs, when using Model A mode. The first wireless device (UE 1 shown in FIG. 49) may act as an Announcing UE and/or a Monitoring UE. The second wireless device (UE 2 shown in FIG. 49) may act as an Announcing UE and/or a Monitoring UE.

The announcing UE may send an Announcement message as part of the discovery procedure 4902. The Announcement message may comprise Type of Discovery Message, ProSe Application Code, ProSe Restricted Code, security protection element, and/or metadata information. The application layer metadata information may be included as metadata in the Announcement message. The Destination Layer-2 ID and/or Source Layer-2 ID may be used to send/identify the Announcement message. The Monitoring UE may determine/use the Destination Layer-2 ID for signalling reception.

The ProSe Application Code may be associated with the ProSe Application ID and used in the open ProSe Direct Discovery procedures. The ProSe Application ID may be an identity used for open ProSe Direct Discovery, identifying application related information for the ProSe-enabled UE. Each ProSe Application ID may be globally unique. The ProSe Restricted Code may be allocated by a ProSe Function in the HPLMN for Restricted Direct Discovery and may be associated with one or more Restricted ProSe App User IDs based on the policy of the ProSe Function that allocates it. The ProSe Restricted Code may be sent by the announcing UE over the air. The Source Layer-2 ID may be a link-layer identity that identifies a device that originates ProSe communication frames. The Destination Layer-2 ID may be a link-layer identity that identifies a device that receives ProSe communication frames.

The Model B ("who is there?" / "are you there?") may comprise two roles for the ProSe-enabled UEs that are participating in ProSe Direct Discovery: a Discoverer UE and a Discoveree UE. The discoverer UE may transmit a request containing certain information about what it is interested to discover. The discoveree UE may receive the request message from the discoverer UE, and may respond with some information related to the discoverer's request. The Model B may be equivalent to " who is there/are you there" since the discoverer UE sends information about other UEs that would like to receive responses from, e.g., the information can be about a ProSe Application Identity corresponding to a group and the members of the group can respond. For NR ProSe Direct Discovery and/or E-UTRA ProSe Direct Discovery when using Model B discovery, the discoverer UE and discoveree UE may announce in the carrier frequency signaled by the serving PLMN. When inter-PLMN discovery transmission is supported, the carrier frequency may be operated by a PLMN other than the serving PLMN. The discoverer UE and discoveree UE may be allowed to monitor or announce in the serving PLMN and Local PLMNs when authorized. Only restricted discovery type may be supported by Model B. The first wireless device (UE 1 shown in FIG. 49) may act as a Discoverer UE and/or a Discoveree UE. The second wireless device (UE 2 shown in FIG. 49) may act as a Discoverer UE and/or a Discoveree UE.

The Discoverer UE may send a Solicitation message. The Solicitation message may include Type of Discovery Message, ProSe Query Code, and/or security protection element. The Destination Layer-2 ID and/or Source Layer-2 ID may be used to send/identify the Solicitation message are specified. The Discoveree UE may determine/use the Destination Layer-2 ID for signaling reception. The Discoveree UE that matches the solicitation message may respond to the Discoverer UE with the Response message. The Response message may comprise Type of Discovery Message, ProSe Response Code, security protection element and/or metadata information. The Application layer metadata information may be comprised as metadata in the Response message. The Source Layer-2 ID may be used to send the Response message. The Destination Layer-2 ID of the Response message may be set to the Source Layer-2 ID of the received Solicitation message.

The first wireless device may establish at least one PC5 RRC connection with the second wireless device. The first wireless device may send/receive signaling messages/user data over the at least one PC5 RRC connection. For example, the first wireless device may send/receive discovery related messages (e.g., Solicitation message) over the at least one PC5 RRC connection. The first wireless device may setup at least one radio bearer over PC5 RRC connection, where the at least one radio bearer may be associated with the at least one PC5 RRC connection. The at least one radio bearer may comprise at least one signaling radio bearer (SRB) and/or at least one data radio bearer (DRB). The SRB may be used to transmit/receive signaling over PC5 RRC connection. The DRB may be used to transmit/receive user data over PC5 RRC connection.

The first wireless device may send a first message 4903 (e.g., Ranging Request) to the second wireless device. The first message 4903 may indicate one or more ranging methods supported/requested by the first wireless device. The first message/ Ranging Request message 4903 may comprise a first parameter (e.g., Ranging Method, Sidelink Positioning Method) indicating one or more type of ranging methods/sidelink positioning methods supported/requested by the first wireless device for ranging service. The first message/ Ranging Request message 4903 and/or the first parameter/Ranging Method may indicate the first wireless device may perform ranging between the first wireless device and a second wireless device (e.g., the first wireless device to range/position the second wireless device) by using the one or more ranging methods supported/requested by the first wireless device. The first parameter/Ranging Method may indicate one or more methods used between the first wireless device and the second wireless device for ranging service. The first parameter/Ranging Method may indicate one or more ranging method used/supported/requested by the first wireless device to range/position the second wireless device.

In this specification, the terms/terminologies "ranging method", "positioning method", "sidelink positioning method", and/or "sidelink location method" may be used interchangeably. In this specification, the terms/terminologies "ranging", "positioning", "sidelink positioning", and/or "sidelink locating" may be used interchangeably.

The ranging/range/sidelink (SL) positioning may comprise at least one of: a distance (e.g., centimeter (cm), millimeter (mm)); a direction (e.g., east, 9-o'clock direction); an angle (e.g., degree); a velocity; and/or a position. The velocity may indicate a directional speed of an object in motion as an indication of its rate of change in position as observed from a particular frame of reference and as measured by a particular standard of time (e.g. 60 km/h to the north). The position may indicate a relative position (e.g., the second wireless device may be 5 meters away from the first wireless device). The position may be an absolute position (e.g., a set of GPS coordinates). The ranging service may comprise at least one of: a first wireless device measuring/determining a distance of a second wireless device; a first wireless device measuring/determining a direction of a second wireless device; a first wireless device measuring/determining an angle of a second wireless device; a first wireless device measuring/determining a velocity of a second wireless device; and/or a first wireless device measuring/determining a position of a second wireless device. In this specification, the term "ranging service" may be equivalent to the term "sidelink ranging service".

The first parameter/Ranging Method may comprise/indicate at least one of the following methods as described in FIG. 34 to FIG. 38: Two Way Ranging, Sidelink Uplink Time Difference of Arrival (SL-UTDOA), Sidelink Downlink Time Difference of Arrival (SL-DTDOA), Sidelink Uplink Phase Difference of Arrival (SL-UPDOA), and/or Sidelink Downlink Phase Difference of Arrival (SL-DPDOA).

The first message 4903 may comprise a second parameter (e.g., Ranging Capability) indicating whether the first wireless device supports ranging service. The second parameter/Ranging Capability may indicate whether the first wireless device has the capability to measure/determine a range/position of a second wireless device. The second parameter/ Ranging Capability may indicate whether the first wireless device has the capability to range/position a second wireless device. The second parameter/ Ranging Capability may indicate whether the first wireless device has at least one of the following capabilities: measuring/determining a distance of a second wireless device; measuring/determining a direction of a second wireless device; measuring/determining an angle of a second wireless device; measuring/determining a velocity of a second wireless device; and/or measuring/determining a position of a second wireless device. The second parameter/ Ranging Capability may indicate the scope/ range/limitation of the ranging service. The second parameter/ Ranging Capability may indicate the scope/range/limitation of a ranging of: a distance; a direction; an angle; a velocity; and/or a position of a second wireless measuring/determining device. For example, the second parameter/ Ranging Capability may indicate a maximum distance of 100 meters may be measured by the first wireless device. The second parameter/ Ranging Capability may comprise the first parameter/Ranging Method. The second parameter/ Ranging Capability may indicate one or more ranging methods supported/requested by the first wireless device.

The second parameter/ Ranging Capability may comprise/indicate supported frequency band(s) of the ranging service by the first wireless device. The second parameter/ Ranging Capability may comprise/indicate supported frequency band(s) of Reference Signal Time Difference (RSTD) measurement by the first wireless device. The RSTD may indicate/comprise relative timing difference between a first TP (e.g., a neighbor cell j) and a second TP (e.g., a reference cell i), defined as T_{subframeRxj} - T_{subframeRxi}, where: the T_{subframeRxj} is the time when the first wireless device and/or the second wireless device receives the start of one subframe from cell j, and the T_{subframeRxi} is the time when the first wireless device and/or the second wireless device receives the corresponding start of one subframe from cell i that is closest in time to the subframe received from cell j. The reference point for the observed subframe time difference may be the antenna connector of the first wireless device and/or the second wireless device.

The second parameter/ Ranging Capability may comprise/indicate inter-frequency RSTD measurement, wherein the inter-frequency RSTD measurement may indicate whether the first wireless device supports inter-frequency RSTD measurement, the second parameter/ Ranging Capability may comprise/indicate RSTD measurement supported by the first wireless device, where the RSTD measurement may comprise an inter-frequency RSTD measurement and/or an intra-frequency RSTD measurement. The intra-frequency RSTD measurement may indicate the RSTD measurement is performed when the first TP (e.g., neighbor cell j) and the second TP (e.g., reference cell i) are on the same carrier frequency, where the first TP (e.g., neighbor cell j) and the second TP (e.g., reference cell i) are the serving cells for the first wireless device. The inter-frequency RSTD measurement may indicate the RSTD measurement is performed when the first TP (e.g., neighbor cell j) and the second TP (e.g., reference cell i) are on a different carrier frequency, where the first TP (e.g., neighbor cell j) and the second TP (e.g., reference cell i) are the serving cells for the first wireless device and/or the second wireless. For example, the second parameter/ Ranging Capability may indicate that the first wireless device supports the inter-frequency RSTD measurement and/or the intra-frequency RSTD measurement.

The first message 4903 may comprise a third parameter (e.g., PC5 Capability) indicating whether the first wireless device is able to perform ranging service over PC5 reference point. The third parameter/ PC5 Capability may indicate that the first wireless device supports PC5 communication with a second wireless device over a PC5 interface. The PC5 interface may be a reference point between the UEs (e.g., between the first wireless device and a second wireless device). The PC5 may comprise LTE based PC5 and/or NR based PC5. The PC5 may refer to a reference point where the User Equipment (UE), e.g., mobile handset, directly communicates with another UE over the direct channel. In this case, the communication with the base station may not be required.

The first message 4903 may comprise a fourth parameter (e.g., V2X Capability) indicating a V2X capability of the first wireless device. The fourth parameter/ V2X Capability may indicate that the first wireless device supports V2X communication/service with a second wireless device. The V2X may comprise EPS V2X and/or 5GS V2X.

The first message 4903 may comprise a fifth parameter (e.g., ProSe Capability) indicating a ProSe Capability of the first wireless device. The fifth parameter/ ProSe Capability may indicate that the first wireless device supports ProSe communication/service with a second wireless device. The fifth parameter/ ProSe Capability may indicate whether the first wireless device supports one or more of the following ProSe capabilities: 5G ProSe Direct Discovery; 5G ProSe Direct Communication; 5G ProSe Layer-2 UE-to-Network Relay; 5G ProSe Layer-3 UE-to-Network Relay; 5G ProSe Layer-2 Remote UE; and/or 5G ProSe Layer-3 Remote UE.

The first message 4903 may comprise a sixth parameter (e.g., Ranging Accuracy) indicating an accuracy of the ranging service supported by the first wireless device. The sixth parameter/Ranging Accuracy may indicate degree of conformity of a measure to a standard or a true value of the ranging. The sixth parameter/Ranging Accuracy may comprise at least one of: accuracy of a distance for the ranging service (e.g., millimeter, meter); accuracy of a direction for the ranging service; accuracy of an angle for the ranging service; accuracy of a velocity for the ranging service; and/or accuracy of a position for the ranging service.

The first message 4903 may comprise an identity of the first wireless device. The first message may comprise an identity of the second wireless device. The identity of the first wireless device and/or the identity of the second wireless device may indicate that the first wireless device may perform ranging between the first wireless device and the second wireless device (e.g., the first wireless device to range/position the second wireless device). The identity of the first wireless device and/or the identity of the second wireless device may comprise at least one of: a Generic Public Subscription Identifier (GPSI), wherein the GPSI may comprise a Mobile Station Integrated Services Digital Network (MSISDN) and/or an external identifier; a Subscription Permanent Identifier (SUPI), wherein the SUPI may comprise an International Mobile Subscriber Identity (IMSI) and/or Network Access Identifier (NAI); a Subscription Concealed Identifier (SUCI); a 5G Globally unique Temporary Identity (5G-GUTI); a permanent equipment identifier (PEI), wherein the PEI may comprise an International Mobile Equipment Identity (IMEI); an IP address, wherein the IP address may comprise an IPv4 address and/or an IPv6 prefix; an application-level identifier to identify the first wireless device/second wireless device (e.g., Application Layer ID); and/or a Layer-2 ID. The first wireless device/second wireless device may have one or more Layer-2 IDs for sidelink communication over PC5 reference point. The Layer-2 IDs may comprise Source Layer-2 ID(s) and/or Destination Layer-2 ID(s). The Source Layer-2 ID(s) and/or Destination Layer-2 ID(s) may be included in layer-2 frames sent on the layer-2 link of the PC5 reference point identifying the layer-2 source and destination of these layer-2 frames, where the layer-2 frames may be sent by a source wireless device (e.g., the first wireless device) to a target wireless device (e.g., the second wireless device). The Source Layer-2 IDs may be always self-assigned by the UE who originating the corresponding layer-2 frames.

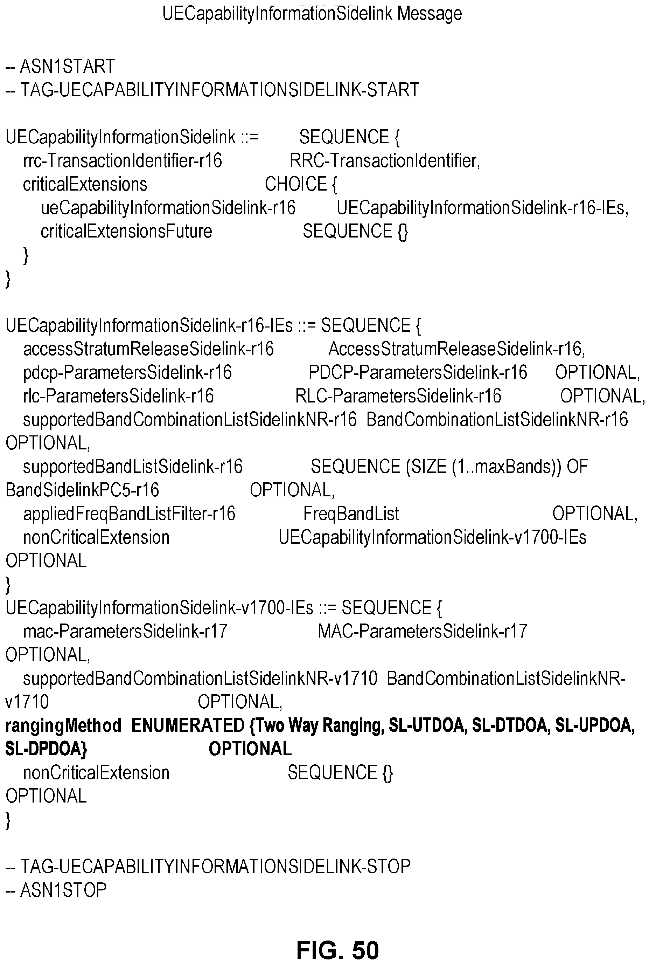

The first message 4903 may comprise an RRC message, where the RRC message may comprise at least one of the following messages: an RRCReconfigurationSidelink message; a UECapabilityEnquirySidelink message; a UECapabilityInformationSidelink message; and/or a SBCCH-SL-BCH-Message. FIG. 50 is an example diagram depicting a UECapabilityInformationSidelink message, where the UECapabilityInformationSidelink message comprises a parameter rangingMethod indicating a type of ranging method used for ranging service.

In response to receiving the first message 4903, the second wireless device may take one or more actions 4904. The second wireless device may determine whether to accept the request of the first message 4903 for ranging service, for example, based on the first message 4903 and/or ranging capability of the second wireless device. The second wireless device may determine whether to accept the request of the first message for ranging service, for example, based on the one or more ranging methods supported by the first wireless device, ranging capability of the second wireless device, and/or ranging methods supported by the second wireless device. For example, based on the first parameter/Ranging Method, the second parameter/Ranging Capability, the third parameter/ PC5 Capability, the fourth parameter/ V2X Capability, the fifth parameter/ ProSe Capability, the sixth parameter/Ranging Accuracy, the identity of the first wireless device, the identity of the second wireless device, ranging capability of the second wireless device, and/or ranging methods supported by the second wireless device, the second wireless device may determine whether to accept the request of the first message for ranging service.

The second wireless device may determine whether to accept the request of the first message based on determining that the one or more ranging methods supported by the first wireless device which can also be supported by the second wireless device. The second wireless device may determine to reject the request of the first message based on determining that the second wireless device is not able to support the one or more ranging methods supported by the first wireless device.

The ranging capability of the second wireless device may indicate whether the second wireless device supports ranging service or not. The ranging capability of the second wireless device may indicate ranging methods supported by the second wireless device. The ranging methods supported by the second wireless device may comprise/indicate at least one of the following methods as described in FIG. 34 to FIG. 38: Two Way Ranging, Sidelink Uplink Time Difference of Arrival (SL-UTDOA), Sidelink Downlink Time Difference of Arrival (SL-DTDOA), Sidelink Uplink Phase Difference of Arrival (SL-UPDOA), and/or Sidelink Downlink Phase Difference of Arrival (SL-DPDOA).

For example, the first parameter/Ranging Method may indicate that the first wireless device supports Two Way Ranging and Sidelink Downlink Time Difference of Arrival (SL-DTDOA), the second parameter/Ranging Capability may indicate that the first wireless device supports ranging service, the fourth parameter/ V2X Capability may indicate that the first wireless device supports the V2X service, the identity of the first wireless device and/or the identity of the second wireless device may indicate that the first wireless device performs ranging between the first wireless device and the second wireless device, the ranging capability of the second wireless device may indicate the second wireless device supports ranging service, the ranging methods supported by the second wireless device may comprise SL-UTDOA and SL-DTDOA, based on above information, the second wireless device may determine to accept the request of the first message for ranging service.

For example, the first parameter/Ranging Method may indicate that the first wireless device supports SL-UTDOA and SL-DTDOA, the second parameter/Ranging Capability may indicate that the first wireless device supports ranging service, the fourth parameter/ V2X Capability may indicate that the first wireless device supports the V2X service, the identity of the first wireless device and/or the identity of the second wireless device may indicate that the first wireless device performs ranging between the first wireless device and the second wireless device, the ranging capability of the second wireless device may indicate the second wireless device supports ranging service, the ranging methods supported by the second wireless device may comprise SL-UPDOA and SL-DPDOA, based on above information, the second wireless device may determine to reject the request of the first message 4903 for ranging service.

The second wireless device may determine at least one accepted ranging method for performing ranging between the first wireless device and the second wireless device, for example, based on the first message 4903. The second wireless device may determine at least one accepted ranging method for performing ranging between the first wireless device and the second wireless device, for example, based on the one or more ranging methods supported by the first wireless device, ranging capability of the second wireless device, and/or ranging methods supported by the second wireless device. For example, based on the first parameter/Ranging Method, the second parameter/Ranging Capability, the third parameter/ PC5 Capability, the fourth parameter/ V2X Capability, the fifth parameter/ ProSe Capability, the sixth parameter/Ranging Accuracy, the identity of the first wireless device, the identity of the second wireless device, ranging capability of the second wireless device, and/or ranging methods supported by the second wireless device, the second wireless device may determine at least one accepted ranging method for performing ranging between the first wireless device and the second wireless device.

The second wireless device may determine at least one accepted ranging method based on determining that the at least one accepted ranging method is supported by the first wireless device and the second wireless device. The second wireless device may determine at least one accepted ranging method for performing ranging between the first wireless device and the second wireless device based on determining that the second wireless device accepts the request of the first message for ranging service.

The at least one accepted ranging method may comprise/indicate at least one of the following methods as described in FIG. 23 to FIG. 27: Two Way Ranging, SL-UTDOA, SL-DTDOA, SL-UPDOA, and/or SL-DPDOA.

For example, the first parameter/Ranging Method may indicate that the first wireless device supports Two Way Ranging, Sidelink Uplink Time Difference of Arrival (SL-UTDOA), and Sidelink Downlink Time Difference of Arrival (SL-DTDOA), the second parameter/Ranging Capability may indicate that the first wireless device supports ranging service, the fourth parameter/ V2X Capability may indicate that the first wireless device supports the V2X service, the identity of the first wireless device and/or the identity of the second wireless device may indicate that the first wireless device performs ranging between the first wireless device and the second wireless device, the ranging capability of the second wireless device may indicate the second wireless device supports ranging service, the ranging methods supported by the second wireless device may comprise SL-UTDOA and SL-DTDOA, based on above information, the second wireless device may determine at least one accepted ranging method, wherein the at least one accepted ranging method comprise the SL-UTDOA and/or the SL-DTDOA.

For example, the first parameter/Ranging Method may indicate that the first wireless device supports Two Way Ranging, Sidelink Uplink Time Difference of Arrival (SL-UTDOA), Sidelink Uplink Phase Difference of Arrival (SL-UPDOA), and/or Sidelink Downlink Phase Difference of Arrival (SL-DPDOA), the second parameter/Ranging Capability may indicate that the first wireless device supports ranging service, the fourth parameter/ V2X Capability may indicate that the first wireless device supports the V2X service, the identity of the first wireless device and/or the identity of the second wireless device may indicate that the first wireless device performs ranging between the first wireless device and the second wireless device, the ranging methods supported by the second wireless device may comprise Two Way Ranging, SL-UTDOA, and/or SL-UPDOA, based on above information, the second wireless device may determine at least one accepted ranging method, wherein the at least one accepted ranging method comprise the Two Way Ranging, SL-UTDOA, and/or SL-UPDOA.

The second wireless device may send a second message 4905 (e.g., Ranging Response) to the first wireless device. The second message 4905 may indicate an acceptance of the request of the first message 4903 for ranging service. The second message 4905 may indicate rejecting the request of the first message 4903 for ranging service. The second message 4905 may comprise at least one cause value indicating one or more reasons for the rejecting of the request of the first message 4903 for ranging service. For example, the at least one cause value may indicate that the second wireless device is not able to support ranging service. For example, the at least one cause value may indicate that the second wireless device is not able to support the first parameter/Ranging Method (e.g., the one or more ranging methods of the first wireless device). The second message 4905 may comprise the at least one accepted ranging method for performing ranging between the first wireless device and the second wireless device.

The second message 4905 may comprise a seventh parameter (e.g., Ranging Method, Ranging Method of UE 2) indicating ranging method supported by the second wireless device for performing ranging between the first wireless device and the second wireless device. The seventh parameter/Ranging Method of UE 2 may indicate ranging method supported by the second wireless device for performing ranging between the second wireless device and the first wireless device. The seventh parameter/Ranging Method of UE 2 may indicate one or more type of ranging methods/sidelink positioning methods supported by the second wireless device for ranging service. The seventh parameter/Ranging Method of UE 2 may comprise/indicate at least one of the following methods as described in FIG. 34 to FIG. 38: Two Way Ranging, SL-UTDOA, SL-DTDOA, SL-UPDOA, and/or SL-DPDOA.

The second message 4905 may comprise an eighth parameter (e.g., Ranging Capability, Ranging Capability of UE 2) indicating whether the second wireless device supports ranging service. The eighth parameter/Ranging Capability of UE 2 may indicate whether the second wireless device has the capability to measure/determine a range/position of the first wireless device. The eighth parameter/Ranging Capability of UE 2 may indicate whether the second wireless device has the capability to assist the first wireless device to measure/determine a range/position of the second wireless device. The eighth parameter/Ranging Capability of UE 2 may comprise the seventh parameter/Ranging Method of UE 2. The eighth parameter/Ranging Capability of UE 2 may indicate one or more ranging methods supported by the second wireless device.

The eighth parameter/Ranging Capability of UE 2 may comprise/indicate supported frequency band(s) of the ranging service by the second wireless device. The eighth parameter/Ranging Capability of UE 2 may comprise/indicate supported frequency band(s) of Reference Signal Time Difference (RSTD) measurement by the second wireless device. The eighth parameter/Ranging Capability of UE 2 may comprise/indicate inter-frequency RSTD measurement, wherein the inter-frequency RSTD measurement may indicate whether the second wireless device supports inter-frequency RSTD measurement.

The eighth parameter/Ranging Capability of UE 2 may comprise/indicate RSTD measurement supported by the second wireless device, where the RSTD measurement may comprise an inter-frequency RSTD measurement and/or an intra-frequency RSTD measurement. For example, the eighth parameter/Ranging Capability of UE 2 may indicate the second wireless device supports inter-frequency RSTD measurement and/or intra-frequency RSTD measurement.

The definition/content of the eighth parameter/Ranging Capability of UE 2 may be similar to (and/or the same as) the second parameter/Ranging Capability. For brevity, further description will not be repeated here.

The second message 4905 may comprise a ninth parameter (e.g., Ranging Accuracy of UE 2) indicating an accuracy of the ranging service supported by the second wireless device. The ninth parameter/Ranging Accuracy of UE 2 may indicate degree of conformity of a measure to a standard or a true value of the ranging. The ninth parameter/Ranging Accuracy of UE 2 may comprise at least one of: accuracy of a distance for the ranging service (e.g., millimeter, meter); accuracy of a direction for the ranging service; accuracy of an angle for the ranging service; accuracy of a velocity for the ranging service; and/or accuracy of a position for the ranging service.

The second message 4905 may comprise a tenth parameter (e.g., V2X Capability of UE 2) indicating whether the second wireless device supports V2X capability.

The second message 4905 may comprise the identity of the first wireless device. The second message 4905 may comprise the identity of the second wireless device.

The second message 4905 may comprise a MAC layer message (e.g., MAC Control Element (CE)). The second message 4905 may comprise a physical layer message (e.g., a DCI message over a PDCCH). The second message 4905 comprises an RRC message, where the RRC message comprises at least one of: an RRCReconfigurationCompleteSidelink; an RRCReconfigurationFailureSidelink; a UECapabilityInformationSidelink; and/or an SBCCH-SL-BCH-Message.

In response to receiving the second message 4905 from the second wireless device, the first wireless device may take one or more actions 4910. In an action 4910, based on one or more parameters of the first message 4903 and/or one or more parameters of the second message 4905, the first wireless device may determine at least one ranging method for the ranging service between the first wireless device and/or the second wireless device, where the at least one ranging method is able to be supported by the first wireless device and the second wireless device. The first wireless device may determine at least one ranging method for the ranging service between the first wireless device and/or the second wireless device, where the at least one ranging method is able to be supported by the first wireless device and the second wireless device, for example, based on the ranging method supported by the first wireless device, the ranging method supported by the second wireless device, the ranging capability of the first wireless device, and/or the ranging capability of the second wireless device.

For example, based on the first parameter/Ranging Method, the second parameter/Ranging Capability, the seventh parameter/Ranging Method of UE 2, and/or the eighth parameter/Ranging Capability of UE 2, the first wireless device may determine at least one ranging method for the ranging service between the first wireless device and/or the second wireless device, where the at least one ranging method is able to be supported both by the first wireless device and by the second wireless device.

For example, the first parameter/Ranging Method may indicate that the first wireless device supports Two Way Ranging, SL-UTDOA, SL-UPDOA, and/or SL-DPDOA, the second parameter/Ranging Capability may indicate that the first wireless device supports ranging service, the seventh parameter/Ranging Method of UE 2 may indicate the second wireless device supports Two Way Ranging and/or SL-UPDOA, the eighth parameter/Ranging Capability of UE 2 may indicate that the second wireless device supports ranging service, based on above information, the first wireless device may determine at least one ranging method, wherein the at least one ranging method comprises the Two Way Ranging and/or SL-UPDOA.

For example, the first parameter/Ranging Method may indicate that the first wireless device supports SL-UTDOA, SL-UPDOA, and/or SL-DPDOA, the second parameter/Ranging Capability may indicate that the first wireless device supports ranging service, the seventh parameter/Ranging Method of UE 2 may indicate the second wireless device supports Two Way Ranging, SL-UPDOA and/or SL-DPDOA the eighth parameter/Ranging Capability of UE 2 may indicate that the second wireless device supports ranging service, based on above information, the first wireless device may determine at least one ranging method, wherein the at least one ranging method comprises the SL-UPDOA and/or SL-DPDOA.

In an action 4910, based on the one or more parameters of the first message, the one or more parameters of the second message, the at least one accepted ranging method determined by the second wireless device and/or the at least one ranging method determined by the first wireless device, the first wireless device may determine configuration parameters for radio resources and/or configuration parameters for one or more antenna to perform a ranging service using the at least one accepted ranging method determined by the second wireless device and/or using the at least one ranging method determined by the first wireless device.

The first wireless device may determine configuration parameters for radio resources and/or configuration parameters for one or more antenna to perform a ranging service using the at least one accepted ranging method determined by the second wireless device and/or using the at least one ranging method determined by the first wireless device, for example, based on the ranging method supported by the first wireless device, the ranging method supported by the second wireless device, the ranging capability of the first wireless device, the ranging capability of the second wireless device, the at least one accepted ranging method determined by the second wireless device and/or the at least one ranging method determined by the first wireless device.

For example, based on the first parameter/Ranging Method, the second parameter/Ranging Capability, the third parameter/ PC5 Capability, the fourth parameter/ V2X Capability, the fifth parameter/ ProSe Capability, the sixth parameter/Ranging Accuracy, the identity of the first wireless device, the identity of the second wireless device, the seventh parameter/Ranging Method of UE 2, the eighth parameter/Ranging Capability of UE 2, the ninth parameter/Ranging Accuracy of UE 2, the tenth parameter/V2X Capability of UE 2, the at least one accepted ranging method determined by the second wireless device and/or the at least one ranging method determined by the first wireless device, the first wireless device may determine configuration parameters for radio resources and/or configuration parameters for one or more antenna to perform a ranging service using the at least one accepted ranging method determined by the second wireless device and/or using the at least one ranging method determined by the first wireless device.

The radio resources may comprise at least one of: a frequency resource, a time resource, and/or a radio bearer resource. The time resource may indicate time domain resource. The time resource may indicate resource of time (e.g., time duration) allocated for sending and/or receiving signaling and/or user data for a wireless device. The time resource to perform a ranging service/sidelink service may indicate resource of time (e.g., time duration) allocated for sending and/or receiving signaling and/or user data between a first wireless device and a second wireless device (e.g., via PC5 interface) for ranging service/sidelink service. The time resource may comprise/indicate (NR) frame, subframes, slots and/or (OFDM) symbols as shown in FIG. 18. The time resource may comprise/indicate BWP as shown in FIG. 19 and/or FIG. 20. The time resource may comprise/indicate CORESET as shown in FIG. 21A and FIG. 21B. The time resource may comprise/indicate an RG (Resource Grid), where the RG may be a collection of time-frequency resources. The RG may be for different Numerology on each carrier, and an RG may be a collection of resources for all sub-carriers in the frequency domain and all symbols under 1 subframe length in the time domain, and the starting point of the frequency domain may be granular in RB. The time resource may comprise/indicate a sidelink resource pool. The sidelink resource pool may comprise/indicate overall time/frequency resource that may be used for sidelink communication within a carrier frequency.

The frequency resource may indicate frequency domain resource. The frequency resource may indicate resource of frequency (e.g., frequency band, carrier, subcarrier) allocated for sending and/or receiving signaling and/or user data for the ranging service between the first wireless device and/or the second wireless device. The frequency resource to perform a ranging service/sidelink service may indicate resource of frequency (e.g., frequency band, carrier, subcarrier) allocated for sending and/or receiving signaling and/or user data between a first wireless device and a second wireless device (e.g., via PC5 interface) for ranging service/sidelink service. The frequency resource may comprise/indicate frequency band, carrier, and/or subcarrier. The frequency resource may comprise/indicate BWP, RE, and/or RB as shown in FIG. 19 and/or FIG. 20. The frequency resource may comprise/indicate CORESET as shown in FIG. 21A and FIG. 21B. The frequency resource may comprise/indicate an RG (Resource Grid). The frequency domain resource for PDSCH transmissions may be scheduled by DCI format 1_0, 1_1 and/or 1_2 in the field Frequency-domain resource assignment (e.g., by setting resourceAllocation field in a parameter of PDSCH-Config). The frequency resource may comprise/indicate a sidelink resource pool.

A radio bearer resource may indicate resource for a radio bearer. The radio bearer resource may indicate/comprise time resource and/or frequency resource for the radio bearer. The radio bearer may comprise signaling radio bearer and/or data radio bearer. The signaling radio bearer may be a radio bearer for transmitting and/or receiving signaling for a wireless device. The signaling radio bearer to perform ranging service/sidelink service may be a radio bearer for transmitting and/or receiving signaling between the first wireless device and the second wireless device (e.g., via PC5 interface) for ranging service/sidelink service. The data radio bearer may be a radio bearer for transmitting and/or receiving user (application) data for a wireless device. The data radio bearer to perform ranging service/sidelink service ranging service may be a radio bearer for transmitting and/or receiving user (application) data between the first wireless device and the second wireless device (e.g., via PC5 interface) for ranging service/sidelink service. The radio bearer resource may indicate/comprise QoS parameters for the radio bearer, where the QoS parameters may comprise bandwidth, priority, and/or delay budget for the radio bearer and/or associated QoS flow(s).

The at least one accepted ranging method determined by the second wireless device and/or the at least one ranging method determined by the first wireless device may indicate Two Way Ranging, the second parameter/ Ranging Capability may indicate the first wireless device supports ranging service, the seventh parameter/Ranging Method of UE 2 may indicate the second wireless device supports ranging service, the sixth parameter/Ranging Accuracy and/or the ninth parameter/Ranging Accuracy of UE 2 may indicate accuracy of distance is 1 meter, based on above information, the first wireless device may determine configuration parameters for radio resources and/or configuration parameters for antennas to perform ranging service by using the Two Way Ranging. The first wireless device and/or the second wireless device may support more than one antenna as shown in FIG. 22. For example, the first wireless device may determine at least one data radio bearer, where the at least one data radio bearer may be used by the first wireless device and the second wireless device to perform ranging service (e.g., sending/receiving latency request/latency response messages). For example, considering the second parameter/ Ranging Capability (e.g., the maximum distance to be measured by the first wireless device and the second wireless device is 20 meters), the sixth parameter/Ranging Accuracy and/or the ninth parameter/Ranging Accuracy of UE 2 (e.g., accuracy of distance is 1 meter), the first wireless device may determine a smaller time/frequency resource (e.g., bandwidth, BWP) to perform ranging service by using the ranging method of Two Way Ranging between the first wireless device and the second wireless device.

The at least one accepted ranging method determined by the second wireless device and/or the at least one ranging method determined by the first wireless device, the second parameter/ Ranging Capability may indicate the first wireless device supports ranging service, the seventh parameter/Ranging Method of UE 2 may indicate the second wireless device supports ranging service, the eighth parameter/Ranging Capability of UE 2 may indicate the second wireless device does not support inter-frequency RSTD measurement, the second parameter/ Ranging Capability may indicate a maximum distance of 100 meters may be measured by the first wireless device, the sixth parameter/Ranging Accuracy may indicate accuracy of distance is 0.5 meter, based on above information, the first wireless device may determine configuration parameters for radio resources and/or configuration parameters for antennas to perform ranging service by using the ranging method of SL-DTDOA. The determining configuration parameters for radio resources may comprise allocating radio resources. For example, the first wireless device may determine at least one data radio bearer, where the at least one data radio bearer may be used by the first wireless device and the second wireless device to perform ranging service (e.g., the first wireless device receives measurement reports from the second wireless device over the at least one data radio bearer). For example, considering the second parameter/ Ranging Capability (e.g., the maximum distance to be measured by the first wireless device and the second wireless device is 100 meters) and/or the sixth parameter/Ranging Accuracy (e.g., accuracy of distance is 1 meter), the first wireless device may determine a larger time/frequency resource (e.g., bandwidth, BWP) from a sidelink resource pool to perform ranging service by using the SL-DTDOA between the first wireless device and the second wireless device. For example, the first wireless device may determine time/frequency resource for the SL-PRS for the second wireless device. For example, the first wireless device may determine configuration parameters for 1 antenna for the first wireless device to perform ranging service with the second wireless device. For example, the first wireless device may determine configuration parameters for 1 antenna for the second wireless device to perform ranging service with the first wireless device. For example, the first wireless device may determine configuration parameter for 3 antennas for the second wireless device to receive SL-PRS from 3 TPs.

The configuration parameters for radio resources and/or configuration parameters for antennas to perform ranging service may comprise an eleventh parameter (e.g., sl-ConfigDedicatedNR) indicating dedicated radio resources configuration for the ranging service for the first wireless device and/or the second wireless device. The configuration parameters for radio resources and/or configuration parameters for antennas to perform ranging service may comprise a twelfth parameter (e.g., sl-L2RemoteUEConfig) indicating configuration for layer 2 remote UE (e.g., the second wireless device).

The eleventh parameter / sl-ConfigDedicatedNR may comprises one or more of the following parameters. For example, the eleventh parameter/ sl-ConfigDedicatedNR may comprise a parameter (e.g., Sidelink Service Type) indicating what sidelink service (s) the eleventh parameter/ sl-ConfigDedicatedNR may be applied to. The parameter/ Sidelink Service Type may indicate/comprise at least one of: a V2X service, a ranging service, a relay service, a public safety service, and/or service associated with sidelink. For example, the parameter/ Sidelink Service Type may indicate that the eleventh parameter/ sl-ConfigDedicatedNR may be applied to the V2X service and/or the ranging service.

The eleventh parameter/ sl-ConfigDedicatedNR may comprise a parameter (e.g., sl-PHY-MAC-RLC-Config) indicating configuration of physical layer, MAC layer and/or RLC layer applied to ranging service and/or sidelink services indicated by the parameter/ Sidelink Service Type. The eleventh parameter/ sl-ConfigDedicatedNR may comprise a parameter (e.g., sl-RadioBearerToReleaseList) indicating one or multiple sidelink radio bearer configurations to be removed. The parameter/ sl-RadioBearerToReleaseList may be applied to the ranging service and/or sidelink services indicated by the parameter/ Sidelink Service Type. The eleventh parameter/ sl-ConfigDedicatedNR may comprise a parameter (e.g., sl-RadioBearerToAddModList) indicating one or multiple sidelink radio bearer configurations to be added and/or modified. The parameter/ sl-RadioBearerToAddModList may be applied ranging service and/or sidelink services indicated by the parameter/ Sidelink Service Type. The eleventh parameter/ sl-ConfigDedicatedNR may comprise a parameter (e.g., sl-MeasConfigInfoToReleaseList) indicating Reference Signal Receive Power (RSRP) measurement configurations for unicast destinations (e.g., a second wireless device) to be removed. The parameter/ sl-MeasConfigInfoToReleaseList may be applied to the ranging service and/or sidelink services indicated by the parameter/ Sidelink Service Type. The eleventh parameter/ sl-ConfigDedicatedNR may comprise a parameter (e.g., sl-MeasConfigInfoToAddModList) indicating RSRP measurement configurations for unicast destinations to be added/modified. The parameter/ sl-MeasConfigInfoToAddModList may be applied to the ranging service and/or sidelink services indicated by the parameter/ Sidelink Service Type.

The parameter/ sl-PHY-MAC-RLC-Config may comprise one or more of the following parameters. The parameter/ sl-PHY-MAC-RLC-Config may comprise a parameter (e.g., sl-ScheduledConfig) indicating configuration for the wireless device (e.g., UE) to transmit NR sidelink communication based on network scheduling. The parameter/ sl-PHY-MAC-RLC-Config may comprise a parameter (e.g., sl-UE-SelectedConfig) indicating the configuration used for the UE autonomous resource selection.

The parameter/ sl-PHY-MAC-RLC-Config may comprise a parameter (e.g., sl-FreqInfoToReleaseList) indicating the NR sidelink communication configuration on some carrier frequency (ies) to be removed. The parameter/ sl-PHY-MAC-RLC-Config may comprise a parameter (e.g., sl-FreqInfoToAddModList) indicating the NR sidelink communication configuration on some carrier frequency (ies) to be added and/or modified.

The parameter/ sl-PHY-MAC-RLC-Config may comprise a parameter (e.g., sl-RLC-BearerToReleaseList) indicating one or multiple sidelink RLC bearer configurations to be removed. The parameter/ sl-PHY-MAC-RLC-Config may comprise a parameter (e.g., sl-RLC-BearerToAddModList) indicating one or multiple sidelink RLC bearer configurations to be added/modified.

The parameter/ sl-PHY-MAC-RLC-Config may comprise a parameter (e.g., sl-MaxNumConsecutiveDTX) indicating the maximum number of consecutive Hybrid Automatic Repeat Request (HARQ) Discontinuous transmission (DTX) before triggering sidelink radio link failure (RLF). The parameter/ sl-PHY-MAC-RLC-Config may comprise a parameter (e.g., sl-CSI-Acquisition) indicating whether Channel State Information (CSI) reporting is enabled in sidelink unicast. The parameter/ sl-PHY-MAC-RLC-Config may comprise a parameter (e.g., sl-CSI-SchedulingRequestId) indicating the scheduling request configuration applicable for sidelink CSI report Medium Access Control (MAC) Control Element (CE). The parameter/ sl-PHY-MAC-RLC-Config may comprise a parameter (e.g., sl-SSB-PriorityNR) indicating the priority of NR sidelink Synchronization Signal Block (SSB) transmission and reception. The parameter/ sl-PHY-MAC-RLC-Config may comprise a parameter (e.g., networkControlledSyncTx) indicating whether the UE transmits synchronization information to another UE (e.g., become synchronization source).

The first wireless device may receive TPs/RPs information from a network function (e.g., an OAM, a UDM, an NWDAF). For example, the network function may send TPs/RPs information to the first wireless device based on configuration and/or based on a query request from the first wireless device. For example, the first wireless device may send a query request message to the network function requesting TPs/RPs, the query request message may comprise one or more parameters of the first message, one or more parameters of the second message, the at least one accepted ranging method determined by the second wireless device and/or the at least one ranging method determined by the first wireless device.

The network function may determine TPs/RPs information and send the TPs/RPs information to the first wireless device, for example, based on the information received from the first wireless device and/or local configuration. For example, based on the at least one accepted ranging method determined by the second wireless device and/or the at least one ranging method determined by the first wireless device, the network may determine multiple RPs for SL-UTDOA, and/or multiple TPs for SL-DTDOA.

The TPs/RPs information may comprise at least one of: TP/RP type, TP/RP identifier, TP/RP capability, and/or location of TP/RP. The TP/RP type may indicate/comprise: a TP, a RP, both TP and RP. TP/RP identifier may comprise at least one identifier to identify the TP/RP, e.g., a cell ID, an IP address, and/or the like. TP/RP capability may indicate capability of the TP/RP to support the ranging/sidelink positioning service. The TP/RP capability may comprise the first parameter/ Ranging Method indicating one or more ranging method supported by the TP/RP. The TP/RP capability may comprise the second parameter/ Ranging Capability. The location of TP/RP may indicate location of the TP/RP. For example, the location of TP/RP may indicate an absolute location (e.g., GPS location) of the TP/RP. For example, the location of TP/RP may indicate a relative location of the TP/RP, e.g., the location of the TP/RP relative to the location of the first wireless device and/or the second wireless device.

The first wireless device may determine sidelink positioning assistance data for the ranging service by using the at least one accepted ranging method determined by the second wireless device and/or the at least one ranging method determined by the first wireless device, for example, based on one or more parameters of the first message, one or more parameters of the second message, the at least one accepted ranging method determined by the second wireless device, the at least one ranging method determined by the first wireless device, and/or TPs/RPs information.

For example, based on the first parameter/Ranging Method, the second parameter/Ranging Capability, the third parameter/ PC5 Capability, the fourth parameter/ V2X Capability, the fifth parameter/ ProSe Capability, the sixth parameter/Ranging Accuracy, the identity of the first wireless device, the identity of the second wireless device, the seventh parameter/Ranging Method of UE 2, the eighth parameter/Ranging Capability of UE 2, the ninth parameter/Ranging Accuracy of UE 2, the tenth parameter/V2X Capability of UE 2, the at least one accepted ranging method determined by the second wireless device, the at least one ranging method determined by the first wireless device and/or TPs/RPs information, the first wireless device may determine sidelink positioning assistance data for the ranging service by using the at least one accepted ranging method determined by the second wireless device, and/or the at least one ranging method determined by the first wireless device.

The sidelink positioning assistance data may be applied to the first wireless device, the second wireless device and/or one or more TPs/RPs. In this specification, the terms/terminologies "sidelink positioning assistance data", "ranging assistance data", "sidelink assistance data", and/or "assistance data" may be used interchangeably.

The sidelink positioning assistance data may comprise configuration parameters for radio resources and/or configuration parameters for antennas to perform the ranging service. For example, the sidelink positioning assistance data may comprise frequency/time resource (e.g., carrier frequency, BWP), where the frequency/time resource may be used by the TPs/RPs, the first wireless device and/or the second wireless device to perform ranging services. For example, the sidelink positioning assistance data may comprise configuration of radio bearer resource and/or configuration of antenna(s) which may be used by the TPs/RPs, the first wireless device and/or the second wireless device to perform ranging services (e.g., sending/receiving SL-PRS, sending/receiving measurement reports). The sidelink positioning assistance data may comprise the TPs/RPs information, where the TPs/RPs information may be used by the first wireless device and/or the second wireless device to perform ranging service, e.g., to calculate the position of the first wireless device and/or the second wireless device based on the location of the TPs/RPs.

The sidelink positioning assistance data for the ranging service may comprise sidelink positioning assistance data for Two Way Ranging, wherein the sidelink positioning assistance data for Two Way Ranging may comprise configuration parameters for radio resources (e.g., time resource, frequency resource, radio bearer resource) and/or configuration parameters for antennas to perform the Two Way Ranging.

The sidelink positioning assistance data for the ranging service may comprise sidelink positioning assistance data for SL-DTDOA, wherein the sidelink positioning assistance data for SL-DTDOA may comprise configuration parameters for radio resources (e.g., time resource, frequency resource, radio bearer resource) and/or configuration parameters for antennas to perform the SL-DTDOA.

The sidelink positioning assistance data for the ranging service may comprise sidelink positioning assistance data for SL-UPDOA, wherein the sidelink positioning assistance data for SL-UPDOA may comprise configuration parameters for radio resources (e.g., time resource, frequency resource, radio bearer resource) and/or configuration parameters for antennas to perform the SL-UPDOA.

The sidelink positioning assistance data for the ranging service may comprise sidelink positioning assistance data for SL-DPDOA, wherein the sidelink positioning assistance data for SL-DPDOA may comprise configuration parameters for radio resources (e.g., time resource, frequency resource, radio bearer resource) and/or configuration parameters for antennas to perform the SL-DPDOA.

The sidelink positioning assistance data for the ranging service may comprise sidelink positioning assistance data for SL-UTDOA, wherein the sidelink positioning assistance data for SL-UTDOA may comprise configuration parameters for radio resources (e.g., time resource, frequency resource, radio bearer resource) and/or configuration parameters for antennas to perform the SL-UTDOA. For example, the sidelink positioning assistance data may comprise a parameter (e.g., NR-SL-UTDOA-ProvideAssistanceData), where the parameter/ NR-SL-UTDOA-ProvideAssistanceData may be used by the first wireless device to provide sidelink positioning assistance data to RPs and/or the second wireless device to perform sidelink/uplink TDOA.

The parameter/ NR-SL-UTDOA-ProvideAssistanceData may comprise nr-SL-PRS-AssistanceData, where the nr-SL-PRS-AssistanceData may comprise nr-SL-PRS-PositioningFrequencyLayer. The PRS-PositioningFrequencyLayer may comprise at least one of: SL-PRS-SubcarrierSpacing, SL-PRS-ResourceBandwidth, and/or SL-PRS-StartPRB. The SL-PRS-SubcarrierSpacing may indicate Subcarrier Spacing of the sidelink PRS (e.g., kHz 15, kHz30, kHz60, kHz120). The SL-PRS-StartPRB may indicate start of physical resource block (PRB) for the sidelink PRS. The SL-PRS-ResourceBandwidth may indicate sidelink PRS resource bandwidth.

The at least one accepted ranging method determined by the second wireless device and/or the at least one ranging method determined by the first wireless device may indicate a type of ranging method of SL-DTDOA supported by the first wireless device and/or the second wireless device, the second parameter/ Ranging Capability may indicate the first wireless device supports ranging service, the eighth parameter/Ranging Capability of UE 2 may indicate the second wireless device supports ranging service, the second parameter/ Ranging Capability and/or the eighth parameter/Ranging Capability of UE 2 may indicate the first wireless device and/or the second wireless device does not support inter-frequency RSTD measurement, based on above information, the first wireless device may determine sidelink positioning assistance data for the ranging service by using the ranging method of SL-DTDOA. For example, the first wireless device may determine sidelink positioning assistance data for SL-DTDOA, where the sidelink positioning assistance data may be used by the TPs, the second wireless device and/or the first wireless device to perform ranging service.

For example, based on the second parameter/ Ranging Capability and/or the eighth parameter/Ranging Capability of UE 2 that the first wireless device and/or the second wireless device does not support inter-frequency RSTD measurement, the first wireless device may determine sidelink positioning assistance data comprising a same carrier frequency, where the same carrier frequency may be used as the frequency of SL-PRS between the TPs and the second wireless device to perform the ranging service, e.g., the multiple TPs send the SL-PRS over the same carrier frequency to the second wireless device, and the second wireless device may measure the SL-PRS and may send the measurement reports to the first wireless device. For example, the sidelink positioning assistance data may comprise bandwidth of the same carrier frequency which may be used as the bandwidth of the SL-PRS. For example, the sidelink positioning assistance data may comprise configuration parameter of 1 antenna for each TP of the multiple TPs, wherein each TP of the multiple TPs may use the 1 antenna to send SL-PRS to the second wireless device. For example, the sidelink positioning assistance data may comprise configuration parameters of 3 antennas for the second wireless device, wherein the 3 antennas of the second wireless device may be used to receive SL-PRS from 3 TPs.

The at least one accepted ranging method determined by the second wireless device and/or the at least one ranging method determined by the first wireless device may indicate a type of ranging method of SL-UTDOA supported by the first wireless device and/or the second wireless device, the second parameter/ Ranging Capability may indicate the first wireless device supports ranging service, the eighth parameter/Ranging Capability of UE 2 may indicate the second wireless device supports ranging service, the second parameter/ Ranging Capability and/or the eighth parameter/Ranging Capability of UE 2 may indicate the first wireless device and/or the second wireless device support inter-frequency RSTD measurement, based on above information, the first wireless device may determine sidelink positioning assistance data for the ranging service by using the ranging method of SL-UTDOA. For example, the first wireless device may determine sidelink positioning assistance data for SL-UTDOA, where the sidelink positioning assistance data may be used by the multiple RPs, the second wireless device and/or the first wireless device to perform ranging service.

For example, based on the second parameter/ Ranging Capability and/or the eighth parameter/Ranging Capability of UE 2 that the first wireless device and/or the second wireless device support inter-frequency RSTD measurement, the first wireless device may determine sidelink positioning assistance data comprising different carrier frequencies. For example, the different carrier frequencies may comprise a carrier frequency 1 used between RP 1 and the second wireless device, a carrier frequency 2 used between RP 2 and the second wireless device, and/or carrier frequency 3 used between RP 3 and the second wireless device. The different carrier frequencies may be used as the frequency of SL-PRS between the multiple RPs and the second wireless device to perform the ranging service, e.g., the second wireless device sends the SL-PRS to RP 1 over the carrier frequency 1, the second wireless device sends the SL-PRS to RP 2 over the carrier frequency 2, and/or the second wireless device sends the SL-PRS to RP 3 over the carrier frequency 3. For example, the sidelink positioning assistance data may comprise bandwidth of the carrier frequency 1, bandwidth of the carrier frequency 2, and/or bandwidth of the carrier frequency 3. For example, the sidelink positioning assistance data may comprise configuration parameter of 1 antenna for each RP of the multiple RPs, wherein each RP of the multiple RPs may use the 1 antenna to receive SL-PRS from the second wireless device. For example, the sidelink positioning assistance data may comprise configuration parameters of 3 antennas for the second wireless device, wherein the 3 antennas of the second wireless device may be used to send SL-PRS to 3 RPs. For example, the sidelink positioning assistance data may comprise configuration parameters of radio resources (frequency resource, time resource, radio bearer resource), wherein the radio resources may be used by the multiple RPs to send measurement reports to the first wireless device.

In an action 4910, based on the configuration parameters for radio resources (e.g., time resource, frequency resource, radio bearer resource) and/or the configuration parameters for antennas to perform ranging service, the first wireless device may establish at least one PC5 RRC connection to the second wireless device. The first wireless device may establish one or more radio bearers with the second wireless device, the one or more radio bearers may be associated with the at least one PC5 RRC connection, for example, based on the configuration parameters for radio resources. For example, the one or more radio bearers may comprise a signaling radio bearer to transfer/receive signaling between the first wireless device and the second wireless device. For example, the one or more radio bearers may comprise a data radio bearer to transfer data (e.g., measurement report) between the first wireless device and the second wireless device.

The first wireless device may send a message 4911 (e.g., ProvideAssistanceData) to the TPs/RPs. The ProvideAssistanceData message 4911 may comprise the sidelink positioning assistance data for the ranging service.

The first wireless device may send a message 4912 (e.g., RRCReconfigurationSidelink, PC5 RRCReconfiguration) message to the second wireless device. The RRCReconfigurationSidelink/PC5 RRCReconfiguration message 4912 may comprise the at least one accepted ranging method determined by the second wireless device, the at least one ranging method determined by the first wireless device, the configuration parameters for radio resources and/or the configuration parameters for antennas to perform ranging service.

The RRCReconfigurationSidelink/PC5 RRCReconfiguration message 4912 may comprise the at least one accepted ranging method determined by the second wireless device, the at least one ranging method determined by the first wireless device, and/or the sidelink positioning assistance data for the ranging service.

In an action 4913, the first wireless device, the second wireless device and/or TPs/RPs may perform ranging service based on: the configuration parameters for radio resources to perform ranging service, the configuration parameters for antennas to perform ranging service, and/or sidelink positioning assistance data for the ranging service.

As part of the action 4913, the first wireless device may send one or more messages (e.g., Sidelink MAC CE, SCI) to the second wireless device. The Sidelink MAC CE/ SCI may comprise/indicate the at least one accepted ranging method determined by the second wireless device, the at least one ranging method determined by the first wireless device, the configuration parameters for radio resources and/or the configuration parameters for antennas to perform ranging service. The SCI may indicate if there is a transmission on Sidelink Shared Channel (SL-SCH) and provide the relevant HARQ information. A SCI may comprise two parts: a 1st stage SCI on Physical Sidelink Control Channel (PSCCH) and a 2nd stage SCI on Physical Sidelink Shared Channel (PSSCH). The 1st stage SCI may transport sidelink scheduling information. The 2nd stage SCI may transport sidelink scheduling information.

The at least one accepted ranging method determined by the second wireless device and/or the at least one ranging method determined by the first wireless device may comprise a Two Way Ranging. The first wireless device may perform ranging service with the second wireless device such as described with respect to FIG. 34, for example, based on at least one accepted ranging method determined by the second wireless device and/or the at least one ranging method determined by the first wireless device, based on the configuration parameters for radio resources to perform ranging service, and/or based on the configuration parameters for antennas to perform ranging service. The first wireless device may determine/calculate the range/position (e.g., distance) of the second wireless device by measuring the RTT between the first wireless device and the second wireless device. The first wireless device may send the range/position (e.g., distance) of the second wireless device to the second wireless device over the PC5 RRC connection.

The at least one accepted ranging method determined by the second wireless device and/or the at least one ranging method determined by the first wireless device may comprise a SL-UTDOA. The RPs, the first wireless device and/or the second wireless device may perform ranging service such as described with respect to FIG. 35, for example, based on the at least one accepted ranging method determined by the second wireless device and/or the at least one ranging method determined by the first wireless device, based on the configuration parameters for radio resources to perform ranging service, based on the configuration parameters for antennas to perform ranging service, and/or based on the sidelink positioning assistance data for the ranging service. The second wireless device may send a SL-PRS to 3 RPs, for example, based on the configuration parameters for radio resources, based on the configuration parameters for antennas, and/or based on the sidelink positioning assistance data. For example, based on the sidelink positioning assistance data, the 3 RPs may measure the SL-PRS and send measurement reports to the first wireless device. The measurement reports may comprise at least one of: a PRS resource ID indicating a PRS resource (e.g., nr-SL-PRS-ResourceId), a time stamp indicating detected path timing values of the SL-PRS (e.g., nr-TimeStamp, e.g., a time value indicating when received the SL-PRS, e.g., t1, t2, t3 as shown in FIG. 24), and/or a Signal Received Power (e.g., nr-PRS-RSRP) of the SL-PRS, and/or best estimate of the quality of the measurement of the RP (e.g., nr-TimingMeasQuality). The first wireless device may calculate the ranging/position/location of the second wireless device based on the measurement reports. The first wireless device may send the range/position (e.g., distance and/or direction) of the second wireless device to the second wireless device over the PC5 RRC connection.

The at least one accepted ranging method determined by the second wireless device and/or the at least one ranging method determined by the first wireless device may comprise a SL-DTDOA. The TPs, the first wireless device and/or the second wireless device may perform ranging service such as described with respect to FIG. 36, for example, based on the at least one accepted ranging method determined by the second wireless device and/or the at least one ranging method determined by the first wireless device, based on the configuration parameters for radio resources to perform ranging service, based on the configuration parameters for antennas to perform ranging service, and/or based on the sidelink positioning assistance data for the ranging service. The TPs may send a SL-PRS to the second wireless device, for example, based on the configuration parameters for radio resources, based on the configuration parameters for antennas, and/or based on the sidelink positioning assistance data. The second wireless device measure the received signals based on the sidelink positioning assistance data. The second wireless device may send a measurement report to the first wireless device, and the measurement report may comprise at least one of: a PRS resource ID indicating a PRS resource (e.g., nr-SL-PRS-ResourceId), each time stamp indicating detected path timing values of the SL-PRS for each of the TPs (e.g., nr-TimeStamp, e.g., a time value indicating when received the SL-PRS, e.g., t1, t2, t3 as shown in FIG. 35), a Signal Received Power (e.g., nr-PRS-RSRP) of the SL-PRS, relative timing difference between a neighbor TP and a reference TP (e.g., nr-Reference Signal Time Difference (nr-RSTD)), and/or best estimate of the quality of the measurement of the second wireless device (e.g., nr-TimingMeasQuality). The first wireless device may calculate the ranging/position/location of the second wireless device based on the measurement reports. The first wireless device may send the range/position (e.g., distance and/or direction) of the second wireless device to the second wireless device over the PC5 RRC connection.

The at least one accepted ranging method determined by the second wireless device and/or the at least one ranging method determined by the first wireless device may comprise a SL-UPDOA. The first wireless device and/or the second wireless device may perform ranging service such as described with respect to FIG. 37, for example, based on the at least one accepted ranging method determined by the second wireless device and/or the at least one ranging method determined by the first wireless device, based on the configuration parameters for radio resources to perform ranging service, based on the configuration parameters for antennas to perform ranging service, and/or based on the sidelink positioning assistance data for the ranging service. The first wireless device may measure the Azimuth Angle of Arrival (A-AoA), the Zenith Angle of Arrival (Z-AoA) and/or nr-PRS-RSRP of the reference signal transmitted from the second wireless device. The first wireless device may calculate the ranging/position/location of the second wireless device based on the measurement results. The first wireless device may send the range/position (e.g., distance and/or direction) of the second wireless device to the second wireless device over the PC5 RRC connection.

The at least one accepted ranging method determined by the second wireless device and/or the at least one ranging method determined by the first wireless device may comprise a SL-DPDOA. The first wireless device and/or the second wireless device may perform ranging service as described in FIG. 38, for example, based on the at least one accepted ranging method determined by the second wireless device and/or the at least one ranging method determined by the first wireless device, based on the configuration parameters for radio resources to perform ranging service, based on the configuration parameters for antennas to perform ranging service, and/or based on the sidelink positioning assistance data for the ranging service. The second wireless device may have multiple antennas, each of the multiple antennas may be a RP. By using assistance data received from a location server (e.g., a LMF, a base station), the multiple RPs may measure the Azimuth Angle of Arrival (A-AoA) and/or the Zenith Angle of Arrival (Z-AoA) of the reference signal transmitted from the first wireless device. The second wireless device may send a measurement report to the first wireless device, and the measurement report may comprise measured results (e.g., A-AoA, Z-AoA, nr-PRS-RSRP). The first wireless device may calculate the angle/position/location of the second wireless device based on the measurement report. The first wireless device may send the range/position (e.g., distance and/or direction) of the second wireless device to the second wireless device over the PC5 RRC connection.

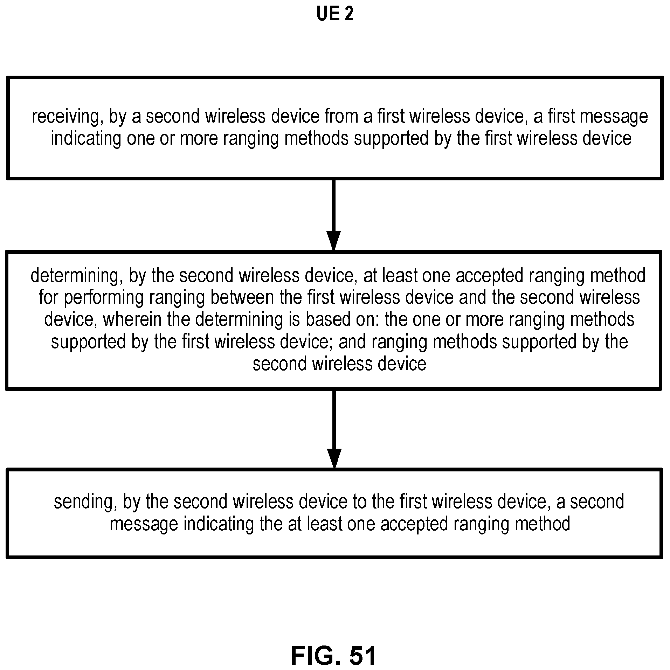

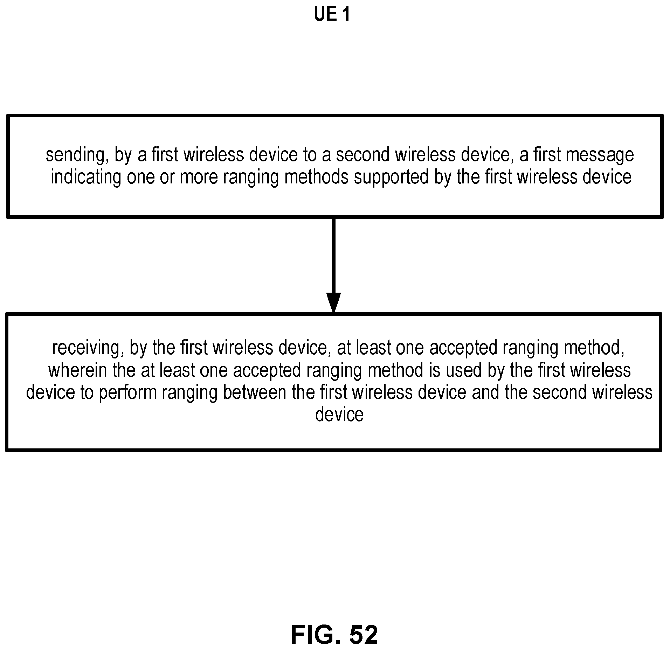

FIG. 51 is an example diagram depicting the procedures of a second wireless device as per an aspect of an embodiment of the present disclosure. The illustrated steps in Fig. 51 correspond to the actions of the second wireless device UE2 in Fig. 49. FIG. 52 is an example diagram depicting the procedures of a first wireless device as per an aspect of an embodiment of the present disclosure. The illustrated steps in Fig. 52 correspond to the actions of the first wireless device UE1 in Fig. 49.

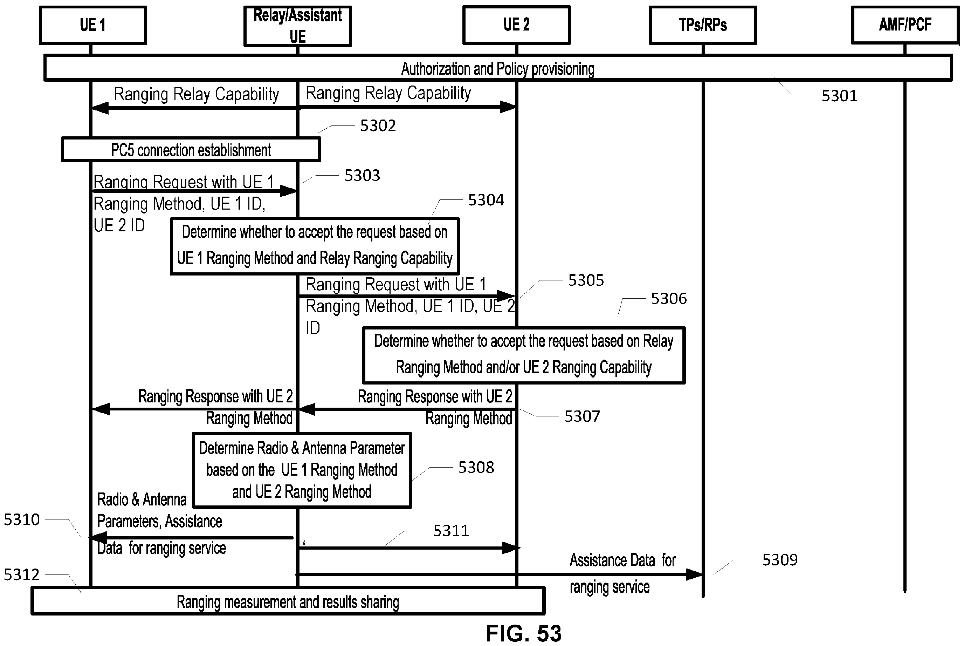

FIG. 53 is an example call flow as per an aspect of an embodiment of the present disclosure. A first wireless device (e.g., UE 1 as shown in FIG. 33) may need to perform a ranging method/operation between the first wireless device and a second wireless device (e.g., UE 2 as shown in FIG. 33). However, for some reasons, the UE 1 is not able to communicate with the UE 2 directly, and/or the UE 1 is not able to range/position the UE 2 directly. For example, the distance between the UE 1 and the UE 2 may be beyond the coverage of UE 1 and/or the UE 2. For example, there may be some obstacle (e.g., a wall) between the UE 1 and the UE 2, the non-line of sight (NLOS) path between UE 1 and the UE 2 may result in inaccurate ranging/positioning between the UE 1 and the UE 2. So, there is a need to have a Relay/Assistant wireless device (e.g., Relay/Assistant UE as shown in FIG. 33) to help/assist the UE 1 and the UE 2 for ranging services (e.g., the UE 1 may range/position the UE 2 via the Relay/Assistant UE).

The first wireless device, the second wireless device and/or the Relay/Assistant wireless device may request authorization/policy from a network (e.g., a communication system, 5G communication system) for ranging services as part of an authorization and policy provisioning process 5301, similar to the process 4901 described in FIG. 49.

As part of the authorization and policy provisioning process 5301, the first wireless device and/or the Relay/Assistant wireless device may send a NAS message (e.g., registration request) to an AMF requesting authorization/policy from the 5G network. The NAS message may comprise a parameter (e.g., Ranging Capability) indicating whether the first wireless device and/or the second wireless device supports ranging service. The NAS message may comprise a parameter/ Ranging/SL Positioning Policy Provisioning Request, the parameter/ Ranging/SL Positioning Policy Provisioning Request may indicate the first wireless device and/or the second wireless device requesting policy authorization for the ranging services from the network. The Relay/Assistant wireless device may comprise a parameter (e.g., Ranging Assistant Capability) in the NAS message, where the parameter/Ranging Assistant Capability may indicate assistant capability of the Relay/Assistant wireless device for ranging service.

The parameter/Ranging Assistant Capability may indicate that the Relay/Assistant wireless device may assist/help a first wireless device ranging/positioning a second wireless device. The parameter/Ranging Assistant Capability may indicate at least one of: the Relay/Assistant wireless device has a capability to assist/help a first wireless device to measure a distance of a second wireless device; the Relay/Assistant wireless device has a capability to assist/help a first wireless device to measure a direction of a second wireless device; the Relay/Assistant wireless device has a capability to assist/help a first wireless device to measure an angle of a second wireless device; the Relay/Assistant wireless device has a capability to assist/help a first wireless device to measure a velocity of a second wireless device; the Relay/Assistant wireless device has a capability to assist/help a first wireless device to measure a position of a second wireless device.

The AMF may send a message (e.g., Authorization Request, AM Policy Establishment/Modification Request) to a network node (e.g., PCF/AUSF) requesting to authorize the wireless device to perform the ranging services. The Authorization Request message and/or the AM Policy Establishment/Modification Request message may comprise one or more parameters of the NAS message (e.g., Ranging Capability, Ranging Method, Ranging Assistant Capability).

As part of the authorization and policy provisioning process 5301, for example, based on the one or more parameters of the NAS message (e.g., Ranging Capability, Ranging Method), the PCF/AUSF may determine a parameter (e.g., Ranging Service Indication) indicating accepting the request of the first wireless device to perform the ranging service. The parameter/ Ranging Service Indication may indicate the first wireless device and/or the second wireless device is allowed to perform the ranging service. The PCF/AUSF may determine Ranging Policy/Parameters for the ranging service, for example, based on the one or more parameters of the Authorization Request message and/or the AM Policy Establishment/Modification Request message. The Ranging Policy/Parameters may indicate policies and/or parameters for the ranging service. The Ranging Policy/Parameters may comprise at least one of: the ranging method, PLMNs in which the first wireless device and/or the second wireless device is authorized to perform ranging service; RAT(s) over which the first wireless device and/or the second wireless device is authorized to perform ranging service; radio parameters for the first wireless device and/or the second wireless device to perform ranging service; policy/parameters for PC5 RAT selection and for PC5 Tx Profile selection for the first wireless device and/or the second wireless device to perform ranging service; and/or QoS parameters for the first wireless device and/or the second wireless device to perform the ranging service.

The PCF/AUSF may determine a parameter (e.g., Ranging Assistant Indication) indicating whether the Relay/Assistant wireless device is authorized to assist a ranging service associated with the first wireless device and/or the second wireless device, for example, based on the one or more parameters of the Authorization Request message and/or the AM Policy Establishment/Modification Request message (e.g., Ranging Assistant Capability).

As part of the authorization and policy provisioning process 5301, the PCF/AUSF may send a response message (Authorization Response, AM Policy Establishment/Modification Response) to the AMF indicating whether to accept the request of the first wireless device, the second wireless device and/or the Relay/Assistant wireless device to perform the ranging service. The Authorization Response and/or the AM Policy Establishment/Modification Response may comprise the parameter/ Ranging Service Indication, the Ranging Policy/Parameters and/or the Ranging Assistant Indication.

For example, in response to receiving the response message, the AMF may send NAS response (e.g., registration response/accept) message to the first wireless device, the second wireless device, and/or the Relay/Assistant wireless device. The NAS response may comprise at least one of: the parameter/ Ranging Service Indication and/or the Ranging Policy/Parameters. The NAS response message may comprise plurality of indications of authorization for plurality of sidelink services, wherein the plurality of indications of authorization for plurality of sidelink services may indicate the network authorize at least one of the following sidelink services to the first wireless device and/or the second wireless device: ranging service, V2X service, relay service, public safety service, and/or other sidelink services. The NAS response sent to the Relay/Assistant wireless device may comprise the Ranging Assistant Indication.

The first wireless device may initiate a UE discovery procedure (e.g., ProSe Direct Discovery) to discover the second wireless device and/or the Relay/Assistant wireless device, for example, based on the one or more parameters received from the AMF. The UE discovery procedure (e.g., ProSe Direct Discovery) may be similar to (and/or the same as) the UE discovery procedure as described in FIG. 49. For brevity, further description will not be repeated here. The Relay/Assistant wireless device may broadcast its Ranging Assistant Capability to one or more wireless devices. The first wireless device may not be able to discover the second wireless device. The first wireless device may discover the Relay/Assistant wireless device. The first wireless device may establish 5302 at least one PC5 RRC connection and/or at least one radio bearer with the Relay/Assistant wireless device.

The first wireless device may send a first message 5303 (e.g., Ranging Request) to the Relay/Assistant wireless device, the definition/content of the first message may be similar to (and/or the same as) the definition/content of the first message as described in FIG. 49. For example, the first message 5303 may indicate requesting ranging services between the first wireless device and the second wireless via the Relay/Assistant wireless device. For example, the first message 5303 may indicate requesting assistance of the Relay/Assistant wireless device to perform ranging between the first wireless device and the second wireless device.

For example, the first message 5303 may indicate one or more ranging methods supported/requested by the first wireless device. The first message/ Ranging Request message 5303 may comprise a first parameter (e.g., Ranging Method, Sidelink Positioning Method) indicating one or more type of ranging methods/sidelink positioning methods supported/requested by the first wireless device for ranging service. The definition/content of the first parameter/Ranging Method may be similar to (and/or the same as) the definition/content of the first parameter/Ranging Method as described in FIG. 49.

The first message 5303 may comprise a second parameter (e.g., Ranging Capability) indicating whether the first wireless device supports ranging service. The definition/content of the second parameter/Ranging Capability may be similar to (and/or the same as) the definition/content of the second parameter/Ranging Capability as described in FIG. 49. The first message 5303 may comprise a parameter (e.g., Ranging Accuracy) indicating an accuracy of the ranging service supported by the first wireless device. The definition/content of the parameter/Ranging Accuracy may be similar to (and/or the same as) the definition/content of the sixth parameter/Ranging Accuracy as described in FIG. 49.

The first message 5303 may comprise an identity of the first wireless device and/or an identity of the second wireless device. The identity of the first wireless device and/or the identity of the second wireless device may indicate that the first wireless device requests ranging/positioning the second wireless device. The definition/content of the identity of the first wireless device and/or the identity of the second wireless device may be similar to (and/or the same as) the definition/content of the identity of the first wireless device and/or the identity of the second wireless device as described in FIG. 49.

In response to receiving the first message 5303, the Relay/Assistant wireless device may take one or more actions 5304. The Relay/Assistant wireless device may determine whether to accept the request of the first message 5303 for ranging service, for example, based on the first message 5303 and the ranging capability of the Relay/Assistant wireless device. The Relay/Assistant wireless device may determine whether to accept the request of the first message 5303 for ranging service, for example, based on the one or more ranging methods supported by the first wireless device, ranging capability of the Relay/Assistant wireless device, and/or ranging methods supported by the Relay/Assistant wireless device.

The Relay/Assistant wireless device may determine whether to accept the request of the first message 5303 based on determining that the one or more ranging methods supported by the first wireless device which can also be supported by the Relay/Assistant wireless device. The second wireless device may determine to reject the request of the first message 5303 based on determining that the second wireless device is not able to support the one or more ranging methods supported by the first wireless device.

The ranging capability of the Relay/Assistant wireless device may indicate whether the Relay/Assistant wireless device supports ranging service or not. The ranging capability of the Relay/Assistant wireless device may indicate ranging methods supported by the Relay/Assistant wireless device. The ranging methods supported by the Relay/Assistant wireless device may comprise/indicate at least one of the following methods as described in FIG. 34 to FIG. 38: Two Way Ranging, Sidelink Uplink Time Difference of Arrival (SL-UTDOA), Sidelink Downlink Time Difference of Arrival (SL-DTDOA), Sidelink Uplink Phase Difference of Arrival (SL-UPDOA), and/or Sidelink Downlink Phase Difference of Arrival (SL-DPDOA).

For example, the first parameter/Ranging Method may indicate that the first wireless device supports Two Way Ranging and Sidelink Downlink Time Difference of Arrival (SL-DTDOA), the second parameter/Ranging Capability may indicate that the first wireless device supports ranging service, the ranging capability of the Relay/Assistant wireless device may indicate the Relay/Assistant wireless device supports ranging service, the ranging methods supported by the Relay/Assistant wireless device may comprise SL-UTDOA and SL-DTDOA, based on above information, the Relay/Assistant wireless device may determine to accept the request of the first message for ranging service.

For example, the first parameter/Ranging Method may indicate that the first wireless device supports SL-UTDOA and SL-DTDOA, the second parameter/Ranging Capability may indicate that the first wireless device supports ranging service, the ranging capability of the Relay/Assistant wireless device may indicate the Relay/Assistant wireless device supports ranging service, the ranging methods supported by the Relay/Assistant wireless device may comprise SL-UPDOA and SL-DPDOA, based on above information, the Relay/Assistant wireless device may determine to reject the request of the first message 5303 for ranging service.

In an action, based on accepting the request of the first message 5303, the Relay/Assistant wireless device may send a second message 5305 to the second wireless device. The second message 5305 may indicate requesting ranging service between the first wireless device and the second wireless device via the Relay/Assistant wireless device. The second message 5305 may indicate requesting ranging service between the first wireless device and the second wireless device with the assistance of the Relay/Assistant wireless device.

The second message 5305 may comprise one or more parameters of the first message 5303 (e.g., the first parameter/Ranging Method, the second parameter/Ranging Capability). The second message 5305 may comprise a third parameter (e.g., Ranging Method of Relay/Assistant UE) indicating the ranging methods supported by the Relay/Assistant wireless device. The second message 5305 may comprise a fourth parameter (e.g., Ranging Capability of Relay/Assistant UE) indicating whether the Relay/Assistant wireless device has the capability to measure/determine a range/position of a second wireless device. The definition/content of the fourth parameter/ Ranging Capability of Relay/Assistant UE may be similar to (and/or the same as) the definition/content of the second parameter/Ranging Capability as described in FIG. 49. The second message 5305 may comprise the parameter/Ranging Assistant Capability. The second message 5305 may comprise an identity of the Relay/Assistant wireless device. The definition/content of the Relay/Assistant wireless device may be similar to (and/or the same as) the definition/content of the identity of the first wireless device as described in FIG. 49.

In response to receiving the second message 5305 from the Relay/Assistant wireless device, the second wireless device may take one or more actions 5306. In an action, based on the one or more parameters of the second message 5305 and/or ranging capability of the second wireless device, the second wireless device may determine whether to accept the request of the second message for ranging service. The second wireless device may determine whether to accept the request of the second message 5305 for ranging service, for example, based on the one or more ranging methods supported by the Relay/Assistant wireless device, ranging capability of the second wireless device, and/or ranging methods supported by the second wireless device. The ranging service may be between the Relay/Assistant wireless device and the second wireless device. The ranging service may be between the first wireless device and the second wireless device with the assistance of the Relay/Assistant wireless device.

The second wireless device may determine whether to accept the request of the second message 5305 based on determining that the one or more ranging methods supported by the Relay/Assistant wireless device which can also be supported by the second wireless device. The second wireless device may determine to reject the request of the second message based on determining that the second wireless device is not able to support the one or more ranging methods supported by the Relay/Assistant wireless device.

The ranging capability of the second wireless device may indicate whether the second wireless device supports ranging service or not. The ranging capability of the second wireless device may indicate ranging methods supported by the second wireless device. The ranging methods supported by the second wireless device may comprise/indicate at least one of the following methods as described in FIG. 34 to FIG. 38: Two Way Ranging, Sidelink Uplink Time Difference of Arrival (SL-UTDOA), Sidelink Downlink Time Difference of Arrival (SL-DTDOA), Sidelink Uplink Phase Difference of Arrival (SL-UPDOA), and/or Sidelink Downlink Phase Difference of Arrival (SL-DPDOA).

For example, the third parameter/Ranging Method of Relay/Assistant UE may indicate that the Relay/Assistant wireless device supports Two Way Ranging and SL-DTDOA, the fourth parameter/Ranging Capability of Relay/Assistant UE may indicate that the Relay/Assistant wireless device supports ranging service, the ranging capability of the second wireless device may indicate the second wireless device supports ranging service, the ranging methods supported by the second wireless device may comprise SL-UTDOA and SL-DTDOA, based on above information, the second wireless device may determine to accept the request of the second message 5305 for ranging service.

For example, the third parameter/Ranging Method of Relay/Assistant UE may indicate that the Relay/Assistant wireless device supports SL-UTDOA and SL-DTDOA, the fourth parameter/Ranging Capability of Relay/Assistant UE may indicate that the Relay/Assistant wireless device supports ranging service, the ranging capability of the second wireless device may indicate the second wireless device supports ranging service, the ranging methods supported by the second wireless device may comprise SL-UPDOA and SL-DPDOA, based on above information, the second wireless device may determine to reject the request of the second message 5305 for ranging service.

The second wireless device may determine at least one accepted ranging method for performing ranging between the Relay/Assistant wireless device and the second wireless device, for example, based on the second message 5303. The second wireless device may determine at least one accepted ranging method for performing ranging between the Relay/Assistant wireless device and the second wireless device, for example, based on the one or more ranging methods supported by the Relay/Assistant wireless device, ranging capability of the second wireless device, and/or ranging methods supported by the second wireless device.

The second wireless device may determine at least one accepted ranging method based on determining that the at least one accepted ranging method is supported both by the Relay/Assistant wireless device and the second wireless device. The second wireless device may determine at least one accepted ranging method for performing ranging between the Relay/Assistant wireless device and the second wireless device based on determining that the second wireless device accepts the request of the second message 5305 for ranging service.

The at least one accepted ranging method may comprise/indicate at least one of the following methods as described in FIG. 34 to FIG. 38: Two Way Ranging, SL-UTDOA, SL-DTDOA, SL-UPDOA, and/or SL-DPDOA.

For example, the third parameter/Ranging Method of Relay/Assistant UE may indicate that the Relay/Assistant wireless device supports Two Way Ranging, SL-UTDOA and SL-DTDOA, the fourth parameter/Ranging Capability of Relay/Assistant UE may indicate that the Relay/Assistant wireless device supports ranging service, the ranging capability of the second wireless device may indicate the second wireless device supports ranging service, the ranging methods supported by the second wireless device may comprise SL-UTDOA and SL-DTDOA, based on above information, the second wireless device may determine at least one accepted ranging method, wherein the at least one accepted ranging method comprise the SL-UTDOA and/or the SL-DTDOA.

For example, the third parameter/Ranging Method of Relay/Assistant UE may indicate that the Relay/Assistant wireless device supports Two Way Ranging, SL-UTDOA, SL-UPDOA, and/or SL-DPDOA, the fourth parameter/Ranging Capability of Relay/Assistant UE may indicate that the Relay/Assistant wireless device supports ranging service, the ranging methods supported by the second wireless device may comprise Two Way Ranging, SL-UTDOA, and/or SL-UPDOA, based on above information, the second wireless device may determine at least one accepted ranging method, wherein the at least one accepted ranging method comprise the Two Way Ranging, SL-UTDOA, and/or SL-UPDOA.

The second wireless device may send a third message 5307 (e.g., Ranging Response) to the Relay/Assistant wireless device. The third message 5307 may indicate accepting the request of the second message for ranging service. The third message 5307 may indicate accepting the request of ranging service between the first wireless device and the second wireless device with the assistance of the Relay/Assistant wireless device.

The third message 5307 may indicate rejecting the request of the second message 5305 for ranging service between the first wireless device and the second wireless device with the assistance of the Relay/Assistant wireless device. The third message 5307 may comprise at least one cause value indicating one or more reasons for the rejecting of the request of the second message 5305 for ranging service. For example, the at least one cause value may indicate that the second wireless device is not able to support ranging service. For example, the at least one cause value may indicate that the second wireless device is not able to support the third parameter/Ranging Method of Relay/Assistant UE (e.g., the one or more ranging methods of the Relay/Assistant wireless device).

The third message 5307 may comprise the at least one accepted ranging method for performing ranging between the Relay/Assistant wireless device and the second wireless device.

The third message 5307 may comprise a parameter (e.g., Ranging Method, Ranging Method of UE 2) indicating ranging method supported by the second wireless device for performing ranging between the Relay/Assistant wireless device and the second wireless device. The parameter/Ranging Method of UE 2 may indicate ranging method supported by the second wireless device for performing ranging between the second wireless device and the Relay/Assistant wireless device. The parameter/Ranging Method of UE 2 may indicate one or more type of ranging methods/sidelink positioning methods supported by the second wireless device for ranging service. The parameter/Ranging Method of UE 2 may comprise/indicate at least one of the following methods as described in FIG. 34 to FIG. 38: Two Way Ranging, SL-UTDOA, SL-DTDOA, SL-UPDOA, and/or SL-DPDOA.

The third message 5307 may comprise a parameter (e.g., Ranging Capability, Ranging Capability of UE 2) indicating whether the second wireless device supports ranging service. The parameter/Ranging Capability of UE 2 may indicate whether the second wireless device has the capability to measure/determine a range/position of the Relay/Assistant wireless device. The parameter/Ranging Capability of UE 2 may indicate whether the second wireless device has the capability to assist the Relay/Assistant wireless device to measure/determine a range/position of the second wireless device.

The parameter/Ranging Capability of UE 2 may comprise the parameter/Ranging Method of UE 2. The parameter/Ranging Capability of UE 2 may indicate one or more ranging methods supported by the second wireless device.

The parameter/Ranging Capability of UE 2 may comprise/indicate supported frequency band(s) of the ranging service by the second wireless device. The parameter/Ranging Capability of UE 2 may comprise/indicate supported frequency band(s) of Reference Signal Time Difference (RSTD) measurement by the second wireless device.

The parameter/Ranging Capability of UE 2 may comprise/indicate inter-frequency RSTD measurement, wherein the inter-frequency RSTD measurement may indicate whether the second wireless device supports inter-frequency RSTD measurement. The parameter/Ranging Capability of UE 2 may comprise/indicate RSTD measurement supported by the second wireless device, where the RSTD measurement may comprise an inter-frequency RSTD measurement and/or an intra-frequency RSTD measurement. For example, the parameter/Ranging Capability of UE 2 may indicate the second wireless device supports inter-frequency RSTD measurement and/or intra-frequency RSTD measurement.

The third message 5307 may comprise a parameter (e.g., Ranging Accuracy of UE 2) indicating an accuracy of the ranging service supported by the second wireless device. The parameter/Ranging Accuracy of UE 2 may indicate degree of conformity of a measure to a standard or a true value of the ranging. The parameter/Ranging Accuracy of UE 2 may comprise at least one of: accuracy of a distance for the ranging service (e.g., millimeter, meter); accuracy of a direction for the ranging service; accuracy of an angle for the ranging service; accuracy of a velocity for the ranging service; and/or accuracy of a position for the ranging service. The third message 5307 may comprise the identity of the second wireless device. The third message 5307 may comprise the identity of the Relay/Assistant wireless device.

The third message 5307 may comprise a MAC layer message (e.g., MAC Control Element (CE)). The third message 5307 may comprise a physical layer message (e.g., a DCI message over a PDCCH). The third message 5307 comprises an RRC message, where the RRC message comprises at least one of: an RRCReconfigurationCompleteSidelink; an RRCReconfigurationFailureSidelink; a UECapabilityInformationSidelink; and/or an SBCCH-SL-BCH-Message.

In response to receiving the third message 5307 from the second wireless device, the Relay/Assistant wireless device may take one or more actions 5308. The Relay/Assistant wireless device may determine whether to accept the first message 5303, for example, based on the first message 5303 and/or the third message 5307. For example, the Relay/Assistant wireless device may determine to accept the first message 5303 if the third message 5307 indicates the second wireless device accepts the second message 5305. For example, the Relay/Assistant wireless device may determine to reject the first message 5303 if the third message 5307 indicates the second wireless device rejects the second message 5305.

In an action 5308, based on the ranging method supported by the first wireless device, the ranging method supported by the Relay/Assistant wireless device, the ranging capability of the first wireless device, and/or the ranging capability of the Relay/Assistant wireless device, the Relay/Assistant wireless device may determine a first ranging method for the ranging service between the first wireless device and/or the Relay/Assistant wireless device, where the first ranging method is able to be supported both by the first wireless device and by the Relay/Assistant wireless device. The Relay/Assistant wireless device may determine the first ranging method based on the first ranging method is able to be supported both by the first wireless device and by the Relay/Assistant wireless device. The first ranging method may comprise at least one of the following ranging methods: Two Way Ranging, SL-UTDOA, SL-DTDOA, SL-UPDOA, and/or SL-DPDOA.

For example, the ranging method supported by the first wireless device may comprise Two Way Ranging, SL-UTDOA and/or SL-DTDOA, the ranging method supported by the Relay/Assistant wireless device may comprise SL-UTDOA and/or SL-DTDOA, based on above information, the Relay/Assistant wireless device may determine the first ranging method comprising SL-UTDOA and/or SL-DTDOA. For example, the ranging method supported by the first wireless device may comprise Two Way Ranging, SL-UTDOA, SL-DTDOA, SL-UPDOA, and/or SL-DPDOA, the ranging method supported by the Relay/Assistant wireless device may comprise Two Way Ranging, SL-UTDOA, SL-DTDOA, SL-UPDOA, and/or SL-DPDOA, based on above information, the Relay/Assistant wireless device may determine the first ranging method comprising Two Way Ranging, SL-UTDOA, SL-DTDOA, SL-UPDOA, and/or SL-DPDOA.

The Relay/Assistant wireless device may determine a second ranging method for the ranging service between the second wireless device and/or the Relay/Assistant wireless device, where the second ranging method is able to be supported both by the second wireless device and by the Relay/Assistant wireless device, for example, based on the ranging method supported by the second wireless device, the ranging method supported by the Relay/Assistant wireless device, the ranging capability of the second wireless device, and/or the ranging capability of the Relay/Assistant wireless device. The Relay/Assistant wireless device may determine the second ranging method based on the second ranging method is able to be supported both by the second wireless device and by the Relay/Assistant wireless device. The second ranging method may comprise at least one of the following ranging methods: Two Way Ranging, SL-UTDOA, SL-DTDOA, SL-UPDOA, and/or SL-DPDOA.

For example, the ranging method supported by the second wireless device may comprise SL-UTDOA, SL-DTDOA, and/or SL-UPDOA, the ranging method supported by the Relay/Assistant wireless device may comprise SL-UTDOA and/or SL-DTDOA, based on above information, the Relay/Assistant wireless device may determine the second ranging method comprising SL-UTDOA and/or SL-DTDOA. For example, the ranging method supported by the first wireless device may comprise Two Way Ranging, SL-DTDOA, SL-UPDOA, and/or SL-DPDOA, the ranging method supported by the Relay/Assistant wireless device may comprise Two Way Ranging, SL-UTDOA and/or SL-DTDOA, based on above information, the Relay/Assistant wireless device may determine the first ranging method comprising Two Way Ranging and/or SL-DTDOA.

The Relay/Assistant wireless device may determine configuration parameters for radio resources and/or configuration parameters for one or more antenna to perform a ranging service using the first ranging method between the first wireless device and the Relay/Assistant wireless device, for example, based on the one or more parameters of the first message 5303 and/or the first ranging method. The Relay/Assistant wireless device may determine configuration parameters for radio resources and/or configuration parameters for one or more antenna to perform a ranging service between the first wireless device and the Relay/Assistant wireless device, for example, based on the ranging method supported by the first wireless device, the ranging method supported by the Relay/Assistant wireless device, the ranging capability of the first wireless device, the ranging capability of the Relay/Assistant wireless device, and/or the first ranging method. The procedure to determine the configuration parameters for radio resources and/or configuration parameters for one or more antennas to perform a ranging service may be similar to (and/or the same as) the procedure to determine the configuration parameters for radio resources and/or configuration parameters for one or more antenna to perform a ranging service as described in FIG. 49. The content/definition of configuration parameters for radio resources and/or configuration parameters for one or more antennas may be similar to (and/or the same as) the content/definition of configuration parameters for radio resources and/or configuration parameters for one or more antenna as described in FIG. 49.

The Relay/Assistant wireless device may receive TPs/RPs information from a network function (e.g., an OAM, a UDM, an NWDAF). The procedure to receive TPs/RPs information may be similar to (and/or the same as) the procedure to receive TPs/RPs information as described in FIG. 49. The definition/content of the TPs/RPs information may be similar to (and/or the same as) the definition/content of the TPs/RPs information as described in FIG. 49.

In an action 5308, based on one or more parameters of the first message, the first ranging method, the ranging method supported by the first wireless device, the ranging method supported by the Relay/Assistant wireless device, the ranging capability of the first wireless device, the ranging capability of the Relay/Assistant wireless device, and/or the TPs/RPs information, the Relay/Assistant wireless device may determine sidelink positioning assistance data for the ranging service between the first wireless device and the Relay/Assistant wireless device by using the first ranging method. The procedure to determine the sidelink positioning assistance data may be similar to (and/or the same as) the procedure to determine the sidelink positioning assistance data as described in FIG. 49. The content/definition of the sidelink positioning assistance data may be similar to (and/or the same as) the content/definition of the sidelink positioning assistance data as described in FIG. 49.

In an action 5308, based on the one or more parameters of the third message 5307 and/or the second ranging method, the Relay/Assistant wireless device may determine configuration parameters for radio resources and/or configuration parameters for one or more antenna to perform a ranging service using the second ranging method between the second wireless device and the Relay/Assistant wireless device. The Relay/Assistant wireless device may determine configuration parameters for radio resources and/or configuration parameters for one or more antenna to perform a ranging service between the second wireless device and the Relay/Assistant wireless device, for example, based on the ranging method supported by the second wireless device, the ranging method supported by the Relay/Assistant wireless device, the ranging capability of the second wireless device, the ranging capability of the Relay/Assistant wireless device, and/or the second ranging method. The procedure to determine the configuration parameters for radio resources and/or configuration parameters for one or more antennas to perform a ranging service may be similar to (and/or the same as) the procedure to determine the configuration parameters for radio resources and/or configuration parameters for one or more antenna to perform a ranging service as described in FIG. 49. The content/definition of configuration parameters for radio resources and/or configuration parameters for one or more antennas may be similar to (and/or the same as) the content/definition of configuration parameters for radio resources and/or configuration parameters for one or more antenna as described in FIG. 49.

In an action 5308, based on one or more parameters of the third message 5307, the second ranging method, the ranging method supported by the second wireless device, the ranging method supported by the Relay/Assistant wireless device, the ranging capability of the second wireless device, the ranging capability of the Relay/Assistant wireless device, and/or the TPs/RPs information, the Relay/Assistant wireless device may determine sidelink positioning assistance data for the ranging service between the second wireless device and the Relay/Assistant wireless device by using the second ranging method. The procedure to determine the sidelink positioning assistance data may be similar to (and/or the same as) the procedure to determine the sidelink positioning assistance data as described in FIG. 49. The content/definition of the sidelink positioning assistance data may be similar to (and/or the same as) the content/definition of the sidelink positioning assistance data as described in FIG. 49.

The Relay/Assistant wireless device may send a message 5309 (e.g., ProvideAssistanceData) to the TPs/RPs. The ProvideAssistanceData message 5309 may comprise the sidelink positioning assistance data for the ranging service between the first wireless device and the Relay/Assistant wireless device. The ProvideAssistanceData message 5309 may comprise the sidelink positioning assistance data for the ranging service between the second wireless device and the Relay/Assistant wireless device.

The Relay/Assistant wireless device may send a message 5310 (e.g., RRCReconfigurationSidelink, PC5 RRCReconfiguration) message to the first wireless device. The RRCReconfigurationSidelink/PC5 RRCReconfiguration message 5310 may indicate accepting the request of the first message 5303 for ranging service between the first wireless device and the second wireless device. The RRCReconfigurationSidelink/PC5 RRCReconfiguration message 5310 may indicate accepting the request of the first message 5303 for assisting/helping the first wireless device to range/position the second wireless device.

The RRCReconfigurationSidelink/PC5 RRCReconfiguration message 5310 may indicate rejecting the request of the first message 5303 for ranging service between the first wireless device and the second wireless device. The RRCReconfigurationSidelink/PC5 RRCReconfiguration message 5310 may indicate rejecting the request of the first message 5303 for assisting/helping the first wireless device to range/position the second wireless device. The RRCReconfigurationSidelink/PC5 RRCReconfiguration message 5310 may comprise the at least one cause value indicating one or more reasons of the rejecting.

The RRCReconfigurationSidelink/PC5 RRCReconfiguration message 5310 may comprise the first ranging method, the configuration parameters for radio resources, and/or the configuration parameters for antennas to perform ranging service between the first wireless device and the Relay/Assistant wireless device. The RRCReconfigurationSidelink/PC5 RRCReconfiguration message 5310 may comprise sidelink positioning assistance data for the ranging service between the first wireless device and the Relay/Assistant wireless device.

The Relay/Assistant wireless device may send a message 5311 (e.g., RRCReconfigurationSidelink, PC5 RRCReconfiguration) message to the second wireless device. The RRCReconfigurationSidelink/PC5 RRCReconfiguration message 5311 may comprise the second ranging method, the configuration parameters for radio resources and/or the configuration parameters for antennas to perform ranging service between the second wireless device and the Relay/Assistant wireless device. The RRCReconfigurationSidelink/PC5 RRCReconfiguration message 5311 may comprise sidelink positioning assistance data for the ranging service between the second wireless device and the Relay/Assistant wireless device.

The Relay/Assistant wireless device, the first wireless device, and/or the TPs/RPs may perform ranging service 5312 based on: the first ranging method, the configuration parameters for radio resources to perform ranging service, the configuration parameters for antennas to perform ranging service, and/or the sidelink positioning assistance data for the ranging service. The procedure to perform ranging service between the Relay/Assistant wireless device and the first wireless device may be similar to (and/or the same as) the procedure to perform ranging service between the first wireless device and the second wireless device as described in FIG. 49. The Relay/Assistant wireless device may get/determine/measure the range/position of the first wireless device by using the first ranging method.

The Relay/Assistant wireless device, the second wireless device, and/or the TPs/RPs may perform ranging service based on: the second ranging method, the configuration parameters for radio resources to perform ranging service, the configuration parameters for antennas to perform ranging service, and/or the sidelink positioning assistance data for the ranging service. The procedure to perform ranging service between the Relay/Assistant wireless device and the second wireless device may be similar to (and/or the same as) the procedure to perform ranging service between the first wireless device and the second wireless device as described in FIG. 49. The Relay/Assistant wireless device may get/determine/measure the range/position of the second wireless device by using the second ranging method.

For sharing results of the ranging service 5312, the Relay/Assistant wireless device may send a message (e.g., Positioning Report) to the first wireless device, the Positioning Report message may comprise at least one of: the range/position of the second wireless device, the coordinate type of the ranging/position information of the second wireless device, the range/position of the first wireless device, and/or the coordinate type of the ranging/position information of the first wireless device.

For example, in response to receiving the ranging results, the first wireless device may use the ranging/position information of the second wireless directly, e.g., the Relay/Assistant wireless device has already convert/map the range/position of the second wireless device to the coordinate of the first wireless device, and/or the ranging/position information of the second wireless device is an absolute position (e.g., GPS location). The first wireless device may calculate the range/position of the second wireless device based on the Positioning Report (e.g., by mapping/converting the ranging/position information of the second wireless device to the coordinate of the first wireless device).

For sharing the results of the ranging service 5312, the Relay/Assistant wireless device may send a message (e.g., Positioning Report) to the second wireless device, the Positioning Report message may comprise at least one of: the range/position of the second wireless device, the coordinate type of the ranging/position information of the second wireless device, the range/position of the first wireless device, and/or the coordinate type of the ranging/position information of the first wireless device.

For example, in response to receiving the ranging results, the second wireless device may use the ranging/position information of the first wireless directly, e.g., the Relay/Assistant wireless device has already convert/map the range/position of the first wireless device to the coordinate of the second wireless device, and/or the ranging/position information of the first wireless device is an absolute position (e.g., GPS location). The second wireless device may calculate the range/position of the first wireless device based on the Positioning Report (e.g., by mapping/converting the ranging/position information of the first wireless device to the coordinate of the second wireless device). The coordinate type may comprise at least one of: a horizontal coordinate; a geographic coordinate; a cartesian coordinate; and/or a polar coordinate.

The coordinates type may indicate a reference direction (e.g., north, 12 o'clock) of for the coordinates. The horizontal coordinate (system) may be a celestial coordinate system that uses an observer's local horizon as the fundamental plane to define two angles: altitude/elevation and azimuth. The altitude/elevation may be the angle between the object and the observer's local horizon. For visible objects, it may be an angle between 0° and 90°. The azimuth may be an angle of the object around the horizon, usually measured from true north and increasing eastward.

The geographic coordinate (system) may be a spherical or ellipsoidal coordinate system for measuring and communicating positions directly on the Earth as latitude and longitude (e.g., GPS coordinates). The latitude may be a geographic coordinate that specifies the north-south position of a point on the Earth's surface. The latitude may be an angle which ranges from 0° at the Equator to 90° (North or South) at the poles. Lines of constant latitude, or parallels, run east-west as circles parallel to the equator. The latitude may be used together with longitude to specify the precise location of features on the surface of the Earth. The longitude may be a geographic coordinate that specifies the east-west position of a point on the Earth's surface, or the surface of a celestial body. In a cartesian coordinate system, three mutually orthogonal planes may be chosen and the three coordinates of a point are the signed distances to each of the planes. In a polar coordinate system, a point is chosen as the pole and a ray from this point is taken as the polar axis. The polar coordinate system may be a two-dimensional coordinate system in which each point on a plane is determined by a distance from a reference point and an angle from a reference direction.

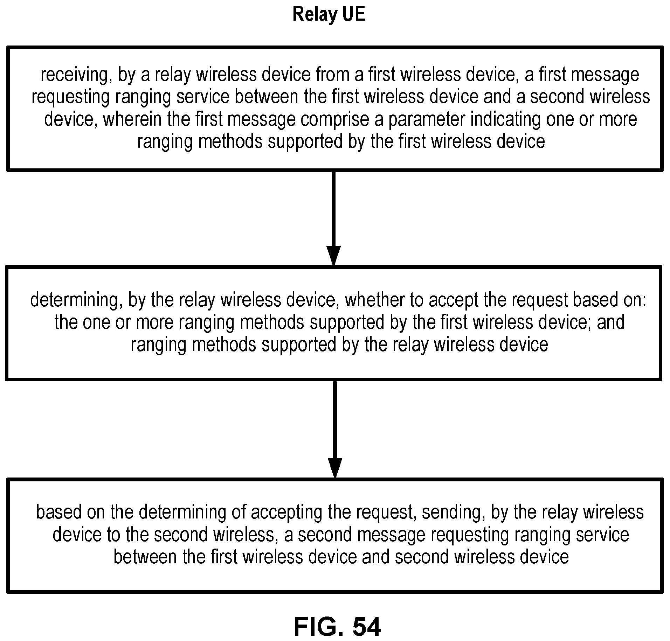

FIG. 54 is an example diagram depicting the procedures of a relay wireless device as per an aspect of an embodiment of the present disclosure, as described with respect to Fig. 53.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a base station from a wireless device, a first radio resource control (RRC) message indicating whether the wireless device supports a plurality of sidelink (SL) services simultaneously, wherein the plurality of SL services comprises: a first SL service (e.g., a SL ranging service); and a second SL service (e.g., a V2X service); and transmitting, by the base station and based on the first RRC message, a second RRC message indicating: a first frequency band is associated with the SL ranging service; and a second frequency band is associated with the V2X service.

Clause 1a - The method of Clause 1, wherein the first SL service comprises a SL ranging service, and the second SL service comprises a V2X service.

Clause 2 - The method of Clause 1, wherein the first RRC message comprises a first parameter indicating concurrent multiple sidelinks capability of the wireless device, wherein the concurrent multiple sidelinks capability indicates whether the wireless device supports a plurality of unicast sidelinks (services) simultaneously.

Clause 3 - The method of Clause 2, wherein the concurrent multiple sidelinks capability indicates whether the wireless device is able to send/receive data of at least two of the following services at the same time: the V2X service; the SL ranging service; a public safety service; a (sidelink) relay service; or the uplink/downlink communication service between the wireless device and the base station.

Clause 4 - The method of Clause 2, wherein the concurrent multiple sidelinks capability indicates the wireless device supports simultaneous SL transmission of one or more packets for a plurality of sidelinks (services).

Clause 5 - The method of Clause 1, wherein the first RRC message further comprises a second parameter/Ranging Capability indicating whether the wireless device supports ranging service.

Clause 6 - The method of Clause 1, wherein the first RRC message further comprises a third parameter /Relay Capability indicating whether the wireless device supports sidelink relay (e.g., UE-to-Network Relay).

Clause 7 - The method of Clause 1, wherein the first RRC message further comprises a fourth parameter/ PC5 Capability indicating whether the wireless device is able to perform ranging service over PC5 reference point.

Clause 8 - The method of Clause 1, wherein the first RRC message further comprises a fifth parameter/ V2X Capability indicating a V2X capability of the wireless device.

Clause 9 - The method of Clause 1, wherein the first RRC message further comprises a sixth parameter / ProSe Capability indicating a ProSe Capability of the first wireless device, wherein the ProSe Capability indicates that the wireless device supports ProSe communication/service with a second wireless device.

Clause 10 - The method of any one of Clauses 5 to 9, the second parameter/Ranging Capability, the third parameter/Relay Capability, the fourth parameter/ PC5 Capability, the fifth parameter/ V2X Capability, and/or the sixth parameter/ ProSe Capability indicates whether the wireless device supports a plurality of sidelink services simultaneously/concurrently.

Clause 11 - The method of Clause 1, wherein the first RRC message further comprises a seventh parameter/ Ranging Accuracy indicating an accuracy of the ranging service supported by the wireless device.

Clause 12 - The method of Clause 1, wherein the first RRC message further comprises an eighth parameter (e.g., Requested Sidelink Service Type) indicating at least one requested sidelink service, wherein the at least one requested sidelink service comprise at least one of: a V2X service; a SL ranging service; a public safety service; and/or a sidelink relay service.

Clause 13 - The method of Clause 1, further comprising determining, by the base station and based on the first RRC message, a plurality of frequency bands for the plurality of unicast sidelinks services.

Clause 14 - The method of Clause 1, further comprising determining, by the base station and based on the first RRC message, at least one of: a frequency band for the sidelink service; and/or a second parameter indicating whether the frequency band being used for the plurality of sidelink services.

Clause 15 - The method of Clause 1, further comprising determining, by the base station and based on the first RRC message, one frequency band being shared by two or more sidelink services.

Clause 16 - The method of any one of Clauses 13 to 15, further comprising sending, by the base station to the wireless device: the plurality of frequency bands; the frequency band; the second parameter; and/or the one frequency band.

Clause 17 - The method of Clause 1, further comprising determining, by the base station and based on the first RRC message, configuration parameters for a plurality of radio resource, where the plurality of radio resource may be for the plurality of sidelink services.

Clause 18 - The method of Clause 1, further comprising determining, by the base station and based on the first RRC message, configuration parameter of one radio resource, where the one radio resource may be shared/used by two or more sidelink services.

Clause 19 - The method of Clauses 16 or 17, wherein the radio resource comprises at least one of: frequency resource; time resource; and/or radio bearer resource.

Clause 20 - The method of Clause 1, further comprising determining, by the base station and based on the first RRC message, at least one of: a configuration parameter for radio resource of sidelink services; and/or a ninth parameter (e.g., Shared Sidelink Radio Resource) indicating whether the radio resource is shared by plurality of sidelink services.

Clause 21 - The method of Clauses 18 or 19, wherein the configuration parameters for a plurality of radio resource of the plurality of sidelink services comprises a tenth parameter (e.g., sl-ConfigDedicatedNR) indicating dedicated configuration for the plurality of sidelink services over PC5.

Clause 22 - The method of Clause 20, wherein the tenth parameter comprises a parameter (e.g., Sidelink Service Type) indicating what sidelink service (s) the tenth parameter/ sl-ConfigDedicatedNR may be applied to.

Clause 23 - The method of any one of Clauses 17 to 22, further comprising sending, by the base station to the wireless device: configuration parameters for a plurality of radio resource configuration parameter of one radio resource; the configuration parameter for radio resource of sidelink services; and/or the ninth parameter.

Clause 24 - The method of Clause 1, further comprising determining, by the base station and based on the first RRC message, the base station may determine a plurality of configuration parameters for antennas (and/or antenna ports) of the plurality of sidelink services.

Clause 25 - The method of Clause 24, further comprising sending, by the base station to the wireless device a plurality of configuration parameters for antennas (and/or antenna ports) of the plurality of sidelink services.

Clause 26 - The method of Clause 21, wherein the tenth parameter/ sl-ConfigDedicatedNR comprises at least one of the following parameter for sidelink services over PC5: a first parameter (e.g., sl-PHY-MAC-RLC-Config) indicating configuration of physical layer, MAC layer and/or RLC layer; a second parameter (e.g., sl-RadioBearerToReleaseList) indicating one or multiple sidelink radio bearer configurations to be removed; a third parameter (e.g., sl-RadioBearerToAddModList) indicating one or multiple sidelink radio bearer configurations to be added and/or modified; a fourth parameter (e.g., sl-MeasConfigInfoToReleaseList) indicating Reference Signal Receive Power (RSRP) measurement configurations for unicast destinations to be removed; a fifth parameter (e.g., sl-MeasConfigInfoToAddModList) indicating RSRP measurement configurations for unicast destinations to be added/modified.

Clause 27 - The method of Clause 26, wherein the first parameter (e.g., sl-PHY-MAC-RLC-Config) comprises at least one of the following parameter for sidelink services over PC5: a first parameter (e.g., sl-ScheduledConfig) indicating configuration for UE to transmit NR sidelink communication based on network scheduling; a second parameter (e.g., sl-UE-SelectedConfig) indicating the configuration used for UE autonomous resource selection; a third parameter (e.g., sl-FreqInfoToReleaseList) indicating the NR sidelink communication configuration on some carrier frequency (ies) to be removed; a fourth parameter (e.g., sl-FreqInfoToAddModList) indicating the NR sidelink communication configuration on some carrier frequency (ies) to be added and/or modified; a fifth parameter (e.g., sl-RLC-BearerToReleaseList) indicating one or multiple sidelink RLC bearer configurations to be remove; a sixth parameter (e.g., sl-RLC-BearerToAddModList) indicating one or multiple sidelink RLC bearer configurations to be added/modified; a seventh parameter (e.g., sl-MaxNumConsecutiveDTX) indicating the maximum number of consecutive Hybrid Automatic Repeat Request (HARQ) Discontinuous transmission (DTX) before triggering sidelink radio link failure (RLF); an eighth parameter (e.g., sl-CSI-Acquisition) indicating whether Channel State Information (CSI) reporting is enabled in sidelink unicast; a ninth parameter (e.g., sl-CSI-SchedulingRequestId) indicating the scheduling request configuration applicable for sidelink CSI report Medium Access Control (MAC) Control Element (CE); a tenth parameter (e.g., sl-SSB-PriorityNR) indicating the priority of NR sidelink Synchronization Signal Block (SSB) transmission and reception; an eleventh parameter (e.g., networkControlledSyncTx) indicating whether the UE shall transmit synchronization information (i.e. become synchronization source).

Clause 28 - The method of Clause 1, further comprising determining, by the base station and based on the first RRC message, ranging parameters for ranging service, wherein the ranging parameters indicates configuration parameters for ranging service over PC5, wherein the ranging parameters comprises at least one of: a parameter indicates whether configuration parameters for V2X service is used for ranging service over PC5; a V2X service identifier indicating ranging service over PC5;

a validity timer for the validity of the configuration parameters for ranging service over PC5; a list of PLMNs and RATs in which the UE is authorized to use ranging service over PC5; an indication of whether the UE is authorized to use ranging service over PC5 when the UE is not served by E-UTRA and not served by NR; list of RATs in which the UE is authorized to use ranging service over PC5 and the radio parameters of the RAT for ranging service over PC5 applicable per geographical area with an indication of whether these radio parameters of the RAT are "operator managed" or "non-operator managed" when the UE is not served by E-UTRA and not served by NR; a list of V2X service identifier to PC5 RAT(s) and Tx profiles mapping rules; configuration parameters for privacy support; configuration parameters for a ranging service over PC5 in E-UTRA-PC5; configuration parameters for a ranging service over PC5 in NR-PC5, comprising: a list of ranging service identifier to ranging service NR frequency mapping rules. Each mapping rule contains one or more ranging service identifiers and the ranging NR frequencies with associated geographical areas; a list of ranging service identifier to destination layer-2 ID for broadcast mapping rules; a default destination layer-2 ID for broadcast; a list of ranging service identifier to destination layer-2 ID for groupcast mapping rules; a list of ranging service identifier to default destination layer-2 ID for unicast initial signalling mapping rules; a list of ranging service identifier to PC5 QoS parameters mapping rules; an AS configuration, including a list of SLRB mapping rules applicable when the UE is not served by E-UTRA and is not served by NR. Each SLRB mapping rule contains a PC5 QoS profile and an SLRB. The PC5 QoS profile contains the following parameters: the PC5 QoS profile contains a PQI; if the PQI of the PC5 QoS profile identifies a GBR QoS, the PC5 QoS profile contains a PC5 flow bit rates consisting of a guaranteed flow bit rate (GFBR) and a maximum flow bit rate (MFBR); if the PQI of the PC5 QoS profile identifies a non-GBR QoS, the PC5 QoS profile contains the PC5 link aggregated bit rate consisting of a per link aggregate maximum bit rate (PC5 LINK-AMBR; the PC5 QoS profile contains a range, which is only used for groupcast mode communications over PC5; the PC5 QoS profile can contain the priority level, the averaging window, and the maximum data burst volume. If one or more of the priority level, the averaging window or the maximum data burst volume are not contained in the PC5 QoS profile, their default values apply; a list of NR-PC5 unicast security policies; a list of ranging service identifier to default mode of communication mapping rules. Each mapping rule contains one or more ranging service identifiers and the default mode of communication (one of unicast, groupcast or broadcast); or for broadcast mode and groupcast mode, PC5 DRX configurations, including the mapping of PC5 QoS profile(s) to PC5 DRX cycle(s) and the default PC5 DRX configuration, when the UE is not served by E-UTRA and not served by NR.

Clause 29 - The method of Clause 28, wherein the second RRC message comprises the ranging parameters.

Clause 30 - The method of Clause 1, wherein the range comprises at least one of: a distance; a direction; an angle; a velocity; or a position.

Clause 31 - The method of Clause 1, wherein the first RRC message comprises an identity of the wireless device and/or one or more identity(es) of one or more second wireless device(s).

A feature described herein may comprise a method comprising:
sending, by a wireless device to a base station, a first radio resource control (RRC) message indicating whether the wireless device supports a plurality of sidelink (SL) services simultaneously, wherein the plurality of SL services comprises: a SL ranging service; anda V2X service; receiving, by the wireless device from the base station and based on the first RRC message, a second RRC message indicating: a first frequency band is associated with the SL ranging service; and a second frequency band is associated with the V2X service.

A feature described herein may comprise a method comprising: determining, by a base station, radio resource for: V2X service; and ranging service; sending, by the base station to at least one wireless device: the V2X service; and the ranging service. The radio resource may comprise at least one of a frequency resource, a time resource, or an antenna resource.

A feature described herein may comprise a method comprising:
receiving, by a base station from a wireless device, a first radio resource control (RRC) message indicating: concurrent multiple sidelinks capability of the wireless device, wherein the concurrent multiple sidelinks capability indicates the wireless device supports multiple unicast sidelinks concurrently; requested concurrent multiple sidelink services indicating the wireless device requests at least one of: V2X service; a relay service; Public safety service; or Ranging service; and Ranging capability indicating distance of ranging service; determining, by the base station and based on the first RRC message:a parameter indicating whether at least one frequency band being used for at least two sidelink services of the multiple sidelink services; at least one frequency band for the concurrent multiple sidelink services and a frequency band for uplink/downlink communication between the wireless device and the base station, wherein the at least one frequency band and the frequency band can be operated concurrently; and at least one Rx/Tx resource for the multiple sidelink services for the wireless device and at least one second wireless device; and sending, by the base station to the wireless device, a second RRC message comprising: the parameter; the at least one frequency band and the frequency band; and the at least one Rx/Tx resource.

A feature described herein may comprise a method comprising: receiving, by a base station from a wireless device, a first radio resource control (RRC) message indicating whether the wireless device supports a plurality of sidelink (SL) services simultaneously, wherein the plurality of sidelink (SL) services comprises at least one of: a SL ranging service; a relay service; and a V2X service.

A feature described herein may comprise a method comprising: receiving, by a base station from a wireless device, a first radio resource control (RRC) message indicating a plurality of capabilities of a wireless device wherein: each of the plurality of capabilities is associated with a respective sidelink service; and each sidelink service is associated with a respective frequency band

A feature described herein may comprise a method comprising: receiving, by an access and mobility management function (AMF) from a wireless device, a first message indicating whether the wireless device supports a plurality of sidelink (SL) services simultaneously, wherein the plurality of SL services comprises: a SL ranging service; and a V2X service; sending, by the AMF to the wireless device: a first frequency band is associated with the SL ranging service; and a second frequency band is associated with the V2X service.

A feature described herein may comprise a method comprising: receiving, by a network function from a wireless device, a first message indicating concurrent multiple sidelinks capability of the wireless device, wherein the concurrent multiple sidelinks capability indicates the wireless device supports multiple unicast sidelink services concurrently; and sending, by the AMF to the wireless device, a second message based on the concurrent multiple sidelinks capability, wherein the second message comprises policy parameters for the multiple unicast sidelink services. The network function comprises at least one of an AMF, a PCF, an MME, or a PCRF.

A feature (Clause 1a) described herein may comprise a method comprising: receiving, by a base station from a first wireless device, a first radio resource control (RRC) message indicating a ranging method, wherein the ranging method is used by the first wireless device to perform a ranging service between the first wireless device and a second wireless device; determining, by the base station and based on the ranging method, parameters for radio resource to perform the ranging service by using the ranging method; and transmitting, by the base station to the first wireless device, a second message comprising the parameters.

Clause 2a - The method of Clause 1a, wherein the ranging method comprises at least one of the following methods for ranging service: a Two Way Ranging; a Sidelink Uplink Time Difference of Arrival (SL-UTDOA); a Sidelink Downlink Time Difference of Arrival (SL-DTDOA); a Sidelink Uplink Phase Difference of Arrival (SL-UPDOA); and/or a Sidelink Downlink Phase Difference of Arrival (SL-DPDOA).

Clause 3a - The method of Clause 2a, wherein the Two Way Ranging ranging method indicates that a first wireless device determines a distance of the second wireless device by measuring a round trip time (RTT) between the first wireless device and the second wireless device.

Clause 4a - The method of Clause 2a, wherein the SL-UTDOA ranging method indicates that the second wireless device send a reference signals (e.g., Sounding Reference Signal (SRS), Uplink Sounding Reference Signal Reference Signal Received Power (UL SRS-RSRP), UL TDOA) to multiple Reception Point (RP)s, the multiple RPs measure the SRS/ UL TDOA/ UL SRS-RSRP of the received signals using assistance data received, the multiple RPs send the measurement reports to the first wireless device, where the measurement reports comprise measured result (e.g., a time value, SRS-RSRP), and the first wireless device calculates the ranging/position/location of the second wireless device based on the measurement reports.

Clause 5a - The method of Clause 2a, wherein the SL-DTDOA) ranging method indicates that multiple Transmission Points (TPs) send a reference signal (e.g., Positioning Reference Signals (PRS), Downlink PRS Reference Signal Received Power (DL PRS RSRP) Downlink Reference Signal Time Difference (DL RSTD)) to the second wireless device, the second wireless device measures the received signals using assistance data, the second wireless device sends a measurement report to the first wireless device, and the measurement report comprises measured result (e.g., a time value, SRS-RSRP), and the first wireless device calculates the ranging/position/location of the second wireless device based on the measurement reports.

Clause 6a - The method of Clause 2a, wherein the SL-UPDOA ranging method indicates that the second wireless device sends a reference signal (e.g., SRS, UL SRS-RSRP) to multiple Reception Point (RP)s. A first wireless device has multiple antennas, each of the multiple antennas is a RP. By using assistance data, the multiple RPs may measure the Azimuth Angle of Arrival (A-AoA) and/or the Zenith Angle of Arrival (Z-AoA) of the reference signal transmitted from the second wireless device. The first wireless device calculates the ranging/position/location of the second wireless device based on the measurement results.

Clause 7a - The method of Clause 2a, wherein the SL-DPDOA ranging method indicates that the first wireless device sends a reference signal (e.g., Positioning Reference Signals (PRS), Downlink PRS Reference Signal Received Power (DL PRS RSRP)) to the second wireless device. The second wireless device has multiple antennas, each of the multiple antennas is a RP. By using assistance data, the multiple RPs measure the Azimuth Angle of Arrival (A-AoA) and/or the Zenith Angle of Arrival (Z-AoA) of the reference signal transmitted from the first wireless device. The second wireless device sends a measurement report to the first wireless device, and the measurement report comprises measured result. The first wireless device calculates the ranging/position/location of the second wireless device based on the measurement report.

Clause 8a - The method of any one of Clauses 4a to 7a, wherein the Transmission Point (TP) is a set of geographically co-located transmit antennas (e.g. antenna array (with one or more antenna elements)) for one cell, part of one cell or one DL PRS-only TP. Transmission Points can include base station (ng-eNB or gNB) antennas, remote radio heads, a remote antenna of a base station, an antenna of a DL PRS-only TP, etc. One cell can include one or multiple transmission points. For a homogeneous deployment, each transmission point may correspond to one cell.

Clause 9a - The method of any one of Clauses 4a to 7a, wherein the Reception Point (RP) is a set of geographically co-located receive antennas (e.g. antenna array (with one or more antenna elements)) for one cell, part of one cell or one UL SRS-only RP. Reception Points can include base station (ng-eNB or gNB) antennas, remote radio heads, a remote antenna of a base station, an antenna of a UL SRS-only RP, etc. One cell can include one or multiple reception points. For a homogeneous deployment, each reception point may correspond to one cell.

Clause 10a - The method of Clause 1a, wherein the first RRC message comprises a first parameter of Ranging Method indicating a type of ranging method.

Clause 11a - The method of Clause 1a, wherein the first RRC message comprises a first parameter/ Ranging Method indicating the ranging method used by the first wireless device to ranging a second wireless device.

Clause 12a - The method of Clause 1a, wherein the first RRC message comprises a first parameter/ Ranging Method indicating a ranging method requested by the first wireless device.

Clause 13a - The method of Clause 1a, wherein the first RRC message comprises a second parameter/ Ranging Capability indicating whether the first wireless device and/or the second wireless device supports ranging service.

Clause 14a - The method of Clause 13a, wherein the second parameter/ Ranging Capability indicates supported frequency band(s) for the ranging service between the first wireless device and the second wireless device.

Clause 15a - The method of Clause 13a, wherein the second parameter/ Ranging Capability indicates supported frequency band(s) for Reference Signal Time Difference (RSTD) measurement

Clause 16a - The method of Clause 14a, wherein the ranging service comprises at least one of: a first wireless device measuring a distance of a second wireless device; a first wireless device measuring a direction of a second wireless device; a first wireless device measuring an angle of a second wireless device; a first wireless device measuring a velocity of a second wireless device; or a first wireless device measuring a position of a second wireless device.

Clause 17a - The method of Clause 1a, wherein the first RRC message comprises a third parameter (e.g., PC5 Capability) indicating whether the first wireless device and/or the second wireless device is/are able to perform ranging service over PC5 reference point.

Clause 18a - The method of Clause 1a, wherein the first RRC message comprises a fourth parameter (e.g., V2X Capability) indicating a V2X capability of the first wireless device and/or the second wireless device.

Clause 19a - The method of Clause 1a, wherein the first RRC message comprises a fifth parameter (e.g., ProSe Capability) indicating a ProSe Capability of the first wireless device and/or the second wireless device.

Clause 20a - The method of Clause 1a, wherein the first RRC message comprises a sixth parameter (e.g., Ranging Accuracy) indicating an accuracy of the ranging service supported by the first wireless device and/or the second wireless device.

Clause 21a - The method of Clause 1a, wherein the first RRC message comprises at least one of: an MSG 3; an MSG 5; a RRCSetupRequest; a RRCSetupComplete; a RRCResumeRequest; a RRCResumeComplete; UEAssistanceInformation; UEInformationResponse; UECapabilityInformation; orSidelinkUEInformationNR.

Clause 22a - The method of Clause 1a, wherein the first RRC message comprises an identity of the first wireless device and/or an identity of the second wireless device.

Clause 23a - The method of Clause 1a, further comprising determining, by the first wireless device, the ranging method.

Clause 24a - The method of Clause 1a, wherein the determining comprising allocating radio resource.

Clause 25a - The method of Clause 1a, further comprising determining, by the base station and based on the ranging method, at least one of: configuration parameters for antenna to perform ranging service by using the ranging method; and/or sidelink positioning assistance data for the ranging service by using the ranging method.

Clause 26a - The method of Clause 1a, wherein the radio resource for the ranging method comprises at least one of: frequency resource; time resource; and/or radio bearer resource.

Clause 27a - The method of Clause 1a, wherein the second message comprises at least one of: a RRC message, a DCI; or a MAC CE.

Clause 28a - The method of Clause 1a, wherein the second message comprises at least one of the following messages: RRCReconfiguration; an MSG 4; a RRCSetup; a RRCResume; UEReconfiguration; UEInformationRequest; or UECapabilityEnquiry.

Clause 29a - The method of Clause 1a, wherein the second message comprises at least one of: configuration parameters for antenna to perform ranging service by using the ranging method; and/or sidelink positioning assistance data for the ranging service by using the ranging method.

Clause 30a - The method of Clause 1a, further comprising sending, by the base station to one or more TPs/RPs, sidelink positioning assistance data for the ranging service by using the ranging method.

Clause 31a - The method of Clause 1a, further comprising sending, by the first wireless device to the second wireless device, at least one of: the parameters for radio resource to perform ranging service; configuration parameters for antenna to perform ranging service by using the ranging method; and/or sidelink positioning assistance data for the ranging service by using the ranging method.

Clause 32a - The method of Clause 1a, further comprising performing by the first wireless device, the second wireless device and/or TPs/RPs, ranging service based on: configuration parameters for radio resource to perform ranging service; configuration parameters for antenna to perform ranging service; and/or sidelink positioning assistance data for the ranging service.

A feature described herein may comprise a method comprising: sending, by a first wireless device to a base station, a first radio resource control (RRC) message indicating a ranging method, wherein the ranging method is used by the first wireless device to perform ranging between the first wireless device and a second wireless device; receiving, by the first wireless device from the base station, a second message indicating parameters for radio resource to perform ranging service by using the ranging method; and performing, by the first wireless device and based on the parameters, ranging service between the first wireless device to the second wireless device. The performing may comprise measuring a distance between the first wireless device and the second wireless device.

A feature described herein may comprise a method comprising: receiving, by an access and mobility management function (AMF) from a first wireless device, a first message indicating a ranging method, wherein the ranging method is used by the first wireless device to perform ranging between the first wireless device and a second wireless device; and sending, by the AMF to the first wireless device, a second message indicating parameters for radio resource to perform ranging service by using the ranging method, wherein the parameters is determined based on the ranging method.

A feature described herein may comprise a method comprising: sending, by a first wireless device to an access and mobility management function (AMF), a first message indicating a ranging method, wherein the ranging method is used by the first wireless device to perform ranging between the first wireless device and a second wireless device; receiving, by the first wireless device from the AMF, a second message indicating parameters for radio resource to perform ranging service by using the ranging method, wherein the parameters is determined based on the ranging method; and measuring, by the first wireless device and based on the parameters, a range of the second wireless device. The method may further comprise sending, by the first wireless device to the second wireless device, the range of the second wireless device.

A feature described herein may comprise a method comprising: receiving, by a location management function (LMF) from a first wireless device, a first message indicating a ranging method, wherein the ranging method is used by the first wireless device to perform ranging between the first wireless device and a second wireless device; and sending, by the LMF to the first wireless device, a second message indicating sidelink positioning assistance data to perform ranging service by using the ranging method, wherein the sidelink positioning assistance data is determined based on the ranging method.

A feature described herein may comprise a method comprising: sending, by a first wireless device to a location management function (LMF), a first message indicating a ranging method, wherein the ranging method is used by the first wireless device to perform ranging between the first wireless device and a second wireless device; and receiving, by the first wireless device from the LMF, a second message indicating sidelink positioning assistance data to perform ranging service by using the ranging method, wherein the sidelink positioning assistance data is determined based on the ranging method; measuring, by the first wireless device and based on the sidelink positioning assistance data, a range of the second wireless device; and sending, by the first wireless device to the LMF, the range of the second wireless device.

A feature described herein may comprise a method comprising: sending, by a first wireless device to a network function, a first message indicating a ranging method, wherein the ranging method is used by the first wireless device to perform ranging between the first wireless device and a second wireless device; and receiving, by the first wireless device from the network function, a second message indicating sidelink positioning assistance data to perform ranging service by using the ranging method, wherein the sidelink positioning assistance data is determined based on the ranging method.

A feature (Clause 1c) described herein may comprise a method comprising: receiving, by a second wireless device from a first wireless device, a first message indicating one or more ranging methods supported by the first wireless device; determining, by the second wireless device, at least one accepted ranging method for performing a ranging service between the first wireless device and the second wireless device, wherein the determining is based on: the one or more ranging methods supported by the first wireless device; and ranging methods supported by the second wireless device; and sending, by the second wireless device to the first wireless device, a second message indicating the at least one accepted ranging method.

Clause 2c - The method of Clause 1c, wherein the ranging method comprises at least one of the following methods for ranging service: a Two Way Ranging; a Sidelink Uplink Time Difference of Arrival (SL-UTDOA); a Sidelink Downlink Time Difference of Arrival (SL-DTDOA); a Sidelink Uplink Phase Difference of Arrival (SL-UPDOA); and/or a Sidelink Downlink Phase Difference of Arrival (SL-DPDOA).

Clause 3c - The method of Clause 2c, wherein the Two Way Ranging ranging method indicates that a first wireless device determines a distance of the second wireless device by measuring a round trip time (RTT) between the first wireless device and the second wireless device.

Clause 4c - The method of Clause 2c, wherein the SL-UTDOA ranging method indicates that the second wireless device send a reference signals (e.g., Sounding Reference Signal (SRS), Uplink Sounding Reference Signal Reference Signal Received Power (UL SRS-RSRP), UL TDOA) to multiple Reception Point (RP)s, the multiple RPs measure the SRS/ UL TDOA/ UL SRS-RSRP of the received signals using assistance data received, the multiple RPs send the measurement reports to the first wireless device, where the measurement reports comprise measured result (e.g., a time value, SRS-RSRP), and the first wireless device calculates the ranging/position/location of the second wireless device based on the measurement reports.

Clause 5c - The method of Clause 2c, wherein the SL-DTDOA ranging method indicates that multiple Transmission Points (TPs) send a reference signal (e.g., Positioning Reference Signals (PRS), Downlink PRS Reference Signal Received Power (DL PRS RSRP) Downlink Reference Signal Time Difference (DL RSTD)) to the second wireless device, the second wireless device measures the received signals using assistance data, the second wireless device sends a measurement report to the first wireless device, and the measurement report comprises measured result (e.g., a time value, SRS-RSRP), and the first wireless device calculates the ranging/position/location of the second wireless device based on the measurement reports.

Clause 6c - The method of Clause 2c, wherein the SL-UPDOA ranging method indicates that the second wireless device sends a reference signal (e.g., SRS, UL SRS-RSRP) to multiple Reception Point (RP)s, a first wireless device has multiple antennas, and each of the multiple antennas is a RP. By using assistance data, the multiple RPs may measure the Azimuth Angle of Arrival (A-AoA) and/or the Zenith Angle of Arrival (Z-AoA) of the reference signal transmitted from the second wireless device. The first wireless device calculates the ranging/position/location of the second wireless device based on the measurement results.

Clause 7c - The method of Clause 2c, wherein the SL-DPDOA ranging method indicates that the first wireless device sends a reference signal (e.g., Positioning Reference Signals (PRS), Downlink PRS Reference Signal Received Power (DL PRS RSRP)) to the second wireless device. The second wireless device has multiple antennas, each of the multiple antennas is a RP. By using assistance data, the multiple RPs measure the Azimuth Angle of Arrival (A-AoA) and/or the Zenith Angle of Arrival (Z-AoA) of the reference signal transmitted from the first wireless device. The second wireless device sends a measurement report to the first wireless device, and the measurement report comprises measured result. The first wireless device calculates the ranging/position/location of the second wireless device based on the measurement report.

Clause 8c - The method of any one of Clauses 4c to 7c, wherein the Transmission Point (TP) is a set of geographically co-located transmit antennas (e.g. antenna array (with one or more antenna elements)) for one cell, part of one cell or one DL PRS-only TP. Transmission Points can include base station (ng-eNB or gNB) antennas, remote radio heads, a remote antenna of a base station, an antenna of a DL PRS-only TP, etc. One cell can include one or multiple transmission points. For a homogeneous deployment, each transmission point may correspond to one cell.

Clause 9c - The method of any one of Clauses 4c to 7c, wherein the Reception Point (RP) is a set of geographically co-located receive antennas (e.g. antenna array (with one or more antenna elements)) for one cell, part of one cell or one UL SRS-only RP. Reception Points can include base station (ng-eNB or gNB) antennas, remote radio heads, a remote antenna of a base station, an antenna of a UL SRS-only RP, etc. One cell can include one or multiple reception points. For a homogeneous deployment, each reception point may correspond to one cell.

Clause 10c - The method of Clause 1c, wherein the first message comprises a first parameter of Ranging Method indicating a type of ranging method.

Clause 11c- The method of Clause 1c, wherein the first message comprises a first parameter/ Ranging Method indicating one or more ranging methods supported by the first wireless device to range/position a second wireless device.

Clause 12c - The method of Clause 1c, wherein the first message comprises a first parameter/ Ranging Method indicating one or more ranging methods requested by the first wireless device.

Clause 13c - The method of Clause 1c, wherein the first message comprises a second parameter/ Ranging Capability indicating whether the first wireless device supports ranging service.

Clause 14c - The method of Clause 13c, wherein the second parameter/ Ranging Capability indicates one or more ranging methods supported by the first wireless device to range/position a second wireless device.

Clause 15c - The method of Clause 13c, wherein the second parameter/ Ranging Capability indicates supported frequency band(s) of Reference Signal Time Difference (RSTD) measurement for ranging service.

Clause 16c - The method of Clause 13c, wherein the second parameter/ Ranging Capability indicates supported frequency band(s) for the ranging service between the first wireless device and the second wireless device.

Clause 17c - The method of Clause 16c, wherein the ranging service comprises at least one of: a first wireless device measuring a distance of a second wireless device; a first wireless device measuring a direction of a second wireless device; a first wireless device measuring an angle of a second wireless device; a first wireless device measuring a velocity of a second wireless device; or a first wireless device measuring a position of a second wireless device.

Clause 18c - The method of Clause 1c, wherein the first message comprises a third parameter (e.g., PC5 Capability) indicating whether the first wireless device is/are able to perform ranging service over PC5 reference point.

Clause 19c - The method of Clause 1c, wherein the first message comprises a fourth parameter (e.g., V2X Capability) indicating a V2X capability of the first wireless device.

Clause 20c - The method of Clause 1c, wherein the first message comprises a fifth parameter (e.g., ProSe Capability) indicating a ProSe Capability of the first wireless device.

Clause 21c - The method of Clause 1c, wherein the first message comprises a sixth parameter (e.g., Ranging Accuracy) indicating an accuracy of the ranging service supported by the first wireless device.

Clause 22c - The method of Clause 1c, wherein the first message comprises an RRC message, where the RRC message comprises at least one of: RRCReconfigurationSidelink; UECapabilityEnquirySidelink; UECapabilityInformationSidelink; or SBCCH-SL-BCH-Message.

Clause 23c - The method of Clause 1c, wherein the second message comprises at least one of: a RRC message, a DCI; or a MAC CE.

Clause 24c - The method of Clause 1c, wherein the second message comprises an RRC message, where the RRC message comprises at least one of:
RCReconfigurationCompleteSidelink; RRCReconfigurationFailureSidelink;
UECapabilityInformationSidelink; or SBCCH-SL-BCH-Message.

Clause 25c - The method of Clause 1c, wherein the first message comprises an identity of the first wireless device and/or an identity of the second wireless device.

Clause 26c - The method of Clause 1c, wherein the determining is based on that the accepted ranging method is supported by the first wireless device and the second wireless device.

Clause 27c - The method of Clause 1c, further comprising determining, by the first wireless device and based on the accepted ranging method, at least one of: configuration parameters for radio resource to perform ranging service by using the accepted ranging method; configuration parameters for antenna to perform ranging service by using the accepted ranging method; and/or sidelink positioning assistance data for the ranging service by using the accepted ranging method.

Clause 28c - The method of Clause 27c, wherein the determining comprising allocating radio resource.

Clause 29c - The method of Clause 27c, wherein the radio resource for the accepted ranging method comprises at least one of: frequency resource; time resource; and/or radio bearer resource.

Clause 30c - The method of Clause 27c, further comprising sending, by the first wireless device to the second wireless device, at least one of: the configuration parameters for radio resource to perform ranging service by using the accepted ranging method; the configuration parameters for antenna to perform ranging service by using the accepted ranging method; and/or the sidelink positioning assistance data for the ranging service by using the accepted ranging method.

Clause 31c - The method of Clause 27c, further comprising sending, by the first wireless device to one or more TPs/RPs, the sidelink positioning assistance data for the ranging service by using the accepted ranging method.

Clause 32c - The method of Clause 1c, further comprising performing by the first wireless device, the second wireless device and/or TPs/RPs, ranging service based on: configuration parameters for radio resource to perform ranging service; configuration parameters for antenna to perform ranging service; and/or sidelink positioning assistance data for the ranging service.

A feature described herein may comprise a method comprising: receiving, by a second wireless device from a first wireless device, a first message indicating one or more ranging methods supported by the first wireless device; determining, by the second wireless device, rejecting the one or more ranging methods based on the second wireless device is not able to support the one or more ranging methods; and sending, by the second wireless device to the first wireless device, a second message indicating the rejecting.

A feature described herein may comprise a method comprising: receiving, by a second wireless device from a first wireless device, a first message indicating one or more ranging methods; and sending, by the second wireless device to the first wireless device, a second message indicating at least one ranging method of the one or more ranging methods, wherein the at least one ranging method is used by the first wireless device to perform ranging between the first wireless device and the second wireless device.

A feature described herein may comprise a method comprising: sending, by a first wireless device to a second wireless device, a first message indicating one or more ranging methods supported by the first wireless device; and receiving, by the first wireless device, at least one accepted ranging method, wherein the at least one accepted ranging method is used by the first wireless device to perform ranging between the first wireless device and the second wireless device.

A feature described herein may comprise a method comprising: receiving, by a relay wireless device from a first wireless device, a first message requesting ranging service between the first wireless device and a second wireless device, wherein the first message comprise a parameter indicating one or more ranging methods supported by the first wireless device; determining, by the relay wireless device, whether to accept the request based on: the one or more ranging methods supported by the first wireless device; and ranging methods supported by the relay wireless device; and based on the determining of accepting the request, sending, by the relay wireless device to the second wireless, a second message requesting ranging service between the first wireless device and second wireless device.

A base station, one or more wireless devices, and/or a core network device may perform a method comprising multiple operations. A base station may receive, from a wireless device, a first radio resource control (RRC) message indicating whether the wireless device supports a plurality of sidelink (SL) services simultaneously. The plurality of SL services may comprise: a first SL service; and a second SL service. The first SL service may comprise a SL ranging service. The second SL service may comprise a vehicle-to-everything (V2X) service. The base station may transmit, based on the first RRC message, a second RRC message indicating that: a first frequency band is associated with the SL ranging service; and a second frequency band is associated with the V2X service. The wireless device may be a first wireless device of a plurality of wireless devices configured for the SL ranging service, wherein the plurality of wireless devices may comprise the first wireless device and a second wireless device. The base station may receive, from the first wireless device, a third RRC message indicating a ranging method used by the first wireless device to perform a ranging service between the first wireless device and the second wireless device. The base station may determine, based on the ranging method, parameters for radio resources to perform the ranging service by using the ranging method. The base station may transmit, to the first wireless device, a fourth RRC message comprising the parameters for the radio resources. The first RRC message and the third RRC message may be a same RRC message. The second RRC message and the fourth RRC message may be a same RRC message. The first RRC message ay indicate: concurrent multiple sidelinks capability of the wireless device, and whether the wireless device supports a plurality of simultaneous unicast sidelinks. The first RRC message may indicate whether the wireless device is able to simultaneously send or receive data of at least two of the following services: the V2X service; the SL ranging service; a public safety service; a relay service; or uplink or downlink communication service between the wireless device and the base station. The first RRC message may indicate that the wireless device supports simultaneous SL transmissions of one or more packets for the plurality of SL services. The base station may send, to the wireless device and based on the first RRC message, information indicating a plurality of frequency bands for a plurality of unicast sidelink services. The base station may send, to the wireless device and based on the first RRC message, at least one of: information indicating a frequency band for a sidelink service; or a second parameter indicating whether a frequency band for a sidelink service is being used for the plurality of SL services. The base station may send, to the wireless device and based on the first RRC message, information indicating a frequency band being shared by two or more sidelink services. The base station may comprise one or more processors; and memory storing instructions that, when executed by the one or more processors, cause the base station to perform the described method, additional operations, and/or include the additional elements. A system may comprise a base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A wireless device may transmit, to a base station, a first radio resource control (RRC) message indicating whether the wireless device supports a plurality of sidelink (SL) services simultaneously. The plurality of SL services may comprise a first SL service and a second SL service. The first SL service may comprise a SL ranging service. The second SL service may comprise a vehicle-to-everything (V2X) service. The wireless device may receive, and after transmitting the first RRC message, a second RRC message indicating that: a first frequency band is associated with the first SL service; and a second frequency band is associated with the second SL service. The first RRC message may indicate: concurrent multiple sidelinks capability of the wireless device, and whether the wireless device supports a plurality of simultaneous unicast sidelinks. The first RRC message may indicate whether the wireless device is able to simultaneously send or receive data of at least two of the following services: the V2X service; the SL ranging service; a public safety service; a relay service; or uplink or downlink communication service between the wireless device and the base station. The first RRC message may indicate that the wireless device supports simultaneous SL transmissions of one or more packets for the plurality of SL services. The wireless device may receive, after transmitting the first RRC message, information indicating a plurality of frequency bands for a plurality of unicast sidelink services. The wireless device may comprise one or more processors; and memory storing instructions that, when executed by the one or more processors, cause the wireless device to perform the described method, additional operations, and/or include the additional elements. A system may comprise the wireless device configured to perform the described method, additional operations and/or include the additional elements; one or more base stations configured to communicate with the wireless device; and/or a core network deice configured to communicate with the one or more base stations. A computer-readable medium may store instructions that, when executed, cause performance of the described method, additional operations, and/or include the additional elements.

A base station, one or more wireless devices, and/or a core network device may perform a method comprising multiple operations. A base station may receive, from a first wireless device, a first radio resource control (RRC) message indicating a ranging method used by the first wireless device to perform a ranging service between the first wireless device and a second wireless device. The base station may determine, based on the ranging method, parameters for radio resources to perform the ranging service by using the ranging method. The base station may transmit, to the first wireless device, a second message comprising the parameters for the radio resources. The ranging method may comprise at least one of the following: two-way ranging; sidelink uplink time difference of arrival (SL-UTDOA); sidelink downlink time difference of arrival (SL-DTDOA); sidelink uplink phase difference of arrival (SL-UPDOA); or sidelink downlink phase difference of arrival (SL-DPDOA). The ranging method may comprise a ranging method in which the first wireless device receives, from a plurality of reception points, measurement reports based on reference signals sent by the second wireless device. The first RRC message may indicate one or more supported frequencies for ranging service between the first wireless device and the second wireless device. The first RRC message may indicate whether the first wireless device or the second wireless device is able to perform ranging via a PC5 reference point. The base station may comprise one or more processors; and memory storing instructions that, when executed by the one or more processors, cause the base station to perform the described method, additional operations, and/or include the additional elements. A system may comprise the base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A base station may receive, from a first wireless device, a first radio resource control (RRC) message indicating a ranging method, wherein the ranging method is used by the first wireless device to perform a ranging service between the first wireless device and a second wireless device. The base station may determine, based on the ranging method, parameters for radio resource to perform the ranging service by using the ranging method. The base station may transmit, to the first wireless device, a second message comprising the parameters. The ranging method may comprise at least one of the following methods for ranging service: a Two Way Ranging; a Sidelink Uplink Time Difference of Arrival (SL-UTDOA); a Sidelink Downlink Time Difference of Arrival (SL-DTDOA); a Sidelink Uplink Phase Difference of Arrival (SL-UPDOA); and/or a Sidelink Downlink Phase Difference of Arrival (SL-DPDOA). The Two Way Ranging ranging method may indicate that a first wireless device determines a distance of the second wireless device by measuring a round trip time (RTT) between the first wireless device and the second wireless device. The SL-UTDOA ranging method may indicate that the second wireless device send a reference signals (e.g., Sounding Reference Signal (SRS), Uplink Sounding Reference Signal Reference Signal Received Power (UL SRS-RSRP), UL TDOA) to multiple Reception Point (RP)s. The multiple RPs measure the SRS/ UL TDOA/ UL SRS-RSRP of the received signals using assistance data received. The multiple RPs may send the measurement reports to the first wireless device, where the measurement reports comprise measured result (e.g., a time value, SRS-RSRP). The first wireless device may calculate the ranging/position/location of the second wireless device based on the measurement reports. The SL-DTDOA) ranging method may indicate that multiple Transmission Points (TPs) send a reference signal (e.g., Positioning Reference Signals (PRS), Downlink PRS Reference Signal Received Power (DL PRS RSRP) Downlink Reference Signal Time Difference (DL RSTD)) to the second wireless device. The second wireless device may measure the received signals using assistance data. The second wireless device may send a measurement report to the first wireless device, and the measurement report may comprise measured result (e.g., a time value, SRS-RSRP). The first wireless device may calculate the ranging/position/location of the second wireless device based on the measurement reports. The SL-UPDOA ranging method may indicate that the second wireless device sends a reference signal (e.g., SRS, UL SRS-RSRP) to multiple Reception Point (RP)s. A first wireless device may have multiple antennas, each of the multiple antennas may be a RP. By using assistance data, the multiple RPs may measure the Azimuth Angle of Arrival (A-AoA) and/or the Zenith Angle of Arrival (Z-AoA) of the reference signal transmitted from the second wireless device. The first wireless device may calculate the ranging/position/location of the second wireless device based on the measurement results. The SL-DPDOA ranging method may indicate that the first wireless device sends a reference signal (e.g., Positioning Reference Signals (PRS), Downlink PRS Reference Signal Received Power (DL PRS RSRP)) to the second wireless device. The second wireless device may have multiple antennas, each of the multiple antennas may be a RP. By using assistance data, the multiple RPs may measure the Azimuth Angle of Arrival (A-AoA) and/or the Zenith Angle of Arrival (Z-AoA) of the reference signal transmitted from the first wireless device. The second wireless device may send a measurement report to the first wireless device, and the measurement report comprises measured result. The first wireless device may calculate the ranging/position/location of the second wireless device based on the measurement report. The Transmission Point (TP) may comprise a set of geographically co-located transmit antennas (e.g. antenna array (with one or more antenna elements)) for one cell, part of one cell or one DL PRS-only TP. Transmission Points may comprise base station (ng-eNB or gNB) antennas, remote radio heads, a remote antenna of a base station, an antenna of a DL PRS-only TP, etc. One cell may include one or multiple transmission points. For a homogeneous deployment, each transmission point may correspond to one cell. The Reception Point (RP) may comprise a set of geographically co-located receive antennas (e.g. antenna array (with one or more antenna elements)) for one cell, part of one cell or one UL SRS-only RP. Reception Points may include base station (ng-eNB or gNB) antennas, remote radio heads, a remote antenna of a base station, an antenna of a UL SRS-only RP, etc. One cell may include one or multiple reception points. For a homogeneous deployment, each reception point may correspond to one cell. The first RRC message may comprise a first parameter of Ranging Method indicating a type of ranging method. The first RRC message may comprise a first parameter/ Ranging Method indicating the ranging method used by the first wireless device to ranging a second wireless device. The first RRC message may comprise a first parameter/ Ranging Method indicating a ranging method requested by the first wireless device. The first RRC message may comprise a second parameter/ Ranging Capability indicating whether the first wireless device and/or the second wireless device supports ranging service. The second parameter/ Ranging Capability may indicate supported frequency band(s) for the ranging service between the first wireless device and the second wireless device. The second parameter/ Ranging Capability may indicate supported frequency band(s) for Reference Signal Time Difference (RSTD) measurement. The ranging service may comprise at least one of: a first wireless device measuring a distance of a second wireless device; a first wireless device measuring a direction of a second wireless device; a first wireless device measuring an angle of a second wireless device; a first wireless device measuring a velocity of a second wireless device; or a first wireless device measuring a position of a second wireless device. The first RRC message may comprise a third parameter (e.g., PC5 Capability) indicating whether the first wireless device and/or the second wireless device is/are able to perform ranging service over PC5 reference point. The first RRC message may comprise a fourth parameter (e.g., V2X Capability) indicating a V2X capability of the first wireless device and/or the second wireless device. The first RRC message may comprise a fifth parameter (e.g., ProSe Capability) indicating a ProSe Capability of the first wireless device and/or the second wireless device. The first RRC message may comprise a sixth parameter (e.g., Ranging Accuracy) indicating an accuracy of the ranging service supported by the first wireless device and/or the second wireless device. The first RRC message may comprise at least one of: an MSG 3; an MSG 5; a RRCSetupRequest; a RRCSetupComplete; a RRCResumeRequest; a RRCResumeComplete; UEAssistanceInformation; UEInformationResponse; UECapabilityInformation; or SidelinkUEInformationNR. The first RRC message may comprise an identity of the first wireless device and/or an identity of the second wireless device. The first wireless device may determine the ranging method. Determining the ranging method may comprise allocating radio resource. The base station may determine, based on the ranging method, at least one of: configuration parameters for antenna to perform ranging service by using the ranging method; and/or sidelink positioning assistance data for the ranging service by using the ranging method. The radio resource for the ranging method may comprise at least one of: frequency resource; time resource; and/or radio bearer resource. The second message may comprise at least one of: a RRC message, a DCI; or a MAC CE. The second message may comprise at least one of the following messages: RRCReconfiguration; an MSG 4; a RRCSetup; a RRCResume; UEReconfiguration; UEInformationRequest; or UECapabilityEnquiry. The second message may comprise at least one of: configuration parameters for antenna to perform ranging service by using the ranging method; and/or sidelink positioning assistance data for the ranging service by using the ranging method. The base station may send, to one or more TPs/RPs, sidelink positioning assistance data for the ranging service by using the ranging method. The first wireless device may send, to the second wireless device, at least one of: the parameters for radio resource to perform ranging service; configuration parameters for antenna to perform ranging service by using the ranging method; and/or sidelink positioning assistance data for the ranging service by using the ranging method. The first wireless device the second wireless device and/or TPs/RPs, may perform ranging service based on: configuration parameters for radio resource to perform ranging service; configuration parameters for antenna to perform ranging service; and/or sidelink positioning assistance data for the ranging service. The base station may comprise one or more processors; and memory storing instructions that, when executed by the one or more processors, cause the base station to perform the described method, additional operations, and/or include the additional elements. A system may comprise the base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A second wireless device may receive, from a first wireless device, a first message indicating one or more ranging methods supported by the first wireless device. The second wireless device may determine at least one accepted ranging method for performing a ranging service between the first wireless device and the second wireless device. Determining the at least one accepted ranging method may be based on: the one or more ranging methods supported by the first wireless device; and ranging methods supported by the second wireless device. The second wireless device may send, to the first wireless device, a second message indicating the at least one accepted ranging method. The ranging method may comprise at least one of the following methods for ranging service: a Two Way Ranging; a Sidelink Uplink Time Difference of Arrival (SL-UTDOA); a Sidelink Downlink Time Difference of Arrival (SL-DTDOA); a Sidelink Uplink Phase Difference of Arrival (SL-UPDOA); and/or a Sidelink Downlink Phase Difference of Arrival (SL-DPDOA). The Two Way Ranging ranging method may indicate that a first wireless device determines a distance of the second wireless device by measuring a round trip time (RTT) between the first wireless device and the second wireless device. The SL-UTDOA ranging method may indicate that the second wireless device send a reference signals (e.g., Sounding Reference Signal (SRS), Uplink Sounding Reference Signal Reference Signal Received Power (UL SRS-RSRP), UL TDOA) to multiple Reception Point (RP)s. The multiple RPs measure the SRS/ UL TDOA/ UL SRS-RSRP of the received signals using assistance data received. The multiple RPs may send the measurement reports to the first wireless device, where the measurement reports may comprise measured result (e.g., a time value, SRS-RSRP). The first wireless device may calculate the ranging/position/location of the second wireless device based on the measurement reports. The SL-DTDOA) ranging method may indicate that multiple Transmission Points (TPs) send a reference signal (e.g., Positioning Reference Signals (PRS), Downlink PRS Reference Signal Received Power (DL PRS RSRP) Downlink Reference Signal Time Difference (DL RSTD)) to the second wireless device. The second wireless device may measure the received signals using assistance data. The second wireless device may send a measurement report to the first wireless device. The measurement report may comprise a measured result (e.g., a time value, SRS-RSRP). The first wireless device may calculate the ranging/position/location of the second wireless device based on the measurement reports. The SL-UPDOA ranging method may indicate that the second wireless device sends a reference signal (e.g., SRS, UL SRS-RSRP) to multiple Reception Point (RP)s. A first wireless device may have multiple antennas. Each of the multiple antennas may be a RP. By using assistance data, the multiple RPs may measure the Azimuth Angle of Arrival (A-AoA) and/or the Zenith Angle of Arrival (Z-AoA) of the reference signal transmitted from the second wireless device. The first wireless device may calculate the ranging/position/location of the second wireless device based on the measurement results. The SL-DPDOA ranging method may indicate that the first wireless device sends a reference signal (e.g., Positioning Reference Signals (PRS), Downlink PRS Reference Signal Received Power (DL PRS RSRP)) to the second wireless device. The second wireless device may have multiple antennas. Each of the multiple antennas may be a RP. By using assistance data, the multiple RPs measure the Azimuth Angle of Arrival (A-AoA) and/or the Zenith Angle of Arrival (Z-AoA) of the reference signal transmitted from the first wireless device. The second wireless device may send a measurement report to the first wireless device. The measurement report may comprise measured result. The first wireless device may calculate the ranging/position/location of the second wireless device based on the measurement report. The Transmission Point (TP) may comprise a set of geographically co-located transmit antennas (e.g. antenna array (with one or more antenna elements)) for one cell, part of one cell, or one DL PRS-only TP. Transmission Points may include base station (ng-eNB or gNB) antennas, remote radio heads, a remote antenna of a base station, an antenna of a DL PRS-only TP, etc. One cell may include one or multiple transmission points. For a homogeneous deployment, each transmission point may correspond to one cell. The Reception Point (RP) may comprise a set of geographically co-located receive antennas (e.g. antenna array (with one or more antenna elements)) for one cell, part of one cell or one UL SRS-only RP. Reception Points can include base station (ng-eNB or gNB) antennas, remote radio heads, a remote antenna of a base station, an antenna of a UL SRS-only RP, etc. One cell may include one or multiple reception points. For a homogeneous deployment, each reception point may correspond to one cell. The first message may comprise a first parameter of Ranging Method indicating a type of ranging method. The first message may comprise a first parameter/ Ranging Method indicating one or more ranging methods supported by the first wireless device to range/position a second wireless device. The first message may comprise a first parameter/ Ranging Method indicating one or more ranging methods requested by the first wireless device. The first message may comprise a second parameter/ Ranging Capability indicating whether the first wireless device supports ranging service. The second parameter/ Ranging Capability may indicate one or more ranging methods supported by the first wireless device to range/position a second wireless device. The second parameter/ Ranging Capability may indicate supported frequency band(s) of Reference Signal Time Difference (RSTD) measurement for ranging service. The second parameter/ Ranging Capability may indicate supported frequency band(s) for the ranging service between the first wireless device and the second wireless device. The ranging service may comprise at least one of: a first wireless device measuring a distance of a second wireless device; a first wireless device measuring a direction of a second wireless device; a first wireless device measuring an angle of a second wireless device; a first wireless device measuring a velocity of a second wireless device; or a first wireless device measuring a position of a second wireless device. The first message may comprise a third parameter (e.g., PC5 Capability) indicating whether the first wireless device is/are able to perform ranging service over PC5 reference point. The first message may comprise a fourth parameter (e.g., V2X Capability) indicating a V2X capability of the first wireless device. The first message may comprise a fifth parameter (e.g., ProSe Capability) indicating a ProSe Capability of the first wireless device. The first message may comprise a sixth parameter (e.g., Ranging Accuracy) indicating an accuracy of the ranging service supported by the first wireless device. The first message may comprise an RRC message. The RRC message may comprise at least one of: RRCReconfigurationSidelink; UECapabilityEnquirySidelink; UECapabilityInformationSidelink; or SBCCH-SL-BCH-Message. The second message may comprise at least one of: a RRC message, a DCI; or a MAC CE. The second message may comprise an RRC message. The RRC message may comprise at least one of: RRCReconfigurationCompleteSidelink; RRCReconfigurationFailureSidelink; UECapabilityInformationSidelink; or SBCCH-SL-BCH-Message. The first message may comprise an identity of the first wireless device and/or an identity of the second wireless device. Determining may be based on that the accepted ranging method is supported by the first wireless device and the second wireless device. The first wireless device may determine, based on the accepted ranging method, at least one of: configuration parameters for radio resource to perform ranging service by using the accepted ranging method; configuration parameters for antenna to perform ranging service by using the accepted ranging method; and/or sidelink positioning assistance data for the ranging service by using the accepted ranging method. The determining may comprise allocating radio resource. The radio resource for the accepted ranging method may comprise at least one of: frequency resource; time resource; and/or radio bearer resource. The first wireless device may send, to the second wireless device, at least one of: the configuration parameters for radio resource to perform ranging service by using the accepted ranging method; the configuration parameters for antenna to perform ranging service by using the accepted ranging method; and/or the sidelink positioning assistance data for the ranging service by using the accepted ranging method. The first wireless device may send, to one or more TPs/RPs, the sidelink positioning assistance data for the ranging service by using the accepted ranging method. The first wireless device, the second wireless device, and/or TPs/RPs, may perform ranging service based on: configuration parameters for radio resource to perform ranging service; configuration parameters for antenna to perform ranging service; and/or sidelink positioning assistance data for the ranging service. The base station may comprise one or more processors; and memory storing instructions that, when executed by the one or more processors, cause the base station to perform the described method, additional operations, and/or include the additional elements. A system may comprise the base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A base station may receive, from a wireless device, a first radio resource control (RRC) message indicating whether the wireless device supports a plurality of sidelink (SL) services simultaneously. The plurality of SL services may comprise: a first SL service, and a second SL service. The first SL service may comprise a SL ranging service. The second SL service may comprise one or more of a V2X service or a relay service. The base station may transmit, based on the first RRC message, a second RRC message indicating: a first frequency band is associated with the SL ranging service; and a second frequency band is associated with the V2X service. The first RRC message may comprise a first parameter indicating concurrent multiple sidelinks capability of the wireless device. The concurrent multiple sidelinks capability may indicate whether the wireless device supports a plurality of unicast sidelinks (services) simultaneously. The concurrent multiple sidelinks capability may indicate whether the wireless device is able to send/receive data of at least two of the following services at the same time: the V2X service; the SL ranging service; a public safety service; a (sidelink) relay service; or the uplink/downlink communication service between the wireless device and the base station. The concurrent multiple sidelinks capability may indicate the wireless device supports simultaneous SL transmission of one or more packets for a plurality of sidelinks (services). The first RRC message may comprise a second parameter/Ranging Capability indicating whether the wireless device supports ranging service. The first RRC message may comprise a third parameter /Relay Capability indicating whether the wireless device supports sidelink relay (e.g., UE-to-Network Relay). The first RRC message may comprise a fourth parameter/ PC5 Capability indicating whether the wireless device is able to perform ranging service over PC5 reference point. The first RRC message may comprise a fifth parameter/ V2X Capability indicating a V2X capability of the wireless device. The first RRC message may comprise a sixth parameter / ProSe Capability indicating a ProSe Capability of the first wireless device. The ProSe Capability may indicate that the wireless device supports ProSe communication/service with a second wireless device. The second parameter/Ranging Capability, the third parameter/Relay Capability, the fourth parameter/ PC5 Capability, the fifth parameter/ V2X Capability, and/or the sixth parameter/ ProSe Capability may indicate whether the wireless device supports a plurality of sidelink services simultaneously/concurrently. The first RRC message may comprise a seventh parameter/ Ranging Accuracy indicating an accuracy of the ranging service supported by the wireless device. The first RRC message may comprise an eighth parameter (e.g., Requested Sidelink Service Type) indicating at least one requested sidelink service. The at least one requested sidelink service may comprise at least one of: a V2X service; a SL ranging service; a public safety service; and/or a sidelink relay service. The base station may determine, based on the first RRC message, a plurality of frequency bands for the plurality of unicast sidelinks services. The base station may determine, based on the first RRC message, at least one of: a frequency band for the sidelink service; and/or a second parameter indicating whether the frequency band being used for the plurality of sidelink services. The base station may determine, based on the first RRC message, one frequency band being shared by two or more sidelink services. The base station may send, to the wireless device: the plurality of frequency bands; the frequency band; the second parameter; and/or the one frequency band. The base station may determine, based on the first RRC message, configuration parameters for a plurality of radio resource. The plurality of radio resource may be for the plurality of sidelink services. The base station may determine, based on the first RRC message, configuration parameter of one radio resource. The one radio resource may be shared/used by two or more sidelink services. The radio resource may comprise at least one of: frequency resource; time resource; and/or radio bearer resource. The base station may determine, based on the first RRC message, at least one of: a configuration parameter for radio resource of sidelink services; and/or a ninth parameter (e.g., Shared Sidelink Radio Resource) indicating whether the radio resource is shared by plurality of sidelink services. The configuration parameters for a plurality of radio resource of the plurality of sidelink services may comprise a tenth parameter (e.g., sl-ConfigDedicatedNR) indicating dedicated configuration for the plurality of sidelink services over PC5. The tenth parameter comprises a parameter (e.g., Sidelink Service Type) indicating what sidelink service (s) the tenth parameter/ sl-ConfigDedicatedNR may be applied to. The base station may send, to the wireless device: configuration parameters for a plurality of radio resource configuration parameter of one radio resource; the configuration parameter for radio resource of sidelink services; and/or the ninth parameter. The base station may determine, based on the first RRC message, a plurality of configuration parameters for antennas (and/or antenna ports) of the plurality of sidelink services. The base station may send, to the wireless device, a plurality of configuration parameters for antennas (and/or antenna ports) of the plurality of sidelink services. The tenth parameter/ sl-ConfigDedicatedNR may comprise at least one of the following parameter for sidelink services over PC5: a first parameter (e.g., sl-PHY-MAC-RLC-Config) indicating configuration of physical layer, MAC layer and/or RLC layer; a second parameter (e.g., sl-RadioBearerToReleaseList) indicating one or multiple sidelink radio bearer configurations to be removed; a third parameter (e.g., sl-RadioBearerToAddModList) indicating one or multiple sidelink radio bearer configurations to be added and/or modified; a fourth parameter (e.g., sl-MeasConfigInfoToReleaseList) indicating Reference Signal Receive Power (RSRP) measurement configurations for unicast destinations to be removed; and/or a fifth parameter (e.g., sl-MeasConfigInfoToAddModList) indicating RSRP measurement configurations for unicast destinations to be added/modified. The first parameter (e.g., sl-PHY-MAC-RLC-Config) may comprise at least one of the following parameter for sidelink services over PC5: a first parameter (e.g., sl-ScheduledConfig) indicating configuration for UE to transmit NR sidelink communication based on network scheduling; a second parameter (e.g., sl-UE-SelectedConfig) indicating the configuration used for UE autonomous resource selection; a third parameter (e.g., sl-FreqInfoToReleaseList) indicating the NR sidelink communication configuration on some carrier frequency (ies) to be removed; a fourth parameter (e.g., sl-FreqInfoToAddModList) indicating the NR sidelink communication configuration on some carrier frequency (ies) to be added and/or modified; a fifth parameter (e.g., sl-RLC-BearerToReleaseList) indicating one or multiple sidelink RLC bearer configurations to be remove; a sixth parameter (e.g., sl-RLC-BearerToAddModList) indicating one or multiple sidelink RLC bearer configurations to be added/modified; a seventh parameter (e.g., sl-MaxNumConsecutiveDTX) indicating the maximum number of consecutive Hybrid Automatic Repeat Request (HARQ) Discontinuous transmission (DTX) before triggering sidelink radio link failure (RLF); an eighth parameter (e.g., sl-CSI-Acquisition) indicating whether Channel State Information (CSI) reporting is enabled in sidelink unicast; a ninth parameter (e.g., sl-CSI-SchedulingRequestId) indicating the scheduling request configuration applicable for sidelink CSI report Medium Access Control (MAC) Control Element (CE); a tenth parameter (e.g., sl-SSB-PriorityNR) indicating the priority of NR sidelink Synchronization Signal Block (SSB) transmission and reception; and/or an eleventh parameter (e.g., networkControlledSyncTx) indicating whether the UE shall transmit synchronisation information (e.g., become synchronisation source). The base station may determine, based on the first RRC message, ranging parameters for ranging service. The ranging parameters may indicate configuration parameters for ranging service over PC5. The ranging parameters may comprise at least one of: a parameter indicates whether configuration parameters for V2X service is used for ranging service over PC5; a V2X service identifier indicating ranging service over PC5; a validity timer for the validity of the configuration parameters for ranging service over PC5; a list of PLMNs and RATs in which the UE is authorized to use ranging service over PC5; an indication of whether the UE is authorized to use ranging service over PC5 when the UE is not served by E-UTRA and not served by NR; alist of RATs in which the UE is authorized to use ranging service over PC5 and the radio parameters of the RAT for ranging service over PC5 applicable per geographical area with an indication of whether these radio parameters of the RAT are "operator managed" or "non-operator managed" when the UE is not served by E-UTRA and not served by NR; a list of V2X service identifier to PC5 RAT(s) and Tx profiles mapping rules; configuration parameters for privacy support; configuration parameters for a ranging service over PC5 in E-UTRA-PC5; configuration parameters for a ranging service over PC5 in NR-PC5, comprising: a list of ranging service identifier to ranging service NR frequency mapping rules. Each mapping rule contains one or more ranging service identifiers and the ranging NR frequencies with associated geographical areas; a list of ranging service identifier to destination layer-2 ID for broadcast mapping rules; a default destination layer-2 ID for broadcast; a list of ranging service identifier to destination layer-2 ID for groupcast; mapping rules; a list of ranging service identifier to default destination layer-2 ID for unicast initial signalling mapping rules; a list of ranging service identifier to PC5 QoS parameters mapping rules; an AS configuration, including a list of SLRB mapping rules applicable, such as when the UE is not served by E-UTRA and is not served by NR. Each SLRB mapping rule may contain a PC5 QoS profile and an SLRB. The PC5 QoS profile may comprise the following parameters: the PC5 QoS profile contains a PQI; if the PQI of the PC5 QoS profile identifies a GBR QoS, the PC5. The QoS profile may comprise a PC5 flow bit rates consisting of a guaranteed flow bit rate (GFBR) and a maximum flow bit rate (MFBR); if the PQI of the PC5 QoS profile identifies a non-GBR QoS, the PC5 QoS profile may contain the PC5 link aggregated bit rate consisting of a per link aggregate maximum bit rate (PC5 LINK-AMBR; the PC5 QoS profile contains a range, which is only used for groupcast mode communications over PC5; the PC5 QoS profile can contain the priority level, the averaging window, and the maximum data burst volume. If one or more of the priority level, the averaging window or the maximum data burst volume are not contained in the PC5 QoS profile, their default values apply; a list of NR-PC5 unicast security policies; a list of ranging service identifier to default mode of communication mapping rules. Each mapping rule may comprise one or more ranging service identifiers and the default mode of communication (one of unicast, groupcast or broadcast); or for broadcast mode and groupcast mode, PC5 DRX configurations, including the mapping of PC5 QoS profile(s) to PC5 DRX cycle(s) and the default PC5 DRX configuration, when the UE is not served by E-UTRA and not served by NR. The second RRC message may comprise the ranging parameters. The range may comprise at least one of: a distance; a direction; an angle; a velocity; or a position. The first RRC message may comprise an identity of the wireless device and/or one or more identity(es) of one or more second wireless device(s). The base station may comprise one or more processors; and memory storing instructions that, when executed by the one or more processors, cause the base station to perform the described method, additional operations, and/or include the additional elements. A system may comprise the base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. Various examples may be used, for example, if the one or more criteria are met. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described herein, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a base station from a wireless device, a first radio resource control (RRC) message indicating whether the wireless device supports a plurality of sidelink (SL) services simultaneously; and
transmitting, by the base station and based on the first RRC message, a second RRC message indicating that:
a first frequency band is associated with a first SL service; and
a second frequency band is associated with a second SL service.

2. The method of claim 1, wherein the first RRC message indicates:
concurrent multiple sidelinks capability of the wireless device, and
whether the wireless device supports a plurality of simultaneous unicast sidelinks.

3. The method of any one of claims 1 or 2, wherein the first RRC message indicates whether the wireless device is able to simultaneously send or receive data of at least two of the following services:
the V2X service;
the SL ranging service;
a public safety service;
a relay service; or
uplink or downlink communication service between the wireless device and the base station.

4. The method of any one of claims 1-3, wherein the first RRC message indicates that the wireless device supports simultaneous SL transmissions of one or more packets for the plurality of SL services.

5. The method of any one of claims 1-4, wherein the first RRC message comprises one or more of the following:
a ranging capability parameter indicating whether the wireless device supports a ranging service;
a relay capability parameter indicating whether the wireless device supports a sidelink relay between the wireless device and a network;
a PC5 capability parameter indicating whether the wireless device is able to performing ranging service via a PC5 reference point;
a V2X capability parameter indicating V2X capability of the wireless device;
a proximity services (ProSe) capability parameter indicating whether the wireless device supports ProSe communication with a second wireless device;
a ranging accuracy parameter indicating accuracy of a ranging service supported by the wireless device; or
a requested SL service type parameter indicating at least one requested SL service,
wherein the at least one requested SL service comprises at least one of:
the V2X service;
the SL ranging service;
a public safety service; or
a SL relay service.

6. The method of any one of claims 1-5, further comprising sending, by the base station, to the wireless device, and based on the first RRC message, information indicating a plurality of frequency bands for a plurality of unicast sidelink services.

7. The method of any one of claims 1-6, further comprising sending, by the base station, to the wireless device, and based on the first RRC message, at least one of:
information indicating a frequency band for a sidelink service;
a second parameter indicating whether a frequency band for a sidelink service is being used for the plurality of SL services; or
information indicating a frequency band being shared by two or more sidelink services.

8. The method of any one of claims 1-7, further comprising sending, by the base station, to the wireless device, and based on the first RRC message, configuration parameters for a plurality of radio resources for the plurality of SL services.

9. The method of any one of claims 1-8, further comprising sending, by the base station, to the wireless device, and based on the first RRC message, a configuration parameter for a radio resource being shared by two or more sidelink services.

10. The method of any one of claims 1-9, further comprising sending, by the base station, to the wireless device, and based on the first RRC message, at least one of:
a configuration parameter for a radio resource of a SL service; or
a shared sidelink radio resource indicating whether the ratio resource is shared by the plurality of SL services.

11. The method of any one of claims 1-10, further comprising sending, by the base station, to the wireless device, and based on the first RRC message, a parameter indicating dedicated configuration of radio resources for the plurality of SL services over PC5.

12. The method of any one of claims 1-11, wherein the first SL service comprises a SL ranging service, and wherein the second SL service comprises a vehicle-to-everything (V2X) service.

13. A base station comprising:
one or more processors; and
memory storing instructions that, when executed by the one or more processors, configure the base station to perform the method of any one of claims 1-12.

14. One or more non-transitory computer-readable media storing instructions that, when executed, configure a base station to perform the method of any one of claims 1-12.

15. A system comprising:
a wireless device; and
a base station configured to perform the method of any one of claims 1-12.
